# EUROPEAN PATENT SPECIFICATION

(11) **EP 1 532 838 B1**
(45) Date of publication and mention of the grant of the patent: **25.10.2017**
(21) Application number: 03726592.3
(22) Date of filing: 02.05.2003
(51) Int. Cl.: H04R 1/06, H04R 31/00, H04R 1/28, H04R 9/02

(54) **ELECTRO-DYNAMIC PLANAR LOUDSPEAKER**
ELEKTRODYNAMISCHER PLANARER LAUTSPRECHER
HAUT-PARLEUR PLANAIRE ELECTRO-DYNAMIQUE

(30) Priority: 02.05.2002 US 380001 P; 06.05.2002 US 378188 P; 24.06.2002 US 391134 P; 30.01.2003 US 443699 P
(43) Date of publication of application: 25.05.2005
(73) Proprietor: Harman International Industries, Inc., Northridge, CA 91329 (US)
(72) Inventor: HUTT, Steven, W., Bloomington, IN 47401 (US); STEERE, John, F., Martinsville, IN 46151 (US); GARNER, David, B., Indianapolis, IN 46239 (US); FENWICK, Ronald, E., Bloomington, IN 47403 (US); MANGO, Louis, A., Trafalgar, IN 46181 (US); AUGUSTIN, SR., Kevin, C., Greenwood, IN 46142 (US); HOUSE, William, Neal, Greenwood, IN 46143 (US); MIHELICH, Ryan, Indianapolis,IN 46220 (US)
(74) Representative: Grünecker Patent- und Rechtsanwälte PartG mbB
(86) International application number: PCT/US2003/013763
(87) International publication number: WO 2003/094571

(56) References cited:
- EP-A- 0 996 311
- EP-A- 1 158 835
- EP-A- 1 194 001
- WO-A-95/24815
- DE-A1- 3 033 631
- DE-A1- 3 038 905
- DE-U- 1 799 329
- GB-A- 2 034 153
- US-A- 2 566 604
- US-A- 3 164 686
- US-A- 3 674 946
- US-A- 4 037 061
- US-A- 4 210 786
- US-A- 4 720 867
- US-A- 4 939 784
- US-A- 5 682 436
- US-B1- 6 320 967
- US-B1- 6 332 029
- PATENT ABSTRACTS OF JAPAN vol. 007, no. 033 (E-157), 9 February 1983 (1983-02-09) & JP 57 184398 A (CITIZEN TOKEI KK), 13 November 1982 (1982-11-13)
- PATENT ABSTRACTS OF JAPAN vol. 003, no. 098 (E-131), 18 August 1979 (1979-08-18) -& JP 54 076130 A (MATSUSHITA ELECTRIC IND CO LTD), 18 June 1979 (1979-06-18)
- PATENT ABSTRACTS OF JAPAN vol. 003, no. 121 (E-143), 11 October 1979 (1979-10-11) -& JP 54 098612 A (CITIZEN WATCH CO LTD), 3 August 1979 (1979-08-03)
- PATENT ABSTRACTS OF JAPAN vol. 013, no. 551 (E-857), 8 December 1989 (1989-12-08) & JP 01 228300 A (MATSUSHITA ELECTRIC IND CO LTD), 12 September 1989 (1989-09-12)
- PATENT ABSTRACTS OF JAPAN vol. 1997, no. 04, 30 April 1997 (1997-04-30) & JP 08 331684 A (MATSUSHITA ELECTRIC IND CO LTD), 13 December 1996 (1996-12-13)

## Description

### BACKGROUND OF THE INVENTION

### 1. Cross-Reference To Related Applications.

This application claims the benefit of U.S. Provisional Application No. 60/380,001, filed on May 2, 2002; U.S. Provisional Application No. 60/378,188, filed on May 6, 2002; U.S. Provisional Application No. 60/391,134, filed on June 24, 2002; and U.S. Provisional Application No. 60/443,699, filed on January 30, 2003.

### 2. Field of Invention.

The present invention relates to electro-dynamic planar loudspeakers, and more particularly, to improvements in electro-dynamic planar loudspeakers and the methods for manufacturing electro-dynamic planar loudspeakers.

### 3. Related Art.

The general construction of an electro-dynamic loudspeaker includes a diaphragm, in the form of a thin film, attached in tension to a frame. An electrical circuit, in the form of electrically conductive traces, is applied to the surface of the diaphragm. Magnetic sources, typically in the form of permanent magnets, are mounted adjacent to the diaphragm or within the frame, creating a magnetic field. When current is flowing in the electrical circuit, the diaphragm vibrates in response to the interaction between the current and the magnetic field. The vibration of the diaphragm produces the sound generated by the electro-dynamic loudspeaker.

Many design and manufacturing challenges present themselves in the manufacturing of electro-dynamic loudspeakers. First, the diaphragm, that is formed by a thin film, needs to be permanently attached, in tension, to the frame. Correct tension is required to optimize the resonance frequency of the diaphragm. Optimizing diaphragm resonance extends the bandwidth and reduces sound distortion of the loudspeaker.

The diaphragm is driven by the motive force created when current passes through the conductor applied to the diaphragm within the magnetic field. The conductor on the electro-dynamic loudspeaker is attached directly to the diaphragm. Because the conductor is placed directly onto the thin diaphragm, the conductor should be constructed of a material having a low mass and should also be securely attached to the film at high power (large current) and high temperatures.

Accordingly, designing conductors for electro-dynamic loudspeaker applications presents various challenges such as selecting the speaker with the desired audible output for a given location that will fit within the size and location constraints of the desired applications environment. Electro-dynamic loudspeakers exhibit a defined acoustical directivity pattern relative to each speaker's physical shape and the frequency of the audible output produced by each loudspeaker. Consequently, when an audio system is designed, loudspeakers possessing a desired directivity pattern over a given frequency range are selected to achieve the intended performance of the system. Different loudspeaker directivity patterns may be desirable for various loudspeaker applications. For example, for use in a consumer audio system for a home listening environment, a wide directivity may be preferred. In the application of a loudspeaker, a narrow directivity may be desirable to direct sound, e.g., voice, in a predetermined direction.

Often, space limitations in the listening environment prohibit the use of a loudspeaker in an audio system that possesses the preferred directivity pattern for the system's design. For example, the amount of space and the particular locations available in a listening environment for locating and/or mounting the loudspeakers of the audio system may prohibit the use of a particular loudspeaker that exhibits the intended directivity pattern. Also, due to space and location constraints, it may not be possible to position or oriented the desired loudspeaker in a manner consistent with the loudspeaker's directivity pattern. Consequently, size and space constraints of a particular environment may make it difficult to achieve the desired performance from the audio system. An example of a listening environment having such constraints is the interior passenger compartment of an automobile or other vehicle.

While the electric circuitry of electro-dynamic loudspeakers may present design challenges, electro-dynamic loudspeakers are very desirable loudspeakers because they are designed to have a very shallow depth. With this dimensional flexibility, electro-dynamic loudspeakers may be positioned at locations where conventional loudspeakers would not traditionally fit. This dimensional flexibility is particularly advantageous in automotive applications where positioning a loudspeaker at a location that a conventional loudspeaker would not otherwise fit could offer various advantages. Further, because the final loudspeaker assembly may be mounted on a vehicle, it is important that the assembly be rigid during shipping and handling so that the diaphragm or frame does not deform during installation.

While conventional electro-dynamic loudspeakers are shallow in depth and may therefore be preferred over conventional loudspeakers for use in environments requiring thin loudspeakers, electro-dynamic loudspeakers have a generally rectangular planar radiator that is generally relatively large in height and width to achieve acceptable operating wavelength sensitivity, power handling, maximum sound pressure level capability and low-frequency bandwidth. Unfortunately, the large rectangular size results in a high-frequency beam width angle or coverage that may be too narrow for its intended application. The high-frequency horizontal and vertical coverage of a rectangular planar radiator is directly related to its width and height in an inverse relationship. As such, large radiator dimensions exhibit narrow high-frequency coverage and vice versa.

The acoustical directivity of the audible output of a loudspeaker is critical to the design and performance of an audio system and to the creation of a positive acoustical interaction with the listeners in a listening environment.
The US 3,674,946 discloses an electromagnetic transducer comprising a vibratable diaphragm that carries one or more conductors and a sheet magnet confronting the diaphragm. The transducer also comprises a frame to which a perforated metal panel is attached. The sheet magnet that may be composed of strips is lying flushed against the metal panel. The EP 0 996 311 A1 discloses a loud speaker with a frame. In the frame, punched holes are provided.

### Summary

The object of the invention is solved by the independent claims. Specific embodiments are defined in the dependent claims.

Hence, the invention provides frequency response enhancements for electro- dynamic loudspeakers including optimizing the vent hole sizes provided in the frame for balancing the magnetic flux versus acoustic performance. Specifically, the invention provides an electro-dynamic loudspeaker including a frame having a recess portion and a plurality of vent holes in the recessed portion according to claim 1. The vent holes are arranged in a plurality of columns with the vent holes in each column being separated by a plurality of webs wherein a combined length of the vent holes in a longitudinal length of the columns and a combined length of the webs in a longitudinal length of the columns define a total length of the columns of vent holes, wherein the combined length of the webs in a longitudinal length of the columns is greater than 20 percent of the total length of the columns of vent holes. The vent holes are provided to allow air disposed between the diaphragm and frame of the electro-dynamic loudspeaker to enter and exit the electro-dynamic loudspeaker as the diaphragm vibrates. Some resistance to the airflow is provided by a layer of dampening material such as felt that resists the airflow therethrough. A magnetic flux is provided between the adjacent columns of magnets wherein the webs disposed between the vent holes enhance the magnetic flux between the columns of magnets. The vent holes are also maintained of sufficient size to allow proper venting of the electro- dynamic loudspeaker.

Other systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

A diaphragm is tensioned by elastically deforming a frame of the electro-dynamic loudspeaker and coupling a diaphragm to the frame while the load is maintained on the frame. The load on the frame is released to tension the diaphragm.

An electro-dynamic loudspeaker assembly system includes a frame loading station, an adhesive application station, a magnet placing station, a curing station, a magnetization station, a diaphragm adhesive application station, a diaphragm placing station, an edge treatment application station, a film tensioning and adhesive curing station, an electrical terminal installation station, a diaphragm cutting station, a clamp repositioning station and an acoustical testing station.

The invention also provides several film attaching methods and fixtures related to electro-dynamic loudspeakers. A diaphragm is attached to a frame of an electro-dynamic loudspeaker using adhesive curable by exposure to radiation. The frame is subsequently deformed to elongate and tension the diaphragm.

A film clamp is used to temporarily fix a diaphragm in a non-tensioned state. The diaphragm is placed in the non-tensioned state by placing the diaphragm on a vacuum source having a flat contact surface. The clamp is structured to contact the diaphragm along a perimeter portion and allow access to a center portion of the diaphragm. The clamped diaphragm is then displaced over a loudspeaker frame to produce tension in the diaphragm. Once the proper tension has been produced, an adhesive curable by exposure to radiation is applied to one of the diaphragm and the frame. The frame is positioned to sandwich the adhesive between the diaphragm and the frame while the adhesive is irradiated to couple the diaphragm to the frame.

An apparatus for tensioning a diaphragm includes a spider having a plurality of fingers radially extending from a hub wherein each of the fingers includes a pad adapted to contact one side of the diaphragm while a base plate contacts an opposite side of the diaphragm. An axial force is placed upon the spider. The axial force is at least partially converted to a lateral force in the diaphragm to produce a tension in the diaphragm between the pads. An adhesive curable by exposure to radiation is applied to at least one of the diaphragm and the frame. The frame is brought into contact with the tensioned diaphragm and the adhesive is irradiated to couple the diaphragm to the frame while the predetermined tension is maintained.

A diaphragm is tensioned by placing the diaphragm between a first plate and a second plate wherein each of the plates includes an aperture extending through its thickness and an annular groove circumscribing the aperture. The first and second plates are drawn toward one another to tension the film. The electro-dynamic loudspeaker frame is coupled to the diaphragm while tension is maintained in the diaphragm by irradiating an adhesive curable by exposure to radiation positioned between the frame and the diaphragm.

A diaphragm is tensioned by elastically deforming a frame of the electro-dynamic loudspeaker and coupling a diaphragm to the frame while the load is maintained on the frame. The diaphragm is coupled to the frame using an adhesive curable by exposure to radiation. The load on the frame is released to tension the diaphragm.

A diaphragm is attached to a frame having a plurality of projections extending from a mounting plane. The diaphragm is engaged with the plurality of projections and energy is input to cause the projections to melt and couple the diaphragm to the frame.

A diaphragm is coupled to a frame coated with a thermoplastic material. The interface between the diaphragm and the thermoplastic material is energized to cause localized melting. After removing the energy source, the diaphragm is bonded to the frame.

A diaphragm is coupled to a grille to create a grille assembly. A plurality of magnets are coupled to a frame to create a frame assembly. The grille assembly and the frame assembly are subsequently coupled to construct an electro-dynamic loudspeaker.

A diaphragm is coupled to a frame including a plurality of pins extending from a mounting plane. The pins extend through a plurality of apertures extending through the diaphragm. A distal end of each pin is deformed to define a head portion to retain the diaphragm to the frame.

A diaphragm having an electrical conductor coupled thereto is coupled to a frame having a plurality of projections extending from a surface. The diaphragm is coupled to the frame using an ultrasonic welder.

The invention also provides several frame structures and methods for constructing frames related to electro-dynamic loudspeakers. A bowed frame is elastically deformed and a diaphragm is attached to the frame while positioned in the deformed position. The frame is subsequently released to elongate and tension the diaphragm.

A method of constructing the bowed frame includes injecting molten resin into a mold having a first die half at a first temperature and a second die half at a temperature other than the first temperature.

A plurality of magnets are embedded within a molded plastic frame. A diaphragm is coupled to the frame and spaced apart from the magnets.

An elastomeric member, coupled to a portion of the frame, is elastically deformed prior to installation of a diaphragm. The diaphragm is coupled to the elastomeric member while the elastomeric member is compressed. After the diaphragm and elastomeric member are fixed to one another, the force compressing the elastomeric member is released thereby tensioning the diaphragm.

A casement is molded about the perimeter of a diaphragm while the diaphragm is tensioned. A plurality of magnets are coupled to a frame. The casement is coupled to the frame to construct an electro-dynamic loudspeaker.

According to another aspect of the invention, a mold for constructing a casement and diaphragm assembly is disclosed.

A plurality of magnets are embedded within a molded plastic frame. A diaphragm is coupled to the frame and spaced apart from the magnets.

A method of constructing an electro-dynamic loudspeaker includes placing one or more magnets in an injection mold cavity and at least partially encompassing the magnet with molten resin. A diaphragm is coupled to the frame.

The invention also provides several conductor arrangements for electro-dynamic loudspeakers. A wire conductor is attached to a surface of a diaphragm of an electro-dynamic loudspeaker. A fixture including retractable spindles is provided for wrapping the wire conductor in the pattern of a conductor having a plurality of linear sections. The fixture is then placed adjacent to a film material and the retractable spindles are retracted so that the wire conductor is applied to the film material. According to another aspect of the invention, a conductor is attached to a surface of a diaphragm wherein the conductor includes a ribbon-shaped flat cross-section with a pair of side edges and a pair of relatively wide faces, and the conductor is attached to the diaphragm along one of the side edges so as to be suspended below a surface of the diaphragm and extend toward the magnets which are mounted to the frame.

The conductor is suspended below the upper edge surface of the frame while being supported on channels which are formed in the diaphragm. By suspending the conductors below the upper edge surface of the frame, the conductor traces are placed in closer proximity to the magnetic field generated by the magnets mounted to the frame.

An electrical conductor is formed by applying a layer of foil to a film material and laser etching the foil to remove portions of the foil and define a conductor including a plurality of linear sections.

An electrical conductor on a diaphragm of an electro-dynamic loudspeaker is formed by laser cutting a conductor including a plurality of linear sections from a foil and applying the conductor to a film material.

An electrical conductor is formed by applying a layer of foil to a film material and utilizing an electron discharge machining technique for burning an image of electrode onto the surface of the film. The electrode is in the shape of the areas of foil to be removed and thereby leaves the remaining foil material in the desired shape of the conductors.

An electrical conductor is formed by applying a mask over the foil in the desired shape of the conductor and the uncovered foil is then abrasively removed using known techniques such as water jet cutting using an abrasive slurry.

The invention also provides several electrical connector arrangements for connecting an electro-dynamic loudspeaker to a power amplifier. The diaphragm of the electro-dynamic loudspeaker is provided with an extension portion extending beyond a periphery of a frame of the electro-dynamic loudspeaker. Electrical traces are disposed on the surface of the extension portion in order to provide a flexible wire harness integrally formed with the diaphragm. A hard block connector is mounted on the end of the extension portion for connection to a power amplifier.

A capacitor is mounted to the frame and provides a jumper between one of the elongated conductive pads provided on the extension portion of the diaphragm and with a terminal end of the conductor.

An electro-dynamic loudspeaker is provided with a pair of terminal lugs extending through the frame and the diaphragm and each contacting a terminal end of an electrical circuit disposed on the surface of the diaphragm. The terminal lugs include a deformable end portion which is bent in order to contact the terminal ends of the electrical circuit. The terminal lugs also include an eyelet for connection with a wire for connecting the electro-dynamic loudspeaker to a power amplifier. Electrical joint compound can be disposed between the deformable end portions of the terminal lugs and the terminal ends of the electrical circuit disposed on the diaphragm.

The electrical circuit disposed on the surface of the diaphragm can be formed from aluminum while the terminal ends of the aluminum conductor pads are layered with copper in order to facilitate conventional soldering processes without the requirement of using flux during the soldering process.

The electrical circuit disposed on the surface of a diaphragm can be formed from a thin layer of copper for defining a plurality of linear sections.

The electrical circuit disposed on the surface of the diaphragm can be formed from aluminum defining a plurality of elongated sections and further including a layer of copper disposed on the aluminum elongated linear sections.

A method is provided for forming an electrical contact with a thin film electro-dynamic loudspeaker including laser welding a pair of lead wires to the terminal end portions of the electric circuit.

A method of forming an electrical contact with a thin film electro-dynamic loudspeaker includes ultrasonically soldering a pair of lead wires to the terminal end portions of the electrical circuit provided on the diaphragm of the electro-dynamic loudspeaker.

The invention also provides a mounting system for use in attaching a device or component like an electro-dynamic loudspeaker to a mounting location in an automobile or other vehicle. Such mounting system may employ bracket hardware that is either affixed to or integral with the loudspeaker that is to be mounted. The mounting system may position the loudspeaker in a fixed orientation, or enable the orientation of the loudspeaker to be variable, as desired, to achieve the optimum performance of the loudspeaker.

A mounting bracket of a unitary construction into which an electro-dynamic loudspeaker may be "snap-fit" or otherwise attached. This mounting bracket positions the loudspeaker generally parallel with the mounting surface in a fixed orientation. Alternatively, features of such a mounting bracket may be integrally incorporated into the structure of a grille for an electro-dynamic loudspeaker for mounting the loudspeaker at a mounting location. In still another alternative, a mounting bracket is disclosed to position the loudspeaker in a fixed angular orientation not generally parallel with the mounting surface.

A mounting bracket for an electro-dynamic loudspeaker that provides for variable adjustment to the angular orientation of the loudspeaker contemporary with or subsequent to the mounting of the loudspeaker. In one alternative, a mounting bracket into which the loudspeaker is affixed can be adjusted to control the angle of the loudspeaker relative to the mounting location by means of a slide adjustment. The mounting bracket of this embodiment may be of unitary construction and incorporate "living hinges" about which the angle of the loudspeaker can vary. In another alternative, a ball-and-socket-type arrangement between the loudspeaker and a mounting bracket allows the loudspeaker to be angularly adjusted, as desired, relative to the mounting location.

The invention also provides a mounting system for use in attaching a device or component to a mounting location that includes a slot and interior and exterior mounting surfaces. A mounting bracket with an attachment portion where the bracket is attached to a first end of the device or component by a fastener. The invention also includes at least one tab portion having first and second surfaces that are generally parallel and extend along a curved path. The tab portion is designed to be received in the slot of the mounting location so that, when installed, the first and second surfaces simultaneously contact the interior and exterior surfaces, respectively, at the mounting location. In this manner, the tab portion, in cooperation with the slot, accurately positions and securely retains the device at the mounting location.

A two-component construction of the mounting system that attaches at opposite ends of the component to be mounted. It is also contemplated that the features of a two-component mounting apparatus construction may also be integrally formed in a single component.

A mounting bracket of a unitary construction incorporating the mounting feature of the invention. Yet another embodiment of the invention, features of a mounting bracket, are integrally incorporated into a portion of an electro-dynamic loudspeaker for mounting the loudspeaker directly into an automobile.

The invention also provides frequency response enhancements for electro-dynamic loudspeakers including optimizing the vent hole sizes provided in the frame for balancing the magnetic flux versus acoustic performance. Specifically, the invention provides an electro-dynamic loudspeaker including a frame having a recess portion and a plurality of vent holes in the recessed portion. The vent holes are arranged in a plurality of columns with the vent holes in each column being separated by a plurality of webs wherein a combined length of the vent holes in a longitudinal length of the columns and a combined length of the webs in a longitudinal length of the columns define a total length of the columns of vent holes, wherein the combined length of the webs in a longitudinal length of the columns is greater than 20 percent of the total length of the columns of vent holes. The vent holes are provided to allow air disposed between the diaphragm and frame of the electro-dynamic loudspeaker to enter and exit the electro-dynamic loudspeaker as the diaphragm vibrates. Some resistance to the airflow is provided by a layer of dampening material such as felt that resists the airflow therethrough. A magnetic flux is provided between the adjacent columns of magnets wherein the webs disposed between the vent holes enhance the magnetic flux between the columns of magnets. The vent holes are also maintained of sufficient size to allow proper venting of the electro-dynamic loudspeaker.

The electro-dynamic loudspeaker is mounted to an enclosure defining an enclosed space behind the frame of the electro-dynamic loudspeaker. The enclosure can be provided with or without ports and optimizes low frequency performance for the electro-dynamic loudspeaker.

The invention also provides several arrangements and methods for enhancing the acoustical properties of an electro-dynamic loudspeaker. The electro-dynamic loudspeaker includes a frame defining a recessed portion having a pair of sidewalls interconnected by a pair of endwalls and at least one of the sidewalls including a plurality of curves along a length of the sidewall. The curves can be in the form of a sinusoidal curve or scallops or another shape that is non-parallel to the opposing sidewall. The curves that are placed in at least one sidewall are provided in order to reduce standing waves which contribute to distortion.

The electro-dynamic loudspeaker includes a frame including a plurality of magnets mounted to the frame. A diaphragm is mounted to the frame and a ferrofluid is disposed between the diaphragm and the magnets and contacts a lower surface of the diaphragm. A ferrofluid is a stable colloidal suspension of sub-domain magnetic particles in a liquid carrier. The ferrofluid dampens the resonant frequency of the diaphragm in order to reduce distortion and smooth frequency response.

An electro-dynamic loudspeaker is provided with a shorted turn of conductor disposed along a fringe zone at an edge of the diaphragm. The shorted turn electro-dynamically dampens the edge resonance of the diaphragm.

A diaphragm of an electro-dynamic loudspeaker is made from a piezoelectric material, such as PVDF (polyvelydeneflouride) and is provided with a current carrying conductor and an undriven conductor applied to both sides of the film material. The undriven conductors are caused to move by the electromotive force on the circuit as the diaphragm vibrates, thus creating electric current through the undriven conductor. The electric current causes the piezoelectric material of the film to expand and contract in response to the electric current, and thereby dampens the film modes to reduce distortion and smooth frequency response. As an alternative, a PVDF strip can also be glued to a PEN (polyethylene naphthalate) film.

The invention also discloses a means to enhance, modify and/or control the acoustical directivity characteristic of an electro-dynamic planar loudspeaker.

The acoustical directivity of a loudspeaker is modified through the use of an acoustic lens. The acoustic lens includes a body having a radiating acoustic aperture extending therethrough. An acoustic lens is positioned proximate the diaphragm of an electro-dynamic planar loudspeaker to modify the directivity pattern of the loudspeaker.

The directivity pattern of the loudspeaker is modified independent of the loudspeaker diaphragm orientation.

The acoustical directivity of the loudspeaker is modified regardless of the shape of the diaphragm of the loudspeaker.

A method to effectively reduce the high-frequency radiating dimensions of a planar radiator in order to widen its high-frequency coverage without affecting other operating characteristics is discussed. Specifically, a directivity-modifying acoustic lens partially blocks radiating portions of a loudspeaker to effectively reduce the radiating dimensions of the diaphragm at high frequencies and widen its coverage. At mid to low frequencies, the acoustic lens has minimal effect on the panel sensitivity, power handling and maximum sound pressure level.

Controlling the acoustical directivity of a loudspeaker (*i.e.,* beam steering) may be accomplished by means of amplitude shading of the thin film diaphragm of the electro-dynamic loudspeaker. Amplitude shading is achieved by spacing the magnets away from thin film diaphragm in specific predetermined zones of the diaphragm to reduce the sensitivity of the diaphragm and allow for amplitude shading of the diaphragm to provide for a controlled acoustical directivity of the loudspeaker.

Amplitude shading is accomplished by manipulating the dc resistivity (DCR) of the traces on the diaphragm of the loudspeaker. For example, the loudspeaker diaphragm can include a plurality of traces forming individual circuits in separate "zones" of the diaphragm. In selected zones, the traces may be in series or in parallel, electrically, in order to result in different DCR in the traces. The variable sensitivity of the traces affects the acoustical directivity of the loudspeaker by amplitude shading of the diaphragm.

The DCR of the traces may be manipulated in other ways to achieve the same effect. For example, multiple traces on the diaphragm may each possess different physical dimensions, including different lengths, different widths, different thicknesses, and cross-sectional areas. Also, they may be formed from different materials (including for example, copper or aluminum alloys, etc.). Such variation in physical characteristics and/or properties results in the traces having different DCR, hence, the acoustical directivity of the loudspeaker may be modified by amplitude shading.

Acoustical directivity control of the loudspeaker via amplitude shading may be accomplished by magnetizing the plurality of magnets in the loudspeaker so that the flux densities of the different magnets vary in a predetermined relationship relative to the diaphragm of the loudspeaker.

Manipulation of the acoustical directivity of the loudspeaker may result, according to still a further embodiment of the invention, by varying the length-to-width aspect ratio of the planar loudspeaker, such as for example, as much as a ratio of 10:1. Such a high-aspect ratio planar loudspeaker may be suitable for installation in a structural pillar of a vehicle, such as an automobile.

In addition to varying aspect ratio of the loudspeaker to control acoustical directivity, the shape of the loudspeaker may also be varied to achieve a predetermined or preferred acoustical directivity performance of the loudspeaker. For example, the loudspeaker may take on a non-rectangular, polygonal shape, such as a trapezoid, parallelogram, triangle, pentagon or hexagon. The shaped panel reduces off axis acoustical lobes, so that the acoustical output from the loudspeaker, particularly when amplified, provides better directional performance and control. The loudspeaker may also be configured in other shapes, including annular shapes like ellipses and circles, to obtain the desired acoustical directivity control of the loudspeaker.

Amplitude shading of the diaphragm of the loudspeaker may be achieved by the non-uniform application of damping material over the driven zone of the diaphragm. For example, damping material may be applied in unequal and/or excessive amounts on the surface, or on selected portions of the surface, of the driven portion of the diaphragm to effectively vary the mass of the diaphragm across its surface and achieve directivity control by amplitude shading.

Other systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE DRAWINGS

The invention can be better understood with reference to the following figures. The components in the figures are not necessarily to scale, emphasis instead being placed upon illustrating the principles of the invention. In the figures, like reference numerals designate corresponding parts throughout the different views.
FIG. 1 is a perspective view of a electro-dynamic loudspeaker as it would appear with the grille removed.
FIG. 2 is an exploded perspective view of the electro-dynamic loudspeaker shown in FIG. 1 having a grille.
FIG. 3 is a cross-sectional view of the electro-dynamic loudspeaker taken along line 3-3 of FIG. 1.
FIG. 4 is an enlarged cross-sectional view of the encircled area of FIG. 3.
FIG. 8-1 is a cross-sectional side view showing the mounting bracket.
FIG. 8-2 is a partial cross-sectional side view showing an alternate arrangement for the mounting bracket.
FIG. 8-3 is a front view illustrating the mounting bracket of the invention as utilized for the installation of a audio component at a mounting location in a vehicle.
FIG. 8-4 is a three-quarter top perspective view of the mounting bracket shown in FIG. 8-3.
FIG. 8-5 is a three-quarter bottom perspective view of the mounting bracket shown in FIG. 8-3.
FIG. 8-6 is an exploded three-quarter side perspective view illustrating the mounting bracket of an alternative embodiment as utilized for the installation of an electro-dynamic loudspeaker at a mounting location in a vehicle.
FIG. 8-7 is an exploded three-quarter side perspective view illustrating the mounting bracket of an alternative embodiment as incorporated into the structure of an electro-dynamic loudspeaker audio component for mounting the component at a mounting location in a vehicle.
FIG. 8-8 is an exploded three-quarter back view illustrating the alternative embodiment illustrated in FIG. 8-7.

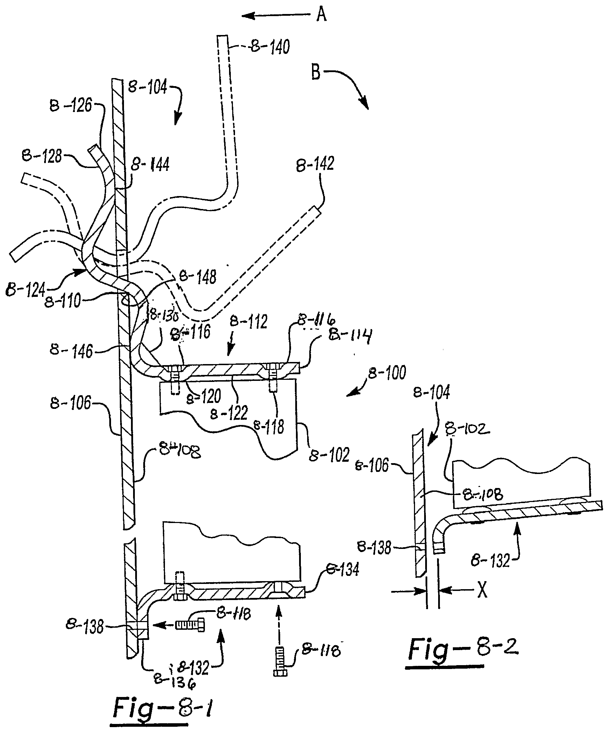

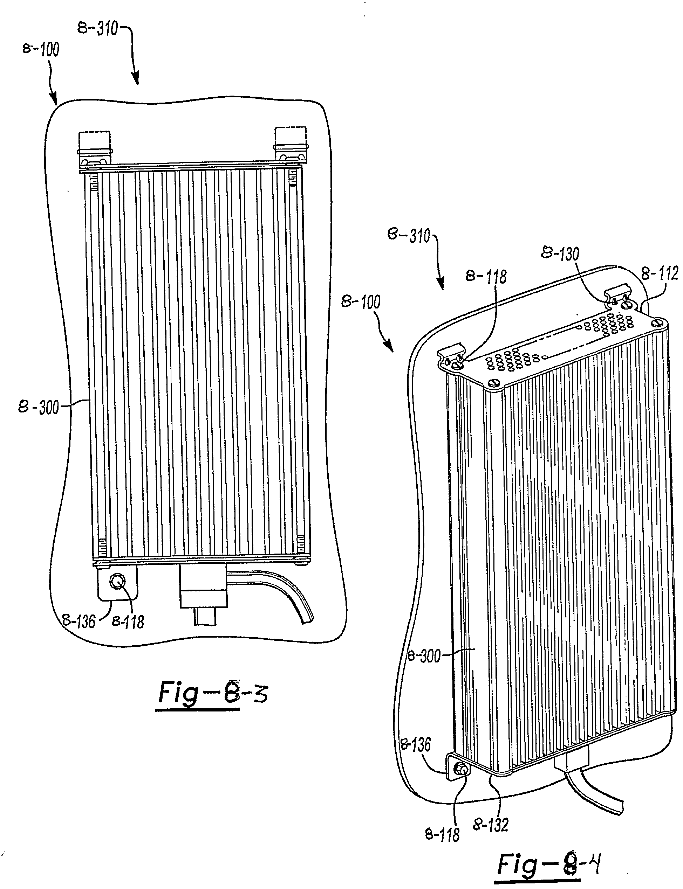

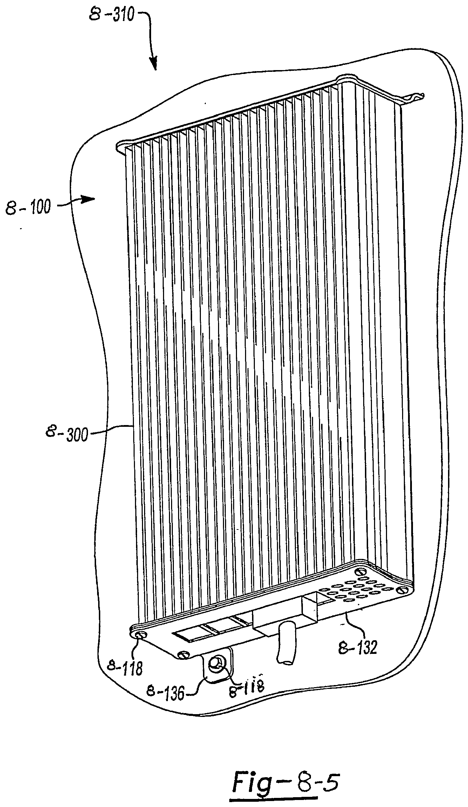

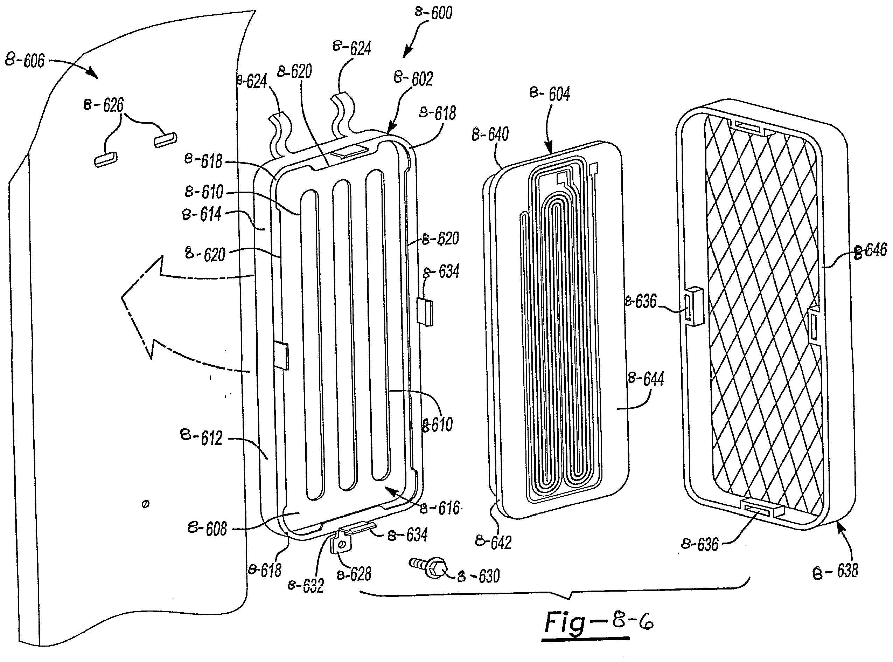

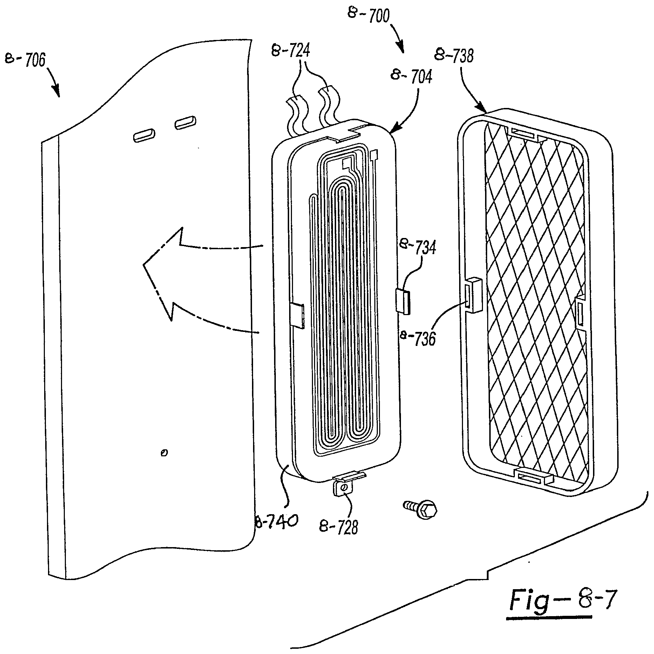

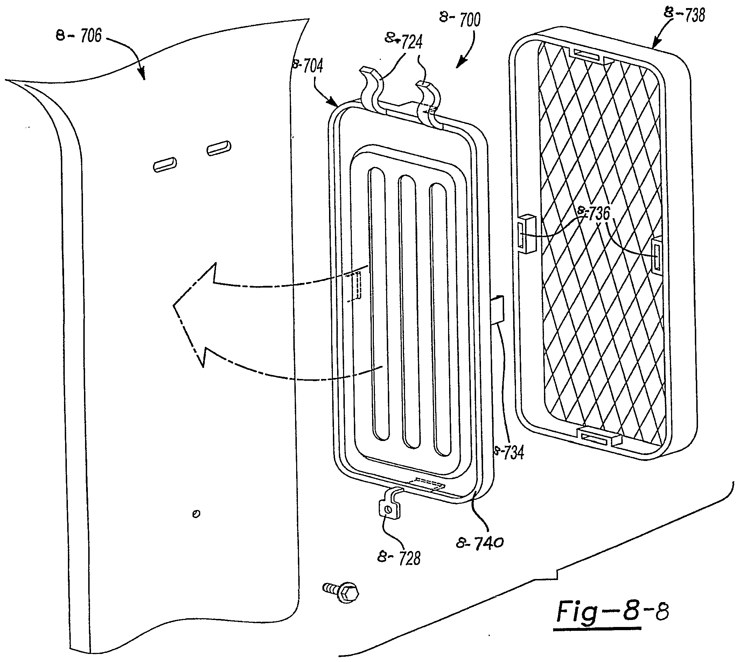

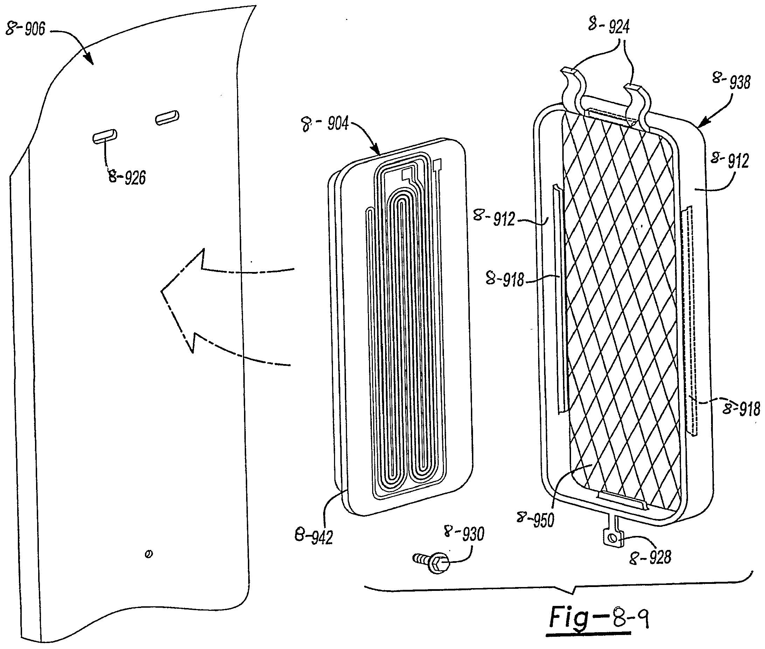

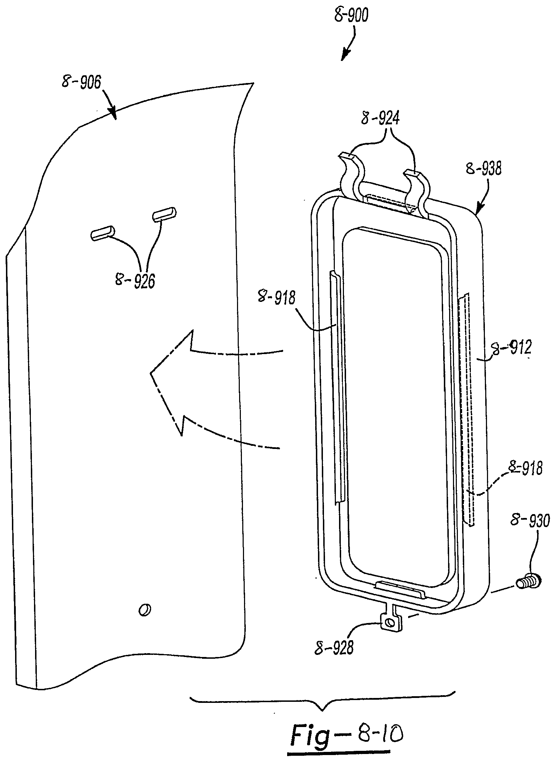

FIG. 8-9 is an exploded three-quarter side perspective view illustrating the mounting bracket of another embodiment for the installation of an electro-dynamic loudspeaker audio component at a mounting location in a vehicle.
FIG. 8-10 is a three-quarter back view illustrating an alternative embodiment illustrated in FIG. 8- 9.

### CASE 10:

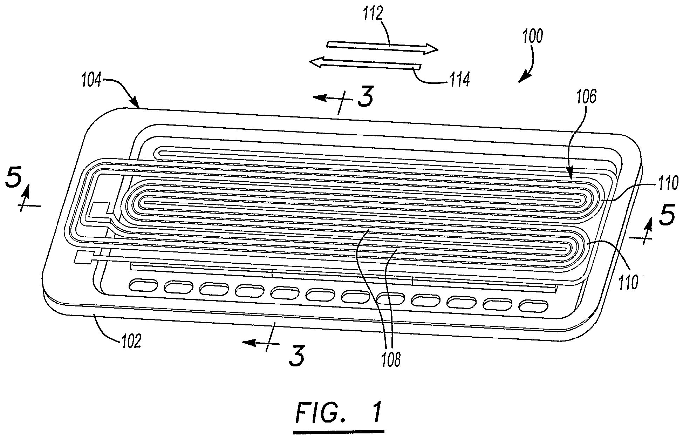

FIG. 1 is a perspective view of an electro-dynamic loudspeaker as it would appear with the grille removed.

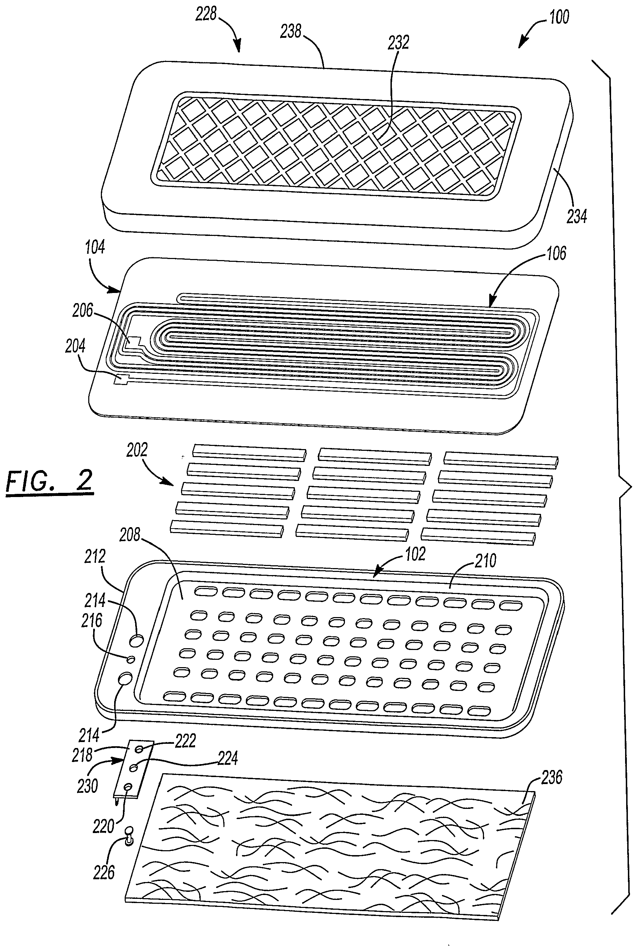

FIG. 2 is an exploded perspective view of the electro-dynamic loudspeaker shown in FIG. 1 having a grille.

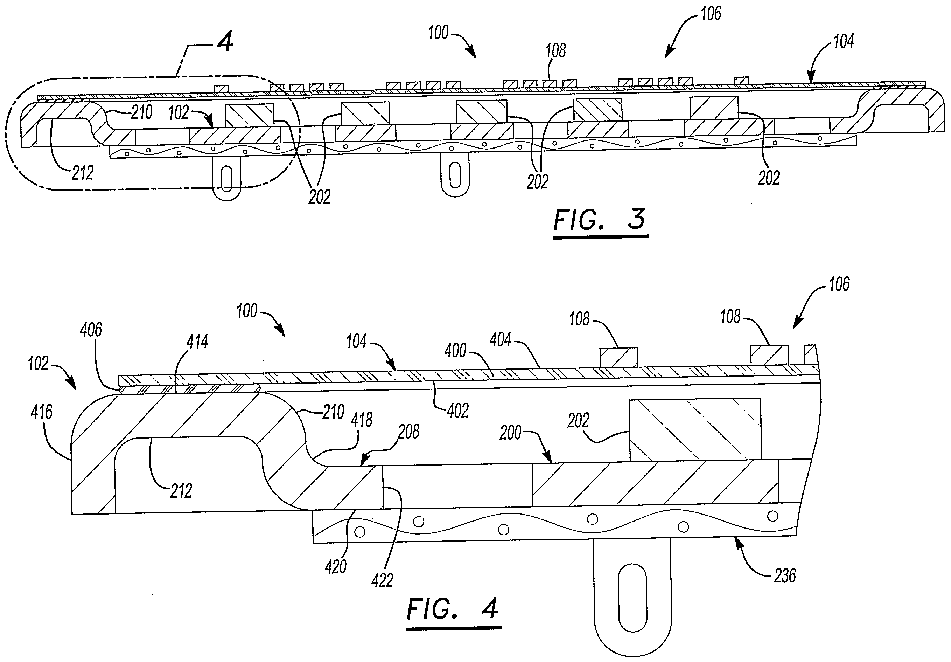

FIG. 3 is a cross-sectional view of the electro-dynamic loudspeaker taken along line 3-3 of FIG. 1.
FIG. 4 is an enlarged cross-sectional view of the encircled area of FIG. 3.

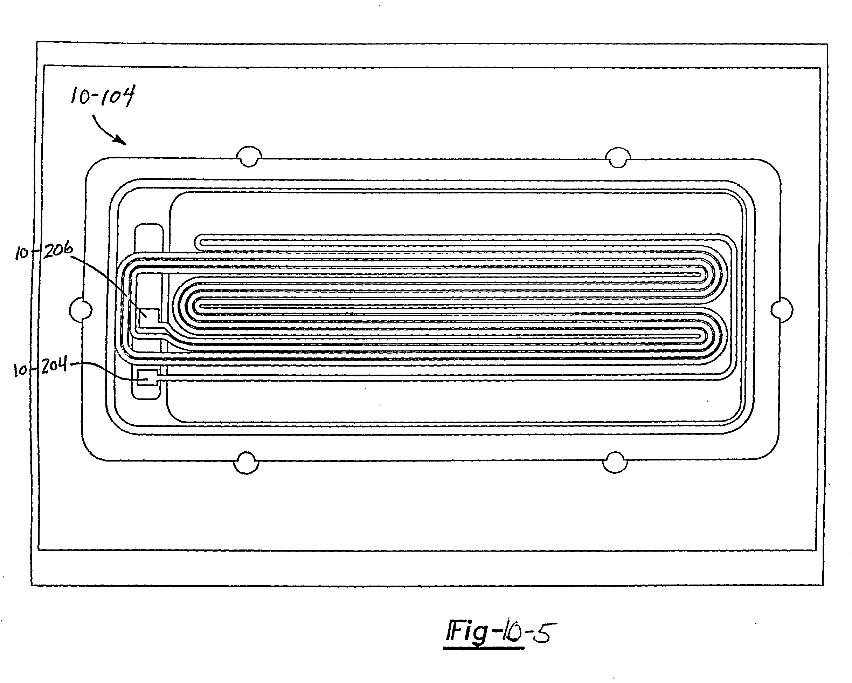

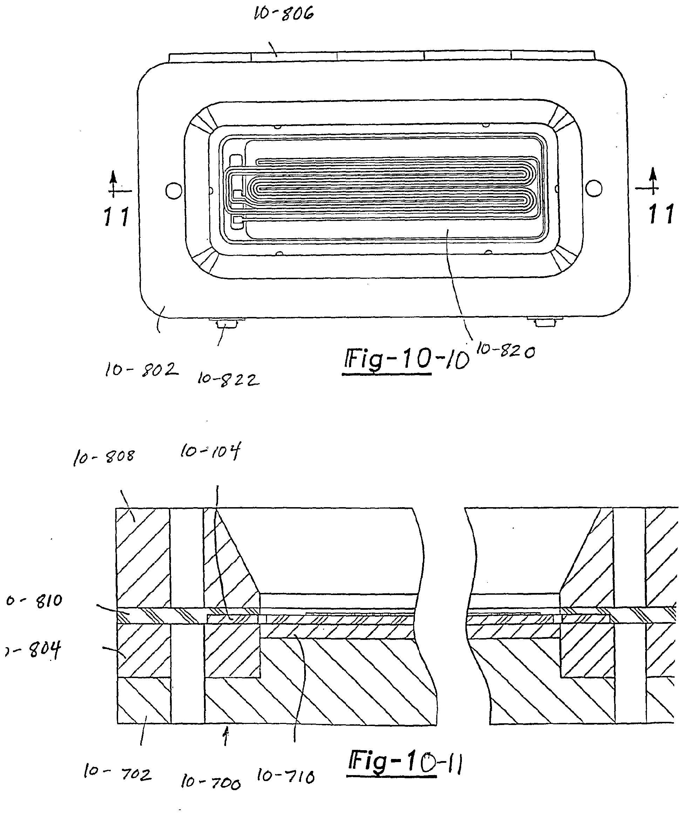

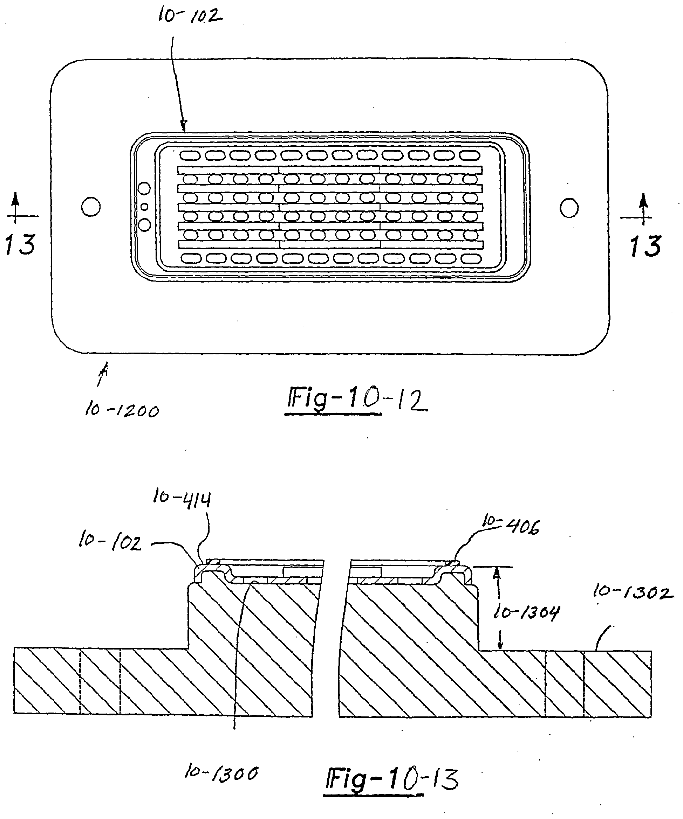

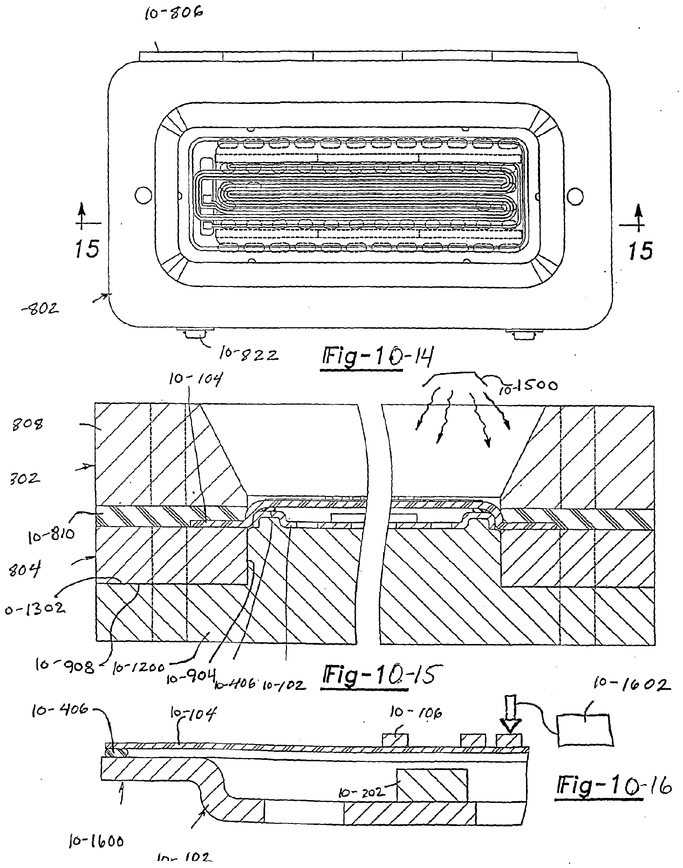

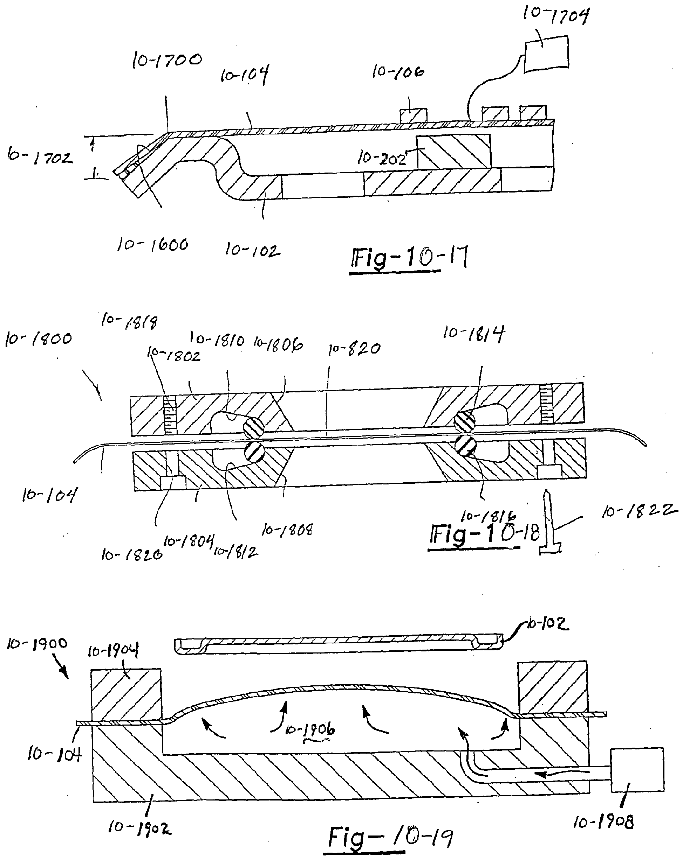

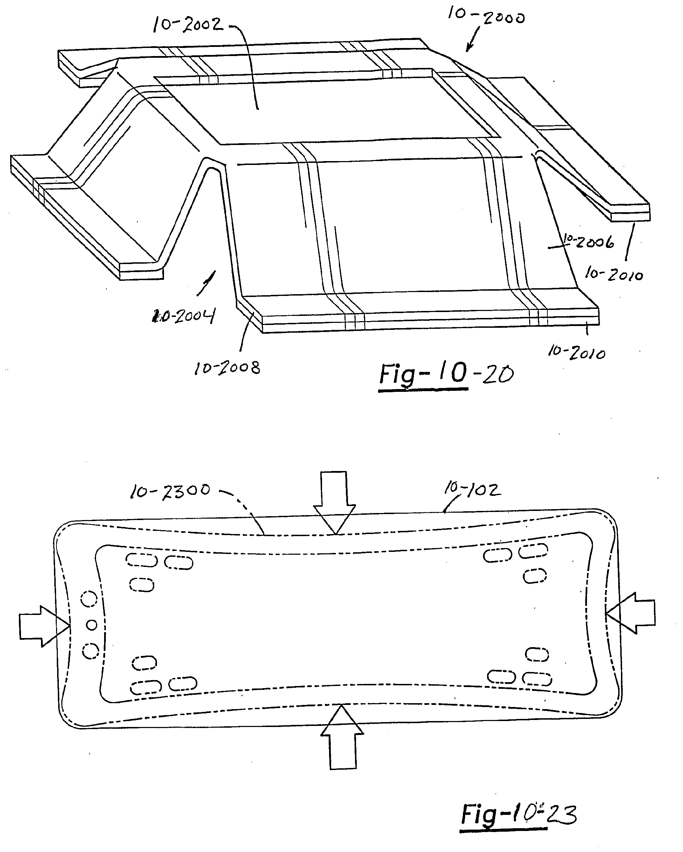

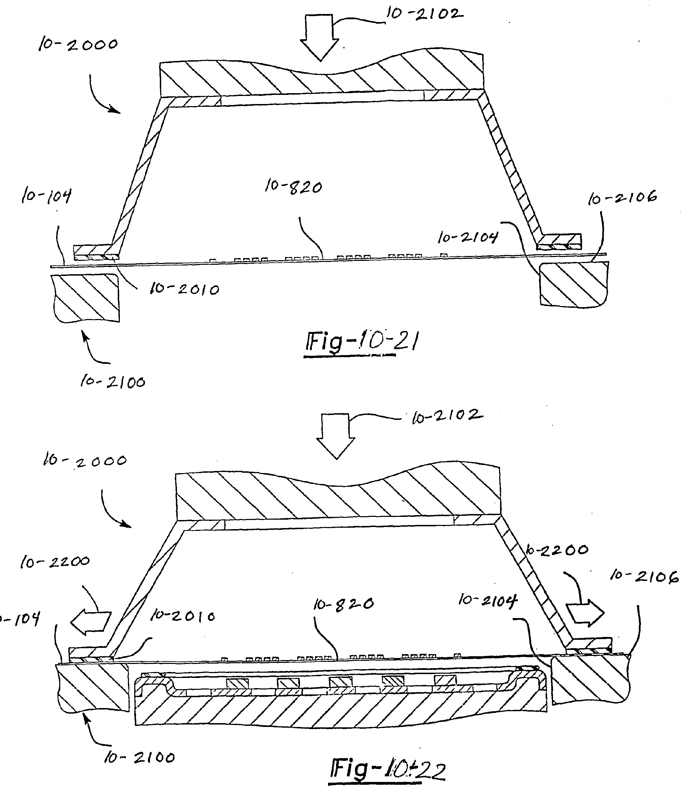

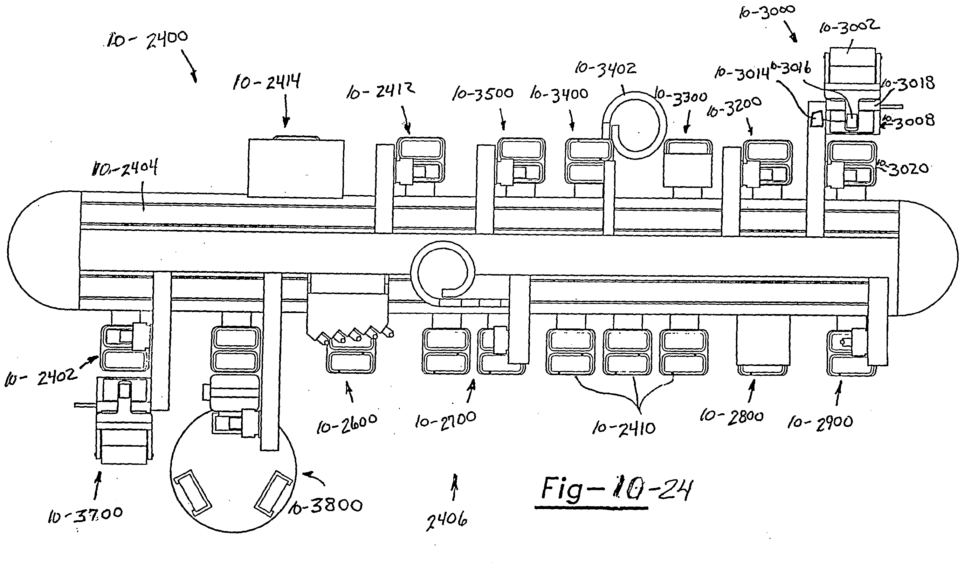

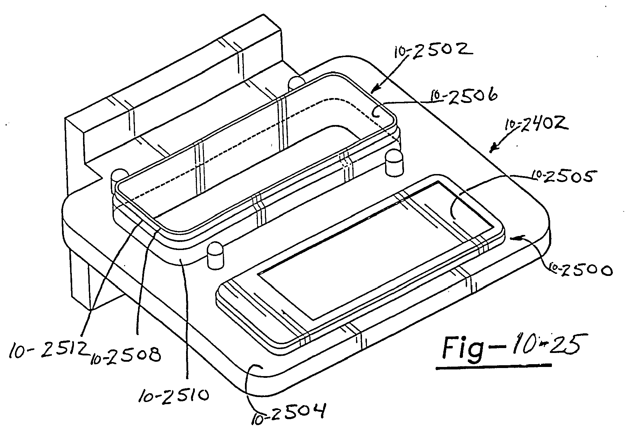

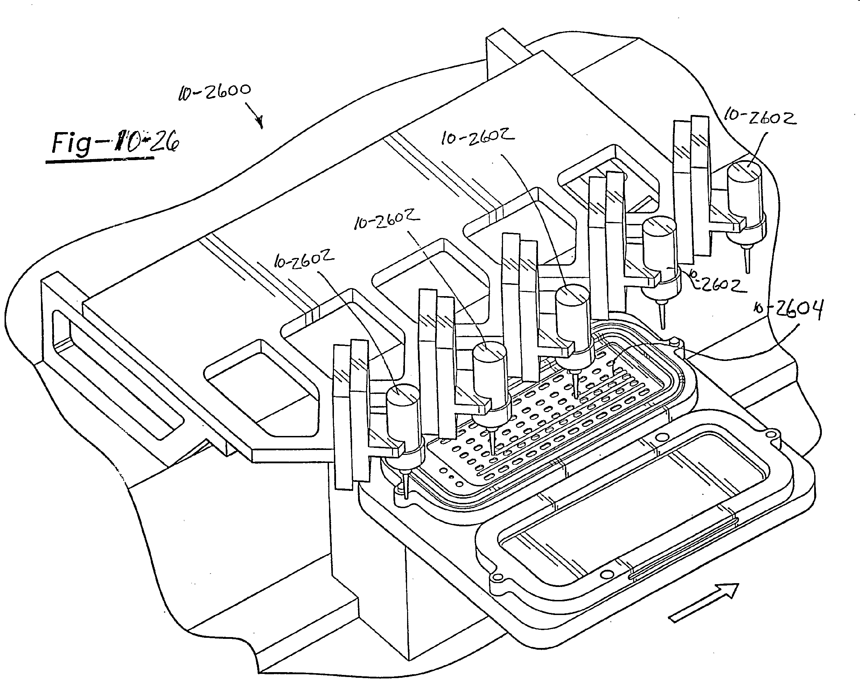

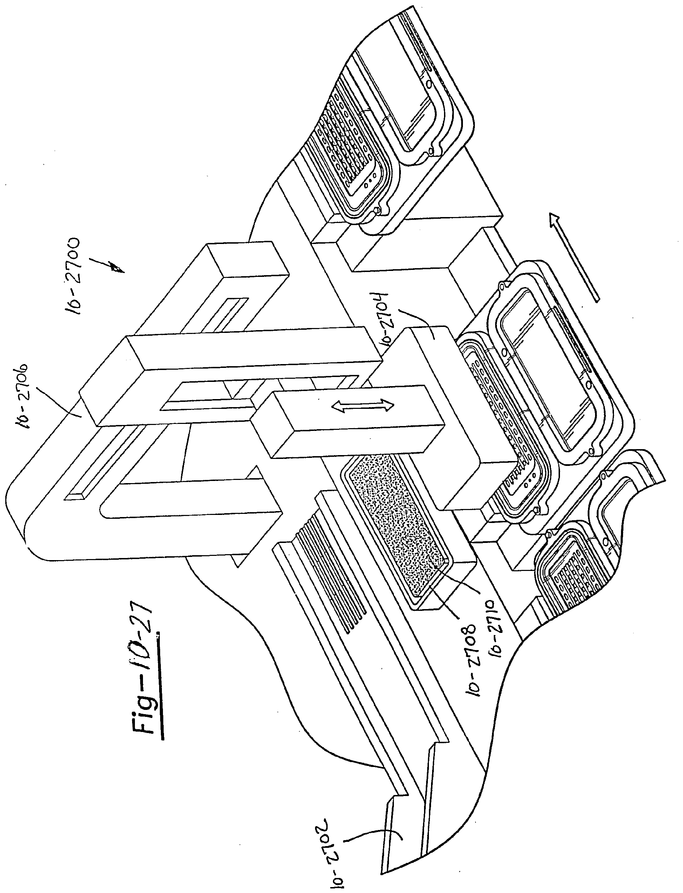

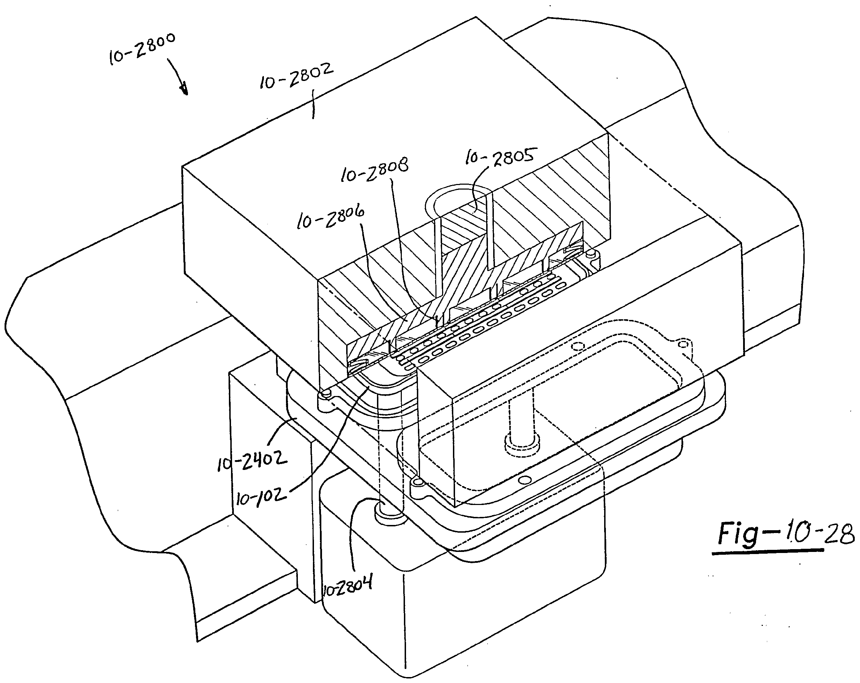

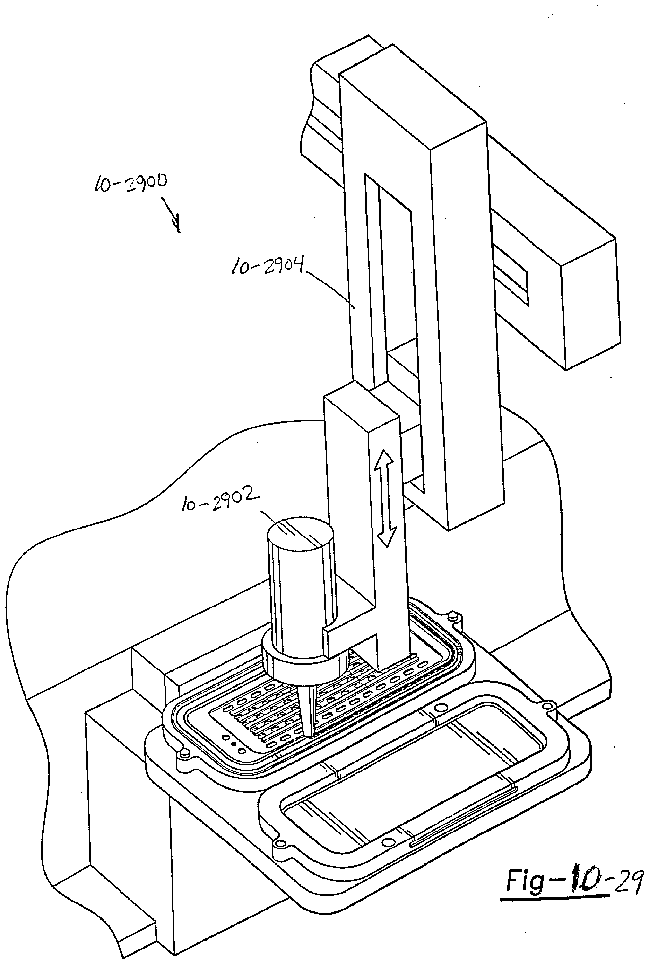

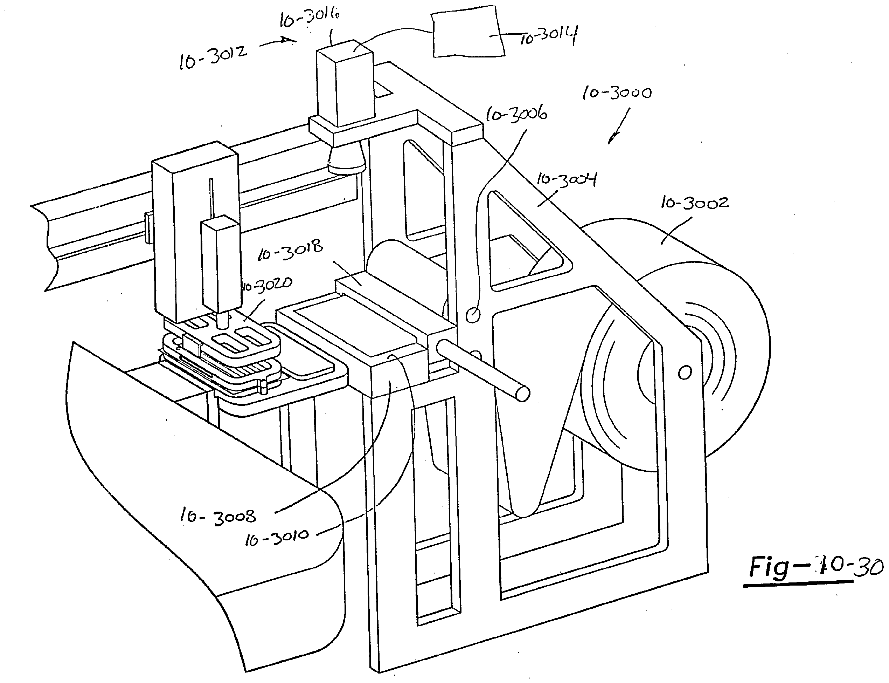

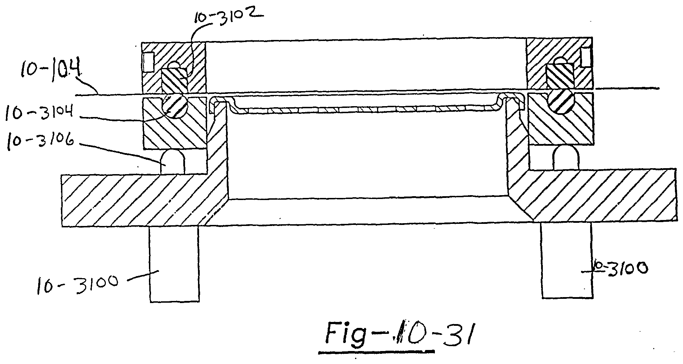

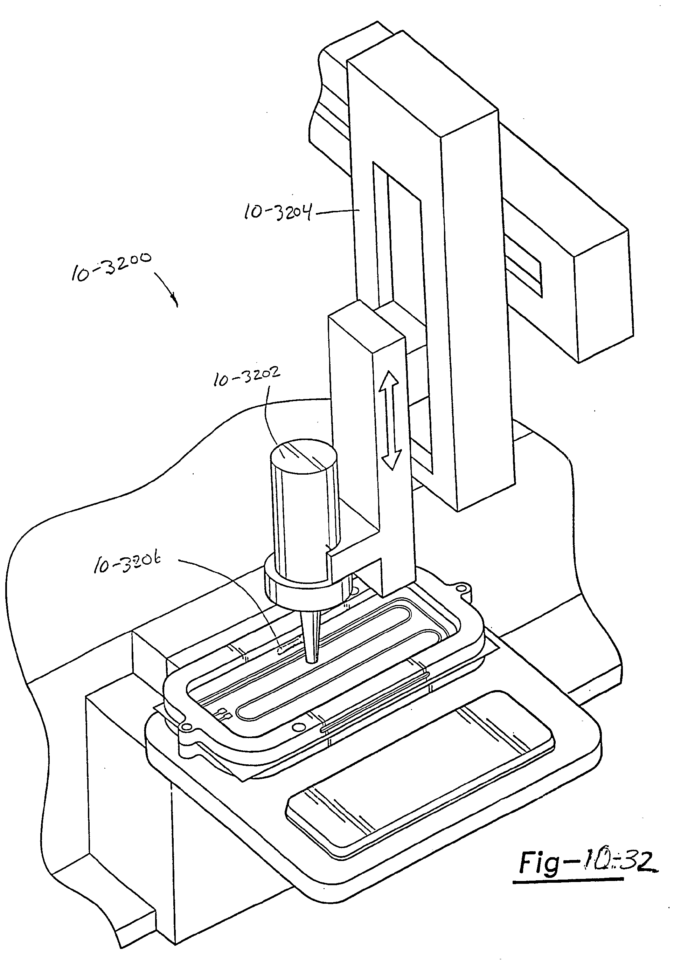

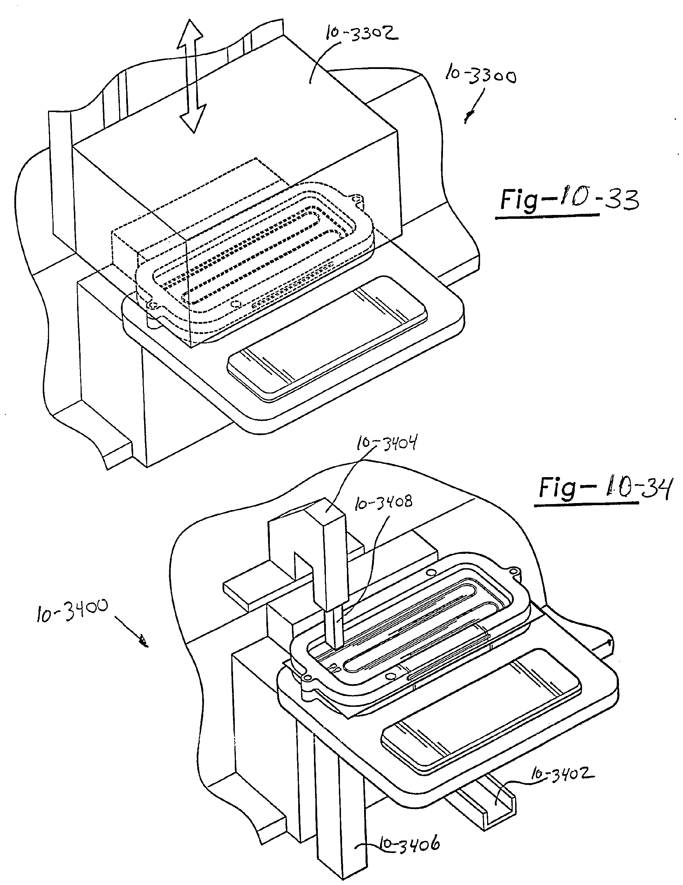

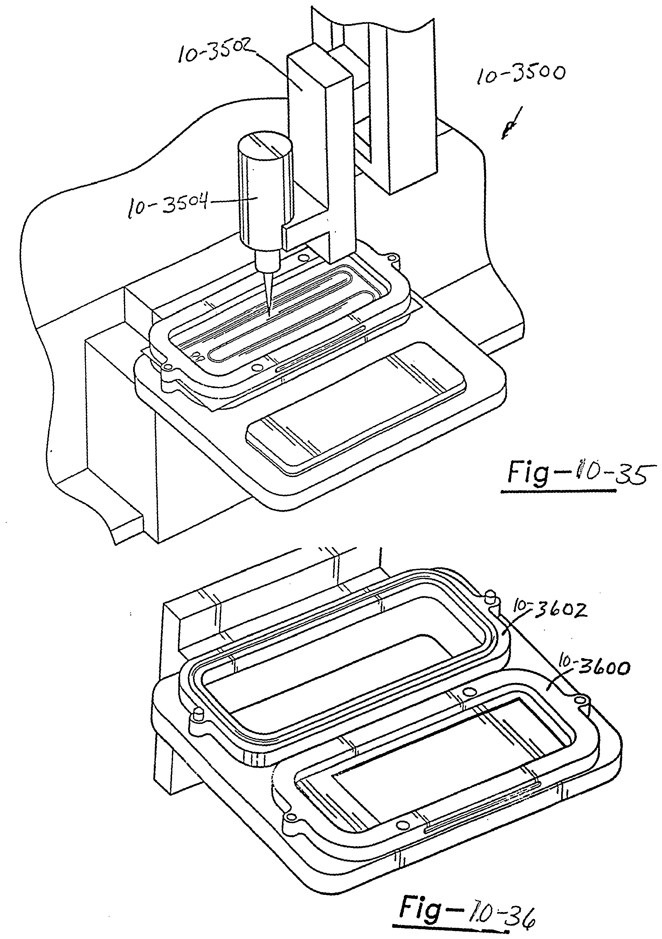

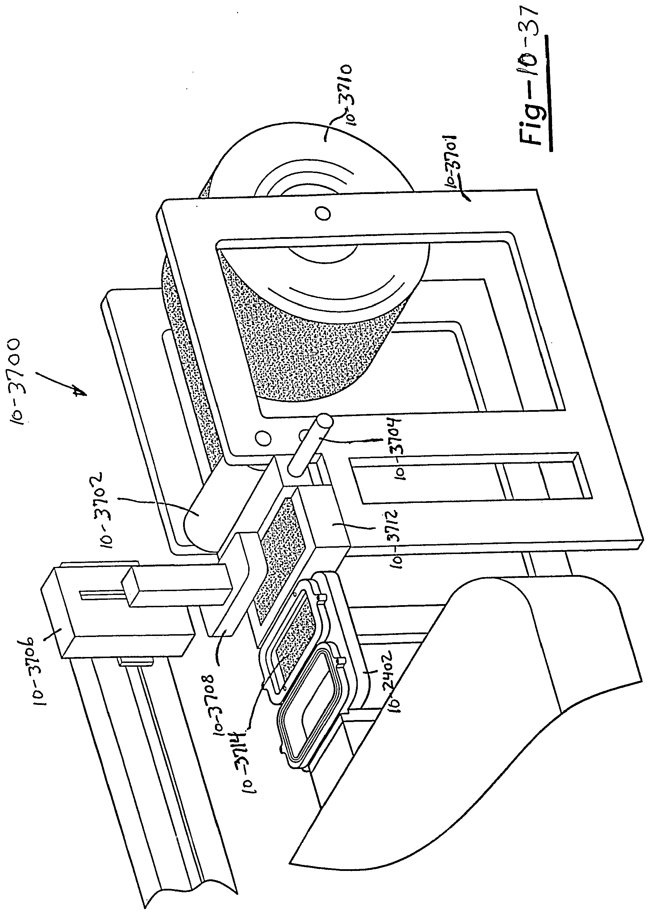

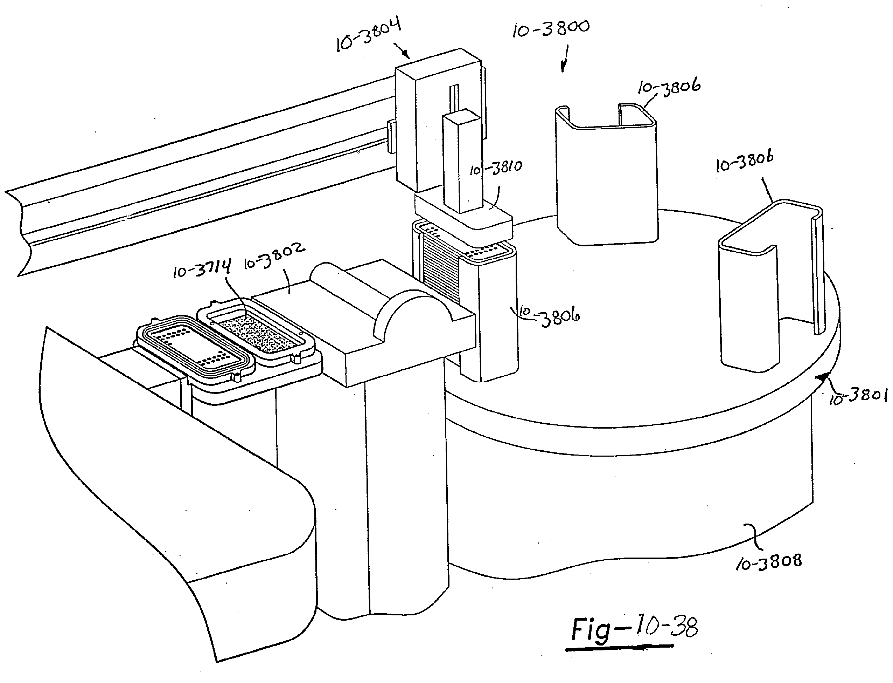

FIG. 10-5 is a plan view showing a conductor on a diaphragm of an electro-dynamic loudspeaker.

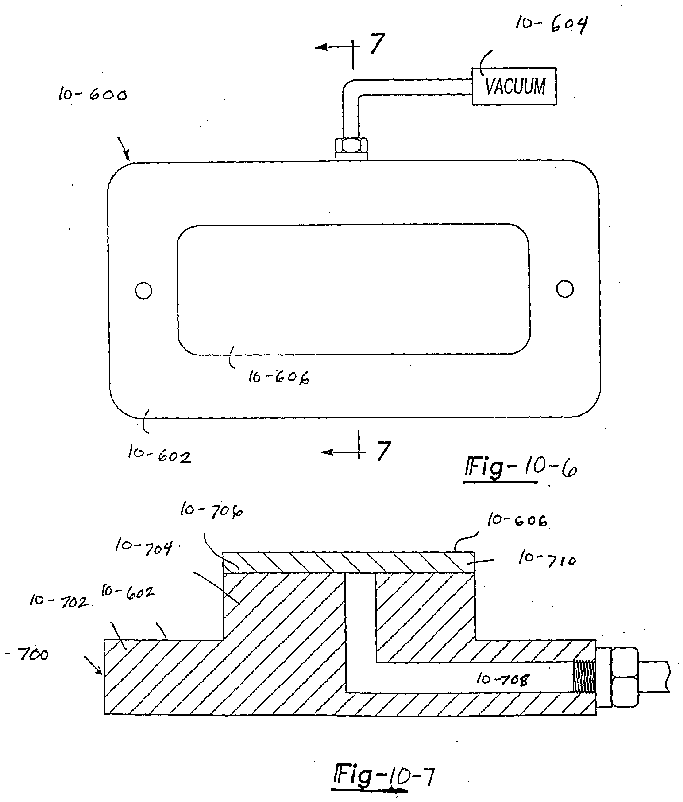

FIG. 10-6 is a plan view of a vacuum platen for use in constructing an electro-dynamic loudspeaker.
FIG. 10-7 is a cross-sectional side view of the vacuum platen shown in FIG. 10-6.

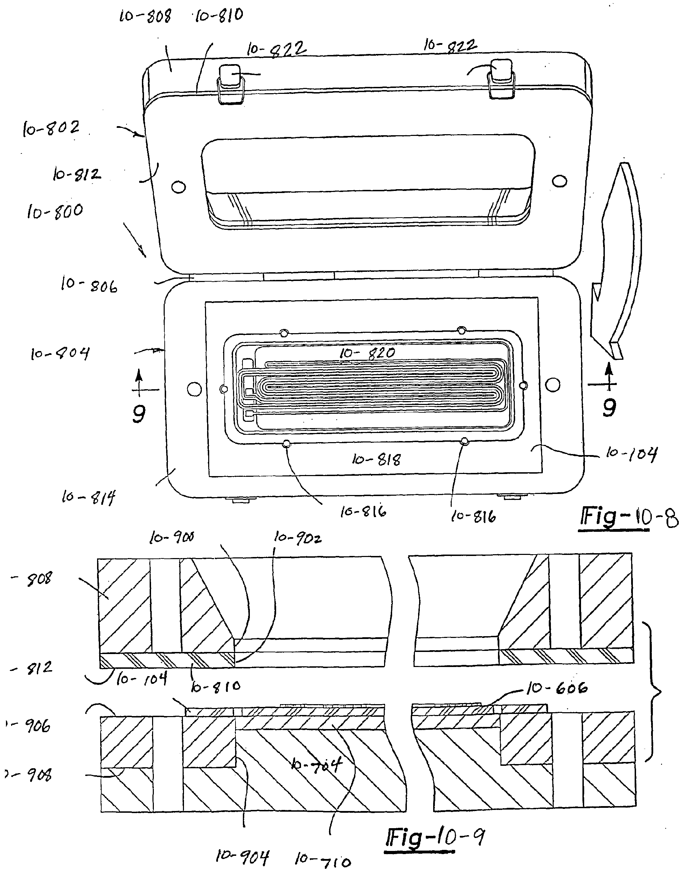

FIG. 10-8 is a perspective view of a clamp assembly for use in constructing of an electro-dynamic loudspeaker.
FIG. 10-9 is a cross-sectional side view of the clamp assembly of FIG. 10-8.
FIG. 10-10 is a plan view of the clamp assembly in a closed position.
FIG. 10-11 is a cross-sectional side view of the clamp assembly in the closed position.
FIG. 10-12 is a plan view of an assembly fixture for assembling an electro-dynamic loudspeaker.
FIG. 10-13 is a cross-sectional side view of the assembly fixture.
FIG. 10-14 is a plan view of the clamp assembly positioned atop the assembly fixture.
FIG. 10-15 is a cross-sectional side view of the closed clamp assembly positioned atop the assembly fixture.
FIG. 10-16 is cross-sectional side view of a work-in-process electro-dynamic loudspeaker.
FIG. 10-17 is a cross-sectional side view of a finished electro-dynamic loudspeaker.
FIG. 10-18 is a cross-sectional view of a film tensioning device constructed in accordance with the teachings of the invention.
FIG. 10-19 is a cross-sectional side view of an alternate film tensioning device.
FIG. 10-20 is a perspective view of an alternate tensioning member.
FIG. 10-21 is a cross-sectional side view depicting use of the alternate tensioning member shown in FIG. 10-20.
FIG. 10-22 is a cross-sectional side view further depicting diaphragm tensioning using the alternate tensioning member of FIG. 10-20.
FIG. 10-23 depicts a frame in an undeformed state and a deformed state.
FIG. 10-24 is a plan view of an electro-dynamic loudspeaker assembly system.
FIG. 10-25 is a perspective view of a pallet for use in the assembly system.
FIG. 10-26 is a perspective view of an adhesive application station.
FIG. 10-27 is a perspective view of a magnet loading and adhesive activator application station.
FIG. 10-28 is a perspective view of a magnetization station.
FIG. 10-29 is a perspective view of an adhesive application station.
FIG. 10-30 is a perspective view of a diaphragm loading station.
FIG. 10-31 is a cross-sectional view of speaker components and fixturing located after completing diaphragm loading as depicted in FIG. 10-30.
FIG. 10-32 is a perspective view of an edge treatment compound application station.
FIG. 10-33 is a perspective view of a clamping and irradiation station.
FIG. 10-34 is a perspective view of a terminal crimping station.
FIG. 10-35 is a perspective view of a diaphragm trimming station.
FIG. 10-36 is a perspective view of the pallet having a lower clamp frame and an upper clamp frame positioned thereon.
FIG. 10-37 is a perspective view of a felt cutting and loading station.
FIG. 10-38 is a perspective view of a frame loading station.

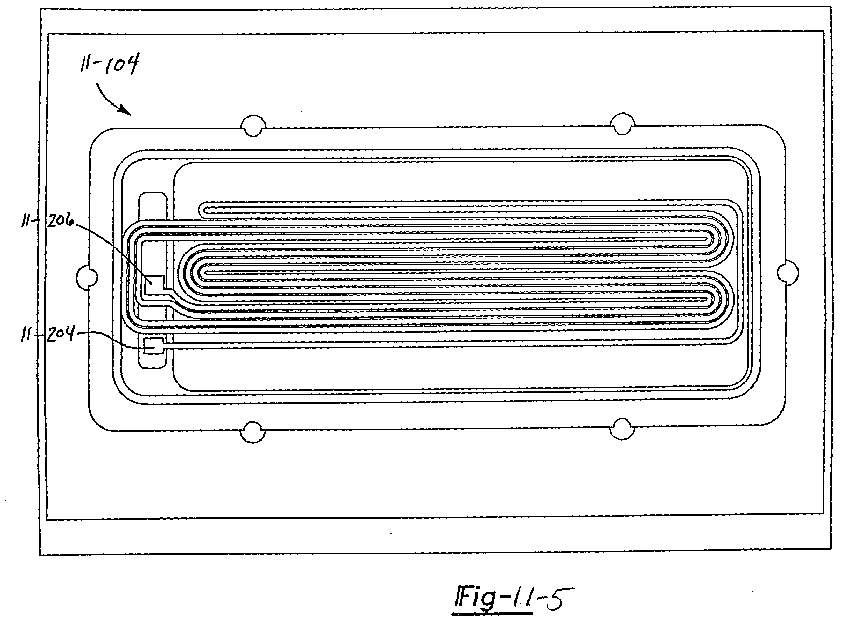

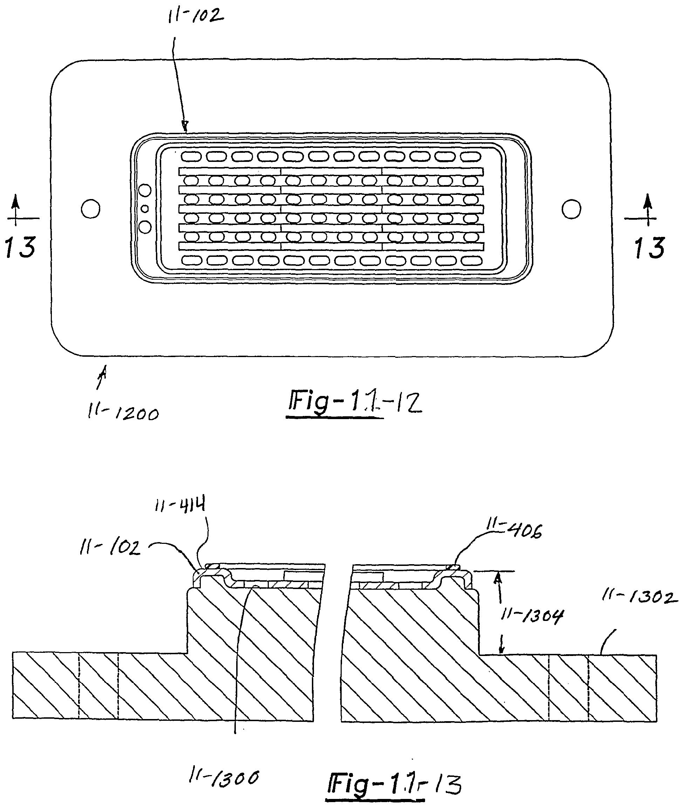

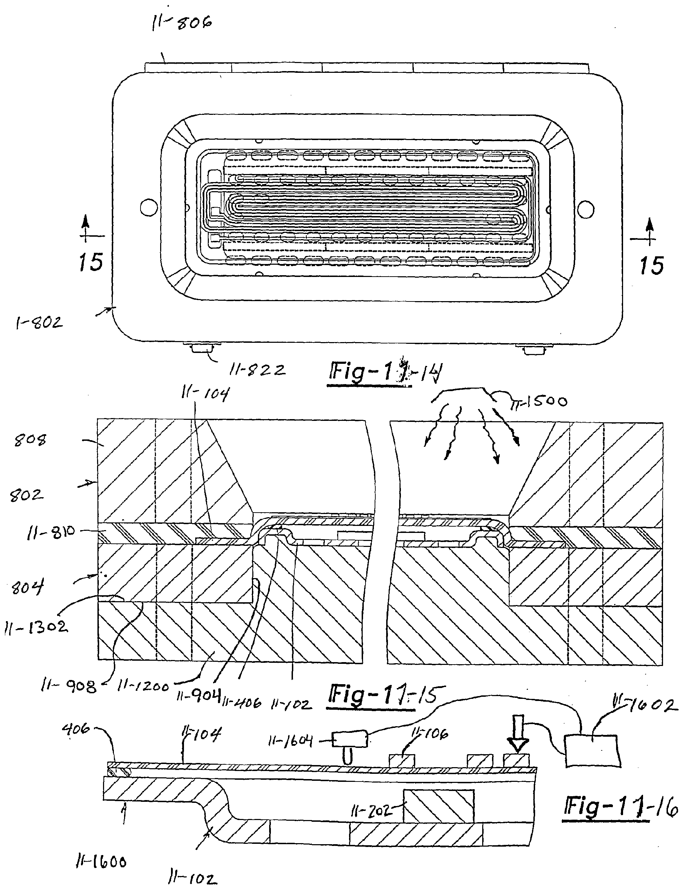

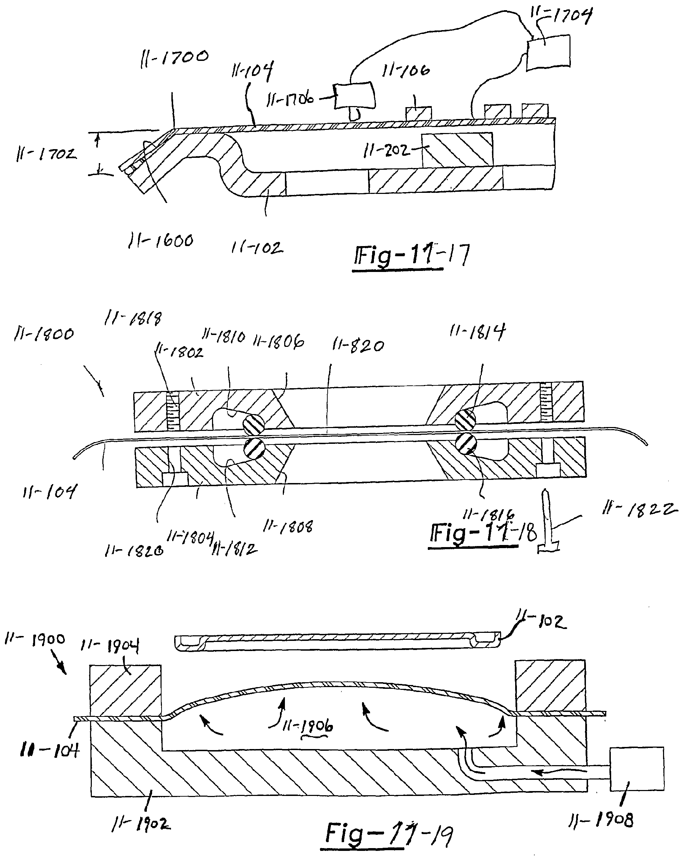

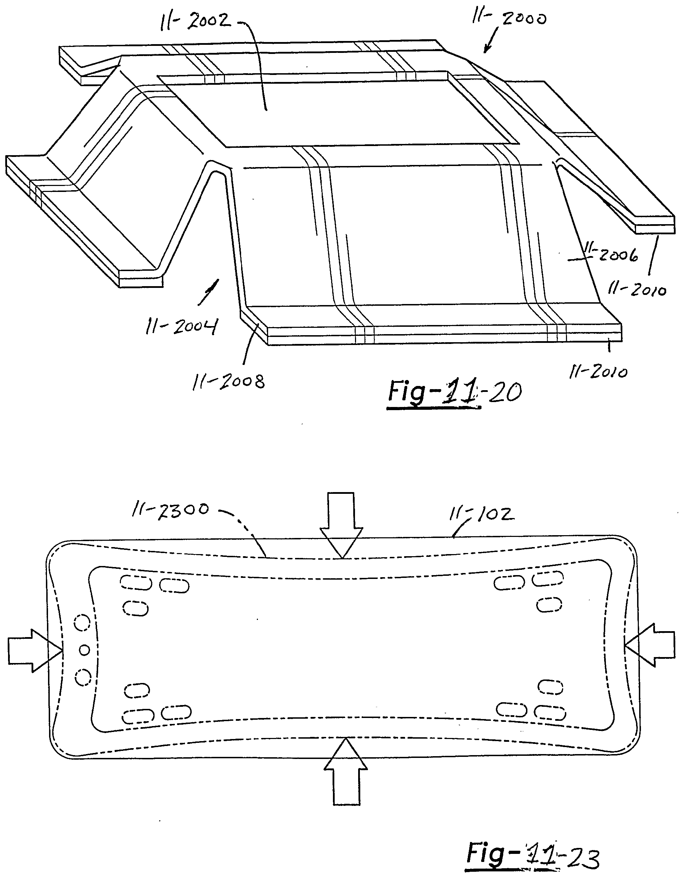

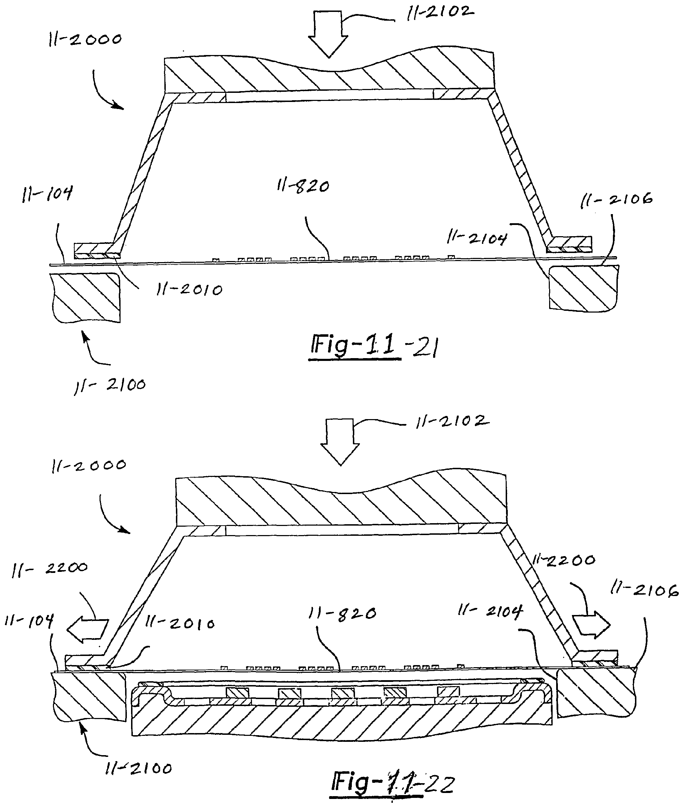

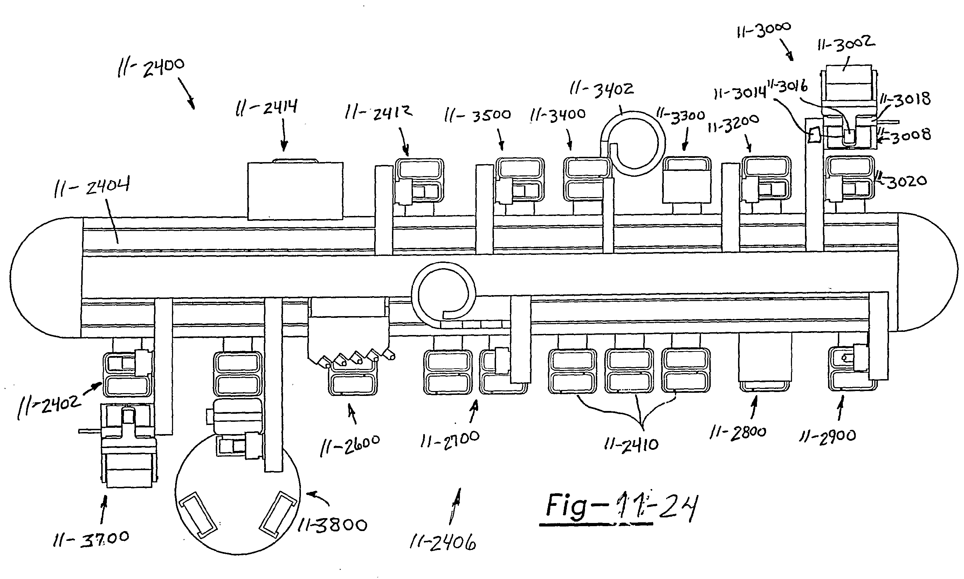

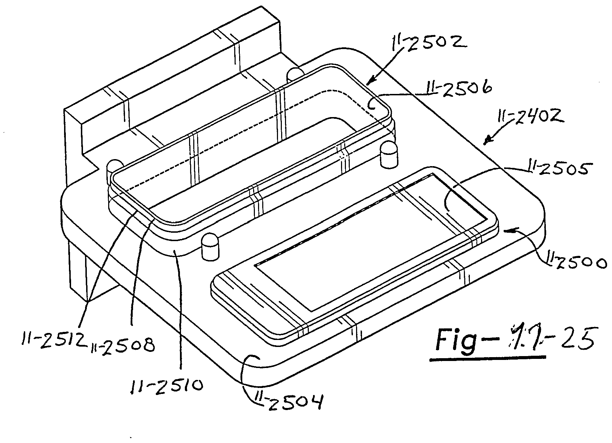

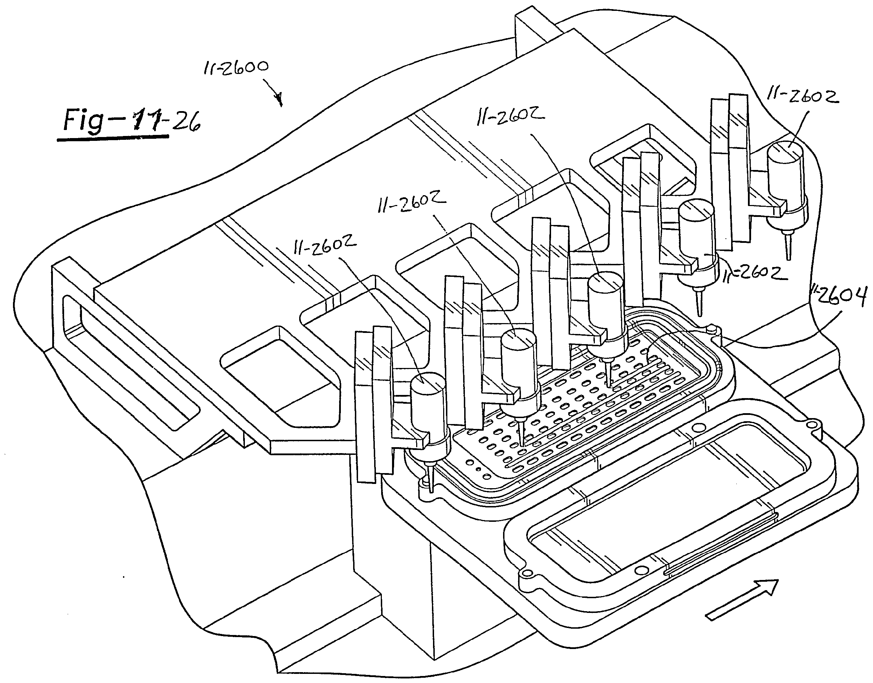

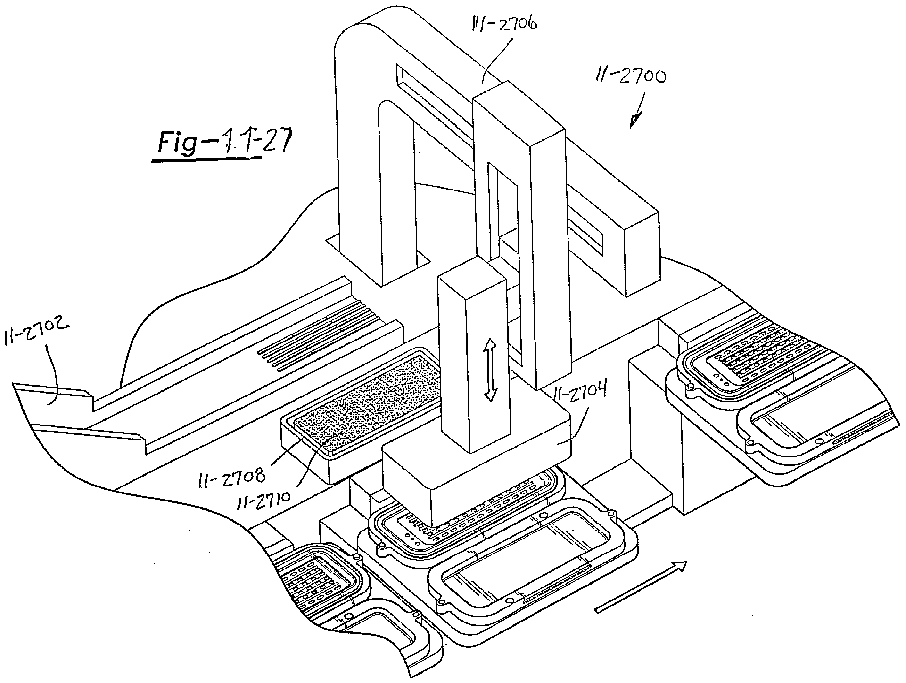

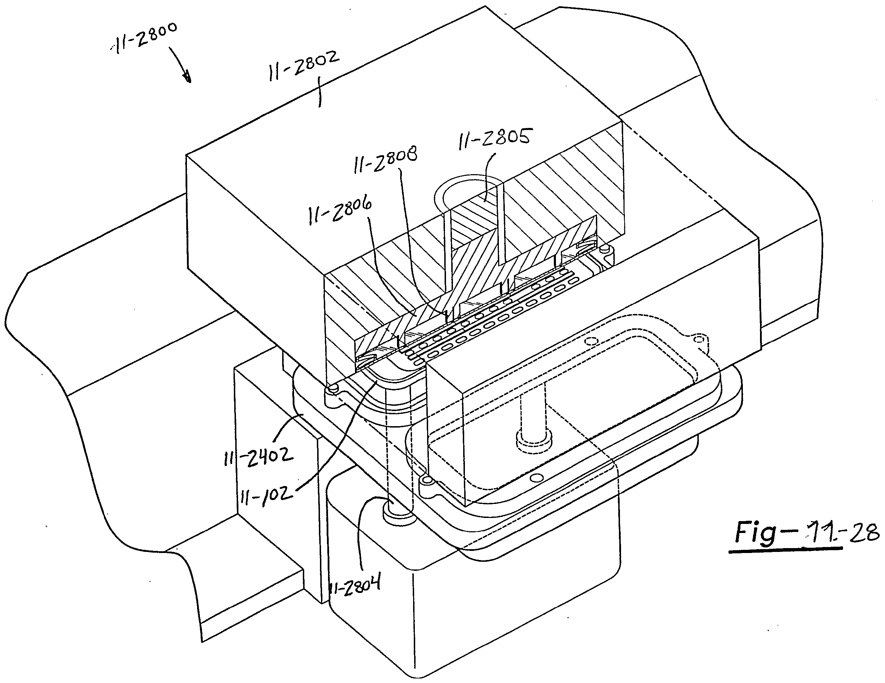

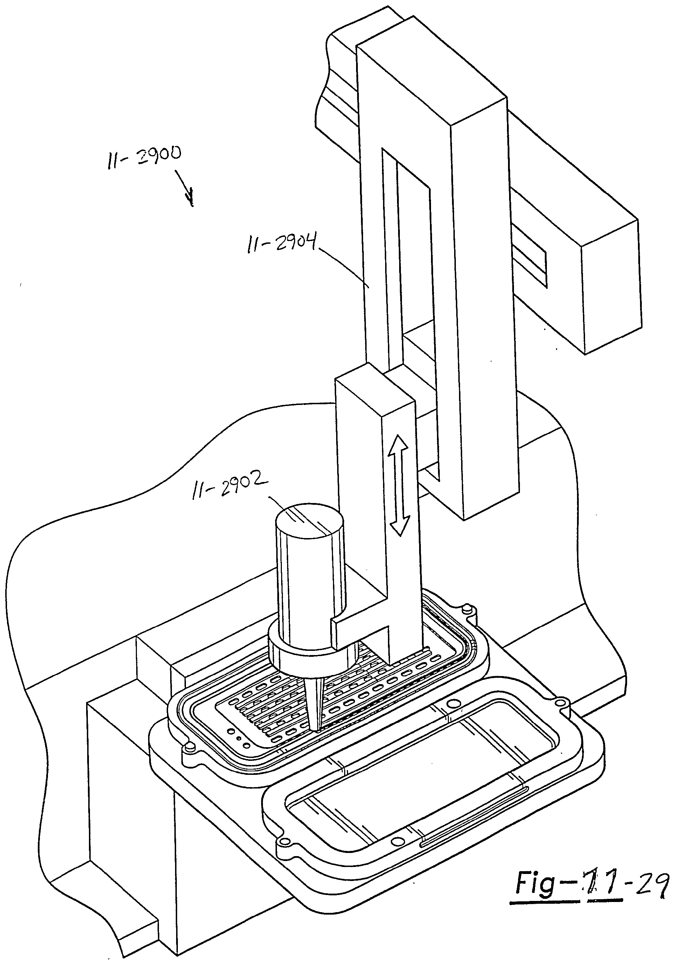

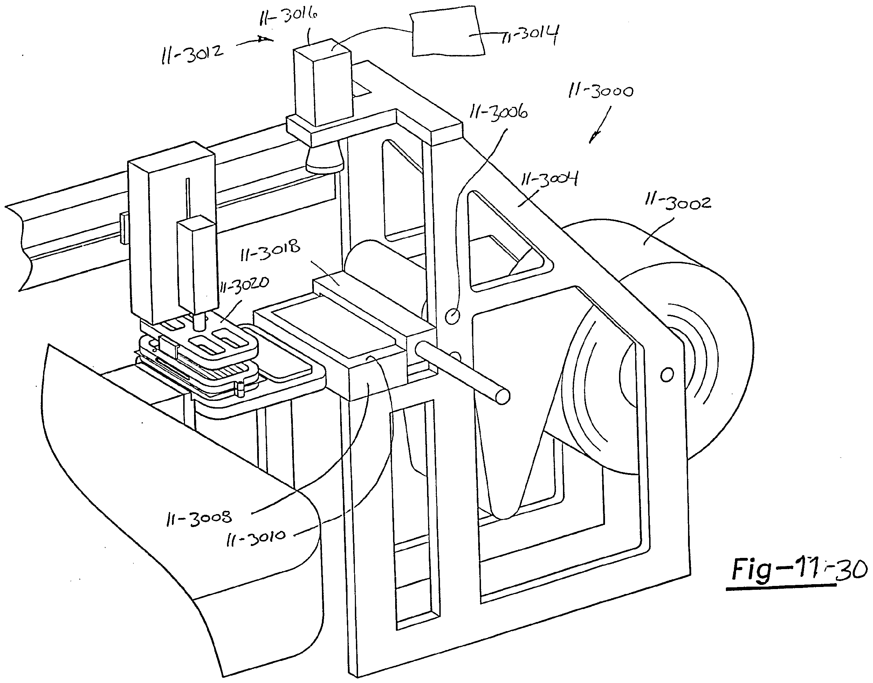

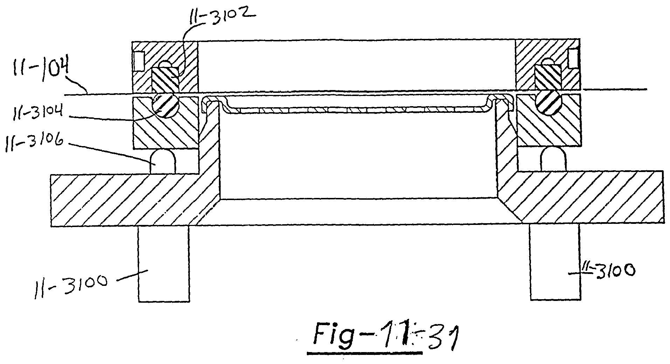

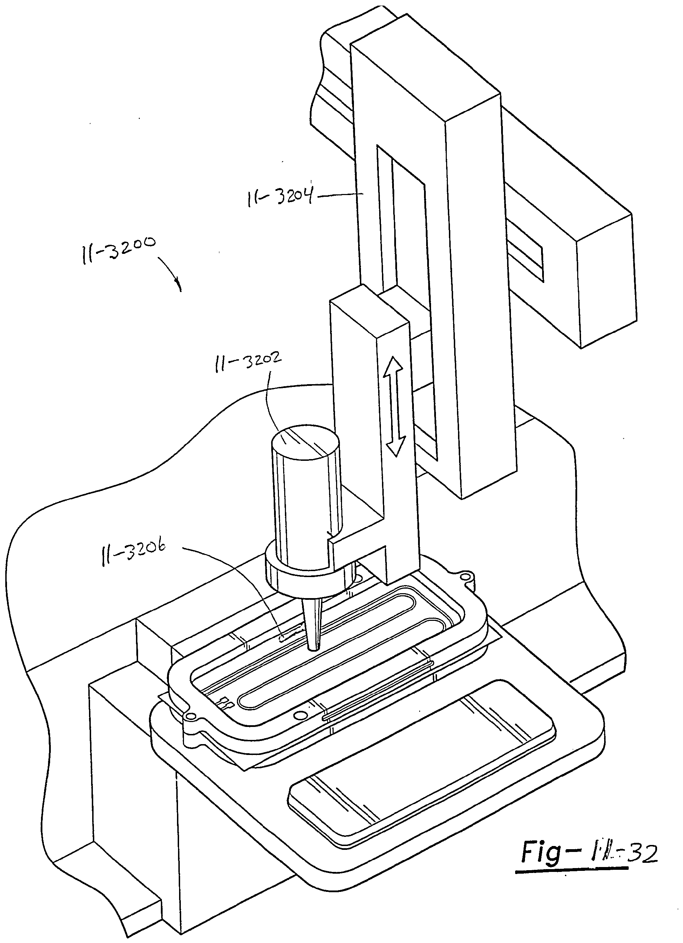

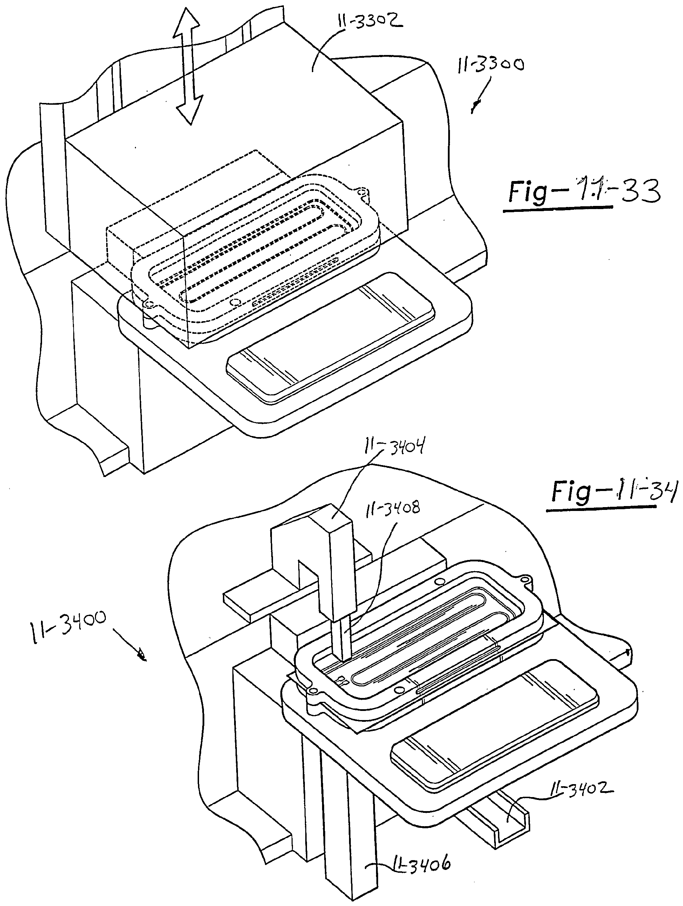

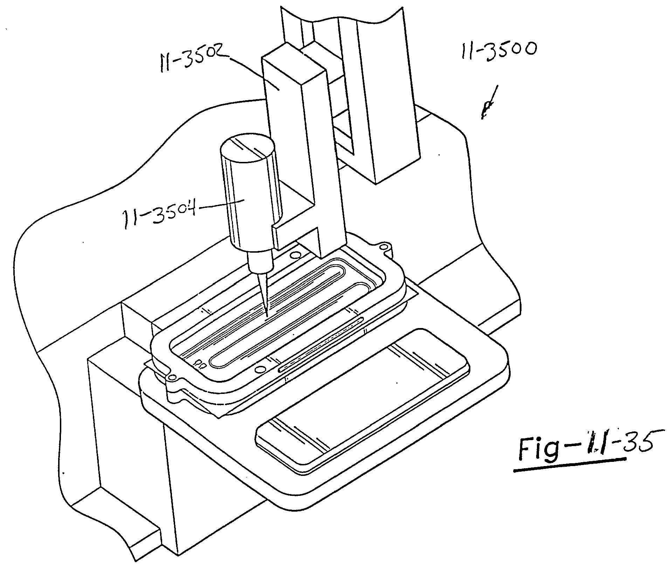

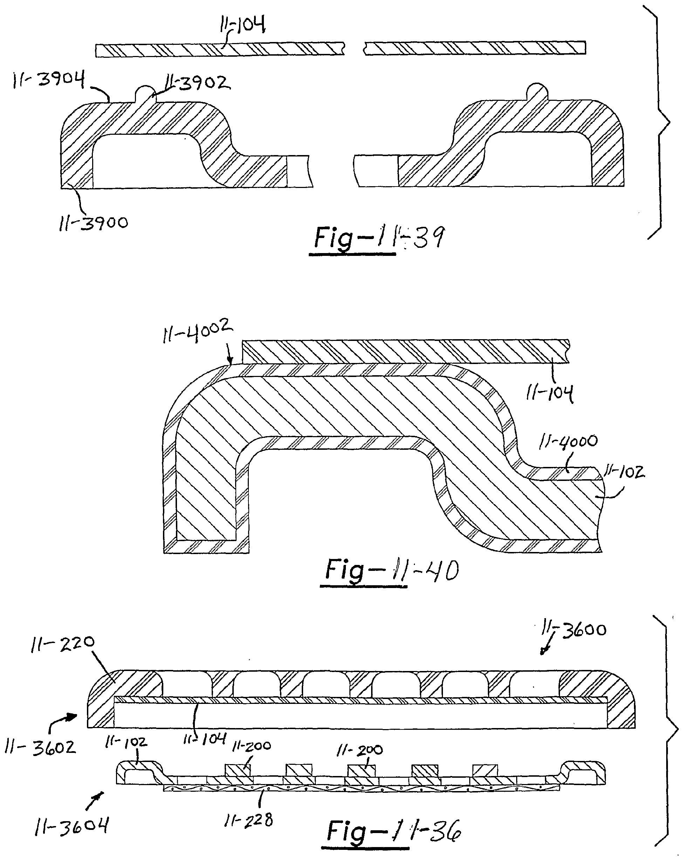

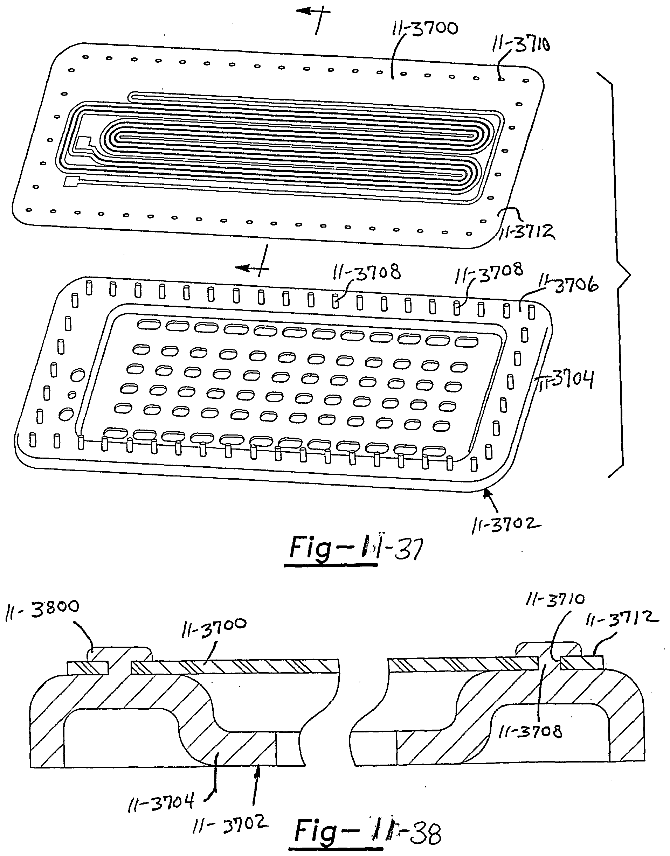

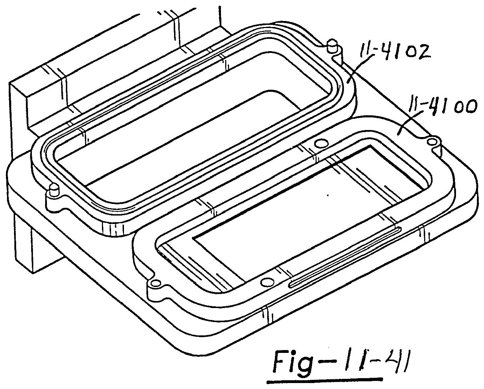

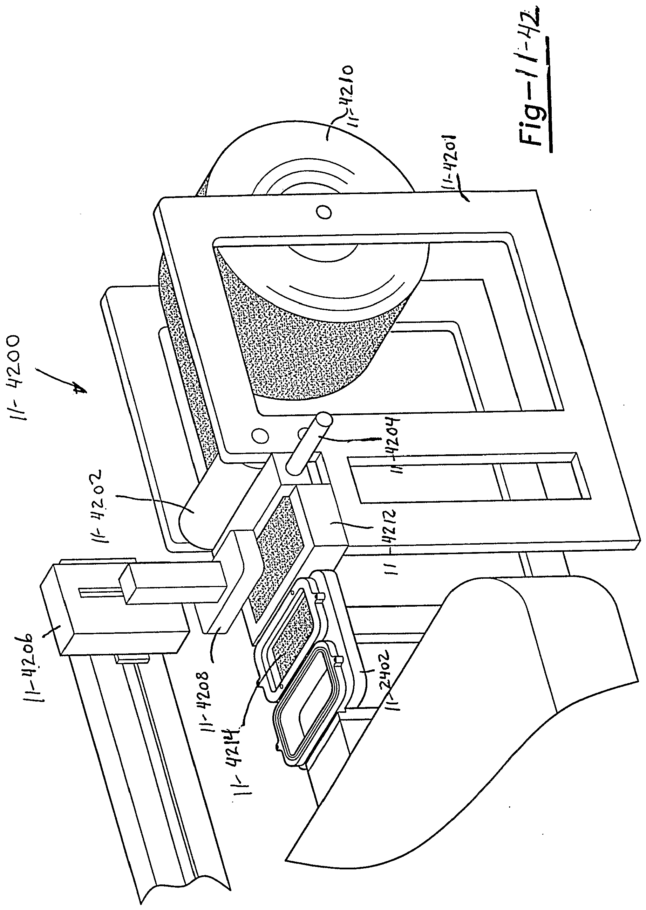

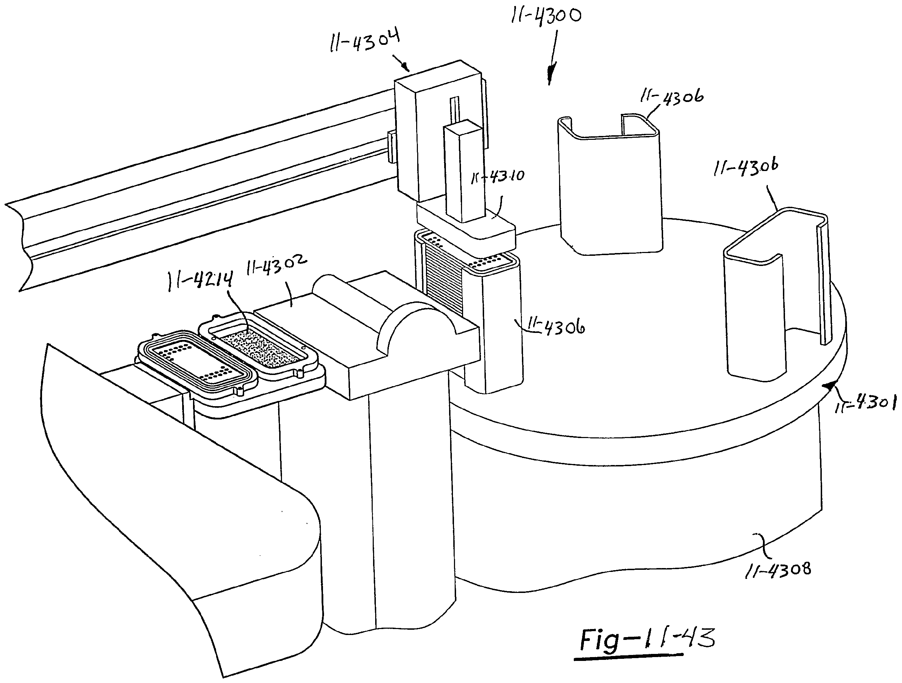

FIG. 11-5 is a plan view showing a conductor on a diaphragm of an electro-dynamic loudspeaker.
FIG. 11-6 is a plan view of a vacuum platen for use in constructing an electro-dynamic loudspeaker.
FIG. 11-7 is a cross-sectional side view of the vacuum platen shown in FIG. 11-6.

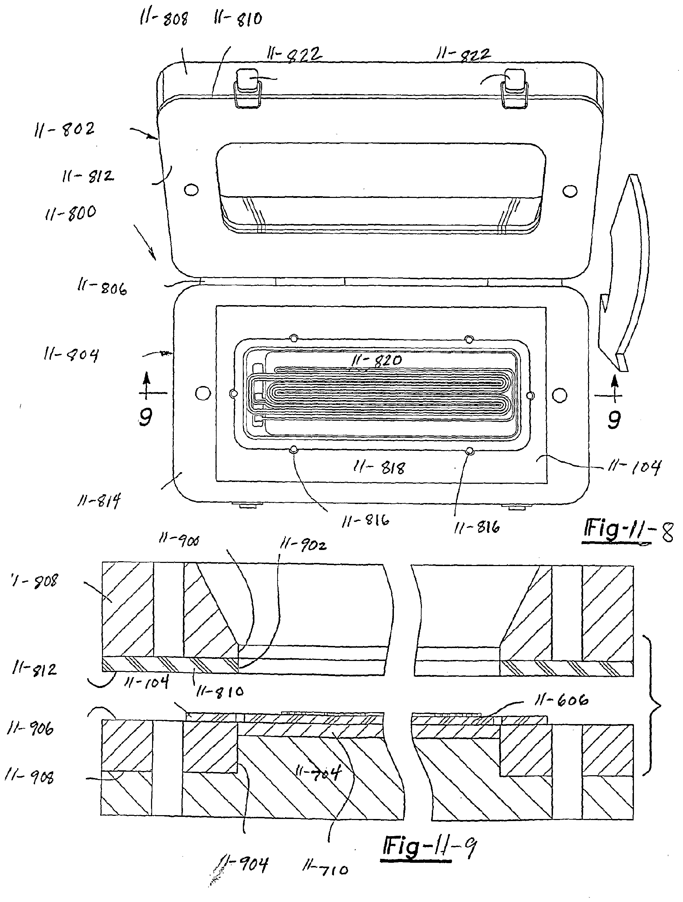

FIG. 11-8 is a perspective view of a clamp assembly for use in constructing an electro-dynamic loudspeaker.
FIG. 11-9 is a cross-sectional side view of the clamp assembly of FIG. 11-8.

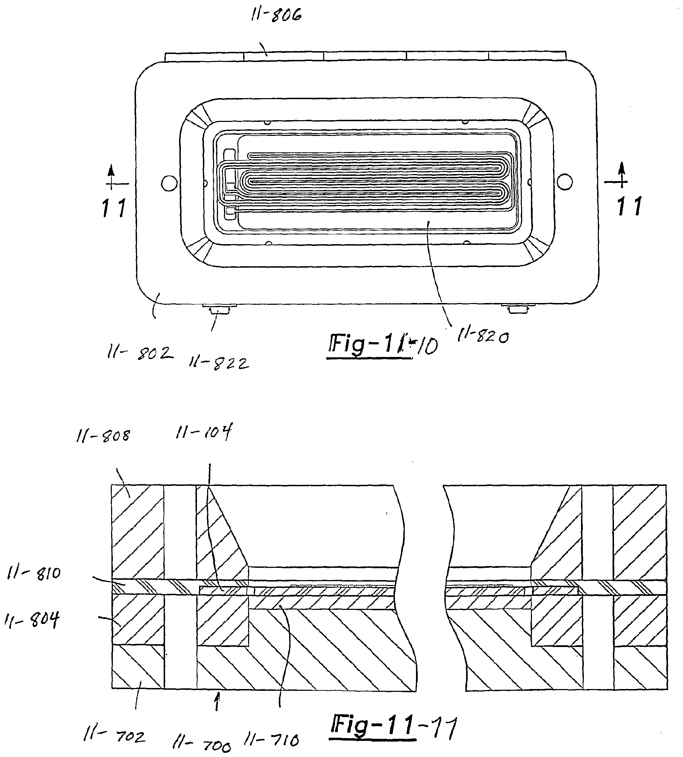

FIG. 11-10 is a plan view of the clamp assembly in a closed position.
FIG. 11-11 is a cross-sectional side view of the clamp assembly in the closed position.
FIG. 11-12 is a plan view of an assembly fixture for assembling an electro-dynamic loudspeaker.
FIG. 11-13 is a cross-sectional side view of the assembly fixture.
FIG. 11-14 is a plan view of the clamp assembly positioned atop the assembly fixture.
FIG. 11-15 is a cross-sectional side view of the closed clamp assembly positioned atop the assembly fixture.
FIG. 11-16 is cross-sectional side view of a work-in-process electro-dynamic loudspeaker.
FIG. 11-17 is a cross-sectional side view of a finished electro-dynamic loudspeaker.
FIG. 11-18 is a cross-sectional view of a film tensioning device.
FIG. 11-19 is a cross-sectional side view of an alternate film tensioning device.
FIG. 11-20 is a perspective view of a generally frusto-conically shaped tensioning member.
FIG. 11-21 is a cross-sectional side view depicting an alternate tensioning method using the frusto-conical member shown in FIG. 11-20.

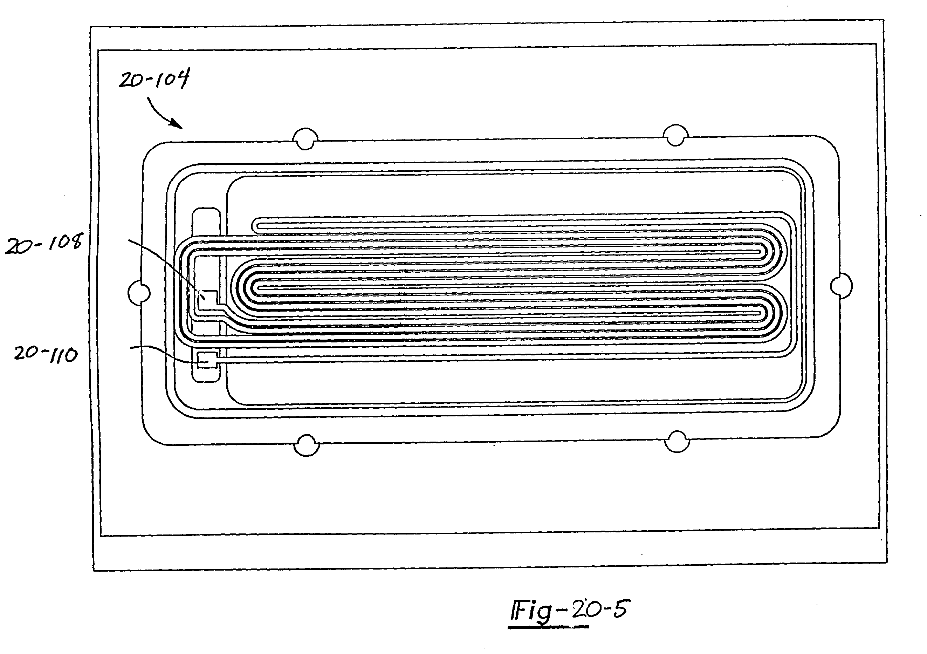

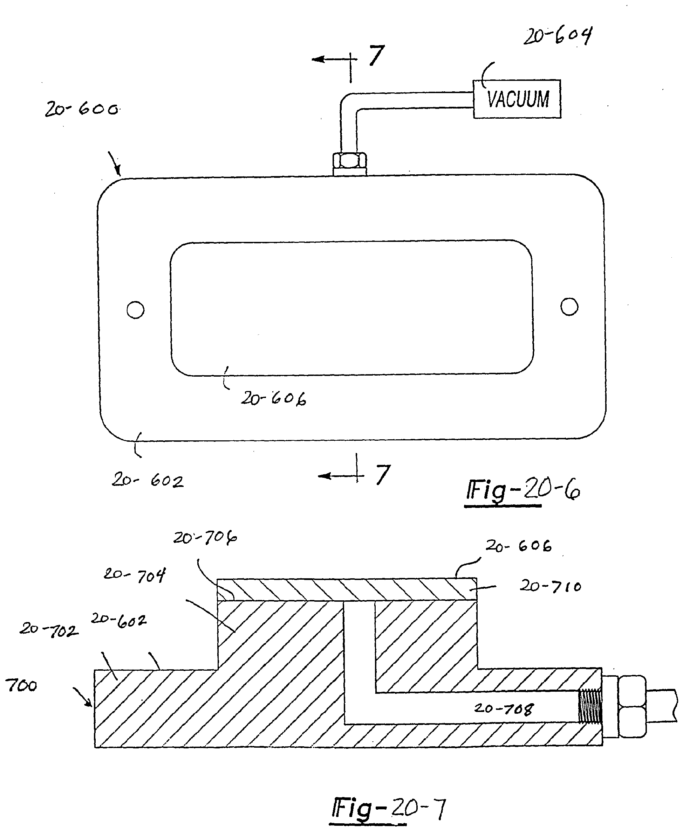

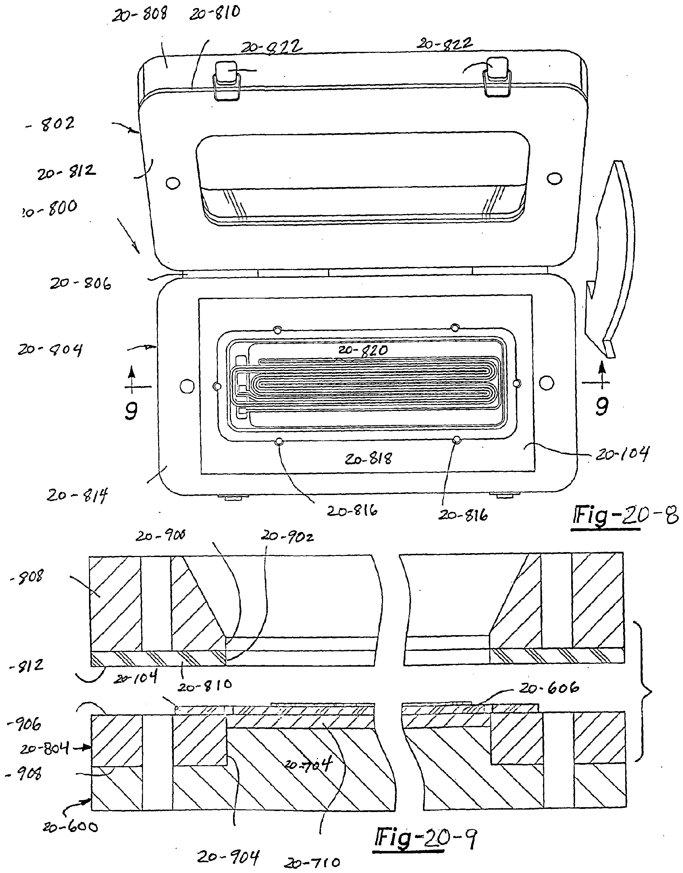

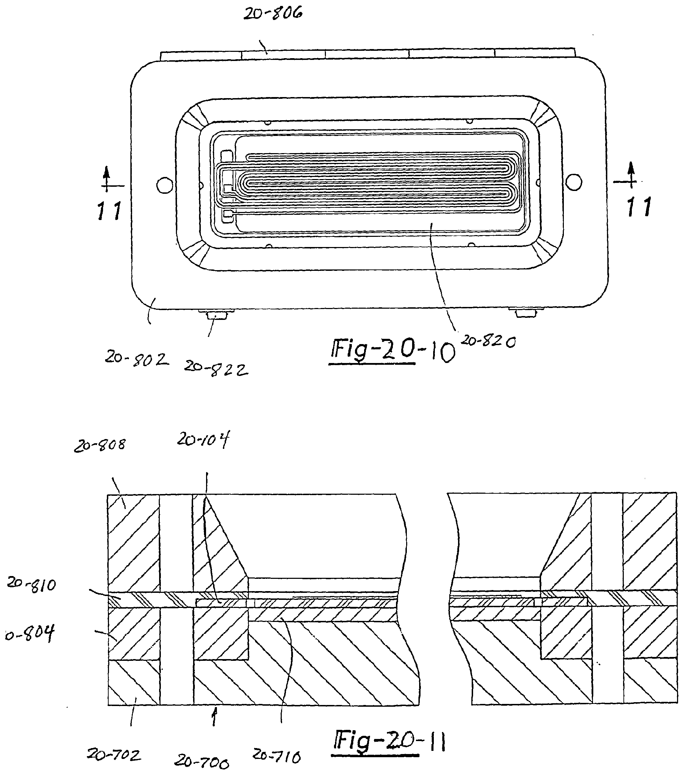

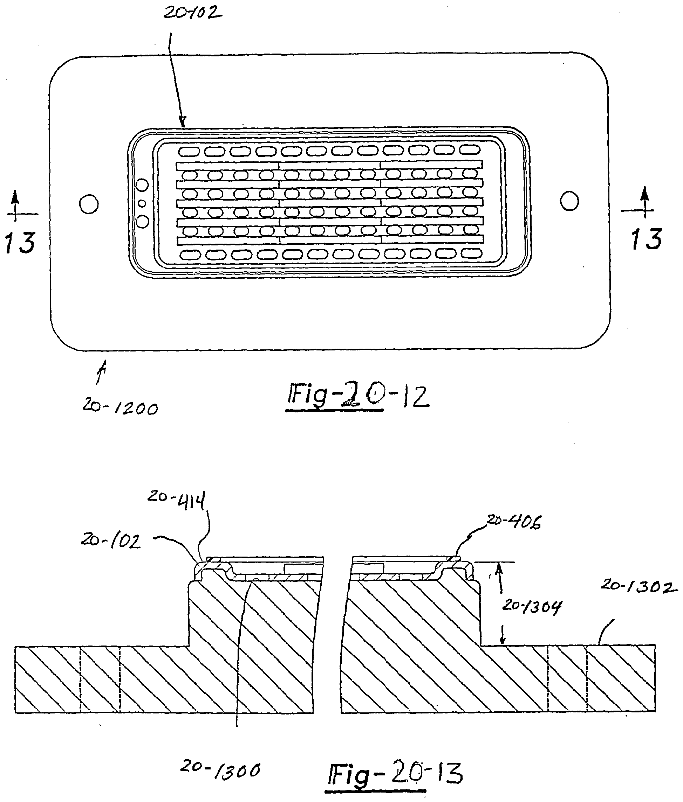

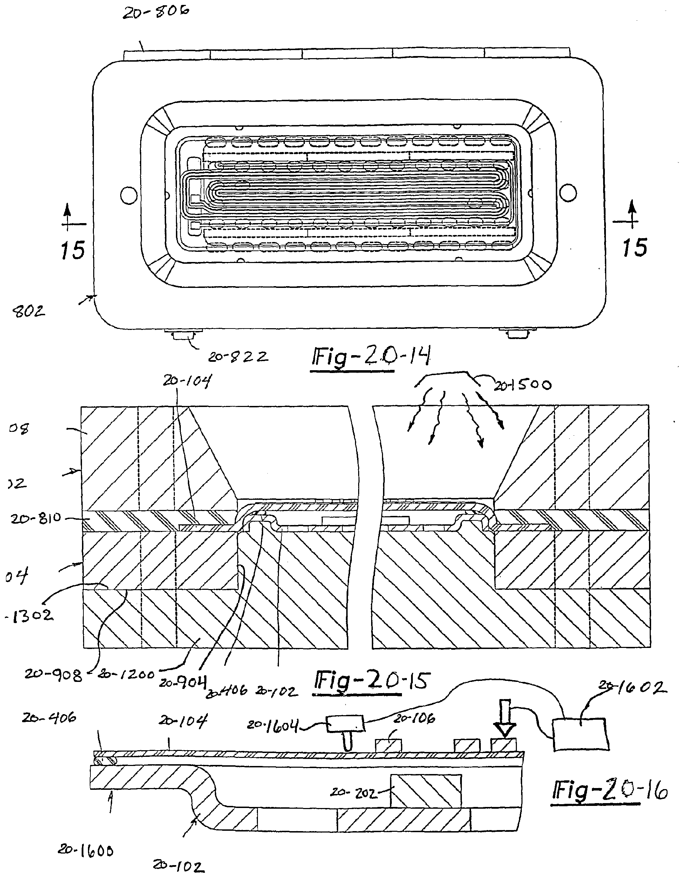

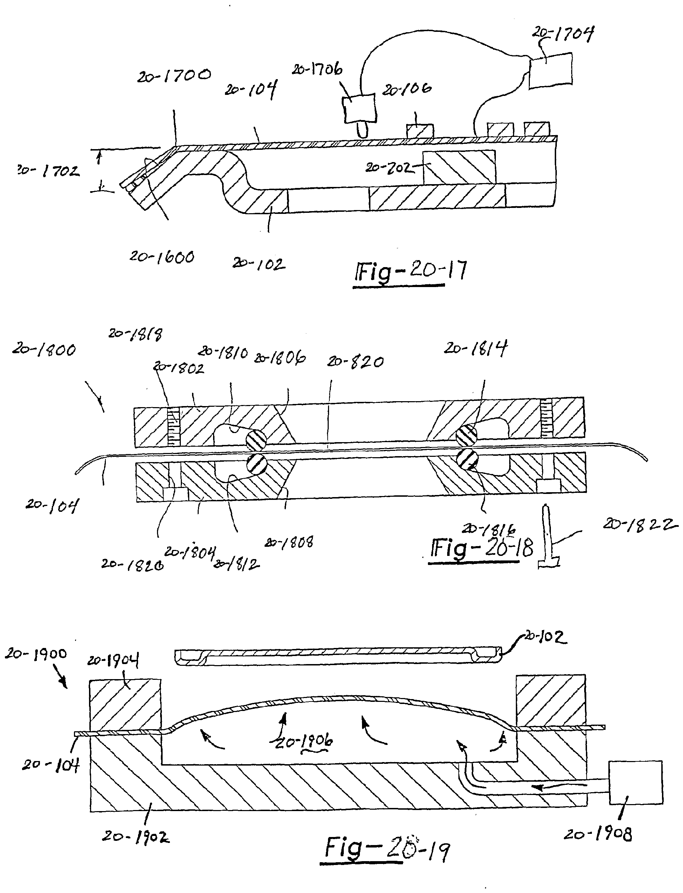

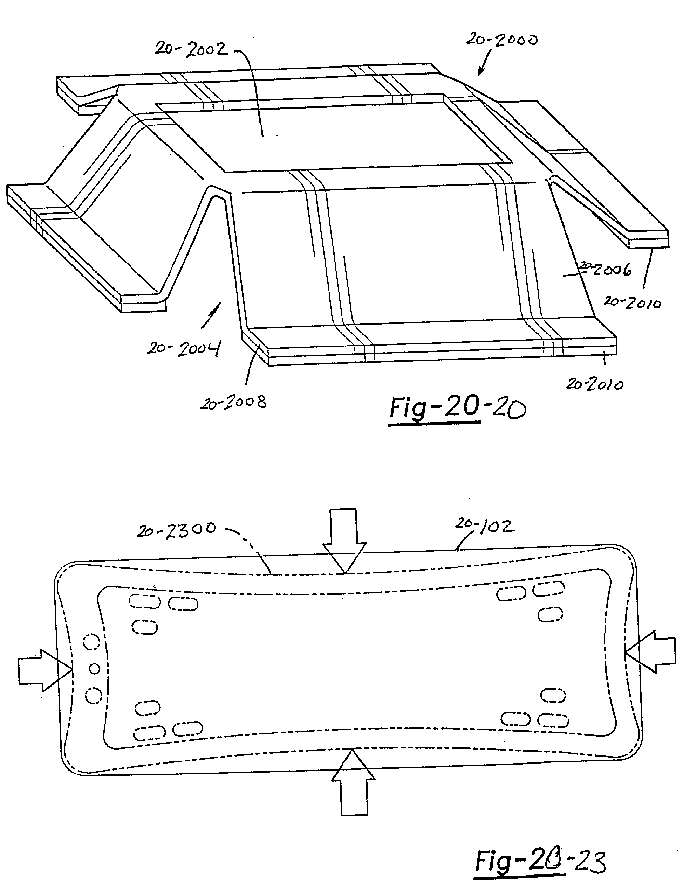

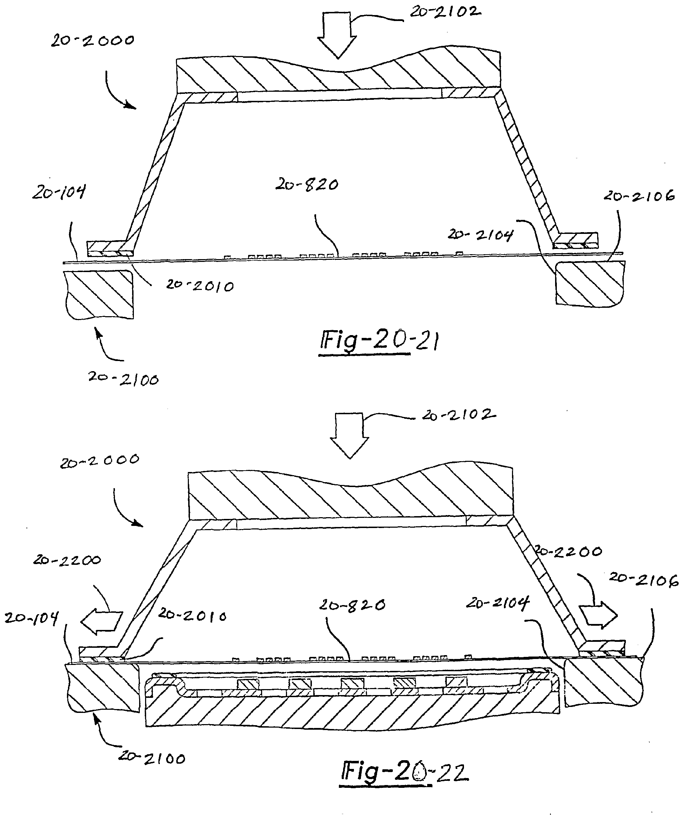

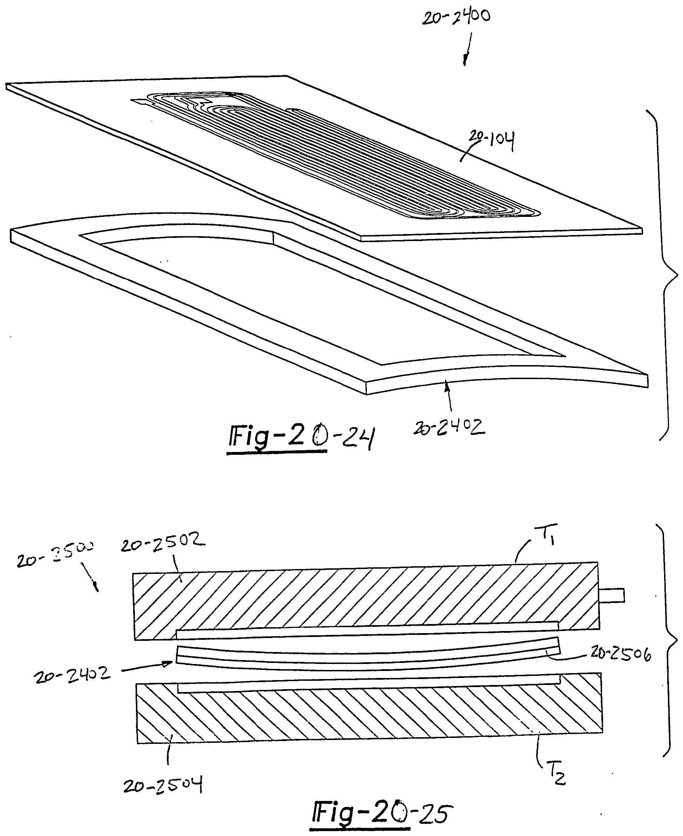

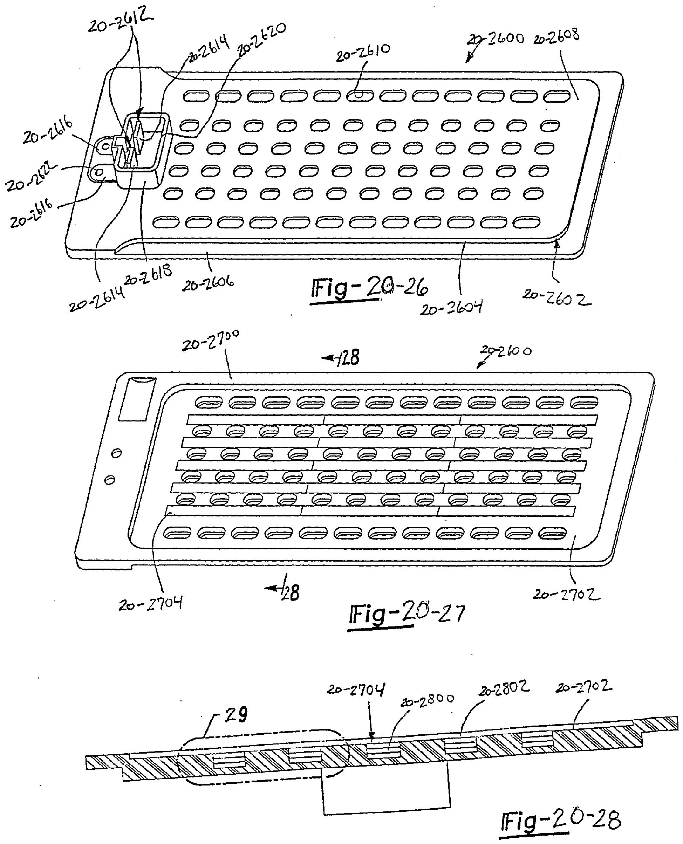

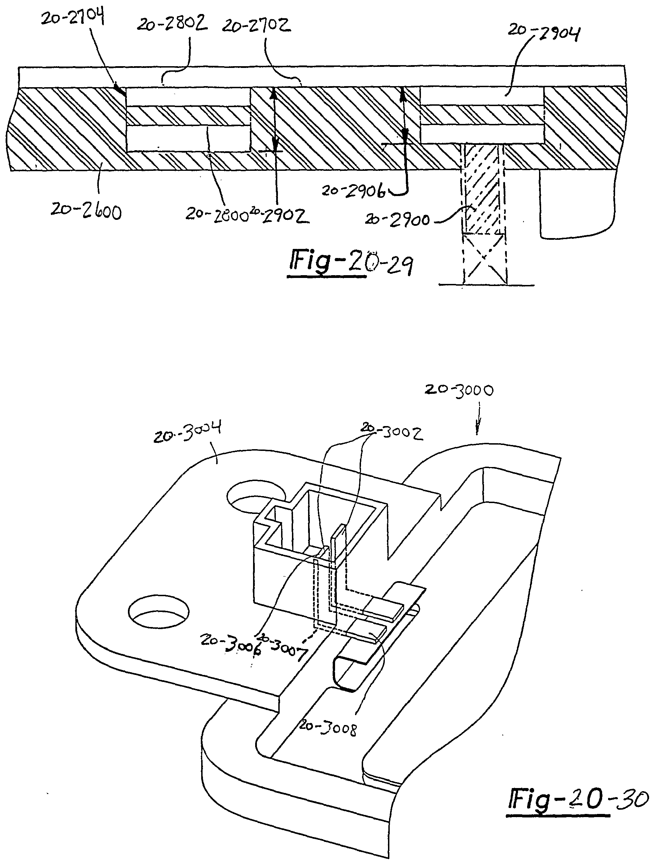

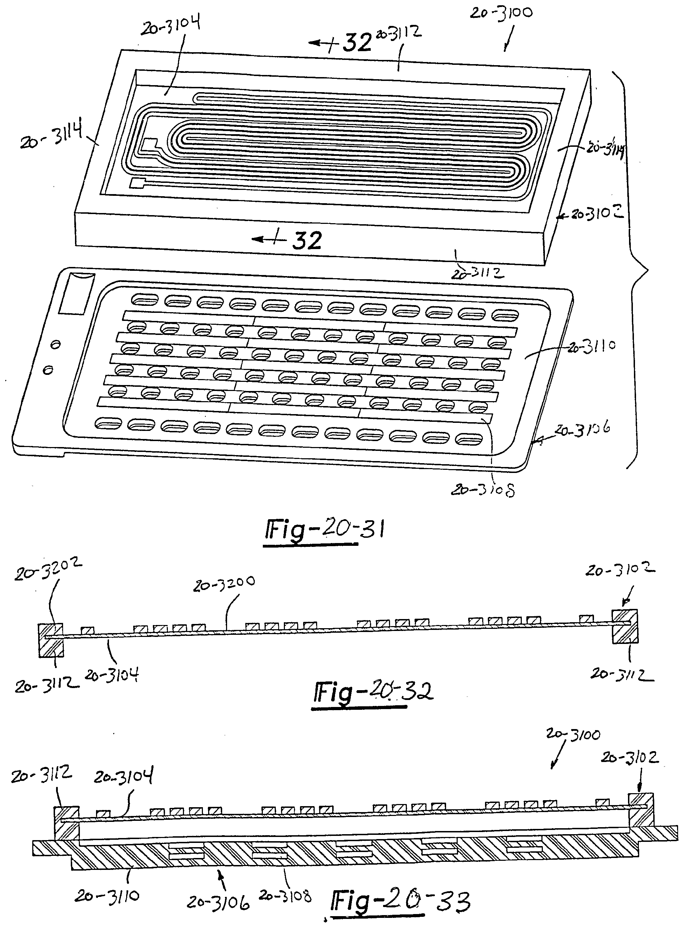

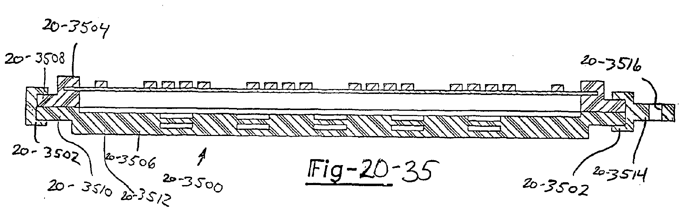

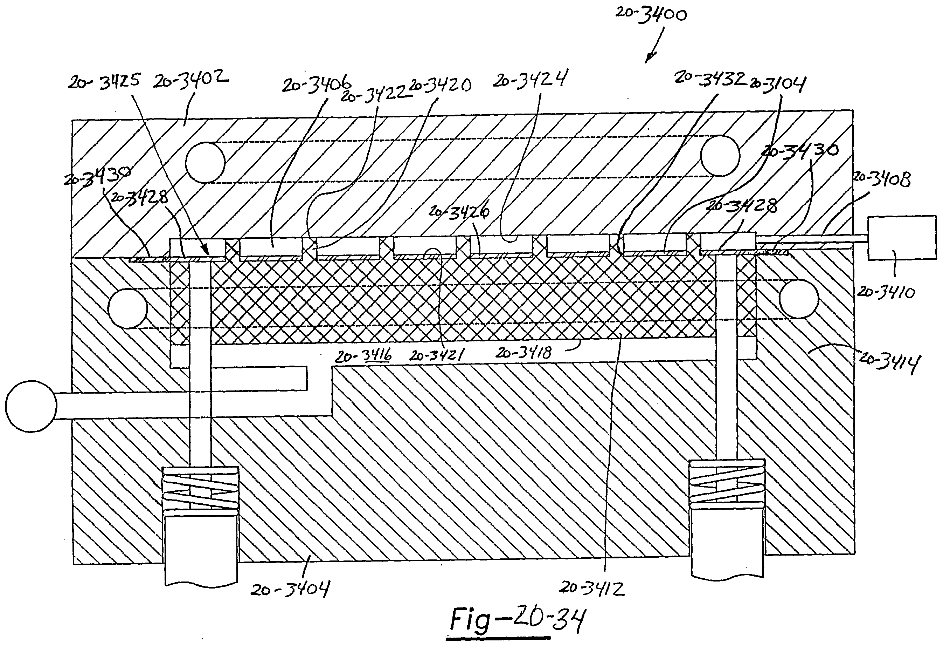

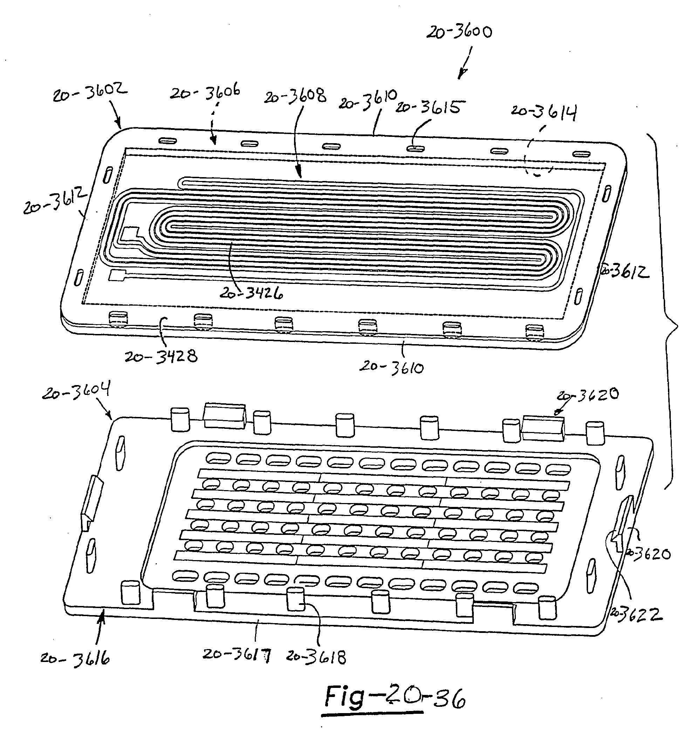

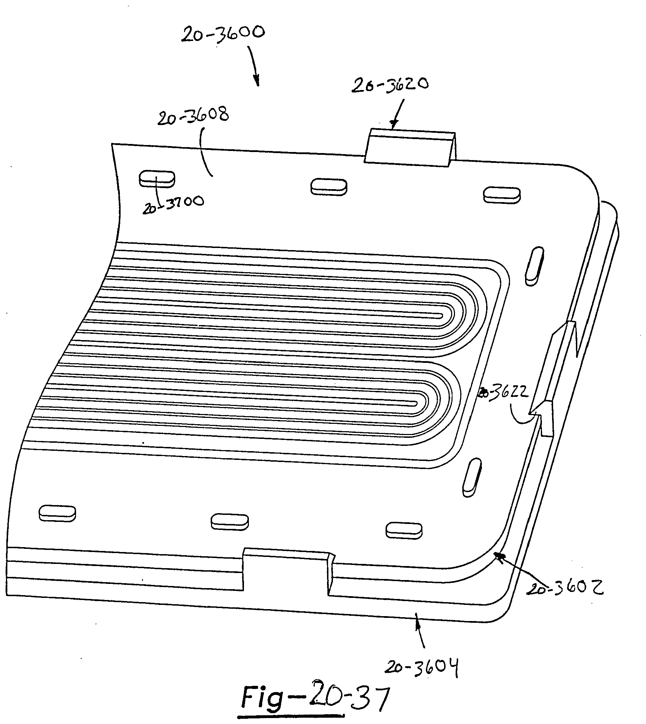

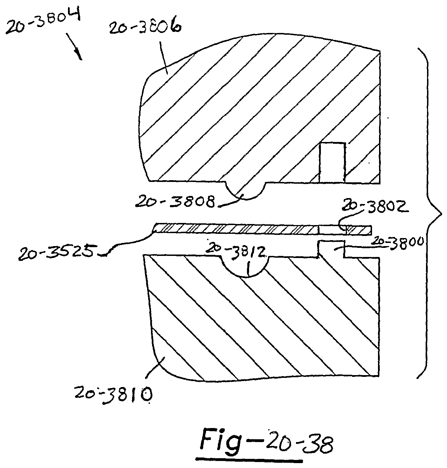

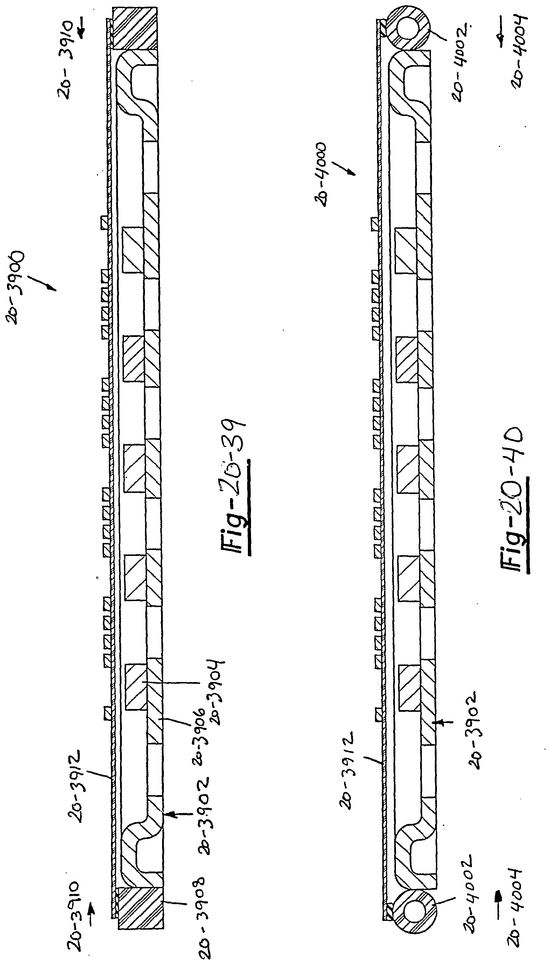

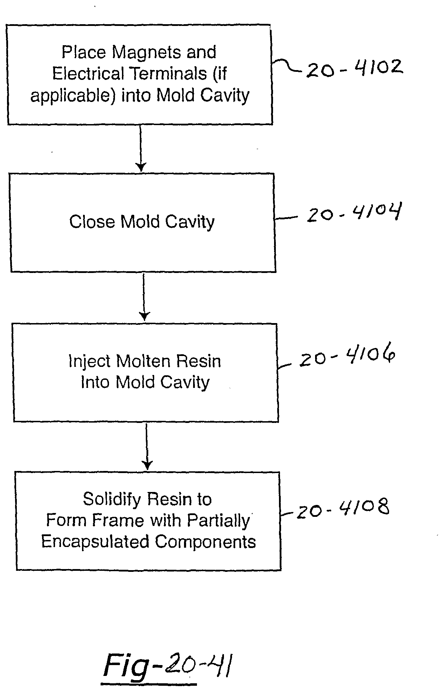

FIG. 11-22 is a cross-sectional side view further depicting diaphragm tensioning using the frusto-conical member of FIG. 20.
FIG. 11-23 depicts a frame in an undeformed state and a deformed state.
FIG. 11-24 is a plan view of an electro-dynamic loudspeaker assembly system.
FIG. 11-25 is a perspective view of a pallet for use in the assembly system.
FIG. 11-26 is a perspective view of an adhesive application station.
FIG. 11-27 is a perspective view of a magnet loading and adhesive activator application station.
FIG. 11-28 is a perspective view of a magnetization station.
FIG. 11-29 is a perspective view of an adhesive application station.
FIG. 11-30 is a perspective view of a diaphragm loading station.
FIG. 11-31 is a cross-sectional view of speaker components and fixturing located after completing diaphragm loading as depicted in FIG. 11-30.
FIG. 11-32 is a perspective view of an edge treatment compound application station.
FIG. 11-33 is a perspective view of a clamping and irradiation station.
FIG. 11-34 is a perspective view of a terminal crimping station.
FIG. 11-35 is a perspective view of a diaphragm trimming station.
FIG. 11-36 is a cross-sectional view depicting a grille and diaphragm subassembly positioned adjacent a frame and magnet subassembly.
FIG. 11-37 is an exploded perspective view depicting an alternate diaphragm and frame attachment mechanism.
FIG. 11-38 is a cross-sectional view of the diaphragm and frame of FIG. 11-37 coupled to one another.
FIG. 11-39 is a cross-sectional view of an alternate diaphragm and frame attachment mechanism.
FIG. 11-40 is a partial cross-sectional view of another diaphragm and frame attachment mechanism.
FIG. 11-41 is a perspective view of the pallet having a lower clamp frame and an upper clamp frame positioned thereon.
FIG. 11-42 is a perspective view of a felt cutting and loading station.
FIG. 11-43 is a perspective view of a frame loading station.

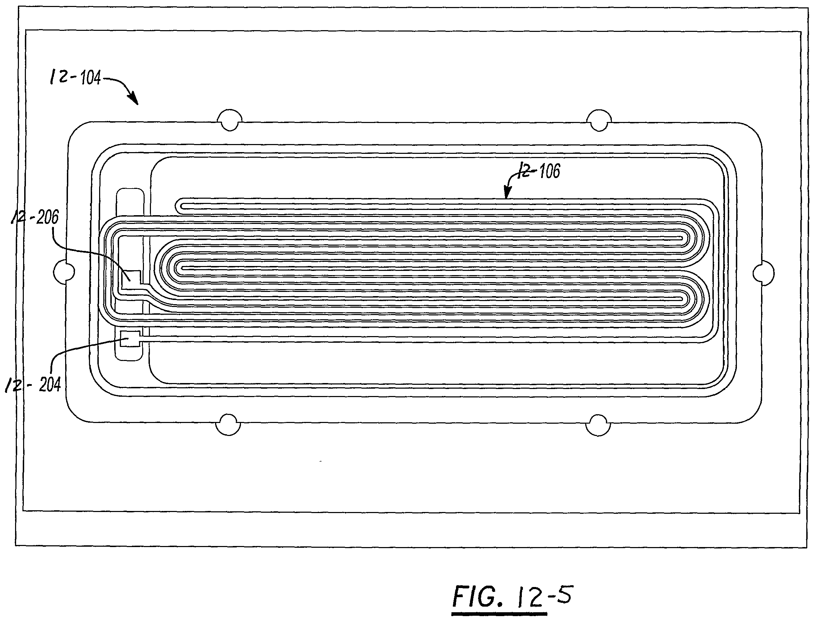

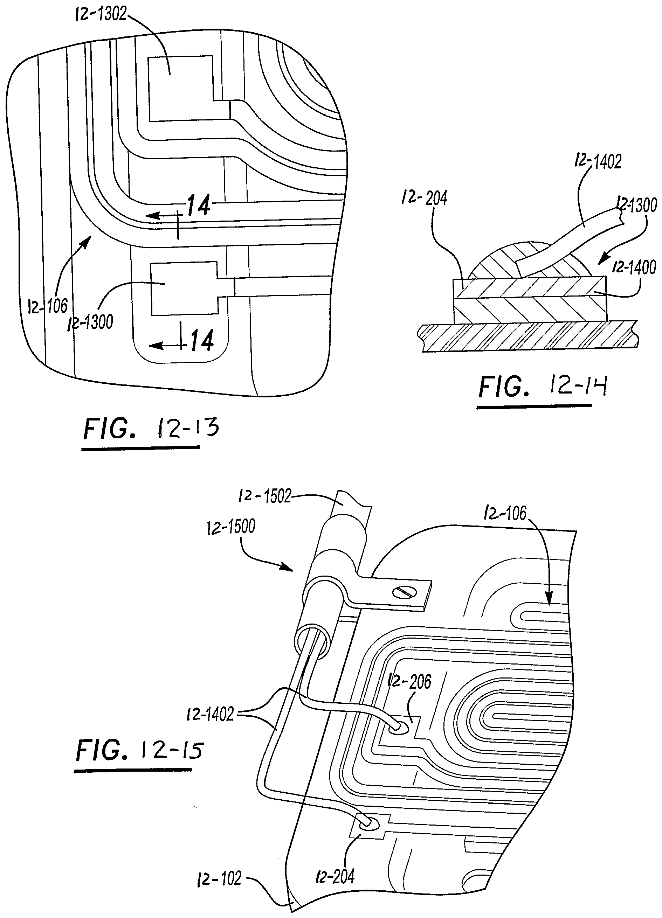

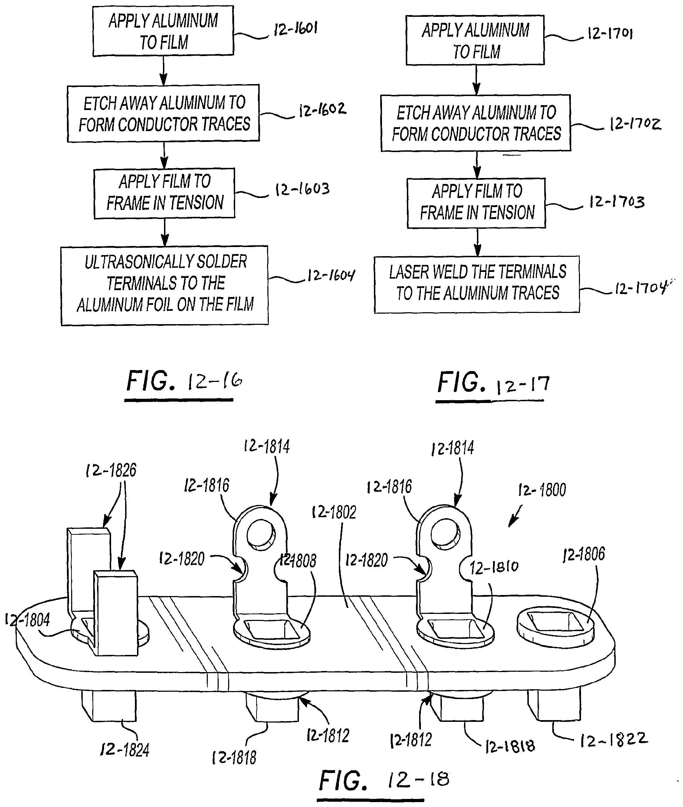

FIG. 12-5 is a plan view of the film having a conductor attached to the diaphragm.

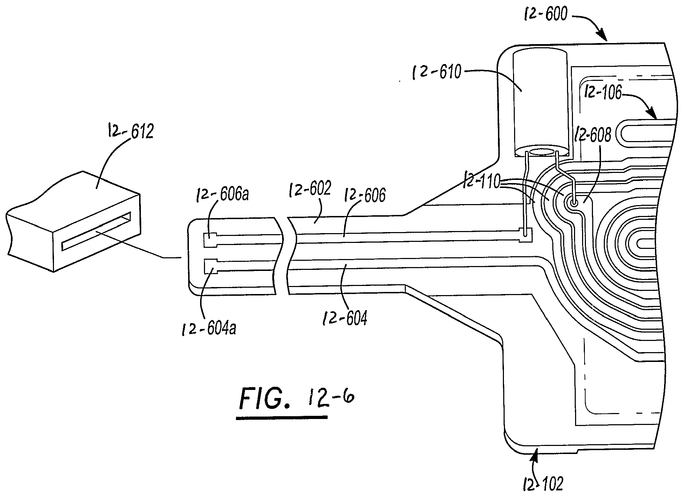

FIG. 12-6 is a detailed exploded perspective view of an electrical connector for an electro-dynamic loudspeaker.

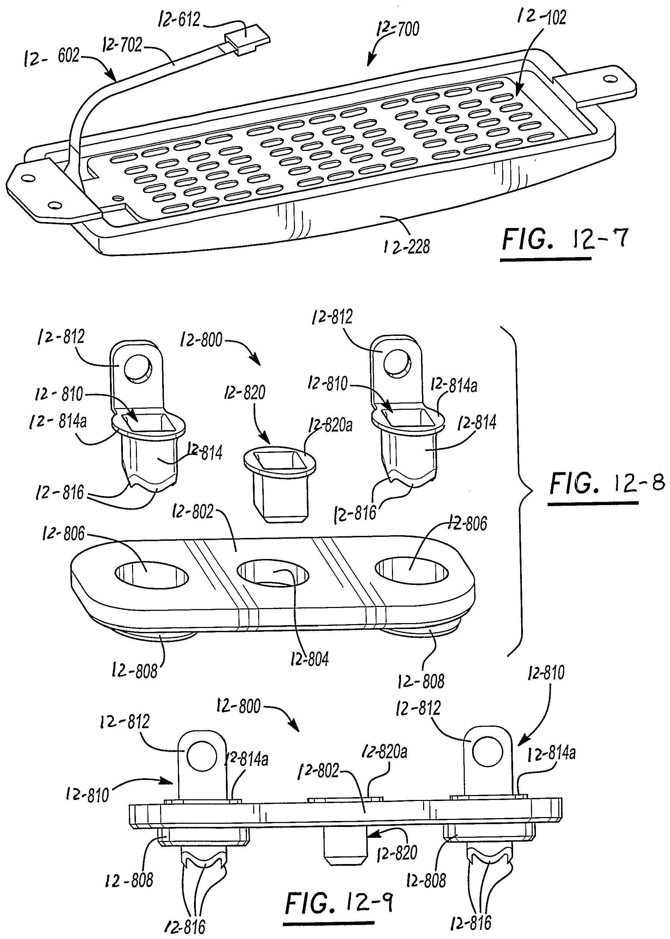

FIG. 12-7 is a perspective view of an electro-dynamic loudspeaker having an electrical connector as shown in FIG. 12-6.
FIG. 12-8 is an exploded perspective view of an electrical connector.
FIG. 12-9 is a plan view of the electrical connector of FIG. 12-8.

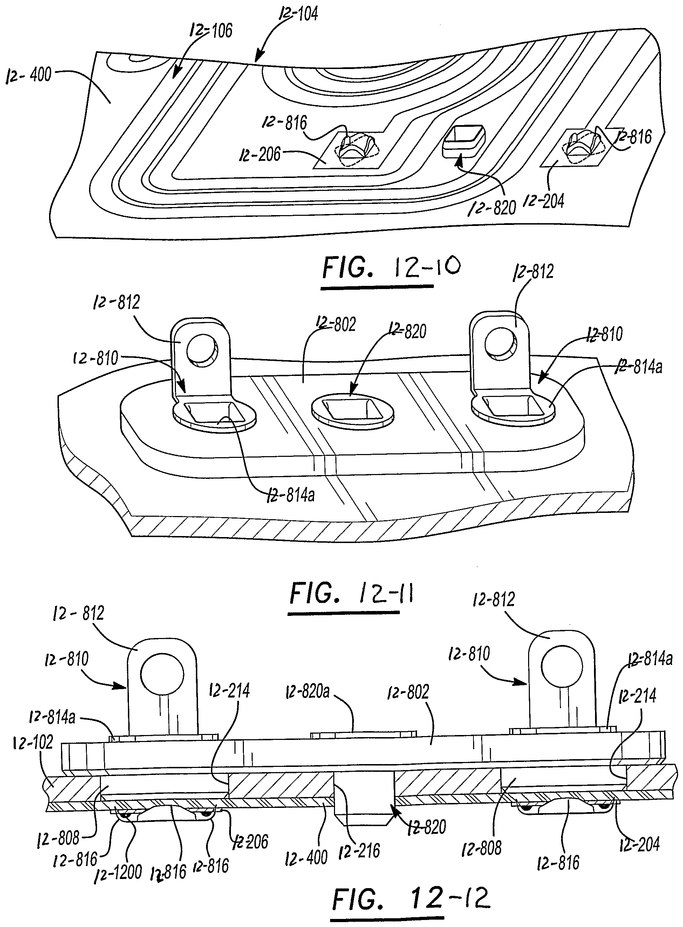

FIG. 12-10 is a perspective top view of the electrical connector of FIGS. 12-8 and 12-9 mounted on an electro-dynamic loudspeaker.
FIG. 12-11 is a perspective bottom view of the electrical connector of FIGS. 12-8 and 12-9 mounted on an electro-dynamic loudspeaker.
FIG. 12-12 is a partial cross-sectional view of another electrical connector.
FIG. 12-13 is a detailed plan view of the trace terminal ends layered with copper.
FIG. 12-14 is a cross sectional view taken along the line 14-14 of FIG. 12-13 with a lead wire soldered to the trace terminal ends.
FIG. 12-15 is a perspective view of an electro-dynamic loudspeaker having an electrical connector.
FIG. 12-16 is a process diagram providing the steps for forming an ultrasonic soldered electrical connector.
FIG. 12-17 is a process diagram providing the steps for forming a laser welded electrical connector.
FIG. 12-18 is a perspective top view of an electrical connector.

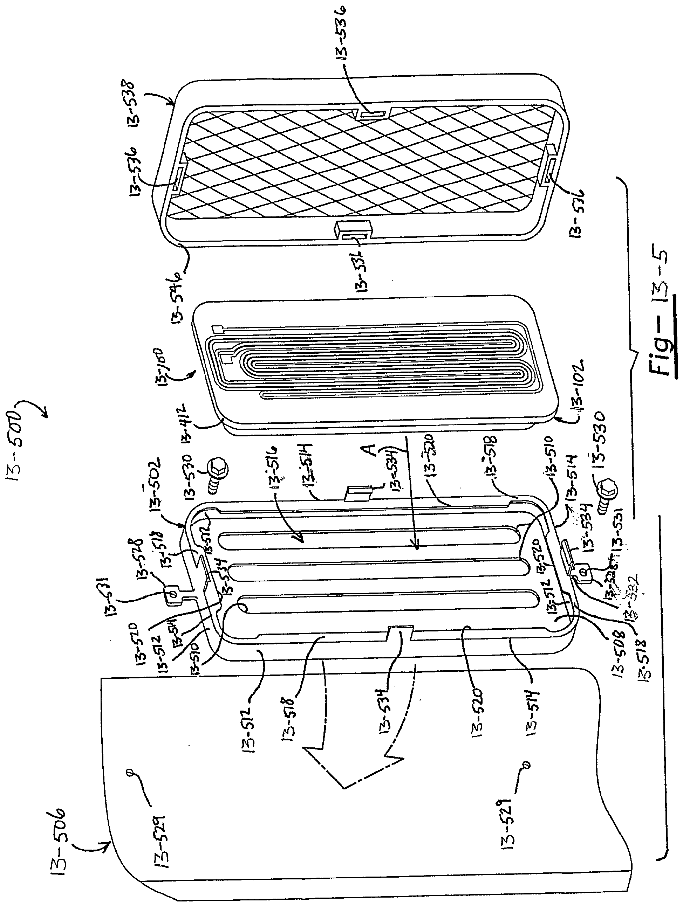

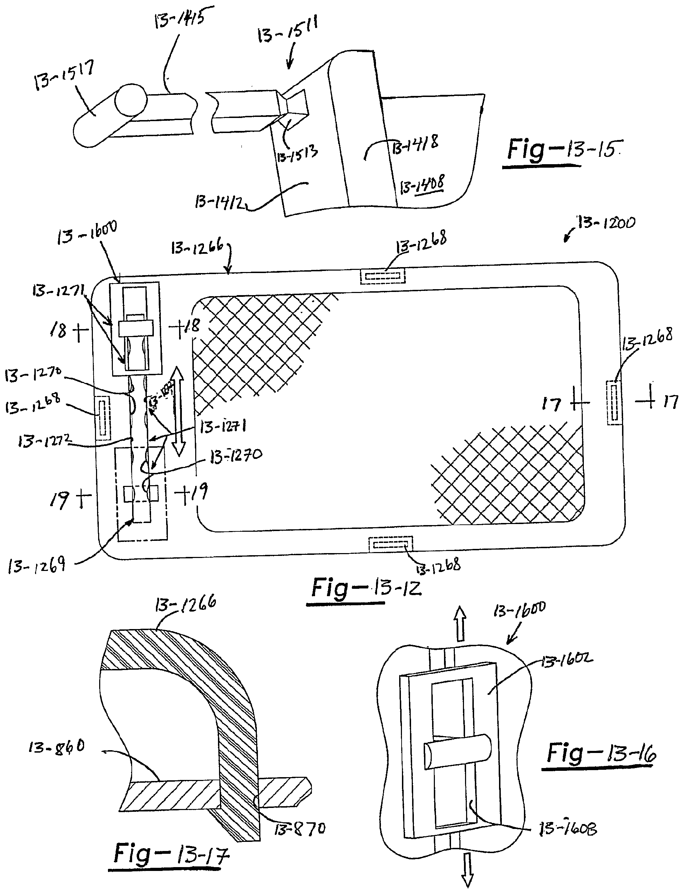

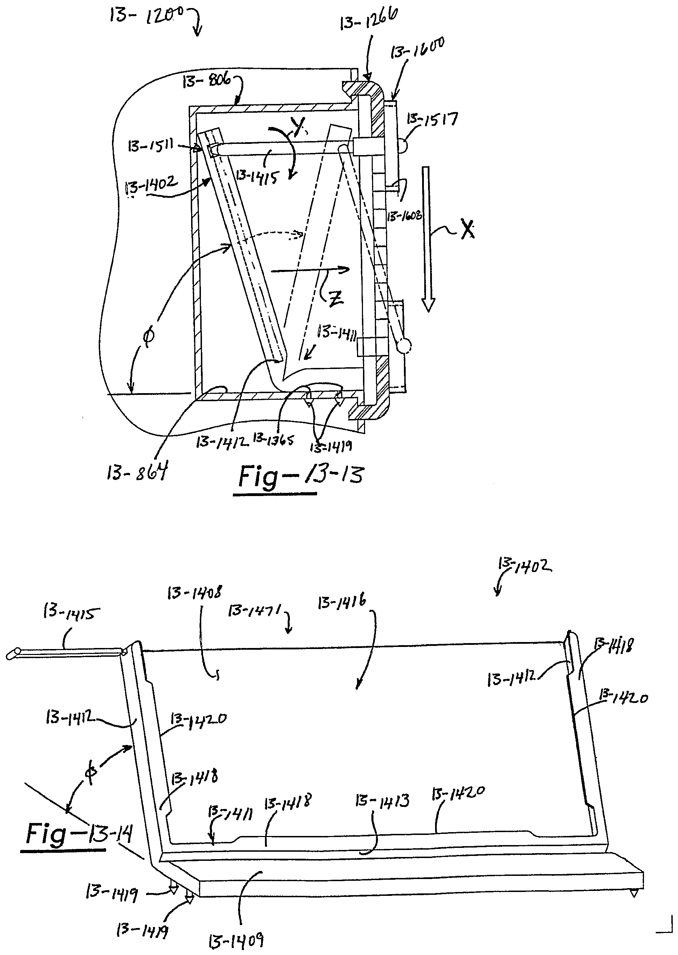

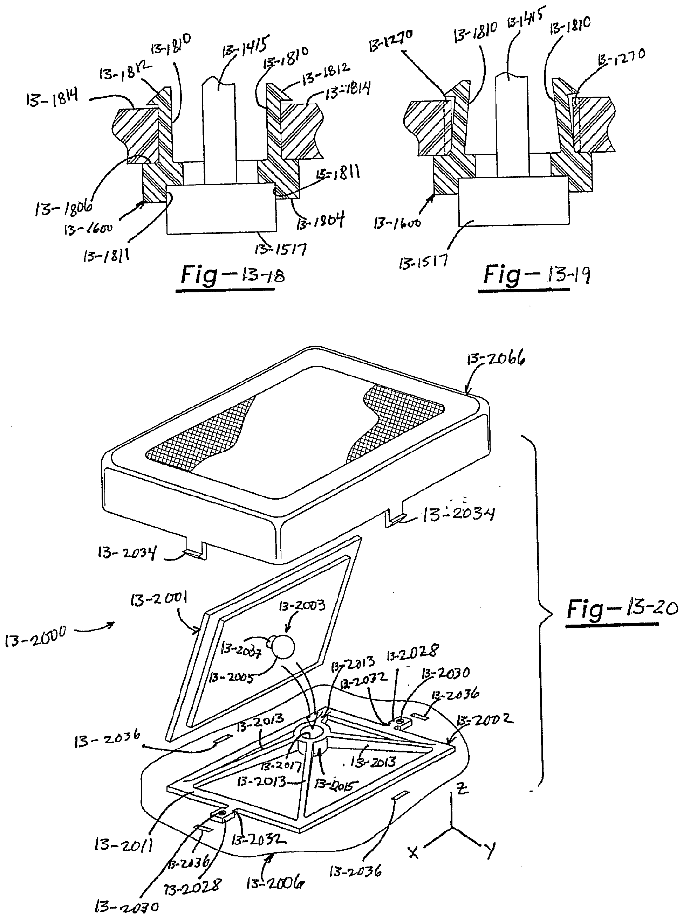

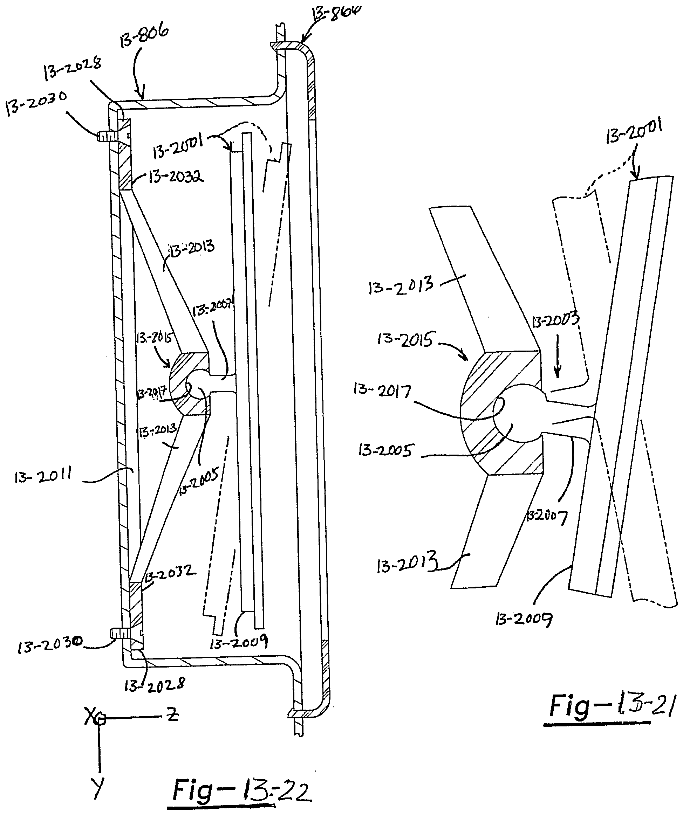

FIG. 13-5 is an exploded three-quarter side perspective view illustrating a mounting bracket used for the installation of an electro-dynamic loudspeaker at a mounting location.

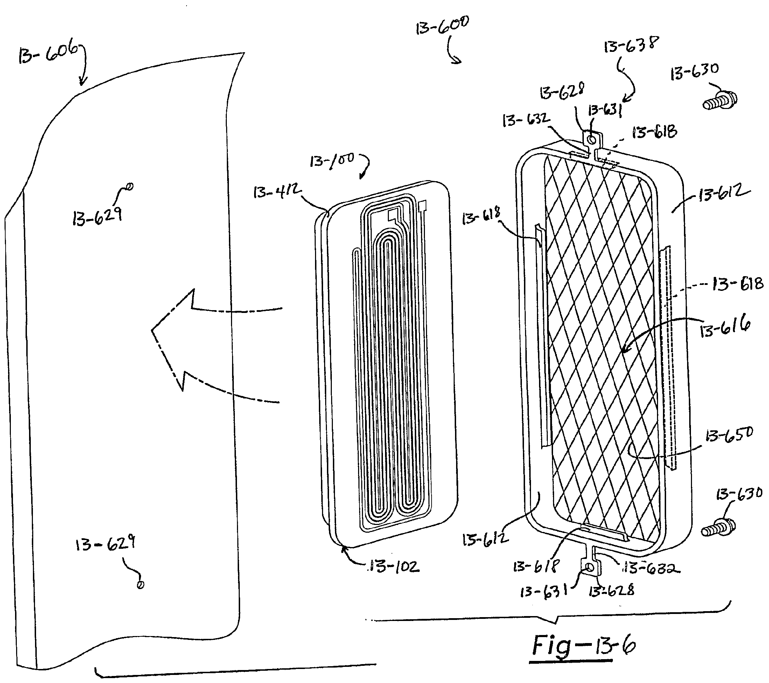

FIG. 13-6 is an exploded three-quarter side perspective view illustrating a mounting bracket as incorporated into the structure of a grille for an electro-dynamic loudspeaker for mounting the component at a mounting location.

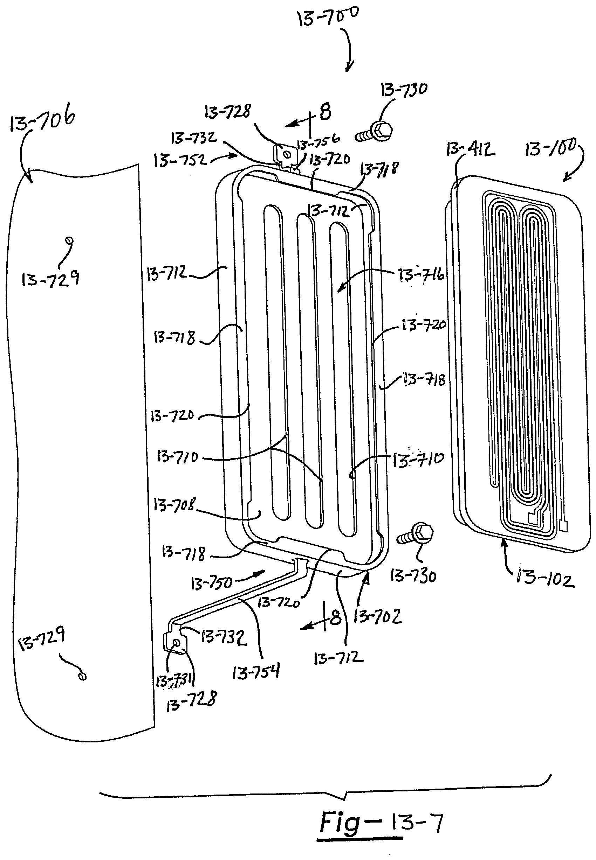

FIG. 13-7 is an exploded three-quarter perspective view showing a mounting bracket for mounting an electro-dynamic loudspeaker in a fixed angular (non-parallel) orientation of the loudspeaker relative to a mounting location.

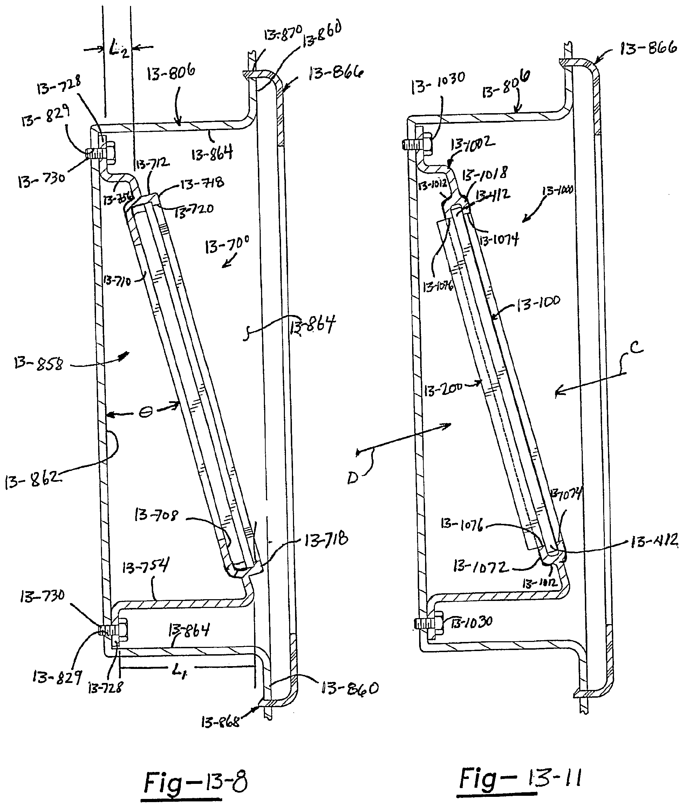

FIG. 13-8 is a cross-sectional side view taken along the line 13-8 through 13-8 of FIG. 13-7.

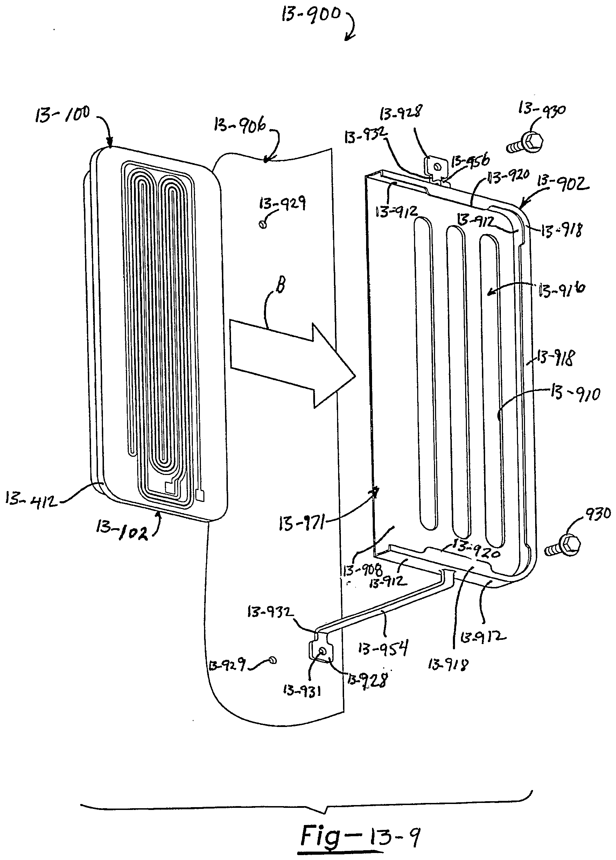

FIG. 13-9 is an exploded three-quarter perspective view showing a mounting bracket used for the installation of an electro-dynamic loudspeaker at a mounting location in a fixed angular (non-parallel) orientation of the loudspeaker relative to a mounting location.

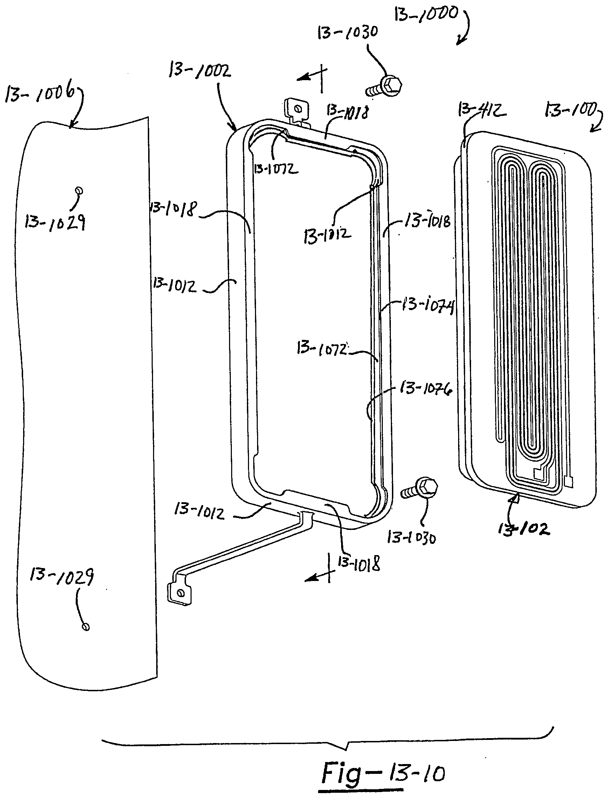

FIG. 13-10 is an exploded three-quarter perspective view showing a mounting bracket for installing an electro-dynamic loudspeaker at a mounting location in a fixed angular (non-parallel) orientation relative to a mounting location.
FIG. 13-11 is a cross-sectional side view taken along the line 13-11 through 13-11 of Fig. 13-10.
FIG. 13-12 is a front view of an installation for mounting an electro-dynamic loudspeaker in a variable angular orientation and allowing for adjustment of the loudspeaker relative to a fixed mounting location.
FIG. 13-13 is a cross-sectional side view of the installation of FIG. 13-12.
FIG. 13-14 is a three quarter front perspective view showing a mounting bracket used with the installation shown in FIG. 13-12.

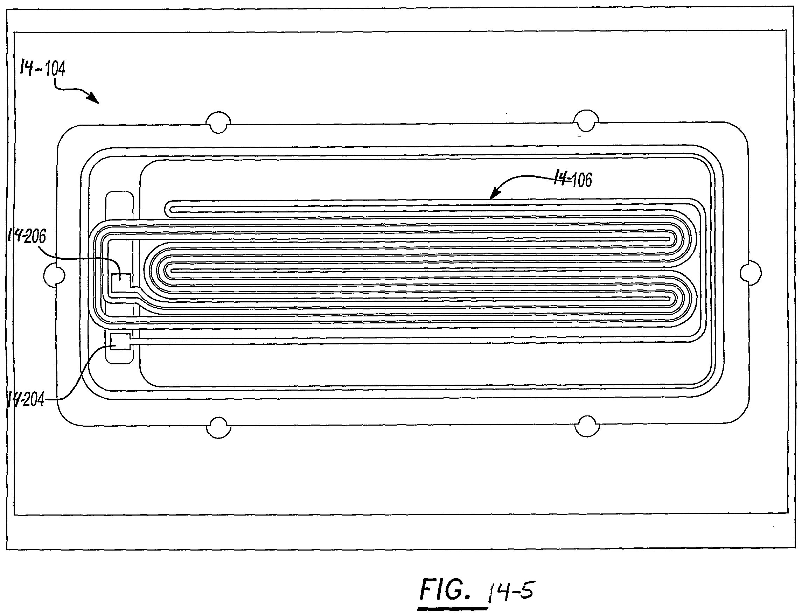

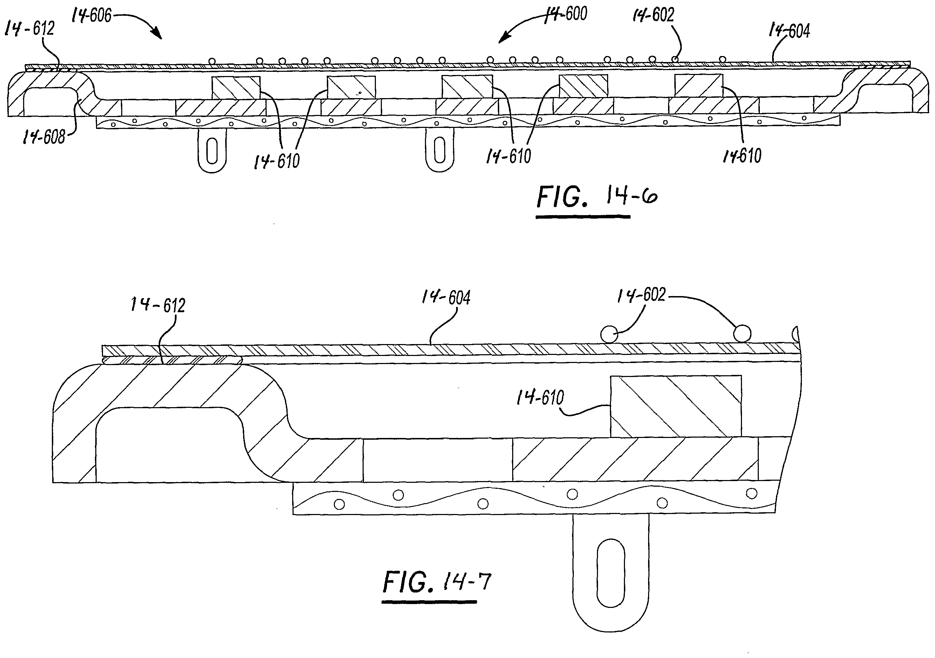

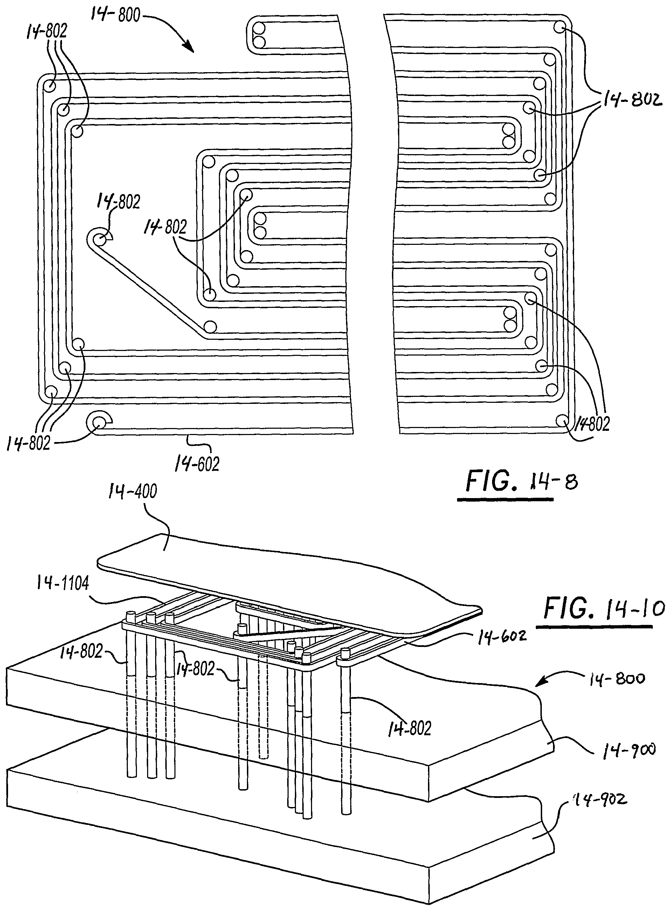

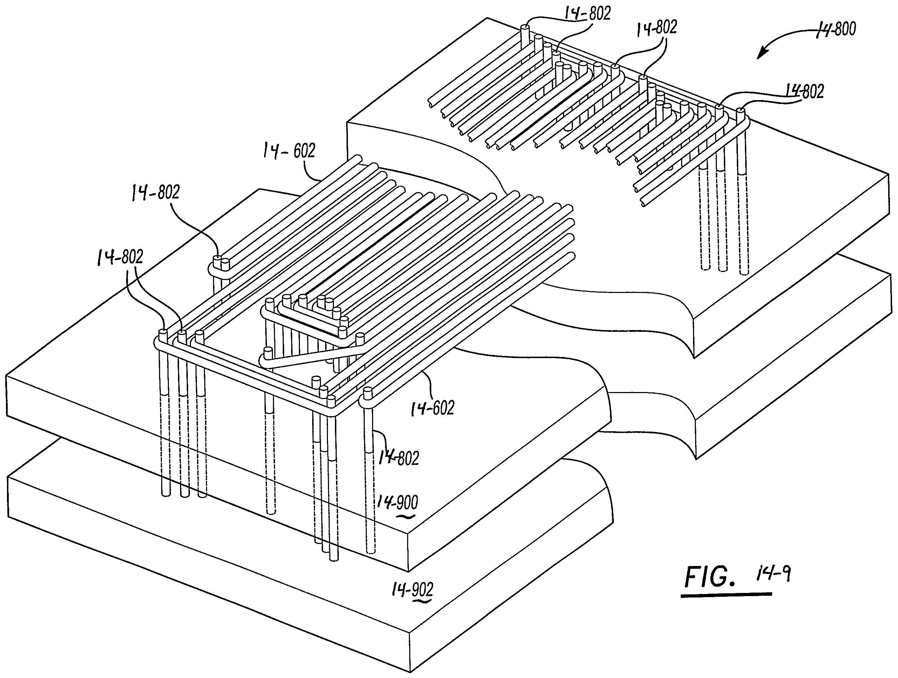

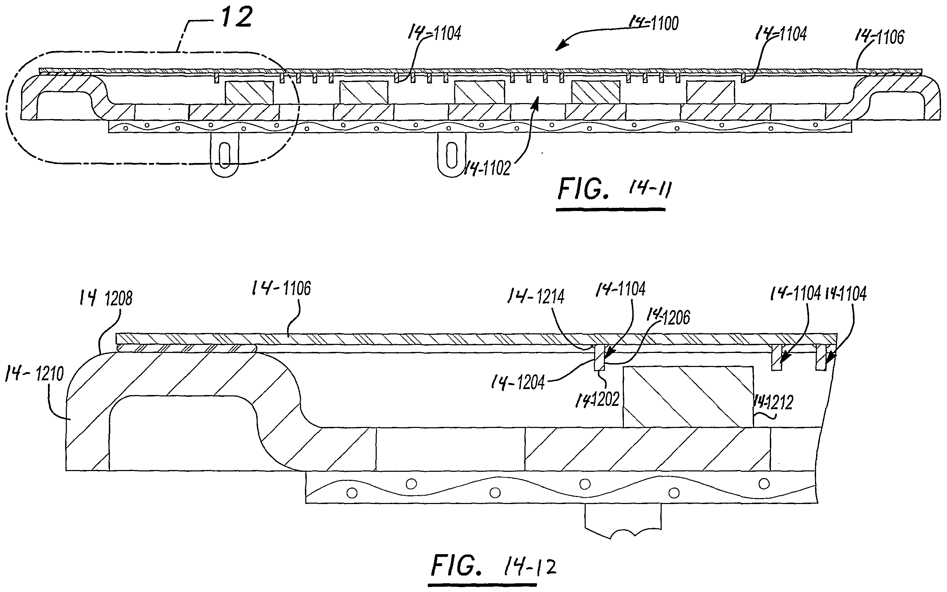

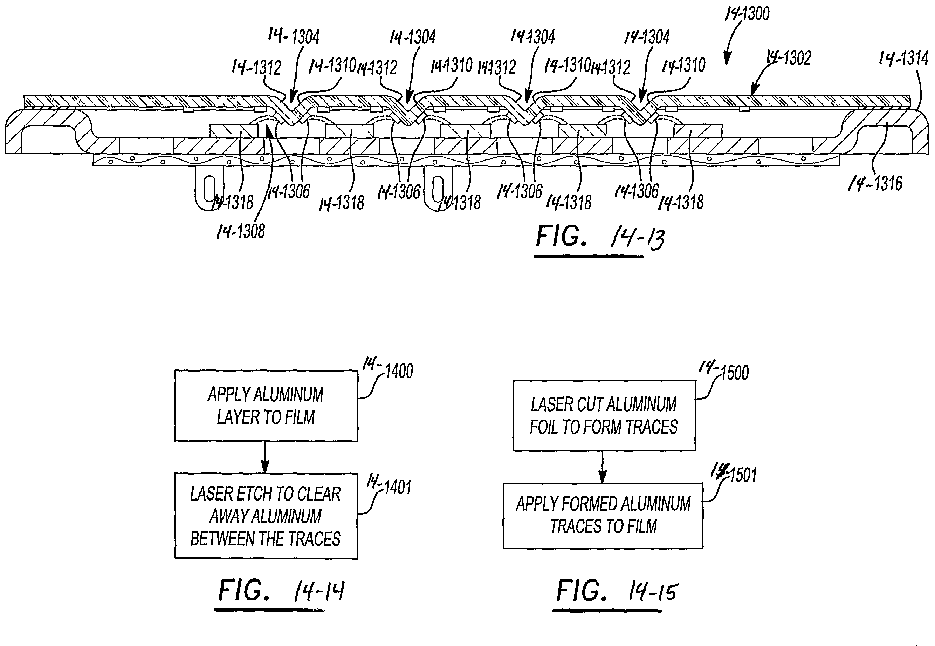

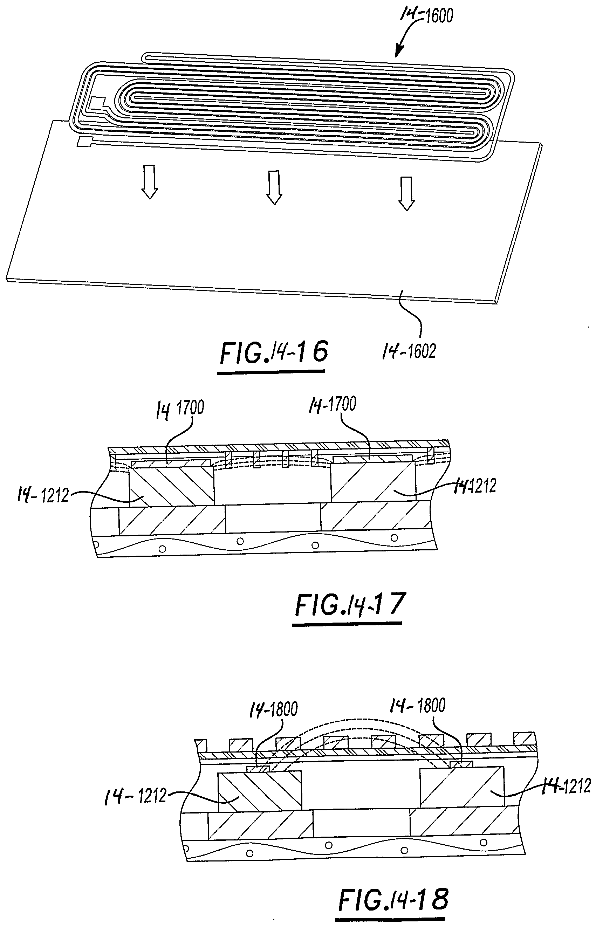

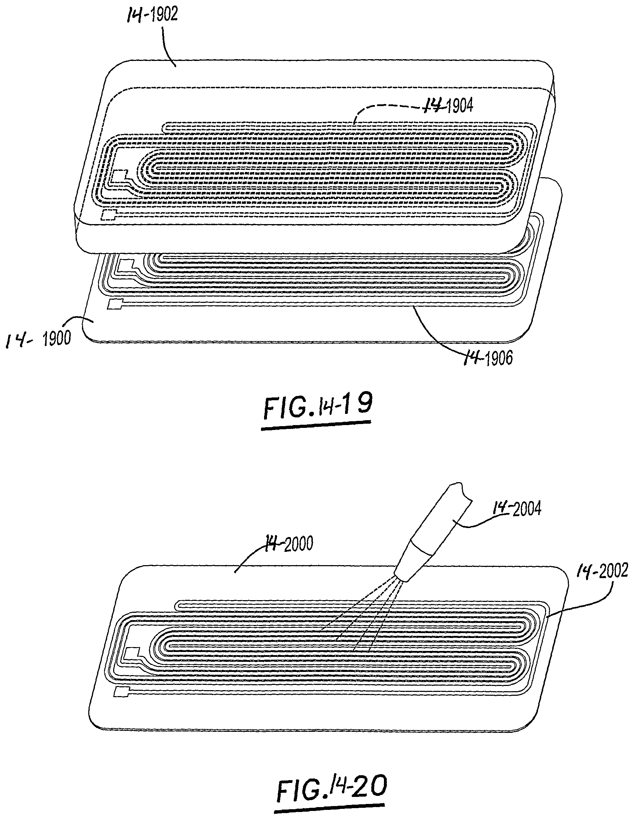

FIG. 13-15 is an enlarged detail view of a portion of the mounting bracket of FIG. 14 showing an arm of the mounting bracket.
FIG. 13-16 is an enlarged detail front perspective view of a portion of the installation shown in FIG. 13-12.
FIG. 13-17 is an enlarged detail cross-sectional view taken along the line 13-17 through 13-17 of FIG. 13-12 showing the attachment of a grille for the loudspeaker at the mounting location.
FIG. 13-18 is an enlarged detail cross-sectional view taken along the line 13-18 through 13-18 of FIG. 13-12.
FIG. 13-19 is an enlarged detail cross-sectional view taken along the line 13-19 through 13-19 of FIG. 13-12.
FIG. 13-20 is a three-quarter front perspective view of a mounting apparatus for mounting an electro-dynamic loudspeaker in a variable orientation relative to a mounting location.
FIG. 13-21 is an enlarged cross-sectional side view detail of a portion of the mounting apparatus shown in FIG. 13-20.
FIG. 13-22 is a cross-sectional side view of the mounting apparatus of FIG. 13-20 installed at a mounting location.
FIG. 14-5 is a plan view of the film having an attached conductor.
FIG. 14-6 is a cross-sectional view of an electro-dynamic loudspeaker having an alternative embodiment employing a wire conductor.
FIG. 14-7 is a detailed cross-sectional view of the encircled area of FIG. 14-6.
FIG. 14-8 is a plan view of a fixture for forming the wire conductor.
FIG. 14-9 is a perspective view of the fixture of FIG. 14-8 for forming the wire conductor.
FIG. 14-10 is a detailed perspective view of the fixture of FIG. 14-8 for forming the wire conductor.
FIG. 14-11 is a cross-sectional view of an electro-dynamic loudspeaker having a ribbon-shaped conductor mounted to an underside of the film.
FIG. 14-12 is a detail cross-sectional view of the encircled area of FIG. 14-11.
FIG. 14-13 is a cross-sectional view of an electro-dynamic loudspeaker having a film deformed to suspend the electrical traces downward towards the magnets.
FIG. 14-14 is a flowchart illustrating the steps for forming an electrical conductor on a diaphragm by laser etching.
FIG. 14-15 is a flowchart illustrating the steps of forming an electrical conductor by laser cutting the conductor from an aluminum foil and applying the conductor to a film.
FIG. 14-16 is a perspective view illustrating attaching the conductor to the film.
FIG. 14-17 is a cross-sectional view illustrating the magnetic field through the ribbon shaped conductors with caps provided on the magnets for focusing the magnetic field direction through the conductor traces.
FIG. 14-18 is a cross-sectional view illustrating the magnetic field lines created by magnets having smaller caps.
FIG. 14-19 is a schematic perspective view of an electron discharge machining process for forming an electrical conductor on a film.
FIG. 14-20 is a schematic perspective view of an abrasive removing process for forming the electrical conductor on a film.

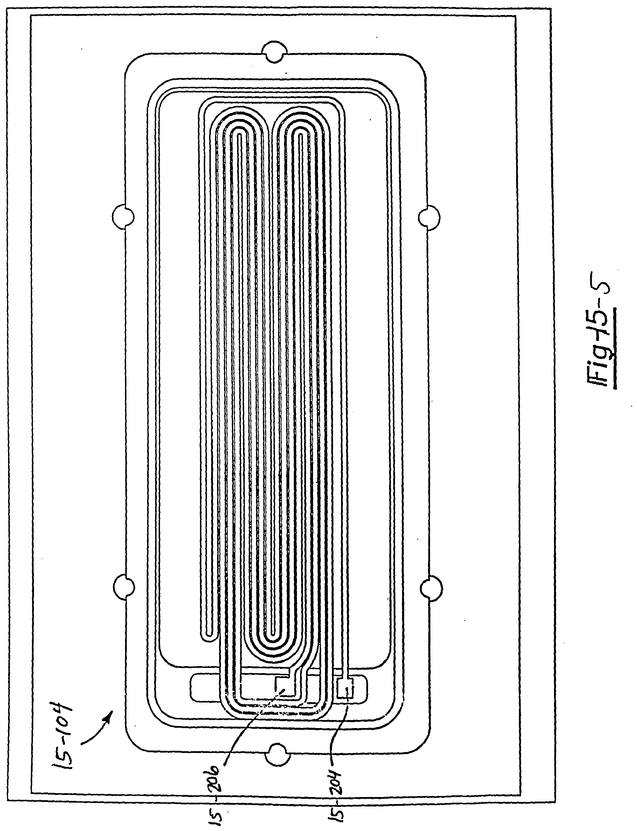

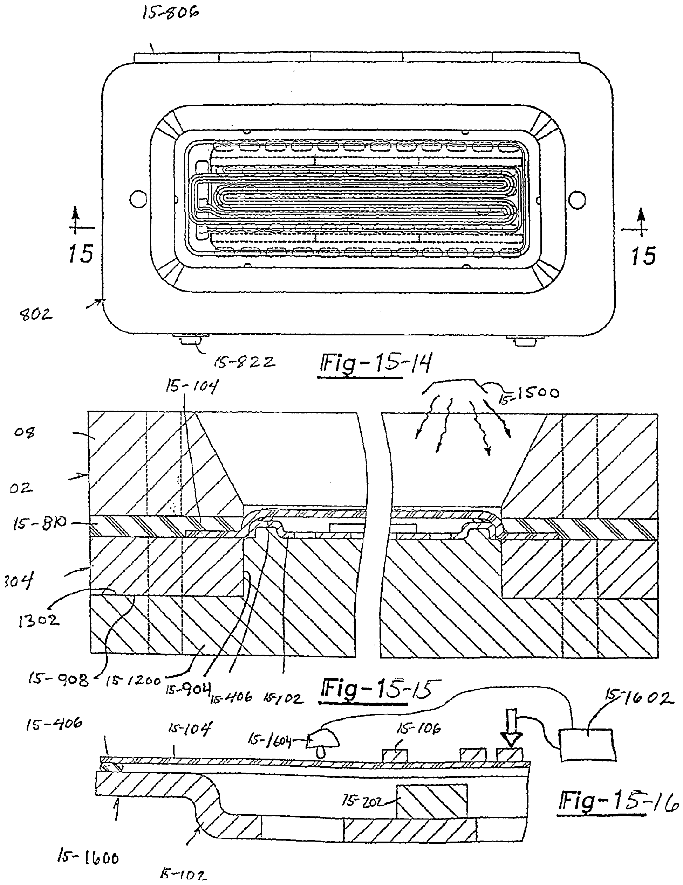

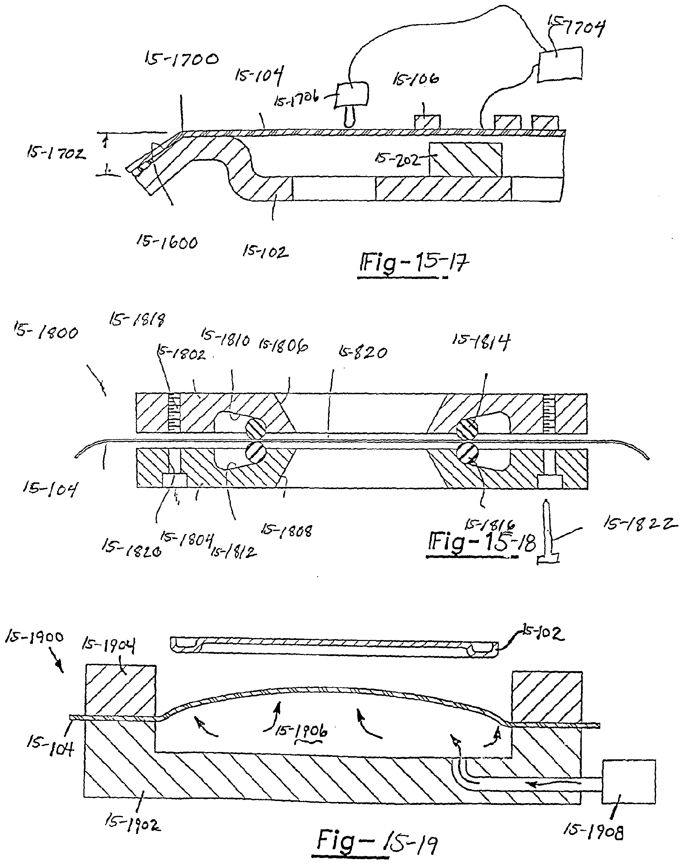

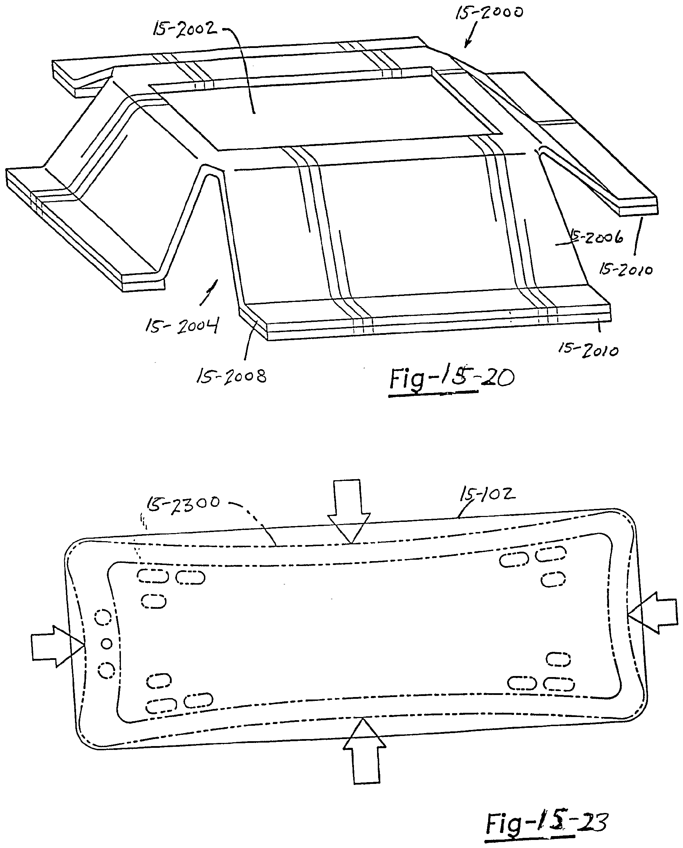

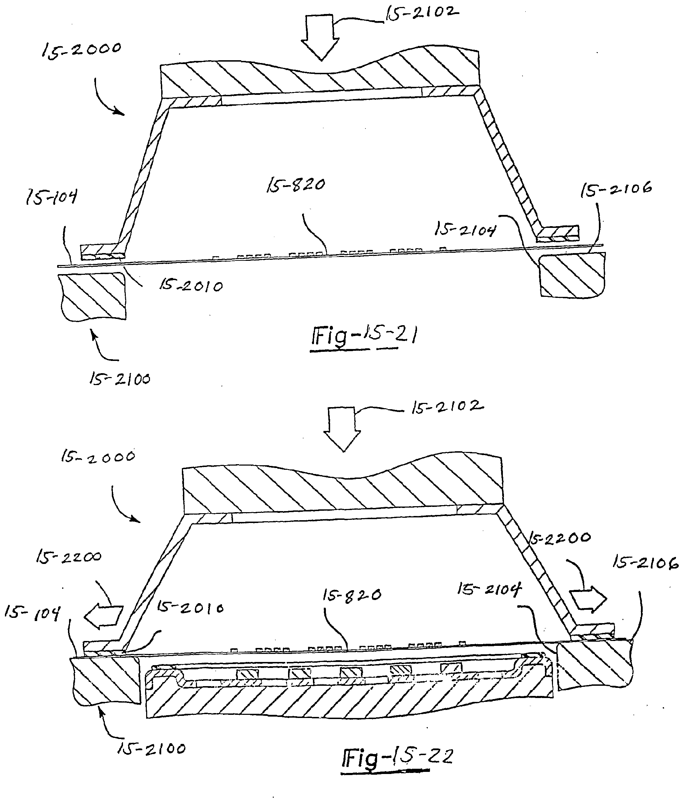

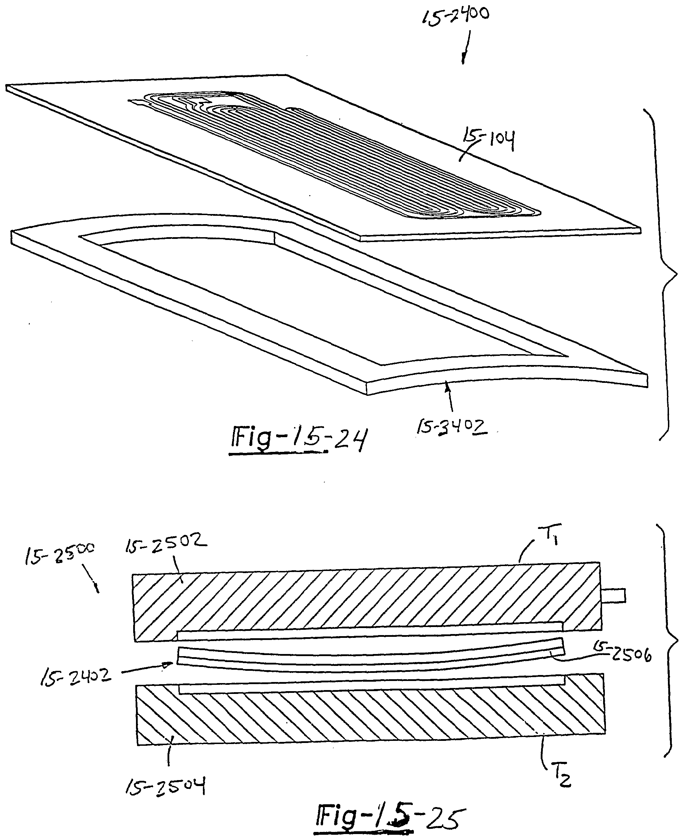

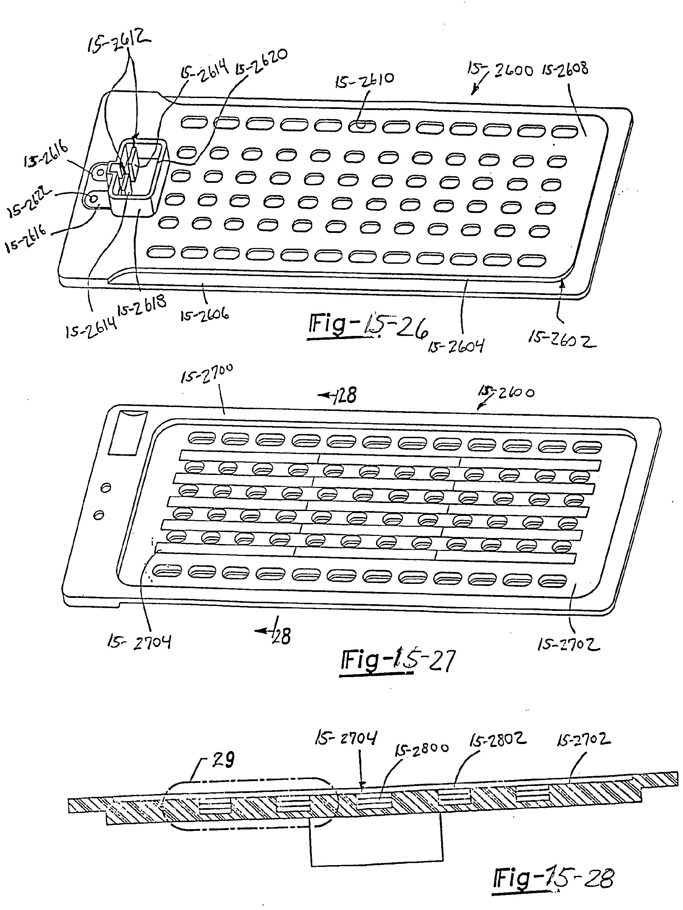

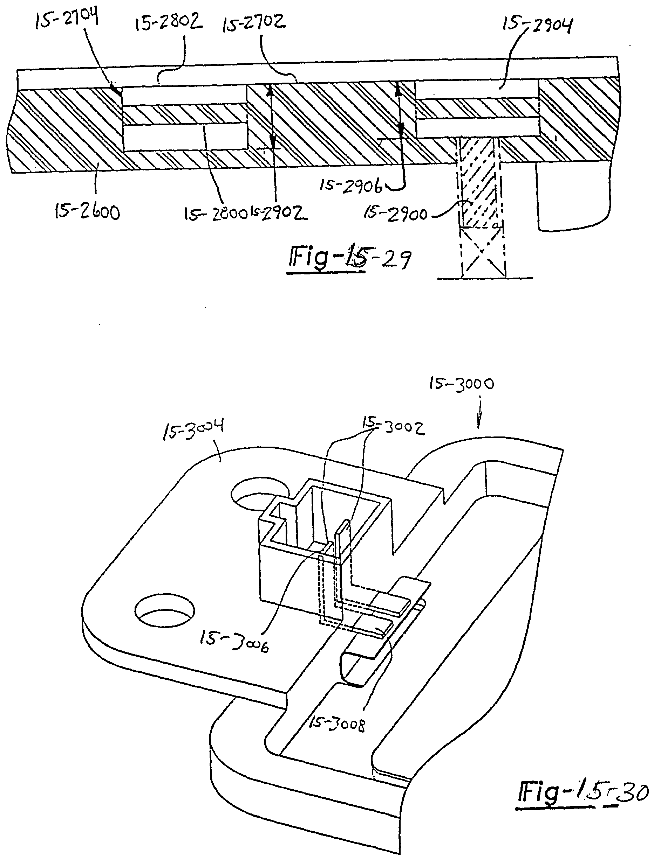

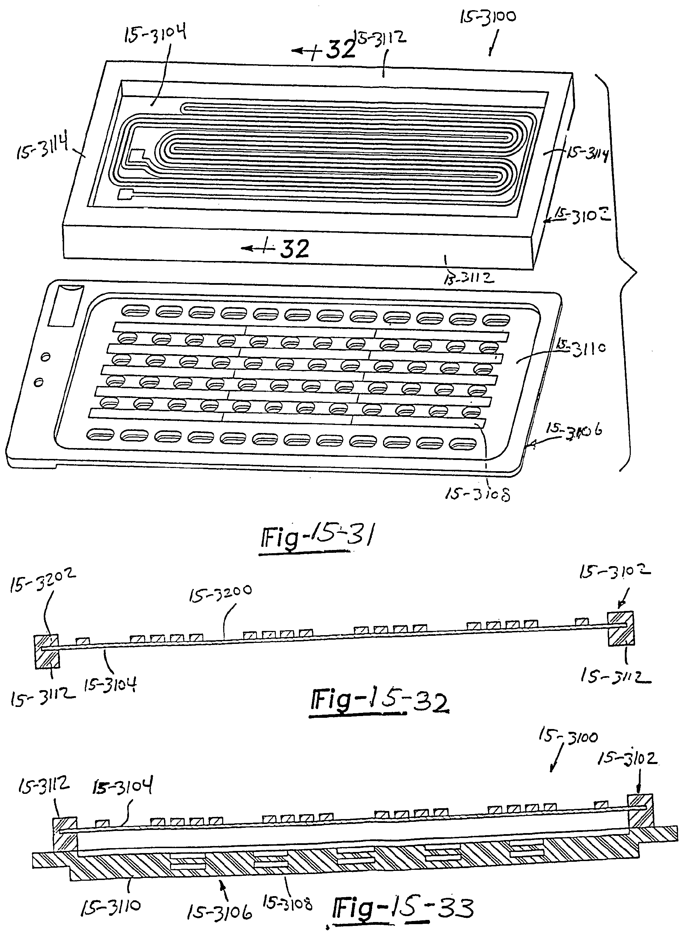

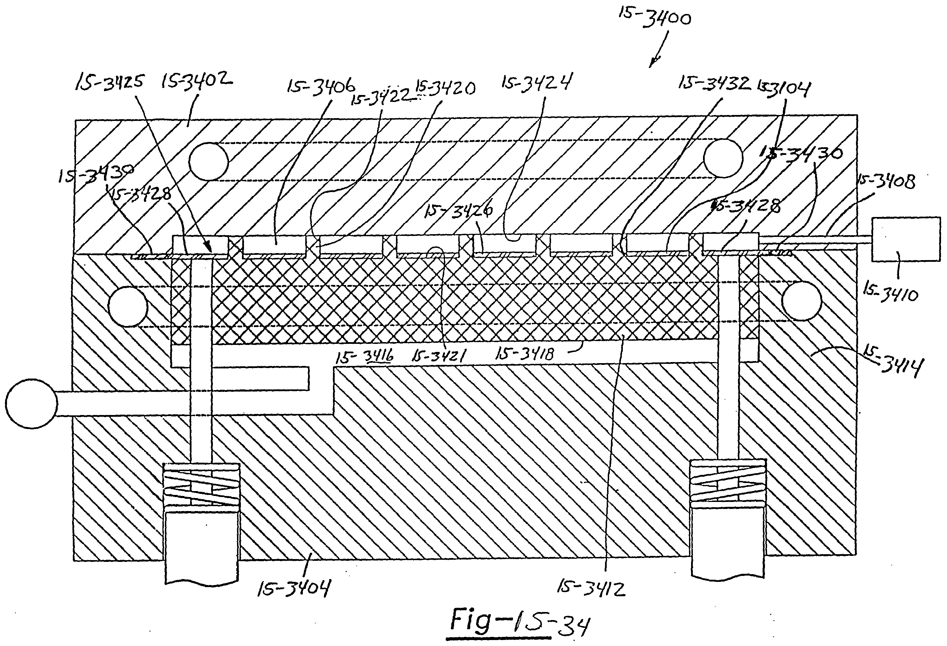

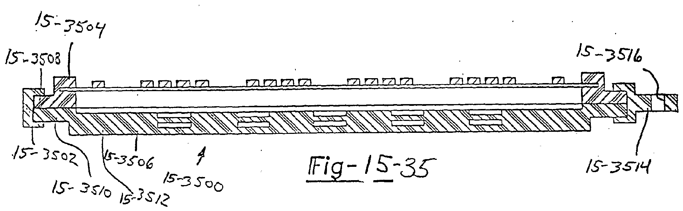

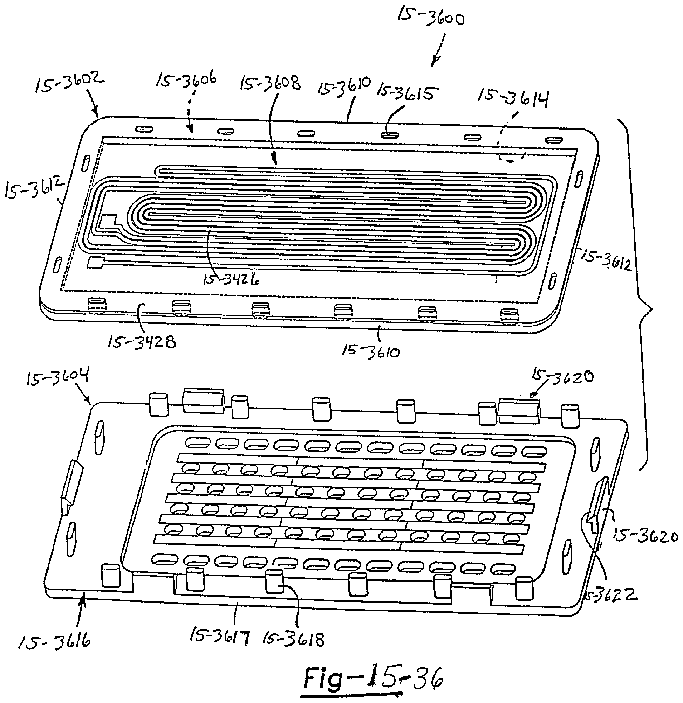

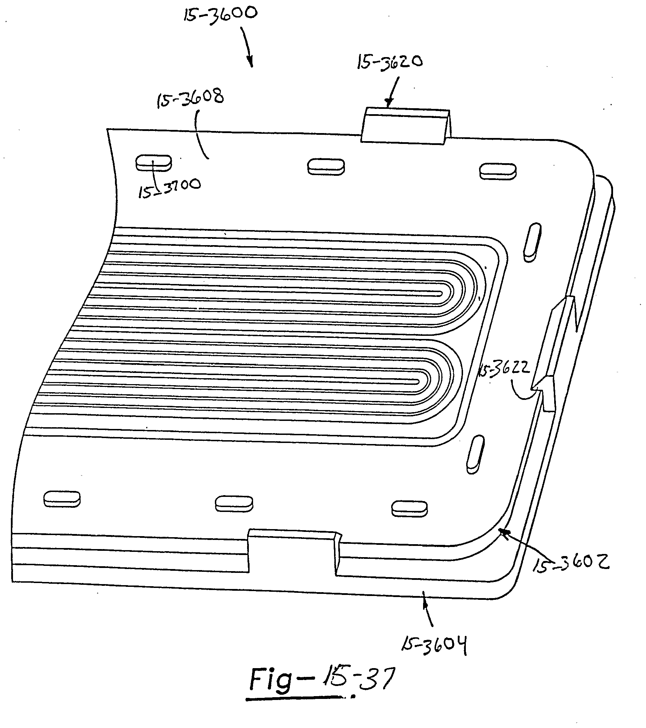

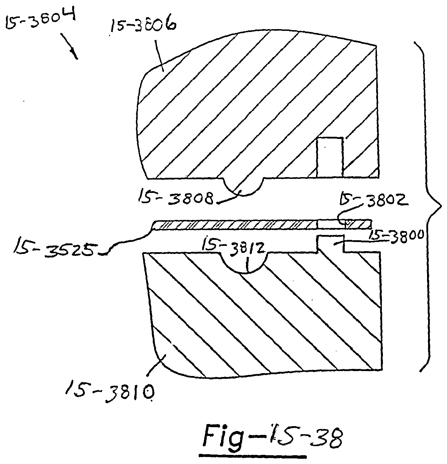

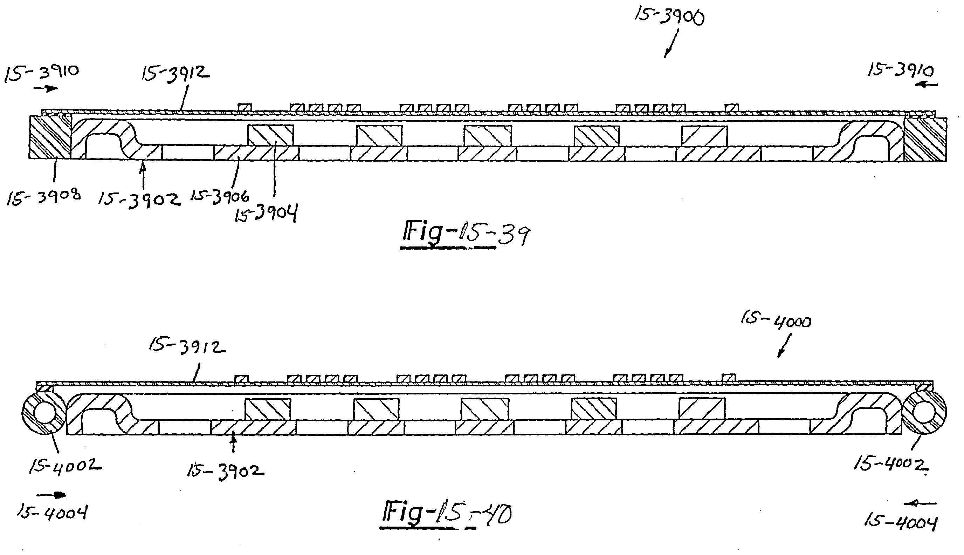

FIG. 15-5 is a plan view showing a conductor on a diaphragm of an electro-dynamic loudspeaker.

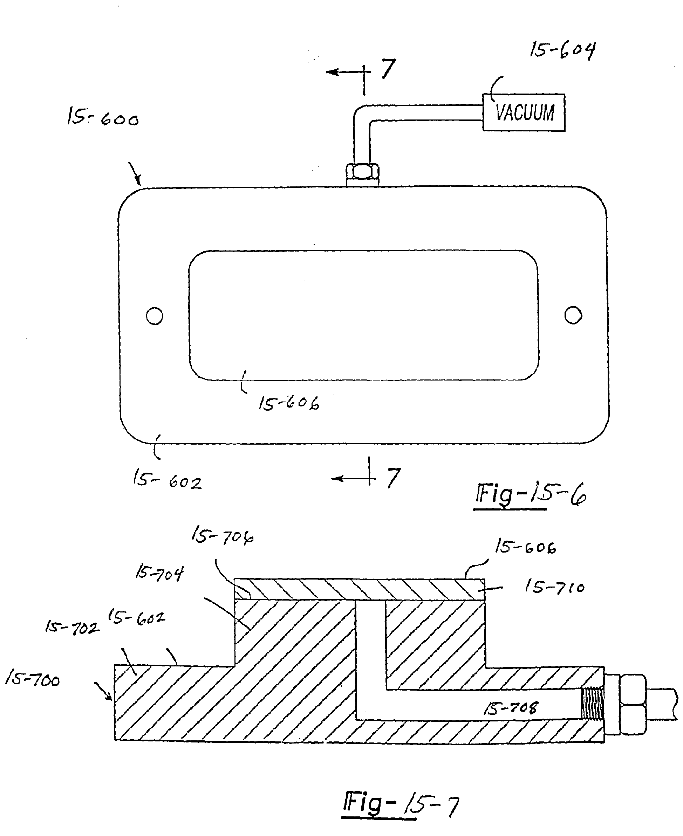

FIG. 15-6 is a plan view of a vacuum platen for use in constructing an embodiment of the invention.
FIG. 15-7 is a cross-sectional side view of the vacuum platen shown in FIG. 15-6.

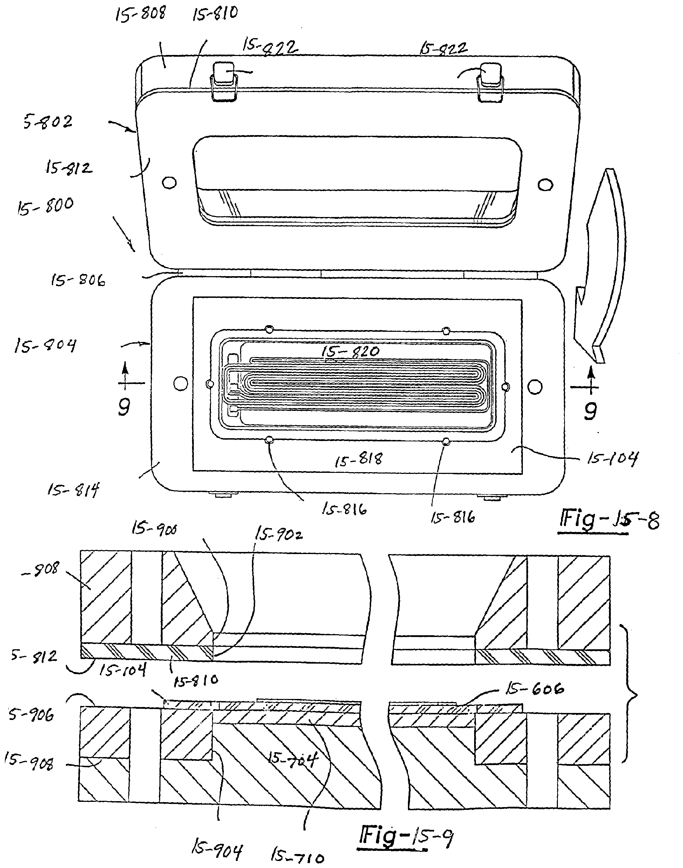

FIG. 15-8 is a perspective view of a clamp assembly for use in constructing an electro-dynamic loudspeaker.
FIG. 15-9 is a cross-sectional side view of the clamp assembly of FIG. 15-8.

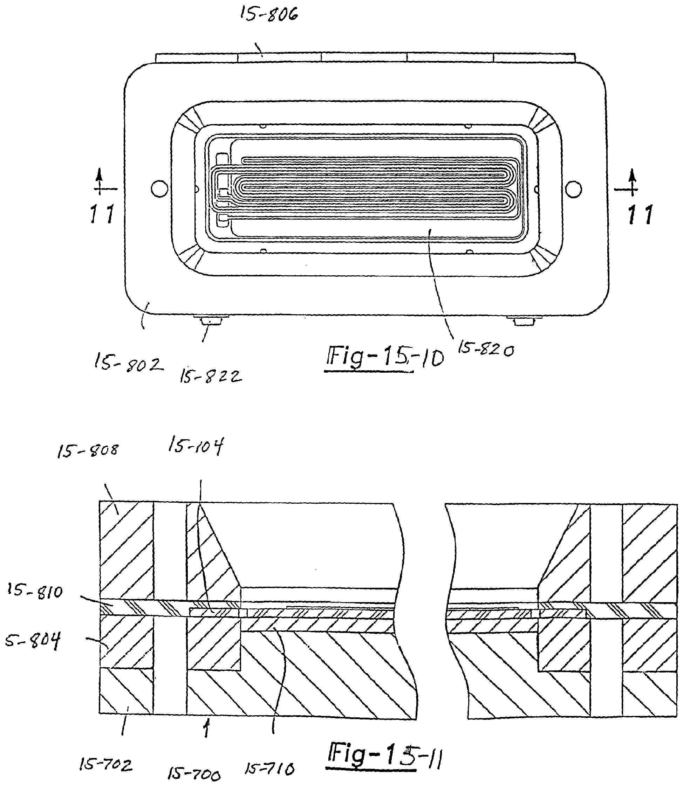

FIG. 15-10 is a plan view of the clamp assembly in a closed position.
FIG. 15-11 is a cross-sectional side view of the clamp assembly in the closed position.

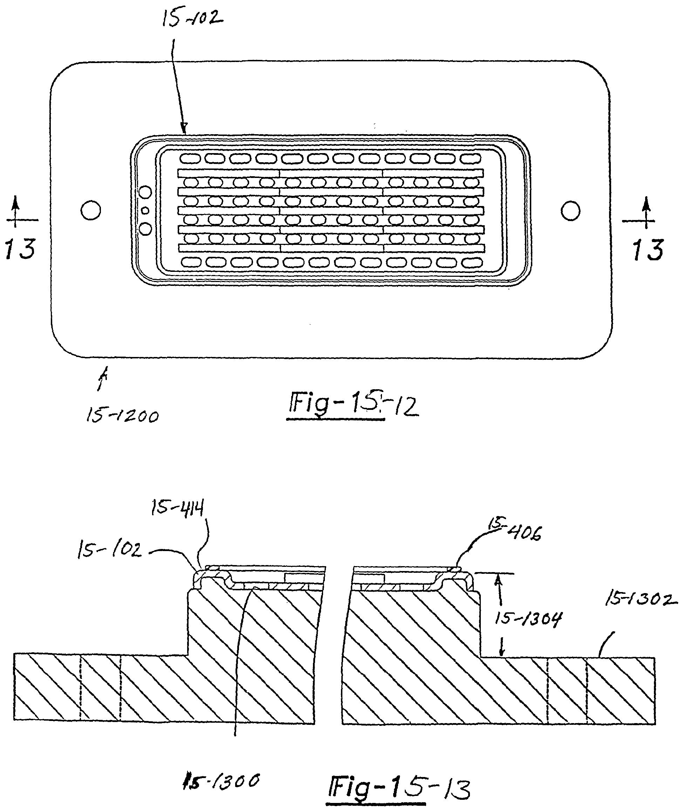

FIG. 15-12 is a plan view of an assembly fixture for assembling an electro-dynamic loudspeaker.
FIG. 15-13 is a cross-sectional side view of the assembly fixture.
FIG. 15-14 is a plan view of the clamp assembly positioned atop the assembly fixture.
FIG. 15-15 is a cross-sectional side view of the closed clamp assembly positioned atop the assembly fixture.
FIG. 15-16 is cross-sectional side view of a work-in-process electro-dynamic loudspeaker.
FIG. 15-17 is a cross-sectional side view of a finished electro-dynamic loudspeaker.
FIG. 15-18 is a cross-sectional view of a film tensioning device.
FIG. 15-19 is a cross-sectional side view of an alternate film tensioning device.
FIG. 15-20 is a perspective view of an alternate tensioning member.
FIG. 15-21 is a cross-sectional side view depicting use of the alternate tensioning member shown in FIG. 15-20.
FIG. 15-22 is a cross-sectional side view further depicting diaphragm tensioning using the alternate tensioning member of FIG. 15-20.
FIG. 15-23 depicts a frame in an undeformed state and a deformed state.
FIG. 15-24 is an exploded perspective view of an alternate electro-dynamic loudspeaker.
FIG. 15-25 is a cross sectional view of an injection mold used to construct the bowed frame of the loudspeaker depicted in FIG. 15-24.
FIG. 15-26 is a perspective top view of an alternate plastic frame.
FIG. 15-27 is a perspective bottom view of the alternate frame of FIG. 15-26.
FIG. 15-28 is a cross-sectional view of the frame of FIG. 15-27 taken along line 28-28.
FIG. 15-29 is an enlarged partial cross-sectional view of a plastic frame and magnet assembly.
FIG. 15-30 is a partial perspective view of a terminal detail of an alternate plastic frame and magnet assembly.
FIG. 15-31 is an exploded perspective view of an alternate electro-dynamic loudspeaker.
FIG. 15-32 is a cross-sectional view of a casement and diaphragm subassembly taken along line 32-32.
FIG. 15-33 is a cross-sectional view of the alternate electro-dynamic loudspeaker of FIG. 15-31.
FIG. 15-34 is a cross-sectional view of an injection mold.
FIG. 15-35 is a cross-sectional view of an alternate electro-dynamic speaker assembly including a retainer coupling a casement to a frame.
FIG. 15-36 is an exploded cross-sectional view of an alternate electro-dynamic loudspeaker with additional molded in plastic assembly features.
FIG. 15-37 is a perspective view of the electro-dynamic loudspeaker of FIG. 15-36.
FIG. 15-38 is a partial cross-sectional view of an alternate injection mold incorporating a film tensioning feature in the mold tool.
FIG. 15-39 is a cross-sectional view of an alternate electro-dynamic loudspeaker.
FIG. 15-40 is a cross-sectional view of another alternate electro-dynamic loudspeaker.

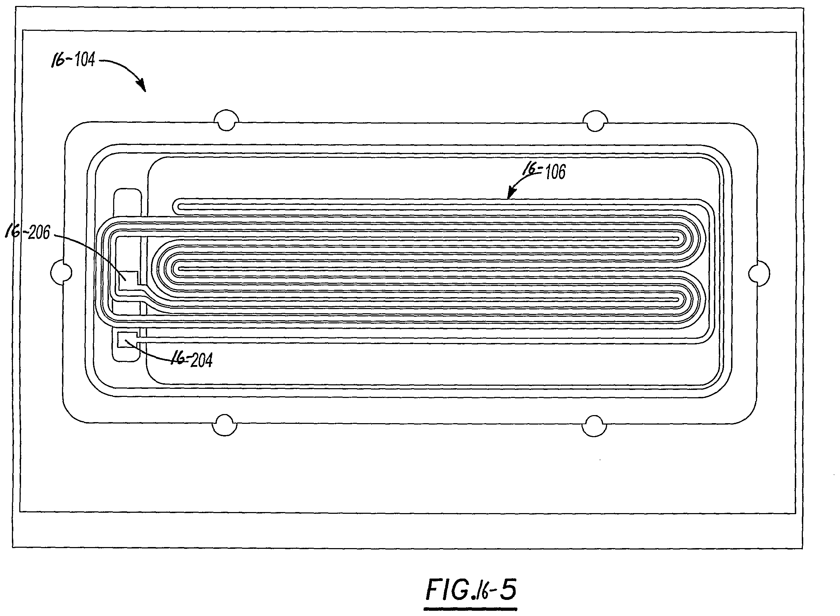

FIG. 16-5 is a plan view of the film having an attached conductor.

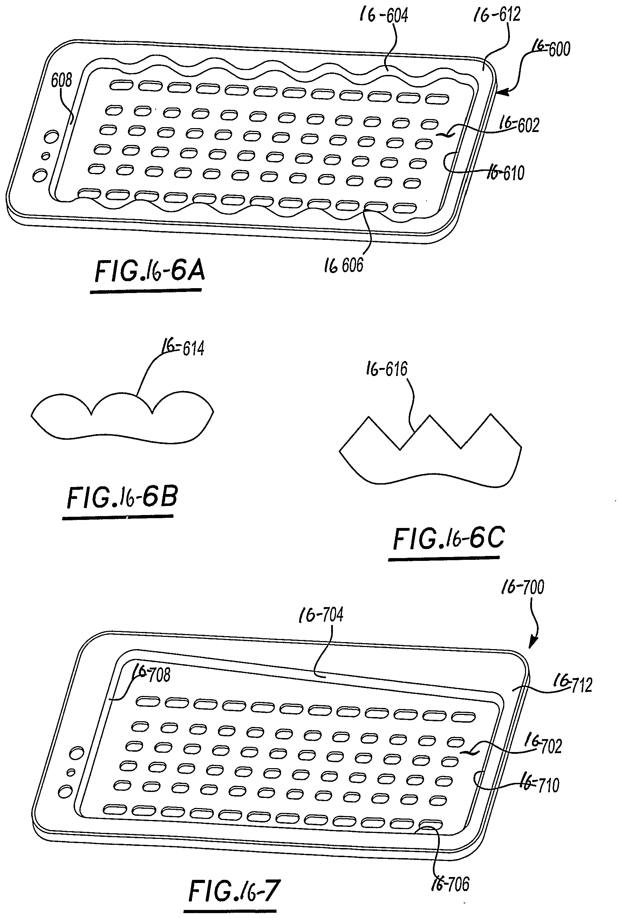

FIG. 16-6A is a perspective view of a frame having sinusoidal curved sidewalls.
FIG. 16-6B is a partial plan view of a scalloped sidewall.
FIG. 16-6C is a partial plan view of a jagged sidewall.
FIG. 16-7 is a perspective view of a frame having an angled sidewall.

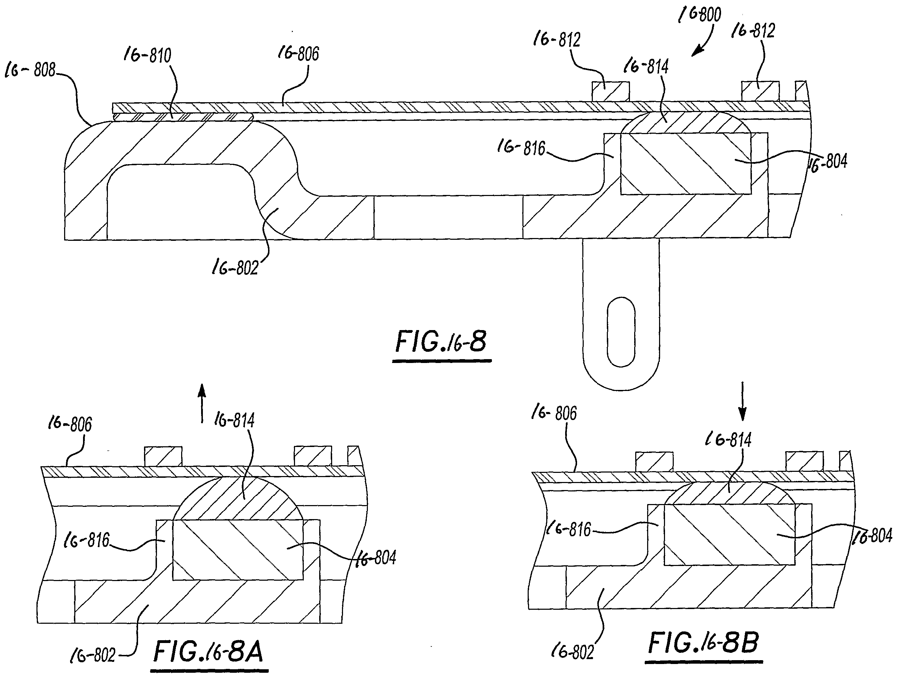

FIG. 16-8 is a cross-sectional view illustrating a ferrofluid disposed on a surface of a magnet and in contact with the film.
FIG. 16-8A is a detailed cross-sectional view of the ferrofluid on the magnet with the diaphragm in an upward direction.
FIG. 16-8B is a detailed cross-sectional view of the ferrofluid on the magnet with the diaphragm in a downward direction.

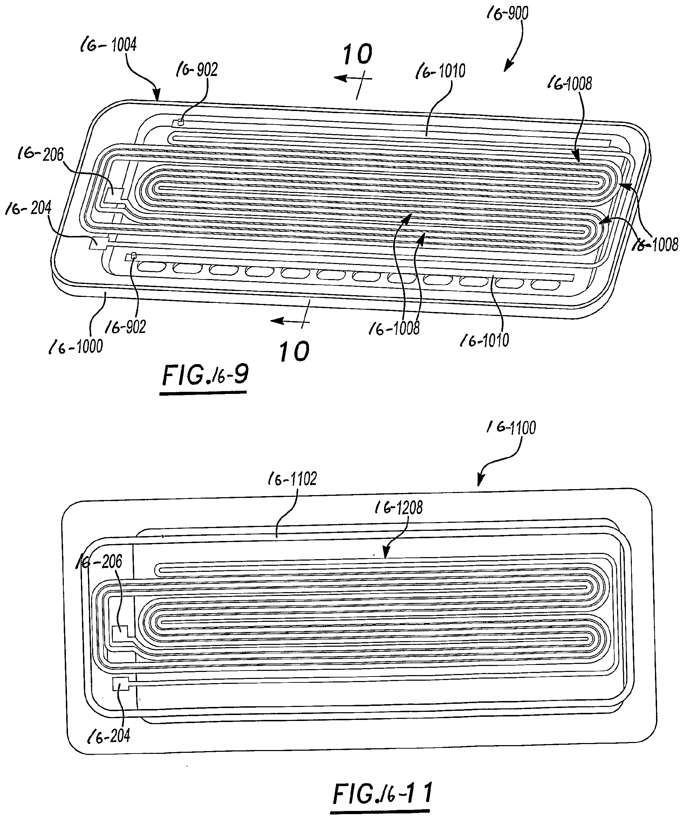

FIG. 16-9 is a perspective view of an electro-dynamic loudspeaker including an undriven conductor applied to both sides of the film for providing a dampener for the diaphragm film.

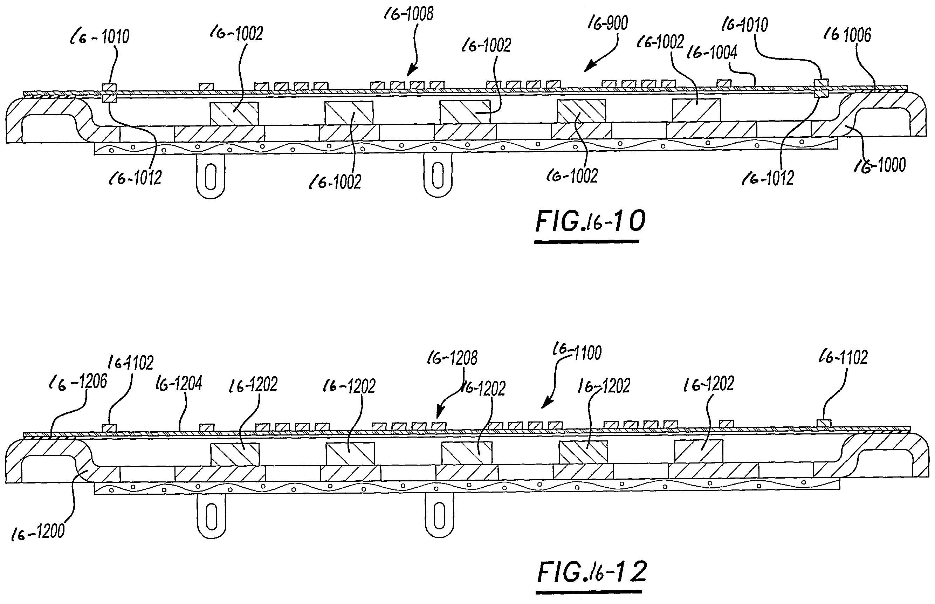

FIG. 16-10 is a cross-sectional view taken along line 10-10 of FIG. 16-9.
FIG. 16-11 is a plan view of an electro-dynamic loudspeaker having a shorted turn of conductor in the fringe zone at the edges of the film to electro-dynamically dampen the edge resonance.
FIG. 16-12 is a cross-sectional view taken along line 16-12 of FIG. 16-11.

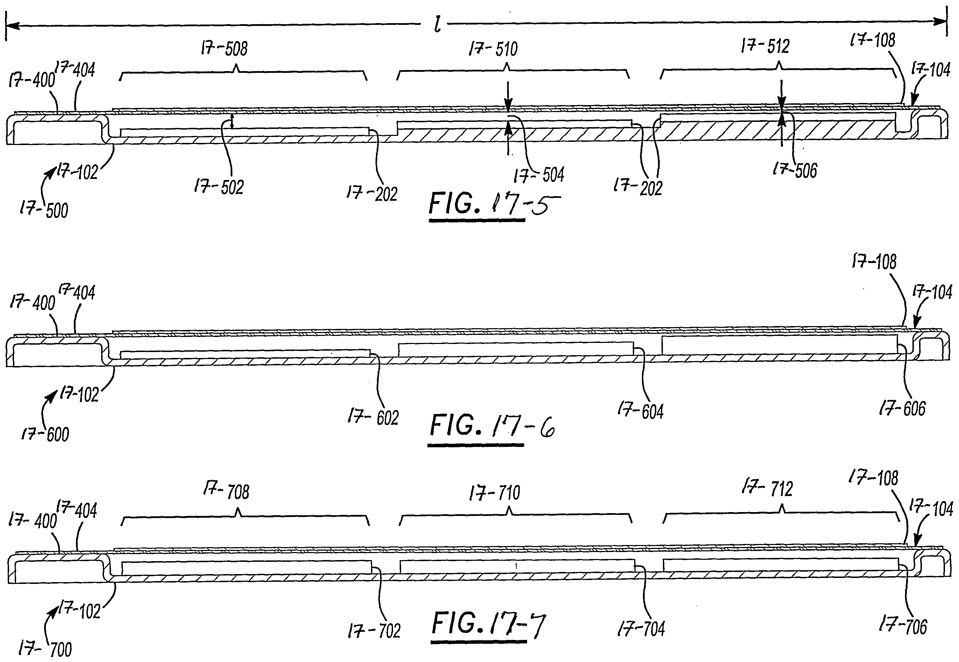

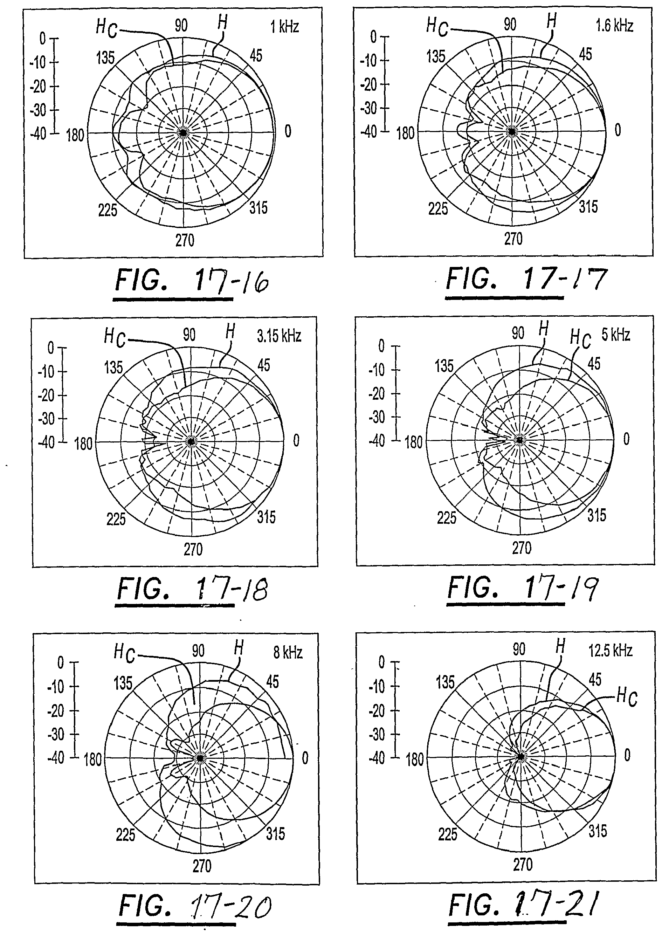

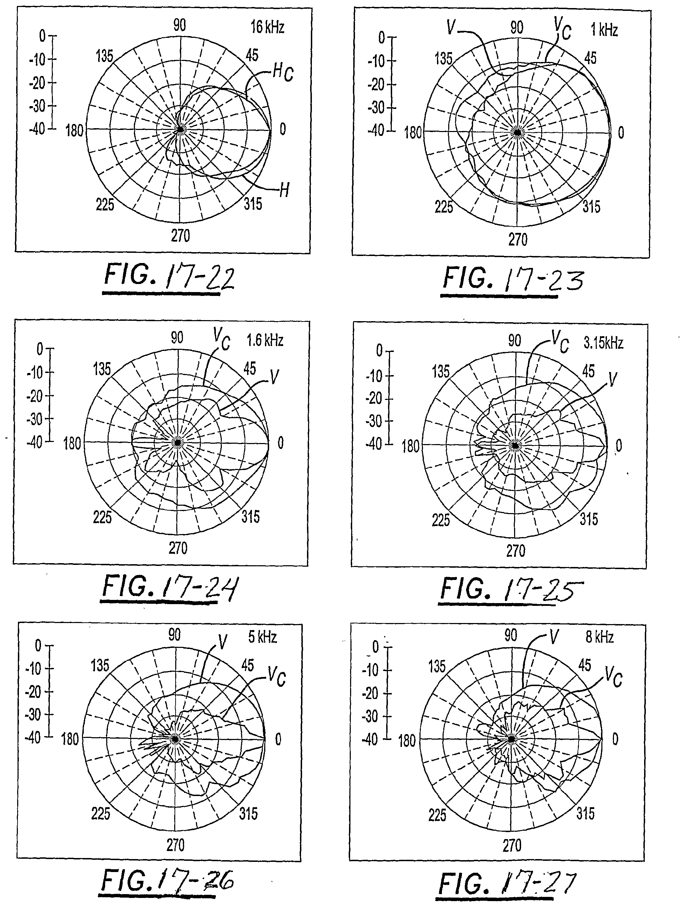

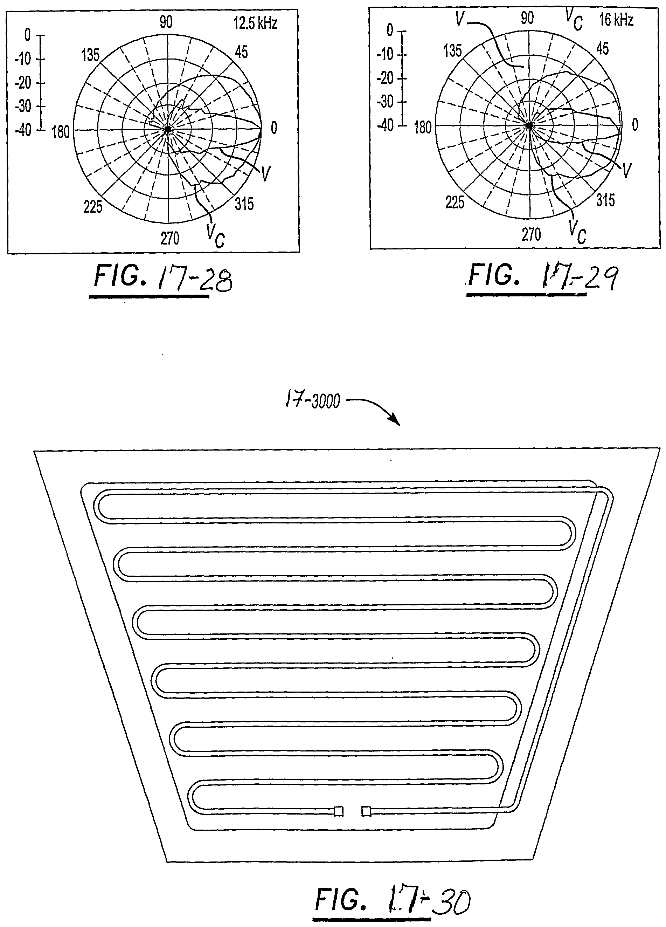

FIG. 17-5 is a cross-sectional view taken along the line 5-5 of FIG. 1 showing an example of an electro-dynamic loudspeaker.
FIG. 17-6 is a cross-sectional view taken along the line 5-5 of FIG. 1 showing an alternative example of an electro-dynamic loudspeaker.
FIG. 17-7 is a cross-sectional view taken along the line 5-5 of FIG. 1 showing another example of an electro-dynamic loudspeaker.

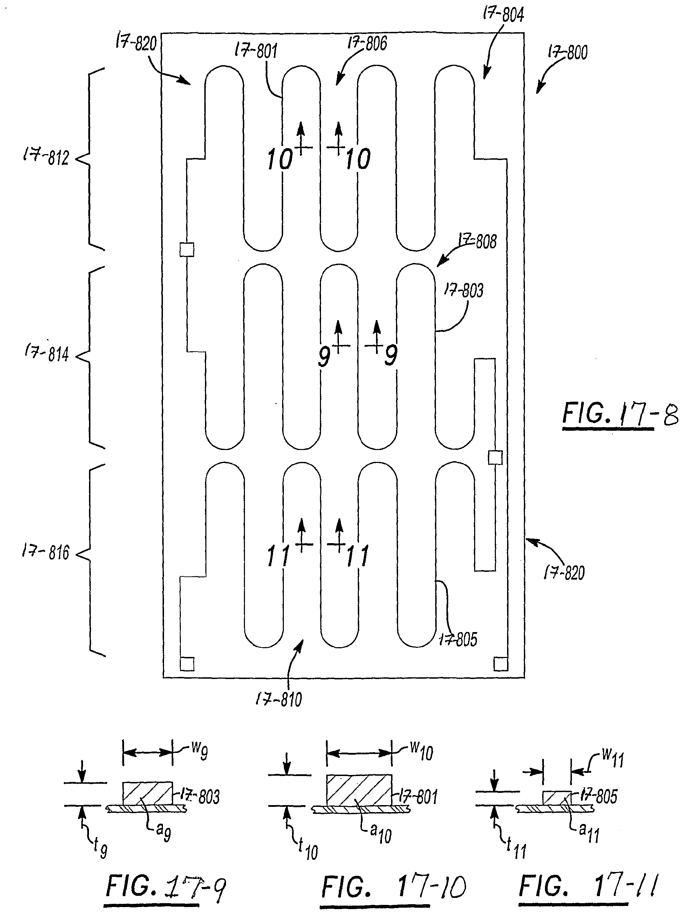

FIG. 17-8 is schematic view showing a conductive trace on a diaphragm of an electro-dynamic loudspeaker.
FIG. 17-9 is a cross-sectional view taken along the line 9-9 of FIG. 17-8 showing the dimensional cross-section of a portion of the conductive trace.
FIG. 17-10 is a cross-sectional view taken along the line 10-10 of FIG. 17-8 showing the dimensional cross-section of the conductive trace.
FIG. 17-11 is a cross-sectional view taken along the line 11-11 of FIG. 17-8 showing the dimensional cross-section of another portion of the conductive trace.

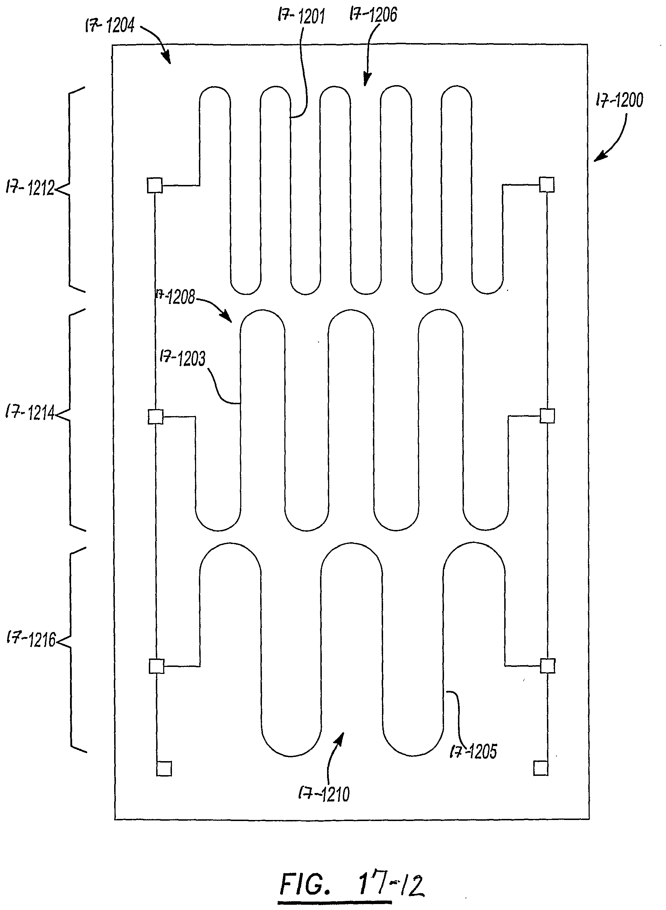

FIG. 17-12 is a schematic view showing an alternative example of a conductive trace on a diaphragm of an electro-dynamic loudspeaker.

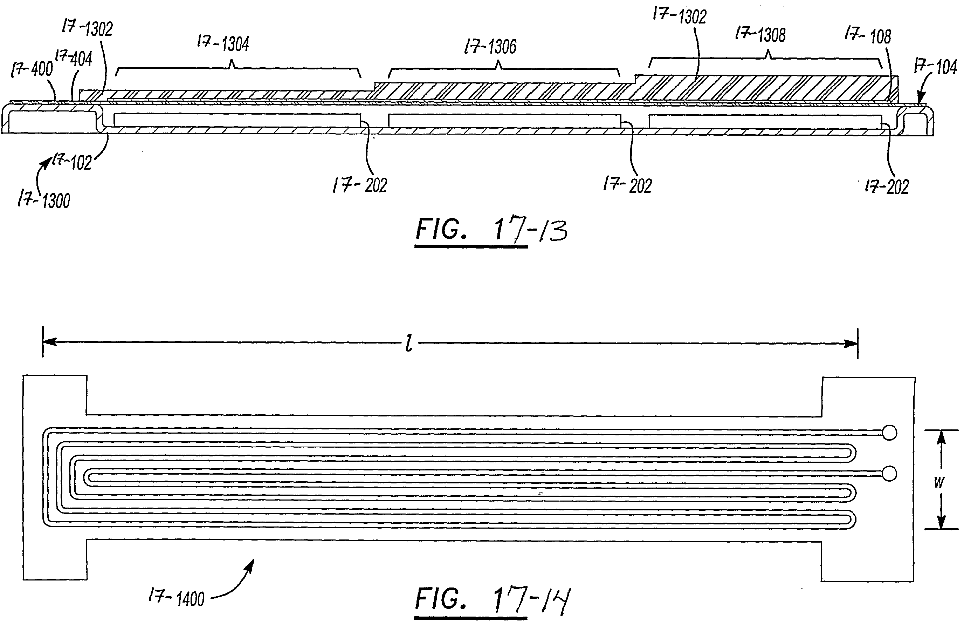

FIG. 17-13 is a cross-sectional view taken along the line 5-5 of FIG. 1 showing another example of an electro-dynamic loudspeaker.
FIG. 17-14 is a plan view of an electro-dynamic loudspeaker having a high aspect ratio of its length relative to its width.

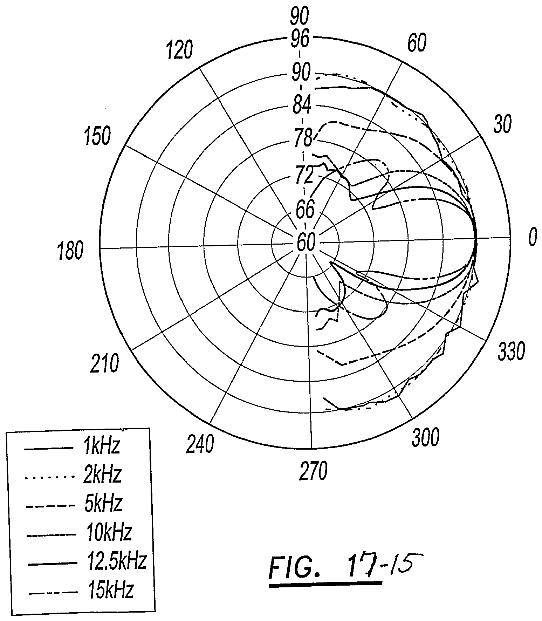

FIG. 17-15 is a polar response graph depicting the natural horizontal directivity of a direct radiating electro-dynamic loudspeaker at a variety of frequencies.
FIG. 17-16 is a horizontal polar response plot comparing the output of an electro-dynamic loudspeaker of FIG. 17-14 with a conventional single tweeter loudspeaker at 1 kHz.
FIG. 17-17 is a horizontal polar response plot comparing the output of an electro-dynamic loudspeaker of FIG. 17-14 with a conventional single tweeter loudspeaker at 1.6 kHz.
FIG. 17-18 is a horizontal polar response plot comparing the output of an electro-dynamic loudspeaker of FIG. 17-14 with a conventional single tweeter loudspeaker at 3.15 kHz.
FIG. 17-19 is a horizontal polar response plot comparing the output of an electro-dynamic loudspeaker of FIG. 17-14 with a conventional single tweeter loudspeaker at 5 kHz.
FIG. 17-20 is a horizontal polar response plot comparing the output of an electro-dynamic loudspeaker of FIG. 17-14 with a conventional single tweeter loudspeaker at 8 kHz.
FIG. 17-21 is a horizontal polar response plot comparing the output of an electro-dynamic loudspeaker of FIG. 17-14 with a conventional single tweeter loudspeaker at 12.5 kHz.
FIG. 17-22 is a horizontal polar response plot comparing the output of an electro-dynamic loudspeaker of FIG. 17-14 with a conventional single tweeter loudspeaker at 16 kHz.
FIG. 17-23 is a vertical polar response plot comparing the output of an electro-dynamic loudspeaker of FIG. 17-14 with a conventional single tweeter loudspeaker at 1 kHz.
FIG. 17-24 is a vertical polar response plot comparing the output of an electro-dynamic loudspeaker of FIG. 17-14 with a conventional single tweeter loudspeaker at 1.6 kHz.
FIG. 17-25 is a vertical polar response plot comparing the output of an electro-dynamic loudspeaker of FIG. 17-14 with a conventional single tweeter loudspeaker at 3.15 kHz.
FIG. 17-26 is a vertical polar response plot comparing the output of an electro-dynamic loudspeaker of FIG. 17-14 with a conventional single tweeter loudspeaker at 5 kHz.
FIG. 17-27 is a vertical polar response plot comparing the output of an electro-dynamic loudspeaker of FIG. 17-14 with a conventional single tweeter loudspeaker at 8 kHz.
FIG. 17-28 is a vertical polar response plot comparing the output of an electro-dynamic loudspeaker of FIG. 17-14 with a conventional single tweeter loudspeaker at 12.5 kHz.
FIG. 17-29 is a vertical polar response plot comparing the output of an electro-dynamic loudspeaker of FIG. 17-14 with a conventional single tweeter loudspeaker at 16 kHz.
FIG. 17-30 is a plan view of an electro-dynamic loudspeaker having a non-rectangular polygonal shape.

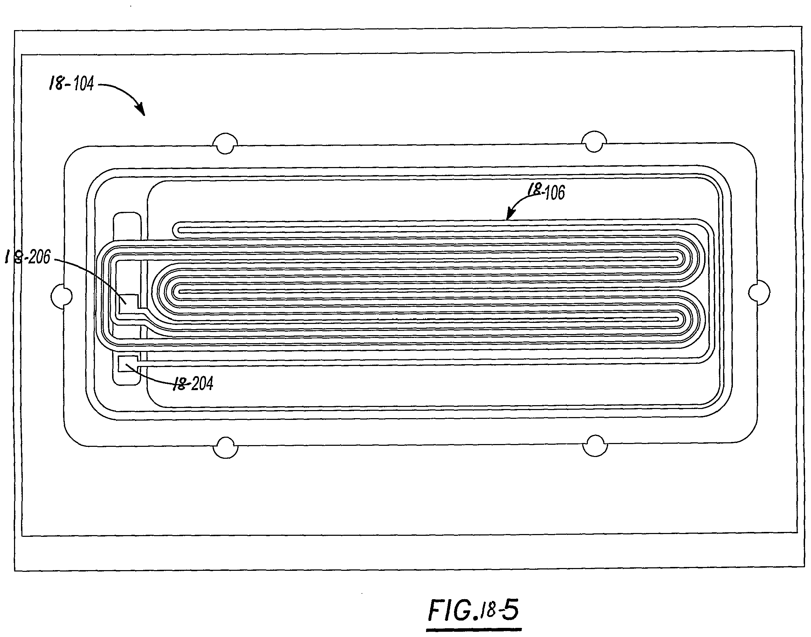

FIG. 18-5 is a plan view of an example conductor attached to the film.

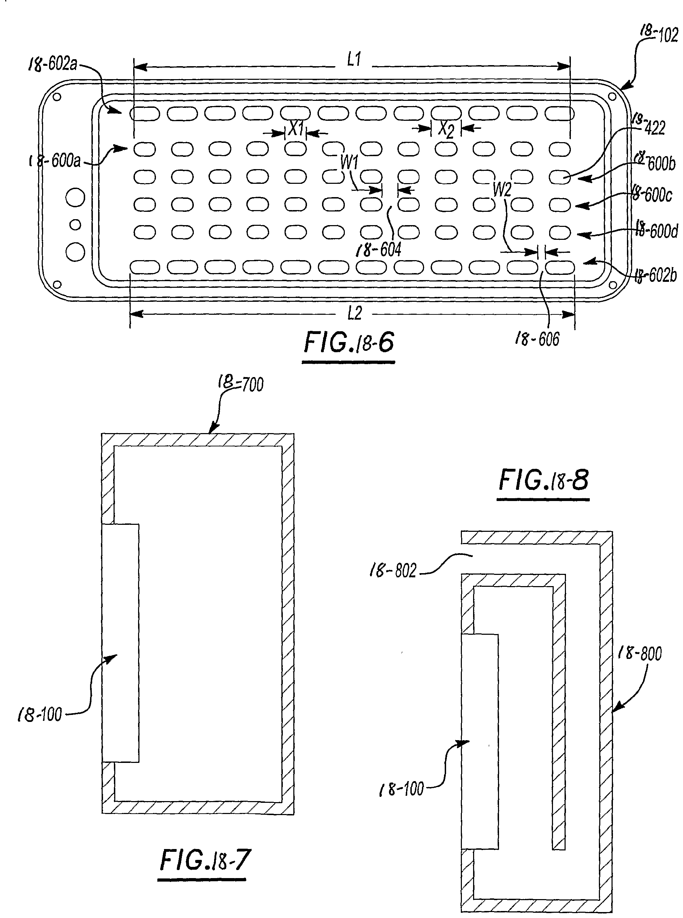

FIG. 18-6 is a plan view of an example frame for an electro-dynamic loudspeaker.
FIG. 18-7 is a schematic cross-sectional view of an example electro-dynamic loudspeaker mounted in an enclosure.
FIG. 18-8 is a schematic cross-sectional view of an example electro-dynamic loudspeaker mounted to a ported enclosure.
Figure 20-5 is a plan view of a film included in the electro-dynamic loudspeaker of Figure 1.
Figure 20-6 is a plan view of an example vacuum platen for use in constructing the electro-dynamic loudspeaker of Figure 1.
Figure 20-7 is a cross-sectional side view of the vacuum platen shown in Figure 20-6.
Figure 20-8 is a perspective view of an example clamp assembly for use in constructing the electro-dynamic loudspeaker of Figure 1.
Figure 20-9 is a cross-sectional side view of the clamp assembly of Figure 20-8.
Figure 20-10 is a plan view of the clamp assembly of Figure 20-8 in a closed position.
Figure 20-11 is a cross-sectional side view of the clamp assembly of Figure 20-8 in the closed position.
Figure 20-12 is a plan view of an example assembly fixture with a frame of the electro-dynamic loudspeaker of Figure 1 positioned on the assembly fixture.
Figure 20-13 is a cross-sectional side view of the assembly fixture and frame illustrated in Figure 20-12.
Figure 20-14 is a plan view of the clamp assembly of Figure 20-8 positioned on top of the assembly fixture of Figure 20-12.
Figure 20-15 is a cross-sectional side view of the closed clamp assembly of Figures 20-10 and 20-11 positioned on top of the assembly fixture of Figure 20-12.
Figure 20-16 is cross-sectional side view of an example work-in-process partially constructed electro-dynamic loudspeaker.
Figure 20-17 is a cross-sectional side view of an example finished electro-dynamic loudspeaker.
Figure 20-18 is a cross-sectional view of an example film tensioning device.
Figure 20-19 is a cross-sectional side view of another example film tensioning device.
Figure20- 20 is a perspective view of yet another example film tensioning device.
Figure 20-21 is a cross-sectional side view depicting use of the alternate tensioning member shown in Figure20-20.
Figure 20-22 is a cross-sectional side view further depicting diaphragm tensioning using the tensioning device shown in Figure 20-20.
Figure 20-23 depicts an example frame in an undeformed state and a deformed state.
Figure 20-24 is an exploded perspective view of another example loudspeaker.
Figure 20-25 is a cross sectional view of an injection mold used to construct an example bowed frame of the loudspeaker depicted in Figure 20-24.
Figure 20-26 is a perspective bottom view of an example plastic frame of a loudspeaker.
Figure 20-27 is a perspective top view of the frame illustrated in Figure 20-26.
Figure 20-28 is a cross-sectional view of the frame illustrated in Figure 20-27 taken along line 28-28.
Figure 20-29 is an enlarged partial cross-sectional view of an example magnet assembly and the plastic frame depicted in Figure 20-26.
Figure 20-30 is a partial perspective view of a terminal detail of an example plastic frame and an example magnet assembly.
Figure 20-31 is an exploded perspective view of another example electro-dynamic loudspeaker.
Figure 20-32 is a cross-sectional view of a casement and a diaphragm subassembly taken along line 32-32 of the electro-dynamic loudspeaker of Figure 20-31.
Figure 20-33 is a cross-sectional view of the electro-dynamic loudspeaker of Figure 20-31.
Figure 20-34 is a cross-sectional view of an injection mold.
Figure 20-35 is a cross-sectional view of another example electro-dynamic loudspeaker that includes a retainer coupling a casement to a frame.
Figure 20-36 is an exploded cross-sectional view of yet another example electro-dynamic loudspeaker.
Figure 20-37 is a partial perspective view of the electro-dynamic loudspeaker depicted in Figure 20-36.
Figure 20-38 is a partial cross-sectional view of an alternate injection mold incorporating a film tensioning feature in the mold tool.
Figure 20-39 is a cross-sectional view of another example loudspeaker.
Figure 20-40 is a cross-sectional view of still another example electro-dynamic loudspeaker.
Figure 20-41 is a flow diagram depicting a method of constructing an electro-dynamic loudspeaker.

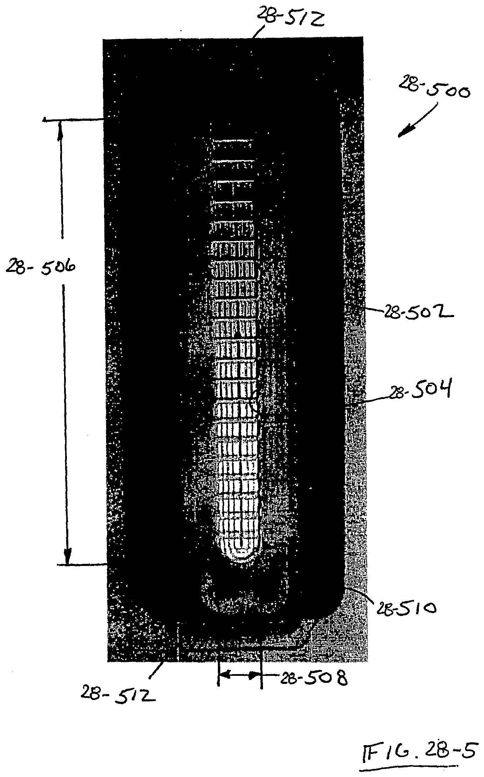

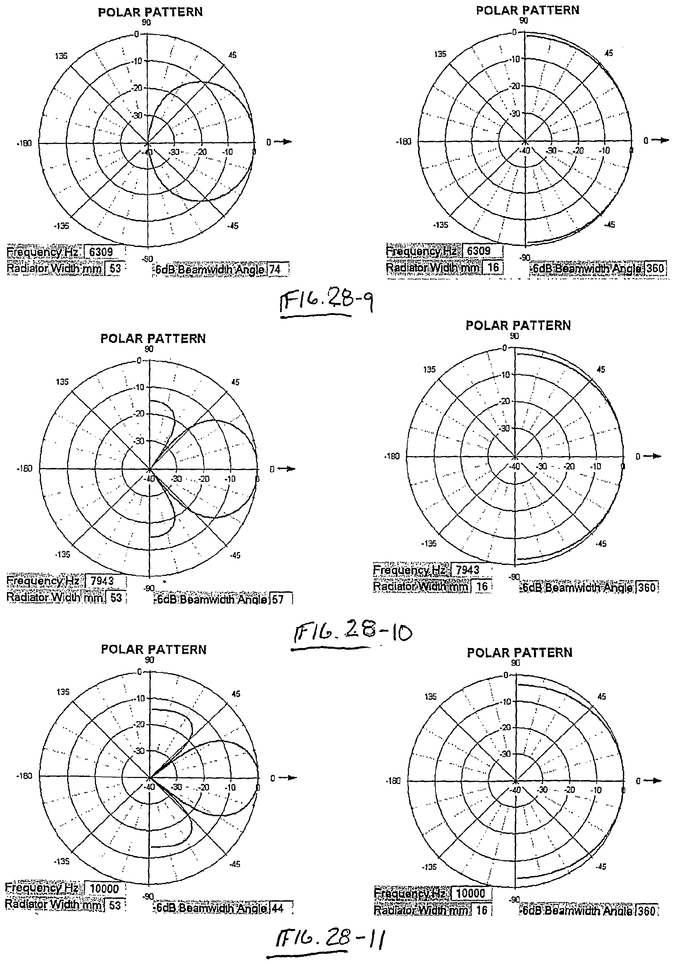

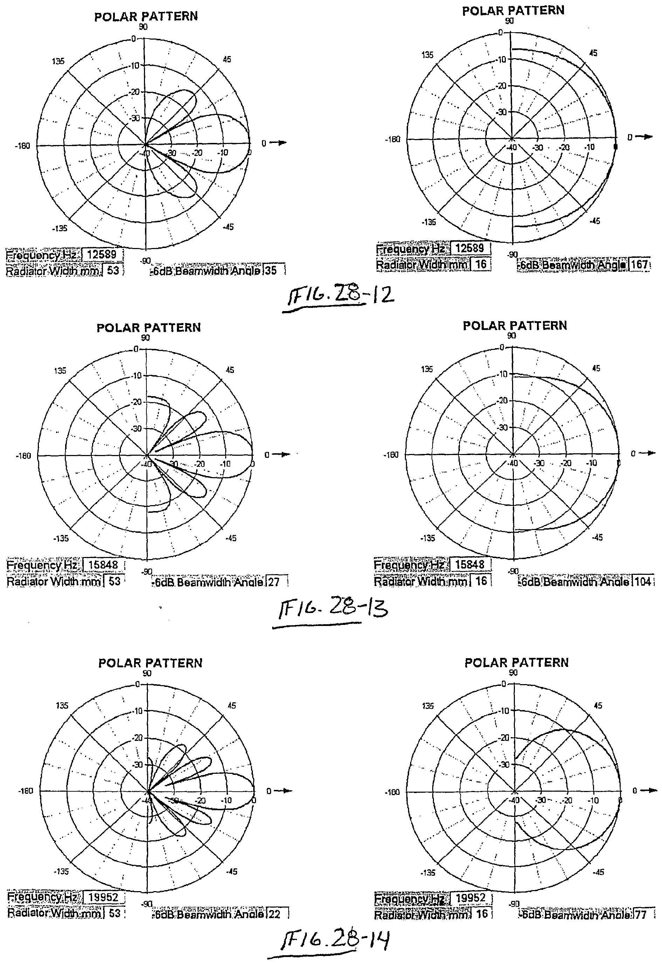

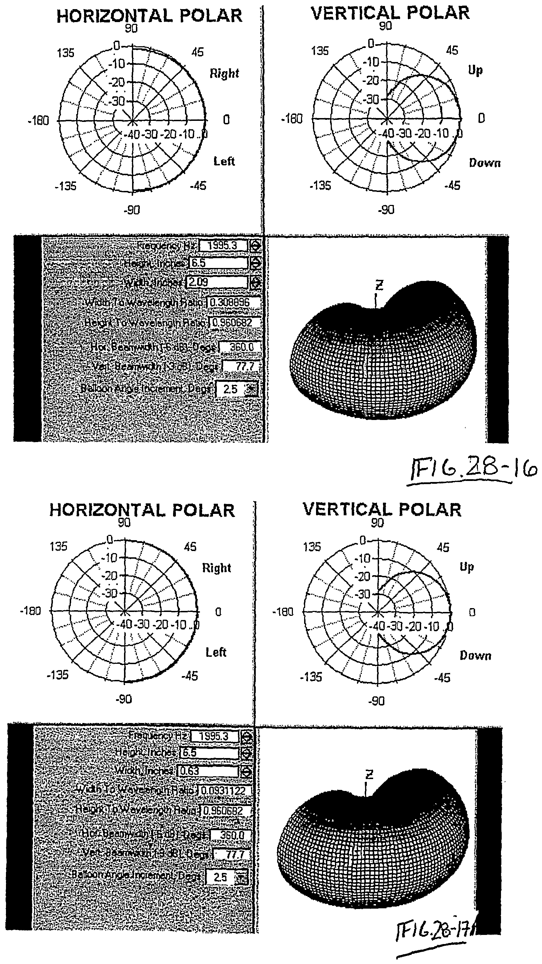

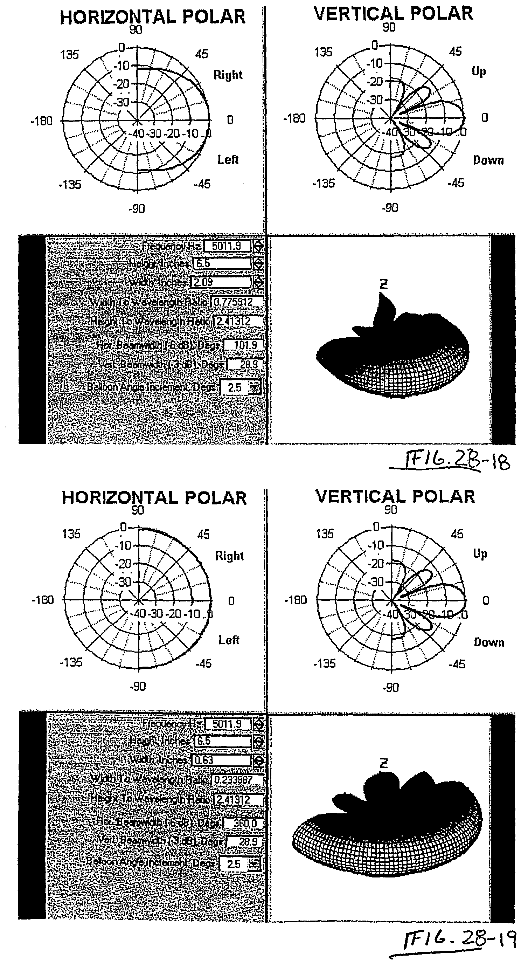

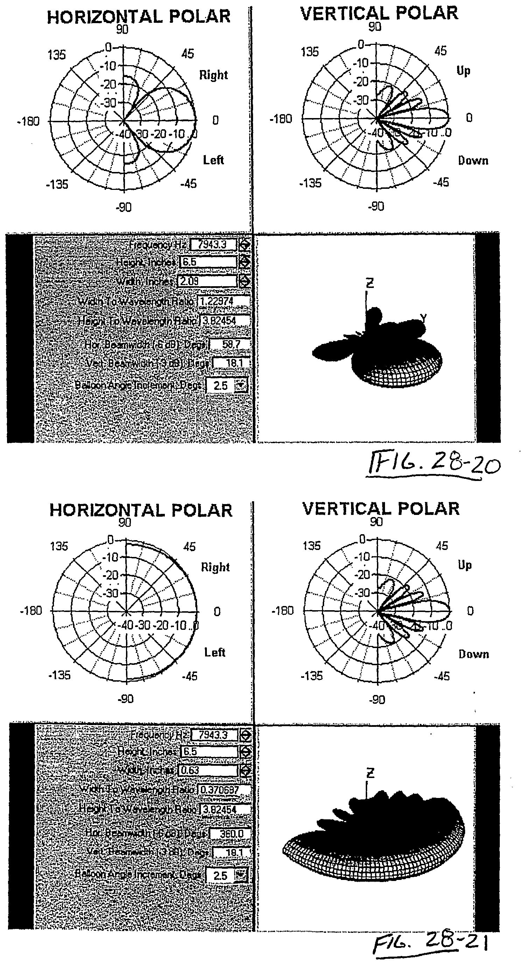

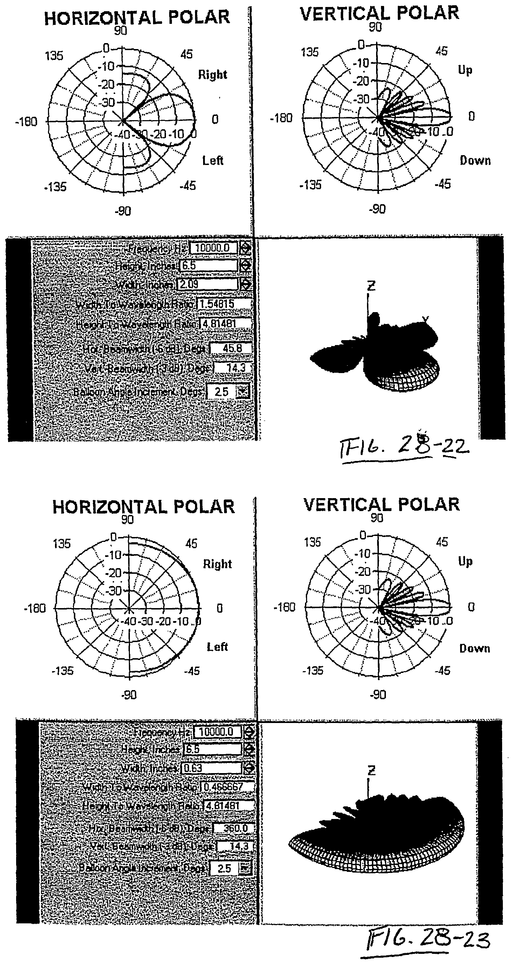

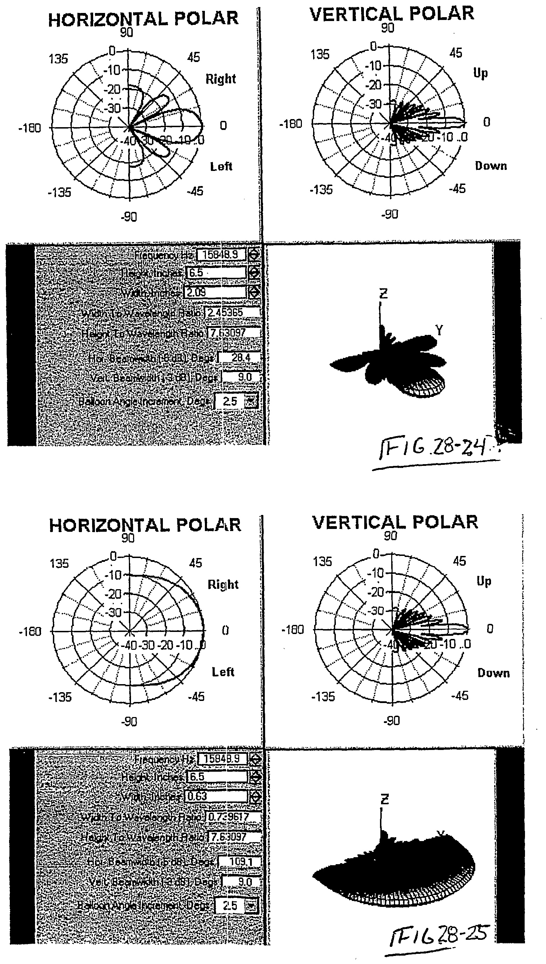

FIG. 28-5 is a plan view of an electro-dynamic planar loudspeaker having an acoustic lens according to the principles of the invention.

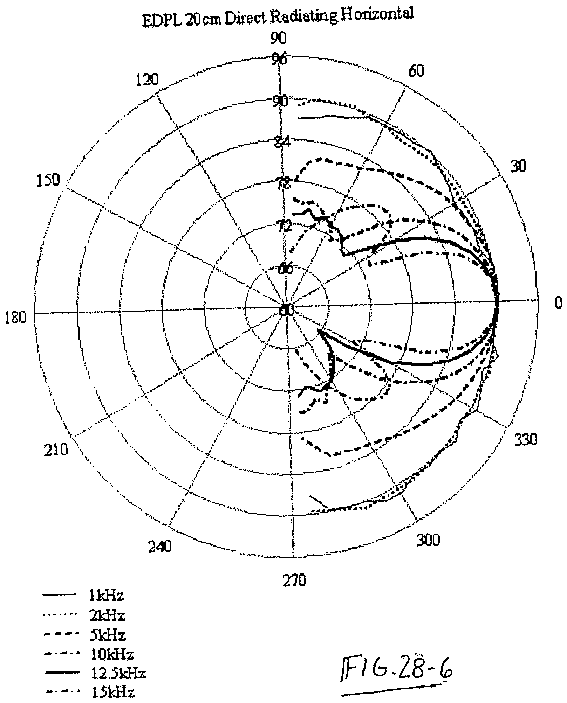

FIG. 28-6 is a polar response graph depicting the directivity of a direct radiating electro-dynamic planar loudspeaker.

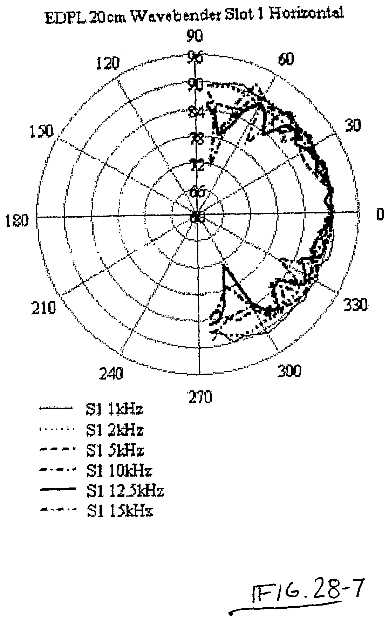

FIG. 28-7 is a polar response graph of the loudspeaker of FIG. 6 equipped with an acoustic lens.
FIG.s 28-8 through 28-14 are polar response graphs comparing the output of an electro-dynamic planar loudspeaker with the output of same speaker equipped with an acoustic lens at a variety of frequencies.

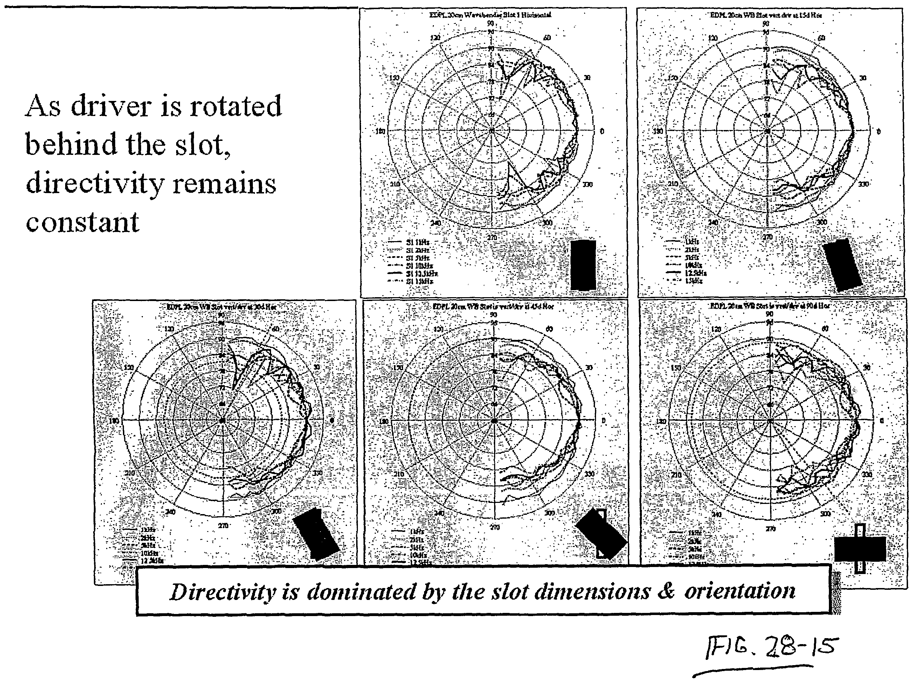

FIG. 28-15 is a series of polar response plots where the loudspeaker is rotated relative to the acoustic aperture.
FIGs. 28-16 through 28-25 depict horizontal polar, vertical polar and spherical response plots comparing the output of an electro-dynamic planar loudspeaker with the output of the same speaker equipped with an acoustic lens at a variety of frequencies.

### DETAILED DESCRIPTION

FIG. 1 is a perspective view of an electro-dynamic loudspeaker 100 of the invention. As shown in FIG. 1, the electro-dynamic loudspeaker is a generally planar loudspeaker having a frame 102 with a diaphragm 104 attached in tension to the frame 102. A conductor 106 is positioned on the diaphragm 104. The conductor 106 is shaped in serpentine fashion having a plurality of substantially linear sections (or traces) 108 longitudinally extending along the diaphragm interconnected by radii 110 to form a single current path. Permanent magnets 202 (shown in FIG. 2) are positioned on the frame 102 underneath the diaphragm 104, creating a magnetic field.

Linear sections 108 are positioned within the flux fields generated by permanent magnets 202. The linear sections 108 carry current in a first direction 112 and are positioned within magnetic flux fields having similar directional polarization. Linear sections 108 of conductor 106 having current flowing in a second direction 114, that is opposite the first direction 112, are placed within magnetic flux fields having an opposite directional polarization. Positioning the linear sections 108 in this manner assures that a driving force is generated by the interaction between the magnetic fields developed by magnets 202 and the magnetic fields developed by current flowing in conductor 106. As such, an electrical input signal traveling through the conductor 106 causes the diaphragm 104 to move, thereby producing an acoustical output.

FIG. 2 is an exploded perspective view of the electro-dynamic loudspeaker 100 shown in FIG. 1. As illustrated in FIG. 2, the flat panel loudspeaker 100 includes a frame 102, a plurality of high energy magnets 202, a diaphragm 104, an acoustical dampener 236 and a grille 228. Frame 102 provides a structure for fixing magnets 202 in a predetermined relationship to one another. In the depicted embodiment, magnets 202 are positioned to define five rows of magnets 202 with three magnets 202 in each row. The rows are arranged with alternating polarity such that fields of magnetic flux are created between each row. Once the flux fields have been defined, diaphragm 104 is fixed to frame 102 along its periphery.

A conductor 106 is coupled to the diaphragm 104. The conductor 106 is generally formed as an aluminum foil bonded to the diaphragm 104. The conductor 106 can, however, be formed from other conductive materials. The conductor 106 has a first end 204 and a second end 206 positioned adjacent to one another at one end of the diaphragm 104.

As shown in FIG. 2, frame 102 is a generally dish-shaped member preferably constructed from a substantially planar contiguous steel sheet. The frame 102 includes a base plate 208 surrounded by a wall 210. The wall 210 terminates at a radially extending flange 212. The frame 102 further includes apertures 214 and 216 extending through flange 212 to provide clearance and mounting provisions for a conductor assembly 230.

Conductor assembly 230 includes a terminal board 218, a first terminal 220 and a second terminal 222. Terminal board 218 includes a mounting aperture 224 and is preferably constructed from an electrically insulating material such as plastic, fiberglass or other insulating material. A pair of rivets or other connectors (not shown) pass through apertures 214 to electrically couple first terminal 220 to first end 204 and second terminal 222 to second end 206 of conductor 106. A fastener such as a rivet 226 extends through apertures 224 and 216 to couple conductor assembly 230 to frame 102.

A grille 228 functions to protect diaphragm 104 from contact with objects inside the listening environment while also providing a method for mounting loudspeaker 100. The grille 228 has a substantially planar body 238 having a plurality of apertures 232 extending through the central portion of the planar body 238. A rim 234 extends downward, substantially orthogonally from body 238, along its perimeter and is designed to engage the frame 102 to couple the grille 228 to the frame 102.

An acoustical dampener 236 is mounted on the underside of the base plate 208 of the frame 102. Dampener 236 serves to dissipate acoustical energy generated by diaphragm 104 thereby minimizing undesirable amplitude peaks during operation. The dampener 236 may be made of felt, or a similar gas permeable material.

FIG. 3 is a cross-sectional view of the electro-dynamic loudspeaker taken along line 3-3 of FIG. 1. FIG. 3 shows the frame 102 having the diaphragm 104 attached in tension to the frame 102 and the permanent magnets 202 positioned on the frame 102 underneath the diaphragm 104. Linear sections 108 of the conductor 106 are also shown positioned on top of the diaphragm 104.

FIG. 4 is an enlarged cross-sectional view of the encircled area of FIG. 3. As illustrated by FIG. 4, the diaphragm 104 is comprised of a thin film 400 having a first side 402 and a second side 404. First side 402 is coupled to frame 102. Generally, the diaphragm 104 is secured to the frame 102 by an adhesive 406 that is curable by exposure to radiation. However, the diaphragm 104 may secured to the frame 102 by other mechanism, such as those known in the art.

To provide a movable membrane capable of producing sound, the diaphragm 104 is mounted to the frame 102 in a state of tension and spaced apart a predetermined distance from magnets 202. The magnitude of tension of the diaphragm 104 depends on the speaker's physical dimensions, materials used to construct the diaphragm 104 and the strength of the magnetic field generated by magnets 202. Magnets 202 are generally constructed from a highly energizable material such as neodymium iron boron (NdFeB), but may be made of other magnetic materials. The thin diaphragm film 400 is generally a polyethylenenaphthalate sheet having a thickness of approximately .001 inches; however, the diaphragm film 400 may be formed from materials such as polyester (e.g., known by the tradename "Mylar"), polyamide (e.g., known by the tradename "Kapton") and polycarbonate (e.g., known by the tradename "Lexan"), and other materials known by those skilled in the art for forming diaphragms 104.

The conductor 106 is coupled to the second side 404 of the diaphragm film 400. The conductor 106 is generally formed as an aluminum foil bonded to diaphragm film 400, but may be formed of other conductive material known by those skilled in the art.

The frame 102 includes a base plate 208 surrounded by a wall 210 extending generally orthogonally upward from the plate 208. The wall 210 terminates at a radially extending flange 212 that defines a substantially planar mounting surface 414. A lip 416 extends downwardly from flange 212 in a direction substantially parallel to wall 210. Base plate 208 includes a first surface 418, a second surface 420 and a plurality of apertures 422 extending through the base plate 208. The apertures 422 are positioned and sized to provide air passageways between the first side 402 of diaphragm 104 and first surface 418 of frame 102. An acoustical dampener 236 is mounted to second surface 420 of frame base plate 208.

FIGs. 8-1through8-5 illustrate the mounting bracket 8-100 used to mount and secure sub-assemblies and/or electronic components 8-102, such as audio, computer or vehicle control components, in a vehicle assembly line installation operation. In FIGs. 8-3through8-5, an audio power amplifier 8-300 is illustrated with the mounting bracket 8-100. The amplifier 8-300 is installed in a vertical structural pillar of a vehicle. The structural pillar provides a mounting location 8-310 where the mounting bracket 8-100 is attached. The mounting bracket 8-100 may be adapted to mount and secure any of a variety of components or sub-assemblies in any of a variety of desired locations in the vehicle.

Referring to FIG. 8-1, the mounting location 8-104 is illustrated as one of the structural pillars of a vehicle typically constructed of sheet metal. The mounting location 8-104 includes an interior surface 8-106 and an exterior surface 8-108. One or more holes or slots 8-110 are included in the mounting location 8-104 and cooperates with the mounting apparatus 8-100. The slot 8-110 is sized and positioned within the mounting location 8-104 to ensure that the mounting bracket 8-100 accurately locates the component 8-102 being installed in the desired position in the vehicle.

The mounting bracket 8-112 has a component attachment portion 8-114 that includes a plurality of holes or apertures 8-116 through which any of a variety of fasteners 8-118 may be utilized to attach the component 8-102 to the mounting bracket 8-112. Raised portions or bosses 8-120 that are integral with the mounting bracket 8-112 may be included adjacent the apertures 8-116 on the inner surface 8-122 of the component attachment portion 8-114 to set off and substantially isolate the component 8-102 from the remainder of the mounting bracket 8-112. In a typical assembly sequence, the mounting bracket 8-112 is attached to the component 8-102 in a pre-assembly procedure that is completed as a sub-assembly prior to the assembly-line installation of the component 8-102 in the vehicle.

An alternate methodology of fastening the mounting bracket 8-112 to the component 8-102 may also be employed, such as by interlocking "snap-fit"-type connector assemblies (not shown). For example, such an interlocking connector assembly could include mating male and female sections (e.g., a "Christmas tree" connector) that are integral to each of the mounting bracket 8-112 component attachment portion 8-114 and component 8-102. Attaching the mounting bracket 8-112 to the component 8-102 would then simply require snapping the two parts together. Another fastening means could include a hook and loop fastener, like Velcro^{®}, that is adhered by an adhesive to each of the mounting bracket 8-112 component attachment portion 8-114 and the component 8-102. Any fastening device should be suited to the requirements and circumstances where the mounting bracket 8-100 is to be utilized (e.g., size and weight of the component, performance requirements of the component, or operating conditions seen by the component). Preferably, any fastening scheme would serve to minimize or eliminate the transmission of vibrations to, or the generation of squeaks, rattles, or hums from, the mounting bracket 8-100 or component 8-102.

The mounting bracket 8-112 also has at least one tab portion 8-124. The tab portion 8-124 is shown to include generally parallel, first and second surfaces 8-126, 8-128 that wind along a curved path to create a S-type configuration. The number and size of the tab portion(s) 8-124 (e.g., width, thickness, length and particular curvature of the tab portion 8-124) may be determined based upon the configuration, size, and weight of the component 8-102 to be mounted, and any other pertinent requirements of the application for the mounting apparatus' 8-100 use.

The tab portion 8-124 of the mounting bracket 8-112 is received in the slot 8-110 provided at the mounting location 8-104. Upon installation, the tab portion's 8-124 first and second surfaces 8-126, 8-128 contact the interior and exterior surfaces 8-106, 8-108, respectively, at the mounting location 8-104. In addition to being located to ensure that the mounting apparatus 8-100 accurately positions the component 8-102 for installation, as already discussed, the slot 8-104 is sized to be operable to both receive the tab portion 8-124 during the installation procedure and securely retain the tab portion 8-124 once installation of the mounting bracket 8-112 is complete.

One or more gussets or ribs 8-130 may also be included in the mounting bracket 8-112, as shown in the Figures. Such rib(s) 8-130 could be located between the component attachment portion 8-8-114 and the tab portion 8-124 of the mounting bracket 8-112. The ribs 8-130 could provide additional structural integrity to the mounting bracket 8-112 to prevent undesirable flexing or deformation in the mounting bracket 8-112 caused by things like the weight of the component 8-102 or the operating conditions seen by the mounting bracket 8-112 during use of the vehicle.

In an alternate configuration of the invention, a second mounting bracket 8-132 may also be included for pre-assembly at the opposite end of the component 8-102 to be mounted from that of the mounting bracket 8-112. Like the mounting bracket 8-112 described above, the second mounting bracket 8-132 also includes a component attachment portion 8-134. The second mounting bracket 8-132 may be attached to the component 8-102 in a manner like that discussed above. In addition, the second mounting bracket 8-132 can include one or more flanges 8-136 that extend from the component attachment portion 8-134 in a direction generally parallel to the exterior surface 106 of the mounting location 8-104.

Upon installation of the component 8-102, the second mounting bracket 8-134 is attached to the mounting location 8-104 at the flange(s) 8-136, to fixedly secure the component in place. Attachment of the second mounting bracket 8-132 to the mounting location 8-104 may be made through engagement of aperture 8-138 by threaded fastener 8-118 or any one of a variety of other well-known attachment mechanisms, including those already discussed herein. Of course, the number and size of the flange(s) 8-136 may be determined, as with the tab portion(s) 8-124 by things like the weight of the component 8-102 or the operating conditions experienced by the mounting apparatus 8-100 and component 8-102 in use.

Installation of the mounting apparatus 8-100 is accomplished by inserting the tab portion 8-124 of the mounting bracket 8-112 through the receiving slot 8-110 at the mounting location 8-104, illustrated generally at 8-140 and at arrow A in FIG. 8-1. The tab portion 8-124 is thus passed through the slot 8-110 in a direction generally perpendicular to the exterior surface 8-106 of the mounting location 8-104, such that the tab portion 8-124 is inserted into the mounting location 8-104 until the first surface 8-126 of the tab portion 8-124 abuts the exterior surface 8-108 at the mounting location 8-104. The mounting bracket 8-112 is then rotated (as shown in the Figures) in the direction of arrow B. The tab portion 8-124 of the mounting bracket 8-112 may then be worked further into the slot 8-110 and rotated in a manner such as that shown generally at 8-142 in FIG. 8-1. Further rotation of the mounting bracket 8-112 in the direction of arrow B terminates when the first surface 8-126 of the mounting bracket 8-112 tab portion 8-124 abuts the interior surface 8-106 at the mounting location 8-104 and, simultaneously, the second surface 8-128 of the mounting bracket 8-112 tab portion 8-124 abuts the exterior surface 8-108 at the mounting location 8-104.

At this point in the installation, the component 8-102 is secured at the mounting location 8-104 (which, in FIG. 8-1, is shown to be generally vertically oriented) by the mounting bracket 8-112 at three points of contact shown at locations 8-144, 8-146, and 8-148. If necessary or desired, conventional fasteners, such as threaded fasteners, may also be utilized with the mounting bracket 8-112 to further secure the component 8-102 at the mounting location 8-104. Likewise, the second mounting bracket 8-132 may also be used.

As is readily apparent based upon the foregoing, an assembly-line installer has both hands free to operate an installation tool to drive such fasteners because the component 8-102 is fully secured at the mounting location 8-104 by the mounting bracket 8-112. Thus, a significant advantage of the mounting apparatus 8-100 of the invention is that the component 8-102 may be hung or set in its proper installation position, and maintained in that position without the aid of the assembly-line installer. Consequently, the assembly-line installer may manipulate an installation tool such as a power drill/driver, wrench, or other tool, with both hands.

Of course a similar installation may be accomplished with a mounting location 8-104 at orientations other than vertical, provided that the weight of the component 8-102 to be installed initiates the contact of at least the first and second surfaces 8-126, 8-128 of the tab portion 8-124 with the mounting surfaces 8-106, 8-108.

When used in conjunction with a second mounting bracket 8-132, the mounting apparatus 8-100 may be designed to provide for a pre-tensioned installation at the tab portion 8-124. In this regard, when the second mounting bracket 8-132 is secured to the mounting location 8-104, the tab portion 8-124 of the mounting bracket 8-112 is held in positive contact against the interior 8-106 and exterior 8-108 surfaces at the mounting location 8-104 and the slot 8-110 in the 3-point contact 8-144, 8-146, 8-148 described above. The positive contact is made by a force generated in reaction to a force resulting from the fastening the second mounting bracket 8-132 to the mounting location 8-104.

With the tab portion 8-124 of the mounting bracket 8-112 seated in the slot 8-110, the mounting bracket 8-112 may be designed so as to angle the component 8-102 away from the exterior surface 8-106 at the mounting location 8-104, causing the end of the component 8-102 and bracket 8-132 to be a distance X from the exterior surface 8-108. Thus, prior to securing the second mounting bracket 8-132 at the mounting location 8-104, the component 8-102 remains free at one end, and the second bracket 8-132 is a distance X away from the exterior surface 8-108 of mounting location 8-104. Upon securing the second mounting bracket 8-132 to the mounting location 8-104, the mounting bracket 8-112 is thus placed under a load, and the first and second surfaces 8-126, 8-128 of the tab portion 8-124 are forced against the interior and exterior surfaces 8-106, 8-108 at the mounting location 8-104, as shown at 8-144, 8-146 in FIG. 8-1.

The mounting apparatus 8-100 of the invention incorporating similar features of mounting brackets 8-112 and 8-132 may also be manufactured as a unitary construction (as discussed below). Of course, the mounting apparatus 8-100 must be constructed of a material that possesses the strength suitable to ensure that, upon installation, the component 8-102 is securely fixed at the mounting location 8-104 and will continue to maintain a secure mount and withstand the operating conditions experienced by the vehicle.

One contemplated method of manufacture for the mounting bracket 8-112, 8-132 is as a one-piece metal stamping. Such a mounting bracket 8-112, 8-132 would be cost effective to manufacture in high production volumes and easily meet all of the mounting apparatus' performance requirements.

A metal mounting bracket 8-112, 8-132 may also be coated with a plastic material to provide additional desirable characteristics in the mounting bracket 8-112, 8-132. One method contemplated for plastic coating a metal mounting bracket 8-112, 8-132 is by dip coating. In addition to providing the necessary strength, a plastic-coated metal mounting bracket 8-112, 8-132 could provide improved damping characteristics that would reduce the transmission of vibrations to or from the component 8-102. Also, squeaks, rattles and/or hums that are often associated with metal-to-metal contacts can be eliminated or reduced with a plastic-coated metal mounting bracket 8-112, 8-132.

Another characteristic that may be achieved by plastic coating is to increase the coefficient of friction of the first and second surfaces 8-126, 8-128 of the tab portion 8-124 of the mounting bracket 8-112. The increased friction coefficient would reduce any tendency toward sliding movement of the mounting bracket 8-112 relative to the interior and exterior surfaces 8-106, 8-108 at the mounting location 8-104.

Also, plastic coating a metal mounting bracket 8-112, 8-132 may provide for or enhance the "handle-ability" of the component and or the mounting bracket sub-assembly for the worker that installing the component on the automobile assembly line. A plastic coating would minimize the presence of any sharp edges, such as may be inherent to a metal stamped part.

Alternatively, the mounting bracket 8-112, 8-132 may be molded in one piece from plastic, such as by plastic injection molding or otherwise. There are a variety of suitable, low-cost plastic materials that may be utilized for such an application that possess both the required structural characteristics as well as the additional features discussed above.

Another embodiment of the invention is illustrated in FIG. 8-6. As previously mentioned and as shown in FIG. 8-6, the mounting apparatus 8-600 may comprise a mounting bracket 8-602 of unitary construction. The mounting bracket 8-602 is shown in the figure for installation of a loudspeaker 8-604 on the mounting surface 8-606, such as a structural pillar in an automobile.

The mounting bracket 8-602 is shown to include a generally planar, back panel section 8-608. Optionally, a plurality of apertures 8-610 may be included in the back panel section 8-608 to, for example, reduce the cost and/or weight of the mounting bracket 8-602 or provide air passageways through the mounting bracket 8-602, as necessary.

A sidewall 8-612 extends generally orthogonally from the back panel section 8-608 so as to define the outer boundary or periphery 8-614 and the interior space 8-616 of the mounting bracket 8-602. Extending inwardly from the periphery 8-614 of the sidewall 8-612 and toward the interior 8-616 of the mounting bracket 8-602, is a flange or rib 8-618. The rib 8-618 generally lies in a plane that is parallel to and offset from the back panel section 8-608, thereby establishing the thickness of the mounting bracket 8-602. Portions 8-620 of the rib 8-618 may extend still further inwardly from the sidewall 8-612, as shown at locations 8-620.

Similar to that shown and described above, the mounting bracket 8-602 also includes at least one S-shaped tab portion 8-624 that extends from the back panel section 8-608 at one end of the mounting bracket 8-602. The tab portion(s) 8-624 engages and secures the mounting bracket 8-602 at a slot(s) 8-626 at the mounting location 8-606, in a manner as already discussed. Located on an opposite end of the mounting bracket 8-602 is a flange 8-628. The flange 8-628 provides a location at which the mounting bracket 8-602 may be secured to the mounting location 8-606, such as via a threaded fastener 8-630 or as otherwise well-known or disclosed herein. The flange 8-628 may further include a neck portion 8-632 that allows the position and/or orientation of the flange 8-628 to be manipulated, such as by bending or twisting, to better conform to the surface at the mounting location 8-606. As with the other embodiments of the invention discussed above, the number and location of the tab portion(s) 8-624 and flange(s) 8-628 may be determined by the requirements of the mounting application, such as the size, shape and weight of, and the operating conditions seen by, the device that is to be mounted or the space available at the mounting location 8-606.

Also integrally included as part of the mounting bracket 8-602 are a plurality of male projections 8-634 extending outwardly from the rib 8-618 of the mounting bracket 8-602. Each of the projections 8-634 forms one-half of a two-piece snap-fit-type fastener. The projections 8-634 may be included for interlocking with corresponding female receptacles 8-636 that are part of a finish trim piece 8-638, like a bezel or cover, so that the finish trim piece 8-638 may be easily connected directly to the mounting bracket 8-602 to complete a component's installation. Any of a variety of suitable interlocking connections may be included in the mounting bracket 8- 602.

The mounting bracket 8-602 is shown in FIG. 8-6 to be generally rectangular in shape. The mounting bracket 8-602 may, of course, be of any shape, size and configuration that is suitable to accommodate the particular device that is to be mounted.

As shown in FIG. 8-6, a loudspeaker 8-604 may be mounted in, for example, an automobile, with the mounting bracket 8-602 of the invention. The loudspeaker 8-604 generally includes a dish-shaped frame 8-640 with an outwardly extending flange 8-642. A thin-film diaphragm 8-644 is attached to the flange 8-642, under tension, to provide a moveable membrane capable of producing sound.

Installation of the loudspeaker 8-604 via the mounting bracket 8-602 is accomplished by assembling the loudspeaker 8-604 with the mounting bracket 8-602, which is installed at the mounting location 8-606 in a manner like that already described above. Preferably, the loudspeaker 8-604 is attached to the mounting bracket 8-602 prior to installing the mounting bracket 8-602 at the mounting location 8-606. Alternatively, the mounting bracket 8-602 may first be installed at the mounting location 8-606, and the loudspeaker 8-604 subsequently be assembled with the mounting bracket 8-602.

The loudspeaker 8-604 is retained within the interior space 8-616 of the mounting bracket 8-602 between the back panel section 8-608 and the inwardly extending rib portions 8-620 that overlay a peripheral portion or rim of the flange 8-642 on the loudspeaker's 8-604 frame 8-640. In this configuration, the depth of the interior space 8-616 of the mounting bracket 8-602 closely matches the thickness of the loudspeaker 8-604 so that the mounting bracket 8-602 adequately secures the loudspeaker 8-604. Optionally, the loudspeaker 8-604 may be secured directly to the back panel section 8-608 of the mounting bracket 8-602, such as through the use of an adhesive or by a hook and loop fastener, like Velcro®, that is adhered by an adhesive to the back panel section 8-608 and the back of the loudspeaker 8-604.

A trim piece 8-638, in this case, for example, a speaker grille, may then be attached to the mounting bracket 8-602. The grille 8-638 is secured to the mounting bracket 8-602 by the interlocking of the female receptacles 8-636 located about its periphery 8-646 with the corresponding male projections 8-634 extending outwardly from the rib 8-618 of the mounting bracket 8-602. Thus, the mounting bracket 8-602 facilitates the finished installation of the loudspeaker 8-604 with an aesthetically pleasing appearance.

FIGs. 8-7 and 8-8 illustrate another embodiment of the invention 8-700 that is similar to the embodiment shown in FIG. 8-6. In this alternative embodiment, however, the frame 8-740 of the loudspeaker 8-704, itself, incorporates mounting bracket features to enable the loudspeaker 8-704 to be mounted directly at the mounting location 8-706. In this regard, the loudspeaker 8-704 includes one or more S-shaped tab portion(s) 8-724 and one or more flange(s) 8-728. In addition, the frame 8-740 may incorporate one or more snap-fit-type connectors 8-734 that can be matingly received in corresponding female receptacles 8-736 in a finish trim grille 8-738. As discussed above, installing the loudspeaker 8-704 at the mounting location 8-706 is simple, fast, and economical. One obvious additional advantage is the elimination from the construction of the invention of a separate and distinct mounting bracket component. Hence, the configuration of the invention 8-700 that is shown in FIGs. 8-7 and 8-8 reduces the number of components in a finished installation, thereby creating the potential for even a greater reduction in cost and labor.

FIGs. 8-9 and 8-10 show still another alternate embodiment of the invention 8-900. Here, it is the grille 8-938 (and not the loudspeaker 8-904) that incorporates the features of a mounting bracket that enable the loudspeaker 8-904 to be mounted while minimizing the number of components in the invention 8-900. As illustrated, the trim cover 8-938 (*e.g.,* a speaker grille) includes one or more S-shaped tab portion(s) 8-924 and one or more flange(s) 8-928 that allow the grille 8-938 to be directly installed at the mounting location 8-906.

Included in two or more sidewalls 8-912 of the grille 8-938, at locations intermediate the opposite ends of the sidewalls 8-912, are elongated ribs 8-918 that project toward the interior of the grille 8-938. The configuration of the elongated ribs 8-918 enable the loudspeaker 8-904 to be secured within grille 8-938 at the rim of the flange 8-942 of the loudspeaker's frame 8-940, between the ribs 8-918 and the front face 8-950 of the grille 8-938 (see FIG. 8-10). The grille 8-938 may then be secured at the mounting location 8-906 through the interaction between tab portions 8-924 and the slots 8-926 in the mounting location 8-906, and further, by securing the flange 8-928 to the mounting location 8-906, such as with a threaded fastener 8-930. Again, elimination of a separate mounting bracket is achieved, thereby enabling a simpler, faster, and more economical installation of the loudspeaker.

Various systems for assembling an example loudspeaker 10-100 will now be described. A first example system is depicted in Figures 10-5 through 10-17. The first system includes a vacuum platen 10-600 (FIGS. 10-6 through 10-7) and a film clamp 10-800 (FIGS. 10-8 through 10-9). Vacuum platen 10-600 and film clamp 10-800 may be used in conjunction with one another to restrain diaphragm 10-104 (FIG. 10-5) in a flat position without tension. Once diaphragm 10-104 is fixed within clamp 10-800, film 10-400 may be subsequently tensioned as will be described later.

The initial flattening and clamping of diaphragm 10-104 may provide the assembler with a known diaphragm state to which tension may be added. Difficulties may arise in attempting to obtain a reproducible tension during subsequent assembly operations when diaphragm 10-104 is not first placed in a substantially flat, no tension state. This first example system includes vacuum platen 10-600 and film clamp 10-800 to achieve a repeatable diaphragm state. In other examples, any other mechanism(s) and/or techniques capable of providing a known diaphragm state to which tension may be added may be used.

The example vacuum platen 10-600 includes a base 10-700 having a body 10-702 and a pedestal 10-704 protruding from a first surface 10-602 of body 10-702. Pedestal 10-704 includes an upper surface 10-706 positioned substantially parallel to first surface 10-602. A vacuum passageway 10-708 may extend through pedestal 10-704 and body 10-702 to couple upper surface 10-706 with a vacuum source 10-604. A cap 10-710 may be coupled to pedestal 10-704 along upper surface 10-706. Cap 10-710 may be constructed from a gas permeable material such as porous aluminum. Base 10-700 may be constructed from a gas impermeable material. Accordingly, a suction force is created along an upper surface 10-606 of cap 10-710 when vacuum source 10-604 draws a vacuum in vacuum passageway 10-708.

The example film clamp 10-800 includes an upper clamp half 10-802 and a lower clamp half 10-804 connected by a hinge 10-806. The illustrated upper clamp half 10-802 includes a generally rectangularly shaped body 10-808 and an elastomeric gasket 10-810. Body 10-808 includes an aperture 10-900 (FIG. 10-9) extending through body 10-808. Elastomeric gasket 10-810 includes a similarly shaped aperture 10-902 (FIG. 10-9) extending through the thickness of gasket 10-810. Elastomeric gasket 10-810 may be attached to body 10-808 to provide a compressible high friction surface 10-812 for engagement with diaphragm 10-104.

The illustrated lower clamp half 10-804 is constructed from a generally rectangularly shaped aluminum frame 10-814 having an aperture 10-904 extending through the lower clamp half 10-804. Lower clamp half 10-804 includes an upper surface 10-906 and a lower surface 10-908.

During the loudspeaker assembly process, film clamp 10-800 may be positioned on vacuum platen 10-600 such that pedestal 10-704 enters aperture 10-904 of lower clamp half 10-804 as illustrated in Figure 10-9. Once seated, upper surface 10-906 of lower clamp half 10-804 may be substantially coplanar with upper surface 10-606 of cap 10-710. In order to properly position diaphragm 10-104, upper clamp half 10-802 may be rotated to place film clamp 10-800 in the open position depicted in Figure 10-8.

With vacuum source 10-604 turned off, diaphragm 10-104 may be placed on upper surface 10-606. Diaphragm10- 104 may be aligned relative to lower clamp half 10- 804 using sights 10-816. Sights 10-816 may be visual markings, rods, rings, notches or any other form of alignment mechanism formed on diaphragm 10-104 to assist in the alignment procedure. The location of sights 10-816 effectively defines a perimeter portion 10-818 and a center portion 10-820 of diaphragm 10-104. Center portion 10-820 may contain most, if not all, of the material which will remain coupled to frame 10-102 at the completion of the assembly process.

Once diaphragm 10-104 has been properly positioned, vacuum may be supplied to cap 10-710 via vacuum source 10-604. Because cap10-710 is constructed from a gas permeable material, diaphragm 10-104 is forced to closely conform to planar upper surface 10-606. While the vacuum source is maintained, upper clamp half 10-802 may be rotated to place film clamp 10-800 in a closed position as shown in Figures 10-10 and 10-11. During clamp closure, elastomeric gasket 10-810 may deform locally to account for the thickness of diaphragm 10-104. Latches 10-822 secure upper clamp half 10-802 to lower clamp half 10-804. It should be appreciated that latches 10-822 are merely exemplary devices for coupling the clamp halves together and that any number of fastening devices may be implemented. Once upper clamp half 10-802 is clamped to lower clamp half 10-804, vacuum is turned off and film clamp 10-800 holding diaphragm 10-104 in an untensioned state is removed from vacuum platen 10-600.

Frame 10-102 may be fixtured in an example assembly fixture 10-1200 (10-10-12 and 10-13). Assembly fixture 10-1200 may be shaped substantially similarly to vacuum platen 10-600. However, assembly fixture 10-1200 may include a recess 10-1300 for receipt of a portion of frame 10-102. Assembly fixture 10-1200 includes a gage surface 10-1302 offset a predetermined distance 10-1304 from planar mounting surface 10-408 of frame 10-102. In order to apply tension to diaphragm 10-104, distance 10-1304 is greater than the thickness of lower clamp half 10-804. The magnitude of tension generated is optimized by defining distance 10-1304 in concert with the physical characteristics of frame 10-102 and diaphragm 10-104.

Diaphragm 10-104 may be mechanically coupled with frame 10-102. For example, adhesive 10-406 may be applied to planar mounting surface 10-408 of frame 10-102. Adhesive 10-406 may alternatively be applied to diaphragm 10-104. After application of adhesive 10-406, film clamp10- 800 including clamped diaphragm 10-104 may be positioned on assembly fixture 10-1200 such that frame 10-102 enters aperture 10-904 of lower clamp half 10-804 (Figs. 10-14 and 10-15). The diaphragm 10-104 may contact adhesive 10-406 and planar mounting surface 10-408 of frame 10-102. Contact may occur prior to lower surface 10-908 of lower clamp half 10-804 contacting gage surface 10-1302 of assembly fixture 10-1200. To produce the desired tension in film 10-400, film clamp 10-800 is forced down over assembly fixture 10-1200 so that lower surface 10-908 engages gage surface 10-1302.

Depending on the type of adhesive used, a subsequent process may be required. For example, adhesive 10-406 is curable by exposure to radiation. Accordingly, while film clamp 10-800 is coupled to assembly fixture 10-1200, a radiation source 10-1500 is energized to cure the adhesive and secure diaphragm 10-104 to frame 10-102. Alternatively, where some other mechanical coupling mechanism is used, appropriate processes may need to be performed.

A second example system used to tension the diaphragm of a loudspeaker 10-100 is described with reference to Figures 10-16 and 10-17. In this system, frame 10-102 includes an elongated radially extending flange 10-1600 which does not include a downwardly extending lip. The remaining planar loudspeaker components are substantially similar to those previously described. The assembly process may include positioning diaphragm 10-104 in a substantially flat, no tension state as previously described. However, it should be appreciated that the flattening and clamping steps are not necessarily required to construct planar loudspeaker according to this system. Similarly, alternate tensioning methods that are described are not intended to be limited to include the flattening and clamping process.

A bead of adhesive 10-406 may be applied along the periphery of either or both frame 10-102 and diaphragm 10-104. Diaphragm 10-104 may then be aligned with and bonded to frame 10-102 via adhesive 10-406. As noted earlier, adhesive 10-406 may be a light curable material or any other suitable bonding agent which may affix the dissimilar materials to one another. Similarly, adhesive 10-406 may any other coupling mechanism to mechanically couple the diaphragm 10-104 to the frame 10-102.

Radially extending flange 10-1600 may be mechanically deformed by bending an outer peripheral region down from line 10-1700 as shown in Figure 10-17 to tension diaphragm 10-104. Line 10-1700 acts as a fulcrum around the perimeter of frame 10-102 about which diaphragm 10-104 is stretched. The proper diaphragm tension may be obtained in a variety of ways. For example, if diaphragm 10-104 was initially coupled to frame 10-102 in a substantially flat, non-tension state, a deflection distance 10-1702 may be empirically determined by testing. Once the proper deflection distance is determined, hard tooling may be created to repeatably deform frame 10-102 and move radially extending flange 10-1600 the predetermined deflection distance 10-1702 during the assembly of each loudspeaker 10-100.

Another example system of assuring proper film tension includes a feedback system 10-1602. One example feedback system may involve placing a known load at the center of diaphragm 10-104 and measuring the deflection of the diaphragm at the load application point. The desired deflection per load may be empirically determined by testing where the resonance frequency of diaphragm 10-104 is plotted against deflection per a given load. Once the desired resonance frequency is determined for a given speaker geometry, a target diaphragm deflection per given load may be determined. The feedback system may operate by measuring the actual diaphragm deflection at a known load with a deflection sensor 10-1604. The measured actual deflection may be compared to the target deflection.

Frame 10-102 may be deformed until the measured deflection is substantially equal to the target deflection, thereby properly tensioning diaphragm 10-104 to produce the desired resonance frequency. Logic control systems such as proportional, integral, derivative closed feedback loops, etc. may be implemented to control the mechanical deflection of frame 10-102 during the tensioning process. Such a control system may provide a high degree of repeatability regarding film tensioning.

Another example feedback system 10-1704 may directly measure resonance frequency during film tensioning using a frequency sensor 10-1706. In this control scheme, diaphragm 10-104 may be repeatedly excited and the resonance frequency measured. The measured frequency may be compared to a desired target frequency during film tensioning. Frame 10-102 may be deformed until the measured resonance frequency matches the target frequency within an acceptable tolerance. It should be appreciated that the feedback systems described may be used with any of the tensioning techniques described.

Yet another film tensioning system will be described in greater detail with reference to Figure 10-18. An example film tensioner 10-1800 includes an upper plate 10-1802 and a lower plate 10-1804. Plates 10-1802 and 10-1804 have matching beveled apertures 10-1806 and 10-1808, respectively. Center portion 10-820 of diaphragm 10-104 is positioned within the openings defined by apertures 10-1806 and 10-1808. Apertures 10-1806 and 10-1808 may be sized and shaped slightly larger than frame 10-102 to allow insertion of frame 10-102 within one of the apertures 10-1806 and 10-1808.

Upper plate 10-1802 may include an annular groove 10-1810 having an asymmetrical cross-section as shown in Figure 10-18. Lower plate 10-1804 may include an annular groove 10-1812 shaped as the mirror image of groove 10-1810. A first elastomeric member 10-1814 may be positioned within groove 10-1810 and a second elastomeric member 10-1816 may be positioned within groove 10-1812. Grooves 10-1810 and 10-1812 may be shaped to constrain movement of the elastomeric members 10-1814 and 10-1816 toward apertures 10-1806 and 10-1808, respectively. In addition, grooves 10-1810 and 10-1812 may be shaped to allow movement of elastomeric members 10-1814 and 10-1816 away from apertures 10-1806 and 10-1808. Specifically, the annular grooves 10-1810 and 10-1812 may be shaped to impart a lateral force to center portion 10-820 of diaphragm 10-104 when an axial force is applied to upper plate 10-1802 and lower plate 10-1804 drawing them toward one another.

Upper plate 10-1802 may also include threaded apertures 10-1818. Stepped apertures 10-1820 extend through lower plate 10-1804. Threaded fasteners 10-1822, which are illustrated as bolts, may be inserted in apertures 10-1820 and tightened into threaded apertures 10-1818 to draw upper plate 10-1802 and lower plate 10-1804 together. It should be appreciated that upper plate 10-1802 and lower plate 10-1804 may be drawn together using a variety of mechanisms such as toggle clamps, jack screws, hydraulic cylinders or any other known clamping and force producing devices.

In this example technique, the film may first be tensioned by drawing upper plate 10-1802 and lower plate 10-1804 together. Adhesive 10-406 (or some other coupling mechanism) may be placed on the tensioned portion of diaphragm 10-104 and/or planar mounting surface 10-408 of frame 10-102. While upper plate 10-1802 is clamped to lower plate 10-1804, frame 10-102 may be placed into contact with diaphragm 10-104. Once the adhesive has cured (or mechanical coupling completed), the threaded fasteners 10-1822 may be removed and upper plate 10-1802 may be separated from lower plate 10-1804. It should also be appreciated that apertures 10-1806 and 10-1808 may be sized to allow entry of light waves to cure adhesive 10-406, or to allow manipulation of some other coupling mechanism, if so desired. Depending on the specific configuration of the loudspeaker 10-100, perimeter portion 10-818 of diaphragm 10-104 may be trimmed to remove any film extending beyond lip 10-306.

With reference to Figure 10-19, another example film tensioning technique is depicted. The fixturing used to practice this example technique includes a fixture 10-1900 having a lower die 10-1902, and an upper die 10-1904. Fixture 10-1900 may function to restrain the periphery of diaphragm 10-104 and define a cavity 10-1906 between one side of the diaphragm 10-104 and lower die 10-1902. A fluid source 10-1908 may supply pressurized fluid to cavity 10-1906. Because lower die 10-1902 is constructed from a substantially rigid material, diaphragm 10-104 may elongate in tension as depicted in Figure 10-19. Pressure is maintained within cavity 10-1906 while frame 10-102 is mechanically coupled with diaphragm 10-104. Diaphragm 10-104 may be secured to frame 10-102 using any number of previously discussed bonding techniques including mechanical fasteners, radiation curable adhesives, multi-part epoxies, heat curable adhesives or pressure sensitive compounds.

After diaphragm 10-104 has been fixed to frame 10-102, upper die 10-1904 may be removed. If desired, excess diaphragm material extending beyond the perimeter of frame 10-102 may be removed.

In this example technique, some of the initial tension generated by the pressurized fluid may relax during subsequent frame attachment process. Accordingly, a tension greater than the final desired tension may be initially induced via fluid source 10-1908 to assure that the film is properly tensioned during use.

Figures 10-20through10-22 depict another example of fixturing used to tension diaphragm 10-104 prior to attaching diaphragm 10-104 to frame 10-102. An example spider 10-2000 may operate in conjunction with an example base plate 10-2100 to tension diaphragm 10-104. Spider 10-2000 may be placed on a first side of diaphragm 10-104 while base plate 10-2100 may be placed on the opposite side of the diaphragm 10-104. Spider 10-2000 may function by converting an axial force applied in direction 10-2102 to a lateral tension produced in opposed directions 10-2200.

The illustrated spider 10-2000 is a generally pyramidal member having a hub 10-2002 positioned proximate to a truncated portion of the pyramid. A plurality of legs 10-2004 angularly extend from hub 10-2002. Each of the legs 10-2004 include a body portion 10-2006 and a foot portion 10-2008. Each foot portion 10-2008 radially extends from the distal end of each leg 10-2004. A pad 10-2010 is coupled (as shown in Figure 10-20) to a lower surface of each foot 10-2008. Pads 10-2010 may be constructed from a high friction, elastomeric material that is suitable for gripping diaphragm 10-104 without causing damage to diaphragm 10-104.

The illustrated base plate 10-2100 is a generally rectangularly-shaped member having an aperture 10-2104 extending through the base plate 10-2100. Aperture 10-2104 may be shaped similarly to the perimeter of frame 10-102 and sized such that frame 10-102 may be inserted into aperture 10-2104. Base plate 10-2100 includes a low friction surface 10-2106 upon which diaphragm 10-104 may freely slide. As best shown in Figure 10-21, each pad 10-2010 is supported by a portion of base plate 10-2100.

During tensioning, diaphragm 10-104 may be placed between base plate 10-2100 and spider10- 2000. An axial force may be applied to spider 10-2000 in direction 10-2102. Due to the angular orientation of legs 10-2004 relative to low friction surface 10-2106, at least some of the axial force applied in direction 10-2102 may be converted to opposing forces in opposed directions 10-2200. The opposed forces may tension diaphragm 10-104. After tensioning, frame 10-102 is mechanically coupled to diaphragm 10-104 as previously discussed.

Figure 10-23, is yet another example system for loudspeaker 10-100 assembly. In this system, frame 10-102 may be elastically deformed prior to attachment of diaphragm 10-104. The deformed frame 10-102 is represented in phantom lines at reference numeral 10-2300. It should be appreciated that any number of force generating devices or tools such as jack screws, hydraulic rams or other force producing devices may be used to elastically deform frame 10-102 by inwardly deflecting radially extending flange 10-304 and lip 10-306 (Figure 3) of frame 10-102. Frame 102 may be maintained in the deformed state shown as 10-2300 while diaphragm 104 (Figure 1) is attached to planar mounting surface 408 (Figure 4).

Once diaphragm 10-104 has been securely attached to frame 10-102, the external forces deforming frame 10-102 may be released. Because frame 10-102 was elastically deformed, flange 10-304 and lip 10-306 have a tendency to spring-back to their originally undeformed state. This tendency is resisted by diaphragm 10-104. Diaphragm 10-104 elongates as the deformed frame attempts to return to its undeformed state until an equilibrium is reached. Frame 10-102 may be constructed from steel, aluminum or any number of composite materials capable of being deformed. Materials having a modulus of elasticity less than 29,000 KSI are contemplated to provide a relatively large elastic deformation prior to yield. A large frame deformation is beneficial to account for elongation or deformation of adhesive 10-406 or other mechanical coupling used to bond diaphragm 10-104 to frame 10-102.

An example planar loudspeaker assembly system 10-2400 is depicted in Figure 10-24. Planar loudspeaker assembly system 10-2400 functions to construct a fully tested and finished planar loudspeaker from a variety of separate components in a relatively small space and a minimal amount of time.

Assembly system 10-2400 is a conveyor-type system utilizing a plurality of pallets 10-2402 traveling about a closed loop. Each of pallets 10-2402 is engaged by a drive belt or track 10-2404 to move the pallets 10-2402 around the loop in a counterclockwise direction. A plurality of workstations 10-2406 are positioned along track 10-2404 to perform the process steps described hereinafter.

As best shown in Figure 10-25, pallet 10-2402 includes a first protrusion 10-2500 and a second protrusion 10-2502 extending upwardly from an upper surface 10-2504. First protrusion 10-2500 includes a recess 10-2505. Second protrusion 10-2502 is rectangularly shaped and surrounds an aperture 10-2506. Aperture 10-2506 extends through the thickness of pallet 10-2402. Second protrusion 10-2502 includes a stepped sidewall 10-2508. Stepped sidewall 10-2508 includes a lower portion 10-2510. Stepped sidewall 10-2508 includes an upper portion 10-2512 that serves as a locating structure for frame 10-102. As shown in Figure 10-36, an upper clamp half 10-3600 is placed over first protrusion 10-2500. A lower clamp half 10-3602 is positioned over second protrusion 10-2502.

With reference to Figure 10-37, pallet 10-2402 travels to a felt cutting and loading station 10-3700. The felt cutting and loading station 10-3700 includes a frame 10-3701, a dispenser 10-3702, a cutter 10-3704 and a robot 10-3706 having an end-effector 10-3708 coupled to robot 10-3706. A roll of felt 10-3710 is rotatably coupled to frame 10-3701. The free end of the roll of felt 10-3710 is fed into dispenser 10-3702. Dispenser 10-3702 is controllable to selectively index a portion of the roll of felt onto a block 10-3712. Once the appropriate width of felt has been dispensed on block 10-3712, feeder 10-3702 halts movement of felt roll 10-3710. Cutter 10-3704 separates a singular felt panel 10-3714 from the roll. At this time, robot 10-3706 positions end-effector 10-3708 above felt panel 10-3714 located on block 10-3712. Through the use of vacuum or a cloth gripping device, end-effector 10-3708 transfers felt panel 10-3714 to recess 10-2505 located in first protrusion 10-2500.

Pallet 10-2402 travels to a frame loading station 10-3800 shown in Figure 10-38. Frame loading station 10-3800 includes a dial table 10-3801, a hot melt applicator 10-3802 and a robot 10-3804. Dial table 10-3801 includes three stacks 10-3806 rotatably mounted to a base 10-3808. The stack positioned beneath robot 10-3804 is defined as being in the active position. The other two stacks 10-3806 are positioned at inactive positions. An operator positioned adjacent inactive stacks 10-3806 loads frames 10-102 for later use at the active position. An elevator (not shown) positioned below dial table 10-3801 maintains the position of the upper most frame within the active stack at a predetermined elevation.

During operation of frame loading station 10-3800, robot 10-3804 positions a magnetic or vacuum end-effector 10-3810 over the active stack position. The end-effector removes the top frame from the active stack and rolls it across hot melt applicator 10-3802. Robot 10-3804 continues to translate frame 10-102 to a position over felt panel 10-3714. Frame 10-102, including a coating of hot melt adhesive, is pressed into contact with felt panel 10-3714 to adhere the felt to the frame. End-effector 10-3810 then places the frame and felt subassembly on upper portion 10-2512 of second protrusion 10-2502. Operation of frame loading station 10-3800 continues in this manner until all of the frames within the active stack have been used. At this time, dial table 10-3801 indexes to place one of the previously inactive stacks at the active stack location. An operator then fills the empty stack 10-3806 with frames 10-102.

As shown in Figure 10-26, pallet 10-2402 continues to travel in a counterclockwise direction through an adhesive application station 10-2600. Station 10-2600 includes five adhesive valves 10-2602 positioned in an offset manner to one another. Pallet 10-2402 passes under adhesive valves 10-2602 at a uniform rate. Each adhesive valve 10-2602 lowers to a dispensing height and applies an adhesive 10-2604 at an appropriate time to dispense five equally spaced ribbons of adhesive 10-2604 on frame 10-102. The opening and closing of valves10-2602 is timed to correspond to the movement of pallet 10-2402. Five equal length adhesive ribbons 10-2604 are dispensed on frame 10-102 without stopping pallet 10-2402.

Pallet 10-2402 continues to travel to a magnet loading station 10-2700 depicted at Figure 10-27. At magnet loading station 10-2700, a bowl feeder 10-2702 presents fifteen magnets 10-202 correctly oriented in a pattern of five rows and three columns. It should be appreciated that other high speed feeding mechanisms may be utilized to correctly present and orient magnets 10-202. Referring to Figure 10-27, an end-effector 10-2704 is mounted to a robot or pick-and-place mechanism 10-2706 to allow movement of end effector 10-2704 within station 10-2700. End-effector 10-2704 is positioned immediately above placed magnets 10-202 at bowl feeder 10-2702. End-effector 10-2704 is then energized to temporarily couple magnets 10-202 to end effector 10-2704. Robot 10-2706 then moves end-effector 10-2704 above an adhesive activator applicator pad 10-2708. Each of magnets 10-202 attached to end-effector 10-2704 are then pressed against adhesive activator applicator pad 10-2708 to apply an adhesive activator 10-2710 to the bottom of magnets 10-202. End-effector 10-2704 along with magnets 10-202 are next indexed to a location above frame 10-102. End-effector 10-2704 is axially lowered to press magnets 10-202 into adhesive 10-2604 and mix adhesive activator 10-2710 with adhesive 10-2604 to start the chemical reaction to secure magnets 10-202 to frame 10-102. Adhesive 10-2604 and adhesive activator 10-2710 illustratively complete a two-part adhesive. One skilled in the art will appreciate that the two-part adhesive is merely exemplary and that a variety of other magnet bonding methods may be incorporated without departing from the scope of the invention. For example, a one-part heat curable adhesive, mechanical fasteners, or welding techniques may be used.

Pallet 10-2402 next travels along track 10-2404 to acrylic curing stations 10-2410. Pallet 10-2402 passes through acrylic curing stations 10-2410 to allow the two-part adhesive time to cure. After magnets 10-202 are firmly secured to frame 10-102, they are magnetized at a magnetizing station 10-2800. Within magnetization station 10-2800, frame 10-102 is raised to be within close proximity to an energy source 10-2802. Each of the magnets within any one row are magnetized having the same polarity. Magnets of immediately adjacent rows are magnetized with the opposite polarity to create the magnetic flux fields described earlier. After energization, frame 10-102 and magnets 10-202 are separated from energy source 10-2802 via a cylinder 10-2805 and lowered onto pallet 10-2402. Specifically, a plate 10-2806 including a plurality of posts 10-2808 are lowered such that two posts 10-2808 contact each magnet to separate the magnetized magnets and frame from energy source 10-2802.

After magnetization, pallet 10-2402 travels to diaphragm adhesive application station 10-2900 shown in Figure 10-29. Station 10-2900 includes an adhesive applicator 10-2902 mounted to a cartesian arm 10-2904. Adhesive applicator 10-2902 applies adhesive 10-406 to planar mounting surface 10-414 of frame 10-102. In the preferred embodiment, movement of pallet 10-2402 is controlled while adhesive is being applied. Motion control along an X axis will be provided by track 10-2404 and motion along the Y and Z axes will be provided by cartesian arm 10-2904.

Pallet 10-2402 next travels to a diaphragm loading station 10-3000. Diaphragm loading station 10-3000 loads diaphragm 10-104 onto frame 10-102. In a preferred embodiment, a roll 10-3002 of diaphragms 10-104 is rotatably mounted on a frame 10-3004. The roll 10-3002 of diaphragms 10-104 consists of a continuous sheet of film 10-400 having a plurality of conductors 10-106 spaced apart and positioned along the length of film 10-400. The continuous sheet of film 10-400 is rolled for convenient handling in a production environment. A free end of diaphragm roll 10-3002 is inserted into a feeder 10-3006. Feeder 10-3006 is positioned adjacent a vacuum platen 10-3008. During operation, feeder 10-3006 is selectively operable to dispense material from diaphragm roll 10-3002 onto an upper surface 10-3010 of vacuum platen 10-3008. A vision system 10-3012 includes a controller 10-3014 and a camera 10-3016. Camera 10-3016 is preferably positioned atop frame 10-3004 to have a clear view of the end portion of diaphragm roll 10-3002 being positioned on upper surface 10-3010 of vacuum platen 10-3008. Camera 10-3016 communicates diaphragm position information to controller 10-3014.

Once the free end of diaphragm roll 10-3002 has been indexed to a desired position to position a diaphragm 10-104 on upper surface 10-3010 of vacuum platen 10-3008, controller 10-3014 instructs feeder 10-3006 to maintain the current position of the diaphragm roll. Camera 10-3016 also communicates the lateral position of the conductor 10-106 on the diaphragm 10-104 on upper surface 10-3010 of vacuum platen 10-3008 to controller 10-3014. The position of pallet 10-2402 is adjusted to align speaker frame 10-102 with the current position of the conductor 10-106 on the upper surface 10-3010 of vacuum platen 10-3008.

Once the pallet and diaphragm 10-104 on upper surface 10-3010 of vacuum platen 10-3008 have been positioned as described, vacuum is applied to vacuum platen 10-3008. As such, the end portion of diaphragm roll 10-3002 containing diaphragm 10-104 that is positioned on upper surface 10-3010 of vacuum platen 10-3008 is temporarily fixed to vacuum platen 10-3008. A cutter 10-3018 separates diaphragm 10-104 from diaphragm roll 10-3002.

After diaphragm 10-104 is severed from diaphragm roll 10-3002, an end-effector 10-3020 picks up upper clamp half 10-3600 from its storage position on pallet 10-2402. End-effector 10-3020 positions upper clamp half 10-3600 on the cut diaphragm while vacuum is supplied to vacuum platen 10-3008. End-effector 10-3020 next supplies vacuum to the perimeter of upper clamp half 10-3600 as well. The vacuum supply to vacuum platen 10-3008 is turned off and a slight positive pressure is applied to diaphragm 10-104 from upper surface 10-3010 of vacuum platen 10-3008. Next, end-effector 10-3020 transfers upper clamp half 10-3600 and diaphragm 10-104 to a position over pallet 10-2402. End-effector 10-3020 then lowers upper clamp half 10-3600 and diaphragm 10-104 into contact with lower clamp half 10-3602 effectively trapping diaphragm 10-104 between the upper and lower clamp halves in a non-tension state. The vacuum supplied to end-effector 10-3020 is turned off and end-effector 10-3020 releases upper clamp half 10-3600 to complete the cycle at diaphragm loading station 10-3000.

With reference to Figure 10-31, pallet 10-2402 is depicted in cross-section after the process steps conducted at diaphragm loading station 10-3000 have been completed. At this time, lower clamp half 10-3602, diaphragm 10-104, and upper clamp half 10-3600 are suspended on a set of spring plungers 10-3100. The weight of upper clamp half 10-3600 is transferred through an elastomeric seal 10-3102, diaphragm 10-104, an elastomeric seal 10-3104 and lower clamp half 10-3602. This arrangement maintains diaphragm 10-104 in a non-tensioned state. Spring plungers 10-3100 include axially disposable end portions 10-3106 which are shown in their fully extended positions in Figure 10-31. End portions 10-3106 and lower clamp half 10-3602 are sized to position diaphragm 10-104 at a plane above the adhesive and frame subassembly.

Pallet 10-2402 next travels to an edge treatment application station 10-200. Edge treatment application station 10-3200 includes a valve 10-3202 coupled to a cartesian arm 10-3204. Valve 10-3202 applies an edge treat compound 10-3206 to the perimeter of diaphragm 10-104 as movement of pallet 10-2402 is controlled within application station 10-3200. Motion control along an X axis will be provided by track 10-2404 and motion along the Y and Z axes will be provided by cartesian arm 10-3204. Edge treat compound 10-3206 functions to dampen unwanted harmonic or spurious vibrations of diaphragm 10-104 during speaker operation. Preferably, edge treat compound 10-3206 is a liquid urethane oligomer acrylic monomer blend such as Dymax 4-20539, that cures to a flexible solid.

Pallet 10-2402 travels next to a film tensioning and adhesive curing station 10-3300. At station 10-3300, a radiation source 10-3302 extends downwardly and forces upper clamp half 10-3600 downward toward lower clamp half 10-3602. The reaction force generated from springs within spring plungers 10-3100 creates a clamping force between upper clamp half 10-3600 and lower clamp half 10-3602 to restrain the perimeter of diaphragm 10-104. Depending on the tensioning method utilized, the upper and lower clamp halves may be downwardly displaced to a predetermined position, or may be displaced until a certain force is generated, or may be displaced until a certain resonance frequency is generated or until a certain deflection of diaphragm 10-104 per unit load is defined.

As upper clamp half 10-3600 moves downward, diaphragm 10-104 is lowered into contact with adhesive 10-406 positioned on planar mounting surface 10-414. Upper clamp half 10-3600 continues to move downward stretching film 10-400 over frame 10-102 until the desired tension in diaphragm 10-104 is achieved. When the tensioning process is complete, radiation source 10-3302 is turned on to cure adhesive 10-406 and edge treat compound 10-3206. After completion of the exposure to the radiation, radiation source 10-3302 is turned off and retracted.

Any number of bonding agents may be used to couple diaphragm 10-104 to frame 10-102. In the preferred embodiment, an adhesive curable by exposure to light in the visible spectrum such as Loctite Corp. 3106 is used. However, adhesives curable by exposure to ultra-violet light or other types of radiation may also be used. Certain pressure sensitive compounds may also be used. Beneficially, pressure sensitive compounds do not require the use of light permeable diaphragms and fixturing that allows light to pass to the bonded perimeter. Heat curable adhesives may also be used.

Pallet 10-2402 next travels to a terminal insertion station 10-3400. Terminal insertion station 10-3400 has a vibratory bowl feeder 10-3402 that works in conjunction with a terminal crimper 10-3404 and a terminal insertion tool 10-3406. Vibratory bowl feeder 10-3402 orients a large quantity of conductor assemblies 10-230 and individually feeds terminal assemblies one at a time to an escapement positioned below vibratory bowl feeder 10-3402. As pallet 10-2402 enters terminal insertion station 10-3400, a pressure pad 10-3408 extends downwardly from terminal crimper 10-3404 to engage speaker 10-100 near first end 10-204 and second end 10-206 of conductor 10-106. Terminal insertion tool 10-3406 obtains a single conductor assembly 10-230 from the escapement and installs it through apertures 10-214 and 10-216 of frame 10-102. During the insertion operation, the terminals pierce diaphragm 10-104 at first end 10-204 and second end 10-206 to form an electrical connection thereto. Crimper 10-3404 crimps the two electrical terminals to diaphragm 10-104. Additionally, crimper 10-3404 couples conductor assembly 10-230 by mechanically deforming fastener 10-226 at the same time the electrical terminals are crimped. Terminal insertion tool 10-3406 and crimper 10-3404 then retract.

Pallet 10-2402 next travels to a diaphragm trim station 10-3500. Diaphragm trim station 10-3500 includes a cartesian arm 10-3502 equipped with a cutter 10-3504. Once pallet 10-2402 arrives at diaphragm trim station 10-3500, cartesian arm 10-3502 lowers cutter 10-3504 into engagement with diaphragm 10-104 to trim excess film 10-400 from diaphragm 10-104. The X axis motion for cutter 10-3504 is provided by track 10-2404. Motion along the Y and Z axes is provided by cartesian arm 10-3502.

Pallet 10-2402 next travels to an unclamping station 10-2412. At unclamping station 10-2412, upper clamp half 10-3600 is removed and placed on protrusion 10-2500 of pallet 10-2402. The excess film that was previously trimmed from diaphragm 10-104 is also removed and discarded.

Pallet 10-2402 next travels to a test station 10-2414. At test station 10-2414, speaker 10-100 is acoustically tested. During the acoustical test, the completed electro-dynamic loudspeaker 10-100 is excited using a predefined input. The actual acoustical output from each loudspeaker 10-100 is compared to a target output. The actual output and target output are compared to determine if the speaker meets quality standards previously defined. Tested loudspeaker 10-100 is removed from pallet 10-2402 and is sorted according to the results of the acoustical test. Pallet 10-2402 continues to travel along track 10-2404 and returns to frame loading station 10-2408 to begin the process once again.

Various systems for assembling an example loudspeaker 11-100 will now be described. A first example system is depicted in FIGS. 11-5 through 11-17. The first system includes a vacuum platen 11-600 (FIGS. 11-6 through 11-7) and a film clamp 11-800 (FIGS. 11-8 through 11-9). Vacuum platen 11600 and film clamp 11800 may be used in conjunction with one another to restrain diaphragm 11-104 (FIG. 11-5) in a flat position without tension. Once diaphragm 11-104 is fixed within clamp 11-800, film 11-400 may be subsequently tensioned as will be described later.

The initial flattening and clamping of diaphragm 11-104 may provide the assembler with a known diaphragm state to which tension may be added. Difficulties may arise in attempting to obtain a reproducible tension during subsequent assembly operations when diaphragm 11-104 is not first placed in a substantially flat, no tension state. This first example system includes vacuum platen 11-600 and film clamp 11-800 to achieve a repeatable diaphragm state. In other examples, any other mechanism(s) and/or techniques capable of providing a known diaphragm state to which tension may be added may be used.

The example vacuum platen 11-600 includes a base 11-700 having a body 11-702 and a pedestal 11-704 protruding from a first surface 11-602 of body 11-702. Pedestal 11-704 includes an upper surface 11-706 positioned substantially parallel to first surface 11-602. A vacuum passageway 11-708 may extend through pedestal 11-704 and body 11-702 to couple upper surface 11-706 with a vacuum source 11-604. A cap 11-710 may be coupled to pedestal 11-704 along upper surface 11-706. Cap 11-710 may be constructed from a gas permeable material such as porous aluminum. Base 11-700 may be constructed from a gas impermeable material. Accordingly, a suction force is created along an upper surface 11-606 of cap 11-710 when vacuum source 11-604 draws a vacuum in vacuum passageway 11-708.

The example film clamp 11-800 includes an upper clamp half 11-802 and a lower clamp half 11-804 connected by a hinge 11-806. The illustrated upper clamp half 11-802 includes a generally rectangularly shaped body 11-808 and an elastomeric gasket 11-810. Body 11-808 includes an aperture 11-900 (FIG. 11-9) extending through body 11-808. Elastomeric gasket 11-810 includes a similarly shaped aperture 11-902 (FIG. 11-9) extending through the thickness of gasket 11-810. Elastomeric gasket 11-810 may be attached to body 11-808 to provide a compressible high friction surface 11-812 for engagement with diaphragm 11-104.

The illustrated lower clamp half 11-804 is constructed from a generally rectangularly shaped aluminum frame 11-814 having an aperture 11-904 extending through the lower clamp half 11-804. Lower clamp half 11-804 includes an upper surface 11-906 and a lower surface 11-908.

During the loudspeaker assembly process, film clamp 11-800 may be positioned on vacuum platen 11-600 such that pedestal 11-704 enters aperture 11-904 of lower clamp half 11-804 as illustrated in FIG. 11-9. Once seated, upper surface 11-906 of lower clamp half 11-804 may be substantially coplanar with upper surface 11-606 of cap 11-710. In order to properly position diaphragm 11-104, upper clamp half 11-802 may be rotated to place film clamp 11-800 in the open position depicted in FIG. 11-8.

With vacuum source 11-604 turned off, diaphragm 11-104 may be placed on upper surface 11-606. Diaphragm 11-104 may be aligned relative to lower clamp half 11-804 using sights 11-816. Sights 11-816 may be visual markings, rods, rings, notches or any other form of alignment mechanism formed on diaphragm 104 to assist in the alignment procedure. The location of sights 11-816 effectively defines a perimeter portion 11-818 and a center portion 11-820 of diaphragm 11-104. Center portion 11-820 may contain most, if not all, of the material which will remain coupled to frame 11-102 at the completion of the assembly process.

Once diaphragm 11-104 has been properly positioned, vacuum may be supplied to cap 11-710 via vacuum source 11-604. Because cap 11-710 is constructed from a gas permeable material, diaphragm 11-104 is forced to closely conform to planar upper surface 11-606. While the vacuum source is maintained, upper clamp half 11-802 may be rotated to place film clamp 11-800 in a closed position as shown in FIGS. 11-10 and 11-11. During clamp closure, elastomeric gasket 11-810 may deform locally to account for the thickness of diaphragm 11-104. Latches 11-822 secure upper clamp half 11-802 to lower clamp half 11-804. It should be appreciated that latches 11-822 are merely exemplary devices for coupling the clamp halves together and that any number of fastening devices may be implemented. Once upper clamp half 11-802 is clamped to lower clamp half 11-804, vacuum is turned off and film clamp 11-800 holding diaphragm 11-104 in an untensioned state is removed from vacuum platen 11-600.

Frame 11-102 may be fixtured in an example assembly fixture 11-1200 (FIGS. 11-12 and 11-13). Assembly fixture 11-1200 may be shaped substantially similarly to vacuum platen 11-600. However, assembly fixture 11-1200 may include a recess 11-1300 for receipt of a portion of frame 11-102. Assembly fixture 11-1200 includes a gage surface 11-1302 offset a predetermined distance 11-1304 from planar mounting surface 11-408 of frame 11-102. In order to apply tension to diaphragm 11-104, distance 11-1304 is greater than the thickness of lower clamp half 11-804. The magnitude of tension generated is optimized by defining distance 11-1304 in concert with the physical characteristics of frame 11-102 and diaphragm 11-104.

Diaphragm 11-104 may be mechanically coupled with frame 11-102. For example, adhesive 11-406 may be applied to planar mounting surface 11-408 of frame 11-102. Adhesive 11-406 may alternatively be applied to diaphragm 11-104. After application of adhesive 11-406, film clamp 11-800 including clamped diaphragm 11-104 may be positioned on assembly fixture 11-1200 such that frame 11-102 enters aperture 11-904 of lower clamp half 11-804 (FIGS. 11-14 and 11-15). The diaphragm 11-104 may contact adhesive 11-406 and planar mounting surface 11-408 of frame 11-102. Contact may occur prior to lower surface 11-908 of lower clamp half 11-804 contacting gage surface 11-1302 of assembly fixture 11-1200. To produce the desired tension in film 11-400, film clamp 11-800 is forced down over assembly fixture 11-1200 so that lower surface 11-908 engages gage surface 11-1302.

Depending on the type of adhesive used, a subsequent process may be required. For example, adhesive 11-406 is curable by exposure to radiation. Accordingly, while film clamp 11-800 is coupled to assembly fixture 11-1200, a radiation source 11-1500 is energized to cure the adhesive and secure diaphragm 11-104 to frame 11-102. Alternatively, where some other mechanical coupling mechanism is used, appropriate processes may need to be performed.

A second example system used to tension the diaphragm of a loudspeaker 11-100 is described with reference to FIGS. 11-16 and 11-17. In this system, frame 11-102 includes an elongated radially extending flange 11-1600 which does not include a downwardly extending lip. The remaining planar loudspeaker components are substantially similar to those previously described. The assembly process may include positioning diaphragm 11-104 in a substantially flat, no tension state as previously described. However, it should be appreciated that the flattening and clamping steps are not necessarily required to construct planar loudspeaker according to this system. Similarly, alternate tensioning methods that are described are not intended to be limited to include the flattening and clamping process.

A bead of adhesive 11-406 may be applied along the periphery of either or both frame 11-102 and diaphragm 11-104. Diaphragm 11-104 may then be aligned with and bonded to frame 11-102 via adhesive 11-406. As noted earlier, adhesive 11-406 may be a light curable material or any other suitable bonding agent which may affix the dissimilar materials to one another. Similarly, adhesive 11-406 may any other coupling mechanism to mechanically couple the diaphragm 11-104 to the frame 11-102.

Radially extending flange 11-1600 may be mechanically deformed by bending an outer peripheral region down from line 11-1700 as shown in FIG. 11-17 to tension diaphragm 11-104. Line 11-1700 acts as a fulcrum around the perimeter of frame 11-102 about which diaphragm 11-104 is stretched. The proper diaphragm tension may be obtained in a variety of ways. For example, if diaphragm 11-104 was initially coupled to frame 11-102 in a substantially flat, non-tension state, a deflection distance 11-1702 may be empirically determined by testing. Once the proper deflection distance is determined, hard tooling may be created to repeatably deform frame 11-102 and move radially extending flange 11-1600 the predetermined deflection distance 11-1702 during the assembly of each loudspeaker 11-100.

Another example system of assuring proper film tension includes a feedback system 11-1602. One example feedback system may involve placing a known load at the center of diaphragm 11-104 and measuring the deflection of the diaphragm at the load application point. The desired deflection per load may be empirically determined by testing where the resonance frequency of diaphragm 11-104 is plotted against deflection per a given load. Once the desired resonance frequency is determined for a given speaker geometry, a target diaphragm deflection per given load may be determined. The feedback system may operate by measuring the actual diaphragm deflection at a known load with a deflection sensor 11-1604. The measured actual deflection may be compared to the target deflection.

Frame 11-102 may be deformed until the measured deflection is substantially equal to the target deflection, thereby properly tensioning diaphragm 11-104 to produce the desired resonance frequency. Logic control systems such as proportional, integral, derivative closed feedback loops, etc. may be implemented to control the mechanical deflection of frame 11-102 during the tensioning process. Such a control system may provide a high degree of repeatability regarding film tensioning.

Another example feedback system 11-1704 may directly measure resonance frequency during film tensioning using a frequency sensor 11-1706. In this control scheme, diaphragm 11-104 may be repeatedly excited and the resonance frequency measured. The measured frequency may be compared to a desired target frequency during film tensioning. Frame 11-102 may be deformed until the measured resonance frequency matches the target frequency within an acceptable tolerance. It should be appreciated that the feedback systems described may be used with any of the tensioning techniques described.

Yet another film tensioning system will be described in greater detail with reference to FIG. 11-18. An example film tensioner 11-1800 includes an upper plate 11-1802 and a lower plate 11-1804. Plates 11-1802 and 11-1804 have matching beveled apertures 11-1806 and 11-1808, respectively. Center portion 11-820 of diaphragm 11-104 is positioned within the openings defined by apertures 11-1806 and 11-1808. Apertures 11-1806 and 11-1808 may be sized and shaped slightly larger than frame 11-102 to allow insertion of frame 11-102 within one of the apertures 11-1806 and 11-1808.

Upper plate 11-1802 may include an annular groove 11-1810 having an asymmetrical cross-section as shown in FIG. 11-18. Lower plate 11-1804 may include an annular groove 11-1812 shaped as the mirror image of groove 11-1810. A first elastomeric member 11-1814 may be positioned within groove 11-1810 and a second elastomeric member 11-1816 may be positioned within groove 11-1812. Grooves 11-1810 and 11-1812 may be shaped to constrain movement of the elastomeric members 11-1814 and 11-1816 toward apertures 11-1806 and 11-1808, respectively. In addition, grooves 11-1810 and 11-1812 may be shaped to allow movement of elastomeric members 11-1814 and 11-1816 away from apertures 11-1806 and 11-1808. Specifically, the annular grooves 11-1810 and 11-1812 may be shaped to impart a lateral force to center portion 11-820 of diaphragm 11-104 when an axial force is applied to upper plate 11-1802 and lower plate 11-1804 drawing them toward one another.

Upper plate 11-1802 may also include threaded apertures 11-1818. Stepped apertures 11-1820 extend through lower plate 11-1804. Threaded fasteners 11-1822, which are illustrated as bolts, may be inserted in apertures 11-1820 and tightened into threaded apertures 11-1818 to draw upper plate 11-1802 and lower plate 11-1804 together. It should be appreciated that upper plate 11-1802 and lower plate 11-1804 may be drawn together using a variety of mechanisms such as toggle clamps, jack screws, hydraulic cylinders or any other known clamping and force producing devices.

In this example technique, the film may first be tensioned by drawing upper plate 11-1802 and lower plate 11-1804 together. Adhesive 11-406 (or some other coupling mechanism) may be placed on the tensioned portion of diaphragm 11-104 and/or planar mounting surface 11-408 of frame 11-102. While upper plate 11-1802 is clamped to lower plate 11-1804, frame 11-102 may be placed into contact with diaphragm 11-104. Once the adhesive has cured (or mechanical coupling completed), the threaded fasteners 11-1822 may be removed and upper plate 11-1802 may be separated from lower plate 11-1804. It should also be appreciated that apertures 11-1806 and 11-1808 may be sized to allow entry of light waves to cure adhesive 11-406, or to allow manipulation of some other coupling mechanism, if so desired. Depending on the specific configuration of the loudspeaker 11-100, perimeter portion 11-818 of diaphragm 11-104 may be trimmed to remove any film extending beyond lip 11-306.

With reference to FIG. 11-19, another example film tensioning technique is depicted. The fixturing used to practice this example technique includes a fixture 11-1900 having a lower die 11-1902, and an upper die 11-1904. Fixture 11-1900 may function to restrain the periphery of diaphragm 104 and define a cavity 11-1906 between one side of the diaphragm 11-104 and lower die 11-1902. A fluid source 11-1908 may supply pressurized fluid to cavity 11-1906. Because lower die 11-1902 is constructed from a substantially rigid material, diaphragm 11-104 may elongate in tension as depicted in FIG. 11-19. Pressure is maintained within cavity 11-1906 while frame 11-102 is mechanically coupled with diaphragm 11-104. Diaphragm 11-104 may be secured to frame 11-102 using any number of previously discussed bonding techniques including mechanical fasteners, radiation curable adhesives, multi-part epoxies, heat curable adhesives or pressure sensitive compounds.

After diaphragm 11-104 has been fixed to frame 11-102, upper die 11-1904 may be removed. If desired, excess diaphragm material extending beyond the perimeter of frame 11-102 may be removed.

In this example technique, some of the initial tension generated by the pressurized fluid may relax during subsequent frame attachment process. Accordingly, a tension greater than the final desired tension may be initially induced via fluid source 11-1908 to assure that the film is properly tensioned during use.

FIGS. 11-20 through 11-22 depict another example of fixturing used to tension diaphragm 11-104 prior to attaching diaphragm 11-104 to frame 11-102. An example spider 11-2000 may operate in conjunction with an example base plate 11-2100 to tension diaphragm 11-104. Spider 11-2000 may be placed on a first side of diaphragm 11-104 while base plate 11-2100 may be placed on the opposite side of the diaphragm 11-104. Spider 11-2000 may function by converting an axial force applied in direction 11-2102 to a lateral tension produced in opposed directions 11-2200.

The illustrated spider 11-2000 is a generally pyramidal member having a hub 11-2002 positioned proximate to a truncated portion of the pyramid. A plurality of legs 11-2004 angularly extend from hub 11-2002. Each of the legs 11-2004 include a body portion 11-2006 and a foot portion 11-2008. Each foot portion 11-2008 radially extends from the distal end of each leg 11-2004. A pad 11-2010 is coupled (as shown in FIG. 11-20) to a lower surface of each foot 11-2008. Pads 11-2010 may be constructed from a high friction, elastomeric material that is suitable for gripping diaphragm 11-104 without causing damage to diaphragm 11-104.

The illustrated base plate 11-2100 is a generally rectangularly-shaped member having an aperture 11-2104 extending through the base plate 11-2100. Aperture 11-2104 may be shaped similarly to the perimeter of frame 11-102 and sized such that frame 11-102 may be inserted into aperture 11-2104. Base plate 11-2100 includes a low friction surface 11-2106 upon which diaphragm 11-104 may freely slide. As best shown in FIG. 11-21, each pad 11-2010 is supported by a portion of base plate 11-2100.

During tensioning, diaphragm 11-104 may be placed between base plate 11-2100 and spider 11-2000. An axial force may be applied to spider 11-2000 in direction 11-2102. Due to the angular orientation of legs 11-2004 relative to low friction surface 11-2106, at least some of the axial force applied in direction 11-2102 may be converted to opposing forces in opposed directions 11-2200. The opposed forces may tension diaphragm 11-104. After tensioning, frame 11-102 is mechanically coupled to diaphragm 11-104 as previously discussed.

FIG. 11-23, is yet another example system for loudspeaker 11-100 assembly. In this system, frame 11-102 may be elastically deformed prior to attachment of diaphragm 11-104. The deformed frame 11-102 is represented in phantom lines at reference numeral 11-2300. It should be appreciated that any number of force generating devices or tools such as jack screws, hydraulic rams or other force producing devices may be used to elastically deform frame 11-102 by inwardly deflecting radially extending flange 11-304 and lip 11-306 (FIG. 3) of frame 11-102. Frame 11-102 may be maintained in the deformed state shown as 11-2300 while diaphragm 11-104 (FIG. 1) is attached to planar mounting surface 11-408 (FIG. 4).

Once diaphragm 11-104 has been securely attached to frame 11-102, the external forces deforming frame 11-102 may be released. Because frame 11-102 was elastically deformed, flange 11-304 and lip 11-306 have a tendency to spring-back to their originally undeformed state. This tendency is resisted by diaphragm 11-104. Diaphragm 11-104 elongates as the deformed frame attempts to return to its undeformed state until an equilibrium is reached. Frame 11-102 may be constructed from steel, aluminum or any number of composite materials capable of being deformed. Materials having a modulus of elasticity less than 29,000 KSI are contemplated to provide a relatively large elastic deformation prior to yield. A large frame deformation is beneficial to account for elongation or deformation of adhesive 11-406 or other mechanical coupling used to bond diaphragm 11-104 to frame 11-102.

An example planar loudspeaker assembly system 11-2400 is depicted in FIG. 11-24. Planar loudspeaker assembly system 11-2400 functions to construct a fully tested and finished planar loudspeaker from a variety of separate components in a relatively small space and a minimal amount of time.

Assembly system 11-2400 is a conveyor-type system utilizing a plurality of pallets 11-2402 traveling about a closed loop. Each of pallets 11-2402 is engaged by a drive belt or track 11-2404 to move the pallets 11-2402 around the loop in a counterclockwise direction. A plurality of workstations 11-2406 are positioned along track 11-2404 to perform the process steps.

As best shown in FIG. 11-25, pallet 11-2402 includes a first protrusion 11-2500 and a second protrusion 11-2502 extending upwardly from an upper surface 11-2504. First protrusion 11-2500 includes a recess 11-2505. Second protrusion 11-2502 is rectangularly shaped and surrounds an aperture 11-2506. Aperture 11-2506 extends through the thickness of pallet 11-2402. Second protrusion 11-2502 includes a stepped sidewall 11-2508. Stepped sidewall 11-2508 includes a lower portion 11-2510. Stepped sidewall 11-2508 includes an upper portion 11-2512 that serves as a locating structure for frame 11-102. As shown in FIG. 11-41, an upper clamp half 11-4100 is placed over first protrusion 11-2500. A lower clamp half 11-4102 is positioned over second protrusion 11-2502.

With reference to FIG. 11-42, pallet 11-2402 travels to a felt cutting and loading station 11-4200. The felt cutting and loading station 11-4200 includes a frame 11-4201, a dispenser 11-4202, a cutter 11-4204 and a robot 11-4206 having an end effecter 11-4208 coupled to robot 11-4206. A roll of felt 11-4210 is rotatably coupled to frame 11-4201. The free end of the roll of felt 11-4210 is fed into dispenser 11-4202. Dispenser 11-4202 is controllable to selectively index a portion of the roll of felt onto a block 11-4212. Once the appropriate width of felt has been dispensed on block 11-4212, feeder 11-4202 halts movement of felt roll 11-4210. Cutter 11-4204 separates a singular felt panel 4214 from the roll. At this time, robot 11-4206 positions end-effector 11-4208 above felt panel 11-4214 located on block 11-4212. Through the use of vacuum or a cloth gripping device, end-effector 11-4208 transfers felt panel 11-4214 to recess 11-2505 located in first protrusion 11-2500.

Pallet 11-2402 travels to a frame loading station 11-4300 shown in FIG. 11-43. Frame loading station 11-4300 includes a dial table 11-4301, a hot melt applicator 11-4302 and a robot 11-4304. Dial table 11-4301 includes three stacks 11-4306 rotatably mounted to a base 11-4308. The stack positioned beneath robot 11-4304 is defined as being in the active position. The other two stacks 11-4306 are positioned at inactive positions. An operator positioned adjacent inactive stacks 11-4306 loads frames 11-102 for later use at the active position. An elevator (not shown) positioned below dial table 11-4301 maintains the position of the upper most frame within the active stack at a predetermined elevation.

During operation of frame loading station 11-4300, robot 11-4304 positions a magnetic or vacuum end-effector 11-4310 over the active stack position. The end-effector removes the top frame from the active stack and rolls it across hot melt applicator 11-4302. Robot 11-4304 continues to translate frame 11-102 to a position over felt panel 11-4214. Frame 11-102, including a coating of hot melt adhesive, is pressed into contact with felt panel 11-4214 to adhere the felt to the frame. End-effector 11-4310 then places the frame and felt subassembly on upper portion 11-2512 of second protrusion 11-2502. Operation of frame loading station 11-4300 continues in this manner until all of the frames within the active stack have been used. At this time, dial table 11-4301 indexes to place one of the previously inactive stacks at the active stack location. An operator then fills the empty stack 11-4306 with frames 11-102.

As shown in FIG. 11-26, pallet 11-2402 continues to travel in a counterclockwise direction through an adhesive application station 11-2600. Station 11-2600 includes five adhesive valves 11-2602 positioned in an offset manner to one another. Pallet 11-2402 passes under adhesive valves 11-2602 at a uniform rate. Each adhesive valve 11-2602 lowers to a dispensing height and applies an adhesive 11-2604 at an appropriate time to dispense five equally spaced ribbons of adhesive 11-2604 on frame 11-102. The opening and closing of valves 11-2602 is timed to correspond to the movement of pallet 11-2402. Five equal length adhesive ribbons 11-2604 are dispensed on frame 11-102 without stopping pallet 11-2402.

Pallet 11-2402 continues to travel to a magnet loading station 11-2700 depicted at FIG. 11-27. At magnet loading station 11-2700, a bowl feeder 11-2702 presents fifteen magnets 11-202 correctly oriented in a pattern of five rows and three columns. It should be appreciated that other high speed feeding mechanisms may be utilized to correctly present and orient magnets 11-202. Referring to FIG. 11-27, an end-effector 11-2704 is mounted to a robot or pick-and-place mechanism 11-2706 to allow movement of end- effector 11-2704 within station 11-2700. End-effector 11-2704 is positioned immediately above placed magnets 11-202 at bowl feeder 11-2702. End-effector 11-2704 is then energized to temporarily couple magnets 11-202 to end-effector 11-2704. Robot 11-2706 then moves end- effector 11-2704 above an adhesive activator applicator pad 11-2708. Each of magnets 11-202 attached to end-effector 11-2704 are then pressed against adhesive activator applicator pad 11-2708 to apply an adhesive activator 11-2710 to the bottom of magnets 11-202. End- effector 11-2704 along with magnets 11-202 are next indexed to a location above frame 102. End-effector 11-2704 is axially lowered to press magnets 11-202 into adhesive 11-2604 and mix adhesive activator 11-2710 with adhesive 11-2604 to start the chemical reaction to secure magnets 11-202 to frame 11-102. Adhesive 11-2604 and adhesive activator 11-2710 illustratively complete a two-part adhesive. One skilled in the art will appreciate that the two-part adhesive is merely exemplary and that a variety of other magnet bonding methods may be incorporated without departing from the scope of the invention. For example, a one-part heat curable adhesive, mechanical fasteners, or welding techniques may be used.

Pallet 11-2402 next travels along track 11-2404 to acrylic curing stations 11-2410. Pallet 11-2402 passes through acrylic curing stations 11-2410 to allow the two-part adhesive time to cure. After magnets 11-202 are firmly secured to frame 11-102, they are magnetized at a magnetizing station 11-2800. Within magnetization station 11-2800, frame 11-102 is raised to be within close proximity to an energy source 11-2802. Each of the magnets within any one row are magnetized having the same polarity. Magnets of immediately adjacent rows are magnetized with the opposite polarity to create the magnetic flux fields described earlier. After energization, frame 11-102 and magnets 11-202 are separated from energy source 11-2802 via a cylinder 11-2805 and lowered onto pallet 11-2402. Specifically, a plate 11-2806 including a plurality of posts 2808 are lowered such that two posts 11-2808 contact each magnet to separate the magnetized magnets and frame from energy source 11-2802.

After magnetization, pallet 2402 travels to diaphragm adhesive application station 11-2900 shown in FIG. 11-29. Station 11-2900 includes an adhesive applicator 11-2902 mounted to a cartesian arm 11-2904. Adhesive applicator 11-2902 applies adhesive 11-406 to planar mounting surface 11-414 of frame 11-102. In the preferred embodiment, movement of pallet 11-2402 is controlled while adhesive is being applied. Motion control along an X axis will be provided by track 11-2404 and motion along the Y and Z axes will be provided by cartesian arm 11-2904.

Pallet 11-2402 next travels to a diaphragm loading station 11-3000. Diaphragm loading station 11-3000 loads diaphragm 11-104 onto frame 11-102. In a preferred embodiment, a roll 11-3002 of diaphragms 11-104 is rotatably mounted on a frame 11-3004. The roll 11-3002 of diaphragms 11-104 consists of a continuous sheet of film 11-400 having a plurality of conductors 11-106 spaced apart and positioned along the length of film 11-400. The continuous sheet of film 11-400 is rolled for convenient handling in a production environment. A free end of diaphragm roll 11-3002 is inserted into a feeder 11-3006. Feeder 11-3006 is positioned adjacent a vacuum platen 11-3008. During operation, feeder 11-3006 is selectively operable to dispense material from diaphragm roll 11-3002 onto an upper surface 11-3010 of vacuum platen 11-3008. A vision system 11-3012 includes a controller 11-3014 and a camera 11-3016. Camera 11-3016 is preferably positioned atop frame 11-3004 to have a clear view of the end portion of diaphragm roll 3002 being positioned on upper surface 11-3010 of vacuum platen 11-3008. Camera 11-3016 communicates diaphragm position information to controller 11-3014.

Once the free end of diaphragm roll 11-3002 has been indexed to a desired position to position a diaphragm 11-104 on upper surface 11-3010 of vacuum platen 11-3008, controller 11-3014 instructs feeder 11-3006 to maintain the current position of the diaphragm roll. Camera 11-3016 also communicates the lateral position of the conductor 11-106 on the diaphragm 11-104 on upper surface 11-3010 of vacuum platen 11-3008 to controller 11-3014. The position of pallet 11-2402 is adjusted to align speaker frame 102 with the current position of the conductor 11-106 on the upper surface 11-3010 of vacuum platen 11-3008.

Once the pallet and diaphragm 11-104 on upper surface 11-3010 of vacuum platen 11-3008 have been positioned as described, vacuum is applied to vacuum platen 3008. As such, the end portion of diaphragm roll 11-3002 containing diaphragm 11-104 that is positioned on upper surface 11-3010 of vacuum platen 11-3008 is temporarily fixed to vacuum platen 11-3008. A cutter 11-3018 separates diaphragm 11-104 from diaphragm roll 11-3002.

After diaphragm 11-104 is severed from diaphragm roll 11-3002, an end-effector 11-3020 picks up upper clamp half 11-3600 from its storage position on pallet 11-2402. End-effector 11-3020 positions upper clamp half 11-3600 on the cut diaphragm while vacuum is supplied to vacuum platen 11-3008. End-effector 11-3020 next supplies vacuum to the perimeter of upper clamp half 11-3600 as well. The vacuum supply to vacuum platen 11-3008 is turned off and a slight positive pressure is applied to diaphragm 11-104 from upper surface 11-3010 of vacuum platen 11-3008. Next, end-effector 11-3020 transfers upper clamp half 11-3600 and diaphragm 11-104 to a position over pallet 11-2402. End-effector 3020 then lowers upper clamp half 11-3600 and diaphragm 11-104 into contact with lower clamp half 11-3602 effectively trapping diaphragm 11-104 between the upper and lower clamp halves in a non-tension state. The vacuum supplied to end-effector 11-3020 is turned off and end-effector 11-3020 releases upper clamp half 11-3600 to complete the cycle at diaphragm loading station 11-3000.

With reference to FIG. 11-31, pallet 11-2402 is depicted in cross-section after the process steps conducted at diaphragm loading station 11-3000 have been completed. At this time, lower clamp half 11-3602, diaphragm 11-104, and upper clamp half 11-3600 are suspended on a set of spring plungers 11-3100. The weight of upper clamp half 11-3600 is transferred through an elastomeric seal 11-3102, diaphragm 11-104, an elastomeric seal 11-3104 and lower clamp half 11-3602. This arrangement maintains diaphragm 11-104 in a non-tensioned state. Spring plungers 11-3100 include axially disposable end portions 11-3106 which are shown in their fully extended positions in FIG. 11-31. End portions 11-3106 and lower clamp half 11-3602 are sized to position diaphragm 11-104 at a plane above the adhesive and frame subassembly.

Pallet 11-2402 next travels to an edge treatment application station 11-3200. Edge treatment application station 11-3200 includes a valve 11-3202 coupled to a cartesian arm 11-3204. Valve 11-3202 applies an edge treat compound 11-3206 to the perimeter of diaphragm 11-104 as movement of pallet 11-2402 is controlled within application station 11-3200. Motion control along an X axis will be provided by track 11-2404 and motion along the Y and Z axes will be provided by cartesian arm 11-3204. Edge treat compound 11-3206 functions to dampen unwanted harmonic or spurious vibrations of diaphragm 11-104 during speaker operation. Preferably, edge treat compound 11-3206 is a liquid urethane oligomer acrylic monomer blend such as Dymax 4-20539, that cures to a flexible solid.

Pallet 11-2402 travels next to a film tensioning and adhesive curing station 11-3300. At station 11-3300, a radiation source 11-3302 extends downwardly and forces upper clamp half 3600 downward toward lower clamp half 11-3602. The reaction force generated from springs within spring plungers 11-3100 creates a clamping force between upper clamp half 11-3600 and lower clamp half 11-3602 to restrain the perimeter of diaphragm 11-104. Depending on the tensioning method utilized, the upper and lower clamp halves may be downwardly displaced to a predetermined position, or may be displaced until a certain force is generated, or may be displaced until a certain resonance frequency is generated or until a certain deflection of diaphragm 104 per unit load is defined.

As upper clamp half 11-3600 moves downward, diaphragm 11-104 is lowered into contact with adhesive 11-406 positioned on planar mounting surface 11-414. Upper clamp half 11-3600 continues to move downward stretching film 11-400 over frame 11-102 until the desired tension in diaphragm 11-104 is achieved. When the tensioning process is complete, radiation source 11-3302 is turned on to cure adhesive 11-406 and edge treat compound 11-3206. After completion of the exposure to the radiation, radiation source 11-3302 is turned off and retracted.

Any number of bonding agents may be used to couple diaphragm 11-104 to frame 11-102. In the preferred embodiment, an adhesive curable by exposure to light in the visible spectrum such as Loctite Corp. 11-3106 is used. However, adhesives curable by exposure to ultra-violet light or other types of radiation may also be used. Certain pressure sensitive compounds may also be used. Beneficially, pressure sensitive compounds do not require the use of light permeable diaphragms and fixturing that allows light to pass to the bonded perimeter. Heat curable adhesives may also be used.

Pallet 11-2402 next travels to a terminal insertion station 11-3400. Terminal insertion station 11-3400 has a vibratory bowl feeder 11-3402 that works in conjunction with a terminal crimper 11-3404 and a terminal insertion tool 11-3406. Vibratory bowl feeder 11-3402 orients a large quantity of terminal conductor assemblies 11-230 and individually feeds terminal assemblies one at a time to an escapement positioned below vibratory bowl feeder 11-3402. As pallet 11-2402 enters terminal insertion station 11-3400, a pressure pad 11-3408 extends downwardly from terminal crimper 11-3404 to engage speaker 11-100 near first end 11-204 and second end 11-206 of conductor 11-106. Terminal insertion tool 3406 obtains a single conductor assembly 11-230 from the escapement and installs it through apertures 11-214 and 11-216 of frame 11-102. During the insertion operation, the terminals pierce diaphragm 11-104 at first end 11-204 and second end 11-206 to form an electrical connection thereto. Crimper 11-3404 crimps the two electrical terminals to diaphragm 11-104. Additionally, crimper 11-3404 couples conductor assembly 11-230 by mechanically deforming fastener 11-226 at the same time the electrical terminals are crimped. Terminal insertion tool 11-3406 and crimper 11-3404 then retract.

Pallet 11-2402 next travels to a diaphragm trim station 11-3500. Diaphragm trim station 11-3500 includes a cartesian arm 11-3502 equipped with a cutter 11-3504. Once pallet 11-2402 arrives at diaphragm trim station 11-3500, cartesian arm 11-3502 lowers cutter 3504 into engagement with diaphragm 11-104 to trim excess film 11-400 from diaphragm 11-104. The X axis motion for cutter 11-3504 is provided by track 11-2404. Motion along the Y and Z axes is provided by cartesian arm 11-3502.

Pallet 11-2402 next travels to an unclamping station 11-2412. At unclamping station 11-2412, upper clamp half 11-3600 is removed and placed on protrusion 11-2500 of pallet 11-1102. The excess film that was previously trimmed from diaphragm 11-104 may be removed and discarded.

Pallet 11-2402 next travels to a test station 11-2414. At test station 11-2414, speaker 11-100 is acoustically tested. During the acoustical test, the completed electro-dynamic loudspeaker 11-100 is excited using a predefined input. The actual acoustical output from each loudspeaker 11-100 is compared to a target output. The actual output and target output are compared to determine if the speaker meets quality standards previously defined. Tested loudspeaker 11-100 is removed from pallet 2402 and is sorted according to the results of the acoustical test. Pallet 11-2402 continues to travel along track 11-2404 and returns to frame loading station 11-2408 to begin the process once again.

With reference to FIG. 11-36, an alternate electro-dynamic loudspeaker 11-3600 is constructed from a first subassembly 11-3602 and a second subassembly 11-3604. First subassembly 11-3602 includes diaphragm 11-104 coupled to grille 11-220. Grille 11-220 is preferably an injection molded component constructed from a reinforced thermoplastic or thermoset compound. Grille 11-220 may also be manufactured from aluminum, steel, or any other suitable material. Preferably, diaphragm 11-104 is coupled to grille 11-220 in a tensioned condition. The tension in diaphragm 11-104 may be produced via a number of techniques including each of those previously described. However, diaphragm 11-104 may be tensioned after being coupled to grille 11-220.

Second subassembly 11-3604 includes frame 11-102, magnets 11-202 and dampener 11-228. Because two subassemblies are created, the total time to manufacture loudspeaker 11-3600 maybe reduced. Balancing the construction of two subassemblies allows for greater manufacturing flexibility and assembly line optimization. Furthermore, the use of grille and diaphragm subassemblies may provide opportunities for constructing similar speakers having different film-to-magnet clearances. By increasing the distance between diaphragm 11-104 and magnets 11-202, speakers exhibiting an expanded bandwidth with very low frequency limits may be exploited.

FIGS. 11-37 and 11-38 depict an alternate method for attaching a diaphragm 11-3700 to a frame 11-3702. Preferably, frame 11-3702 is constructed from a reinforced injection molded composite material. Frame 11-3702 includes a body 11-3704 having a face 11-3706. A plurality of pins 11-3708 protrude from face 11-3706. Pins 11-3708 are integrally molded with body 11-3704 of frame 11-3702.

Diaphragm 11-3700 is substantially similar to diaphragm 104 previously described. However, diaphragm 11-3700 includes a plurality of apertures 11-3710 extending through its thickness. Apertures 11-3710 are positioned to form a pattern corresponding to the location of the plurality of pins 11-3708 extending from face 11-3706.

Diaphragm 11-3700 is coupled to frame 11-3702 by inserting pins 11-3708 through apertures 11-3710. Pins 11-3708 are sized to protrude a predetermined distance above a top surface 11-3712 of diaphragm 11-3700. Diaphragm 11-3700 is coupled to frame 11-3702 via a heat staking method where a distal portion of each of pins 11-3708 is melted and formed to define a head portion 11-3800 extending beyond the edges of apertures 11-3710.

FIG. 11-39 depicts another alternate method of attaching a diaphragm to a frame or a grille. A frame 11-3900 includes a plurality of projections 11-3902 extending from a mounting surface 3904. Diaphragm 11-104 is coupled to frame 11-3900 by contacting diaphragm 11-104 with each of projections 11-3902 and energizing the assembly to cause local melting and fusion of the materials. Local bonding at each of projections 11-3902 maybe accomplished by applying heat and pressure with an external tool. Alternatively, the localized melting and bonding may be achieved by vibrating diaphragm 11-104 and frame 11-3900 relative to one another. Furthermore, projections 11-3902 may be excited using an ultrasonic energy source in conjunction with an axial force engaging diaphragm 11-104 with each of the projections 11-3902.

FIG. 11-40 depicts an alternative method for attaching film 11-104 to frame 11-102. Frame 11-102 includes a coating 11-4000 applied to the exterior surfaces of frame 11-102. Preferably, coating 11-4000 is a thermoplastic material applied by a power coating method. To attach film 11-104 to frame 11-102, the perimeter of film 11-104 is engaged with an outer surface 11-4002 of coating 11-4000. Energy is added to the joint to create a localized melting of coating 11-4000 and diaphragm 11-104. Energy may be supplied by vibrating film 11-104 relative to frame 11-102. Alternatively, frame 11-104 may be placed within a magnetic field to induction heat the frame and melt coating 11-4000. The energy source is then turned off and film 11-104 is effectively bonded to frame 11-104 via coating 11-4000.

The conductor 12-106 on the film 12-400 must be terminated to a connector to allow audio current to be applied from a power amplifier. Preferably, the termination is achieved through a rapid assembly process and provides a mechanically and electrically robust connection. Also, the connection should be environmentally robust in order to withstand harsh temperatures and humidity.

As shown in FIG. 12-6, a first embodiment of an electrical connector is shown wherein the diaphragm 12-600 includes an extension portion 12-602 that extends beyond the periphery of the frame 12-102. The extension portion 12-602 is provided with two electrical trace portions 12-604, 12-606 each of which have a terminal end portion 12-604a, 12-606a. The extension portion 12-602 of the diaphragm serves as a wire harness. Due to the configuration of the traces of the conductor 12-106, a terminal end portion 12-608 of the conductor 12-106 has interfering radii 12-110 of traces 12-108 disposed between the terminal end 12-608 and the outer periphery of the conductor 12-106. In order to connect the terminal end 12-608 to the elongated trace 12-606, a capacitor 12-610 is mounted on the frame 12-102 and used as a jumper for connection between the terminal end 12-608 of the conductor 12-106 and the trace 12-606 provided on the extension portion 12-602 of the diaphragm 12-600. The capacitor 12-610 can be connected to the terminal end 12-608 and trace 12-606 by soldering or other known connecting methods. The capacitor 12-610 in addition to serving as a jumper over the interfering foil traces 12-108, allows the elimination of distortion by preventing low frequency signals from crossing over at or above a predetermined frequency.

A hardblock connector 12-612 is connected to the end of the extension portion 12-602 in electrical contact with the terminal ends 12-604a, 12-606a of the electrical traces 12-604, 12-606. The hardblock connector 12-612 pierces the traces 12-604, 12-606 to make electrical contact therewith. The connector 12-612 is capable of providing a snap fit with a corresponding receptacle in order to provide an electrical connection to the conductor 12-106 of the electro-dynamic loudspeaker 12-700 as illustrated in FIG. 12-7. As illustrated in FIG. 12-7, the extension portion 12-602 of the diaphragm 12-600 can be provided with a backing 12-702 including a layer of tape or other material capable of strengthening the extension portion 12-602.

The connector of FIGS. 12-6 and 12-7 provide a mechanically and electrically robust connection system that has a simple construction and can be easily assembled.

With reference to FIGS. 12-8 through 12-11, an electrical connector assembly 12-800 according to a second embodiment of the invention will now be described. The electrical connector assembly 12-800 includes a terminal base member 12-802 including a centrally located mounting aperture 12-804 and a pair of terminal apertures 12-806. The terminal base member 12-802 includes a pair of bosses 12-808 extending around the pair of terminal apertures 12-806. A pair of terminal lugs 12-810 are each provided with an eyelet portion 12-812 and a body portion 12-814. The body portion 12-814 can be cylindrical in shape or have flattened side faces, and preferably includes a plurality of pointed tip portions 12-816.

During assembly, the terminal base member 12-802 is disposed on the back side of the frame 12-102 such that the bosses 12-808 are received within apertures 12-214, as best illustrated in FIG. 12-12. The terminal lugs 12-810 are then inserted through the terminal apertures 12-806 so that the pointed tips 12-816 of the terminal lugs 12-810 pierce through the film 12-400 and terminal end portions 12-204, 12-206 of the conductor 12-106. The pointed tip portions 12-816 are then crimped outwardly to overlay the terminal ends 12-204, 12-206, as best shown in FIG. 12-10.

A fastener 12-820 is inserted through the mounting aperture 12-804 of the terminal base member 12-802 and through the mounting aperture 12-216 in the frame 12-102 so that it also pierces through the film 12-400. The fastener 12-820 is also then crimped outwardly in order to secure the terminal base member 12-802 to the frame 12-102. Each of the terminal lugs 12-810 includes a radially extending outer flange portion 12-814a extending from the body portion 12-814 for seating against the terminal base member 12-802, on the back side thereof. Similarly, the fastener 12-820 includes a radially extending flange portion 12-820a which also seats against the back surface of the terminal base member 12-802, as best shown in FIGS. 12-11 and 12-12. It should be noted that the terminal base member 12-802, terminal lugs 12-810, and fastener 12-820 can be preassembled with the terminal lugs 12-810 and fastener 12-820 being press fit, or otherwise secured, within the terminal base member prior to assembly on the frame 12-102.

FIG. 12-18 shows an alternative electrical connector assembly 12-1800 including a terminal base member 12-1802 including first and second mounting apertures 12-1804, 12-1806 and a pair of terminal apertures 12-1808, 12-1810. The terminal base member 12-1802 includes a pair of bosses 12-1812 extending around the pair of terminal aperture 12-1808, 12-1810.

A pair of terminal lugs 12-1814 are each provided with an eyelet portion 12-1816 and a body portion 12-1818. The terminal lugs 12-1814 are received in the terminal apertures 12-1808, 12-1810. The body portion 12-1818 can be cylindrical in shape or have flattened side faces. The eyelet portions 12-1816 are provided with a thermal break portion 12-1820 in the form of notches provided in the side edges thereof that reduce the cross-sectional area for reducing thermal conductivity and limiting heat transfer from the solder area to the electrical eyelets 12-1816. A pair of mechanical eyelets 12-1822, 12-1824 are received in the mounting apertures 12-1804, 12-1806 and are crimped over the steel frame for providing a mechanical connection of the electrical connector assembly 12-1800 to the frame. The second mechanical eyelet 12-1824 is provided with strain relief blades 12-1826 which are crimped around the wire harness for transferring mechanical forces from the harness to the frame rather than to the solder lug connections.

Optionally, electrical joint compound 12-1200 can be provided between the terminal ends 12-204, 12-206 of the conductor 12-106 and the crimped rivet or fastener tips 12-816, as shown in FIG. 12-12. The electrical joint compound 12-1200 is commercially available under the name ALNOX and includes a grease-like material including metallic or electrically conductive particles which when crimped between the terminal ends 12-204, 12-2026 and the electrical lugs 12-810 contact the surfaces thereof in order to provide electrical connection therethrough. The particles typically include nickel plated aluminum oxide grit in order to provide conductive particles with relatively sharp edges which are capable of piercing or deforming the surface of the terminal ends 12-204, 12-206 of the conductor 12-106 to provide an electrical connection therewith.

One of the problems associated with working with an aluminum conductor 12-106 is that an oxide on the surface makes soldering very difficult. Thus, a flux is utilized to break through the oxide layer enabling the solder to wet out on the aluminum surface. However, the flux material is corrosive to the aluminum and must be washed off completely and thoroughly after being used. Washing off the flux material requires water and brushing and is time consuming and messy. This adds additional steps and therefore costs to the assembly process. As illustrated in FIG. 12-13, an alternative connector arrangement is provided in that the terminal ends 12-1300, 12-1302 of the conductor 12-106 are provided with a thin layer of copper 12-1400 so that a pair of lead wires 12-1402 (one of which is shown in FIG. 12-14) can be connected to the terminal ends 12-1300, 12-1302, using conventional soldering processes.

Alternatively, a thin copper plating can be placed over the entire aluminum foil trace 12-106 in order to also enable conventional soldering techniques. Also the conductor 12-106 can also be made from a thinner copper foil in order to reduce the difficulties involved with terminating to aluminum. Because the copper is significantly heavier than aluminum, the copper traces are thinner both in thickness and width as compared to the aluminum foil traces. The reduced thickness and width of the copper allows the diaphragm 12-104 to be maintained with a low moving mass so as to not inhibit the production of sound by the diaphragm 12-104.

When lead wires are soldered or welded directly to the terminal ends 12-204, 12-206 of the conductor, as illustrated in FIG. 12-15, a strain relief mount 12-1500 is preferably utilized in order to prevent the wire 12-1502 from being pulled and damaging the electrical connection between the lead wires 12-1402 and the terminal ends 12-204, 12-206 of the conductor 12-106. The strain relief fastener 12-1500 can be in the form of a clamp that is fastened to the frame 12-102 or can be in the form of any other mechanical connector that prevents forces imposed upon the wire 12-1502 from being imposed upon the lead wires 12-1402 which are connected to the electrical conductor 12-106.

As shown in FIG. 12-16, an alternative process for forming an electrical connection is outlined. At step 12-1601, the layer of aluminum is applied to the film 12-400. At step 12-1602, the aluminum is selectively etched away in order to form the conductor traces. The film 12-400 is then applied to the frame 12-102 in tension (step 12-1603). At step 12-1604, the terminals that can be in the form of lead wires are ultrasonically soldered to the aluminum foil on the film. The ultrasonic soldering process does not require reactive fluxes as is required with conventional soldering processes that are used with aluminum and therefore does not require the extra brushing and cleaning steps required for conventional soldering processes. The ultrasonic soldering process causes cavitation of the aluminum that removes the oxidation on the surface and allows the solder to wet out. Ultrasonic solderers are commercially available for carrying out this type of ultrasonic soldering process. With this type of electrical connection, a strain relief device 12-1500, such as illustrated in FIG. 12-15, is also preferably desired in order to prevent forces from acting upon the lead wires and potentially damaging the connection.

FIG. 12-17 illustrates the method steps of an alternative laser weld electrical connection. At step 12-1701, a layer of aluminum is applied to the film 12-400. The aluminum is then selectively etched away to form the conductor 12-206 (step 12-1702). The film 12-400 is then applied to the frame 12-102 in tension at step 12-1703. At step 12-1704, the terminals in the form of lead wires are then laser welded to the terminal ends 12-204, 12-206 of the aluminum traces. The laser welding fuses the wire and aluminum terminal ends together. Again, as illustrated in FIG. 12-15, a strain relief device 12-1500 is preferably utilized to prevent forces applied to the wire from being applied to the lead wires for damaging the laser welded connection. The strain relief can be provided by a clamp, rivets, fasteners or an in molded snap feature provided on the frame 12-102.

One embodiment of the mounting apparatus of the invention that is utilized for the installation of an electro-dynamic loudspeaker 13-100 is illustrated in FIG. 13-5. The mounting apparatus 13-500 may comprise a mounting bracket 13-502 of unitary construction. The mounting bracket 13-502 is shown for use in installing a loudspeaker 13-100 on a mounting surface or location 13-506, such as a structural pillar, for example, in an automobile or other vehicle.

The mounting bracket 13-502 is shown to include a generally planar, back panel section 13-508. Optionally, a plurality of apertures 13-510 may be included in the back panel section 13-508 to, for example, reduce the cost and/or weight of the mounting bracket 13-502 or provide air passageways through the mounting bracket 13-502, as necessary.

A sidewall 13-512 extends generally orthogonally from the back panel section 13-508 so as to define the outer boundary or periphery 13-514 and the interior space 13-516 of the mounting bracket 13-502. Extending inwardly from the periphery 13-514 of the sidewall 13-512 and toward the interior space 13-516 of the mounting bracket 13-502, is a flange or rib 13-518. The rib 13-518 generally lies in a plane that is parallel to and offset from the back panel section 13-508, thereby establishing the thickness of the mounting bracket 13-502. Portions 13-520 of the rib 13-518 may extend still further inwardly from the sidewall 13-512.

Located at opposite ends of the mounting bracket 13-502 are flanges 13-528 having apertures 13-529. Flanges 13-528 provide a location at which the mounting bracket 13-502 may be secured to the mounting location 13-506, such as via a threaded fastener 13-530 and apertures 13-529 and 13-531 or as otherwise well-known or disclosed herein. Flanges 13-528 may each further include a neck portion 13-532 that allows the position and/or orientation of the flange 13-528 to manipulated, such as by bending or twisting, to better conform the flange 13-528 to the surface at the mounting location 13-506. Of course, the number and location of the flange(s) 13-528 may be determined by the requirements of the mounting application, such as the size, shape and weight of, and the operating conditions seen by, the device that is to be mounted or the space available at the mounting location 13-506.

Also integrally included as part of the mounting bracket 13-502 are a plurality of male projections 13-534 extending outwardly from the rib 13-518 of the mounting bracket 13-502. Each of the projections 13-534 forms one-half of a two-piece "snap-fit"-type fastener. The projections 13-534 may be included for interlocking with corresponding female receptacles 13-536 that are part of a finish trim piece 13-538, like a bezel, cover or grille, so that the finish trim piece 13-538 may be easily connected directly to the mounting bracket 13-502 to complete a component's installation. Any of a variety of suitable interlocking connections may be included in the mounting bracket 13-502 and trim piece 13-538.

The mounting bracket 13-502 is shown in FIG. 13-5 to be generally rectangular in shape. The mounting bracket 13-502 may, of course, be of any shape, size and configuration that is suitable to accommodate the particular device that is to be mounted.

Assembly of the loudspeaker 13-100 with the mounting bracket 13-502 is accomplished by installing the loudspeaker 13-100 from the front side of the mounting bracket 13-502 (in the direction of arrow A). The loudspeaker 13-100 is "snap-fit" into the mounting bracket 13-502. The loudspeaker 13-100 is retained within the interior space 13-516 of the mounting bracket 13-502 between the back panel section 13-508 and the inwardly extending rib portions 13-520 that overlay a peripheral portion of the flange 13-412 on the loudspeaker's 13-100 frame 13-102. In this configuration, the depth of the interior space 13-516 of the mounting bracket 13-502 closely matches the overall thickness of the loudspeaker 13-100 so that the mounting bracket 13-502 adequately retains the loudspeaker 13-100. Optionally, the loudspeaker 13-100 may be attached directly to the back panel section 13-508 of the mounting bracket 13-502, such as through the use of an adhesive. Also, a hook and loop fastener, like Velcro^{®}, that is adhered by an adhesive to the back panel section 13-508 and the back of the loudspeaker 13-100, may be employed. Such an arrangement may be employed in addition to, or in lieu of, ribs 13-518.

A trim piece 13-538, in this case, for example, a speaker grille, may then be attached to the mounting bracket 13-502. The grille 13-538 is secured to the mounting bracket 13-502 by the interlocking of the female receptacles 13-536 located about its periphery 13-546 with the corresponding male projections 13-534 extending outwardly from the rib 13-518 of the mounting bracket 13-502. Thus, the mounting bracket 13-502 facilitates the finished installation of the loudspeaker 13-504 with an aesthetically pleasing appearance.

Installation of the loudspeaker 13-100 via the mounting bracket 13-502 is accomplished by assembling the loudspeaker 13-100 with the mounting bracket 13-502, and installing the assembly at the mounting location 13-506 with fasteners 13-530. Preferably, the loudspeaker 13-100 is attached to the mounting bracket 13-502 prior to installing the mounting bracket 13-502 at the mounting location 13-506. Alternatively, however, the mounting bracket 13-502 may first be installed at the mounting location 13-506, and the loudspeaker 13-100 subsequently be assembled with the mounting bracket 13-502.

FIG. 13-6 shows another embodiment of a mounting apparatus 13-600 of the invention. Here, it is the finish trim piece or grille 13-638 (and not a separate mounting bracket) that incorporates features to enable the loudspeaker 13-100 to be mounted while minimizing the number of components in the mounting apparatus 13-600. As illustrated, the grille 13-638 includes one or more flange(s) 13-628 that allow the grille 13-638 to be directly attached at the mounting location 13-606.

Included in two or more sidewalls 13-612 of the grille 13-638, at locations intermediate the opposite ends of the sidewalls 13-612, are elongated flanges or ribs 13-618 that project inward toward the interior space 13-616 of the grille13-638. The configuration of the elongated ribs 13-618 enable the loudspeaker 13-100 to be retained within the interior space 13-616 of the grille 13-638 about the peripheral portion of the loudspeaker 13-100 frame 13-102 (e.g., flange 13-412) between the ribs 13-618 and the front face 13-650 of the grille 13-638. The grille 13-638 may then be secured at the mounting location 13-606 at flange(s) 13-628 by means of threaded fasteners 13-630 in cooperation with apertures 13-629 in the mounting location 13-606 and apertures 13-631 of grille 13-638. Again, elimination of a separate mounting bracket component is achieved, thereby enabling a simpler, faster, and more economical installation of the loudspeaker 13-100.

Referring to the mounting apparatus 13-500, 13-600 shown in FIGs. 13-5 and 13-6, the mounting location 13-506, 13-606 is illustrated as being a surface of a generally planar configuration. The mounting location 13-606 may comprise, for example, a structural pillar or other space-claim in an automobile or other vehicle. Apertures 13-529, 13-629 are included in the mounting location 13-506, 13-606 and cooperate with the threaded fasteners 13-530, 13-630 to mount the loudspeaker 13-100. Accordingly, the apertures 13-529, 13-629 are positioned in the mounting location 13-506, 13-606 to ensure that the loudspeaker 13-100 is accurately located at its desired position in the vehicle.

The mounting apparatus 13-500, 13-600 may be constructed of any suitable material that possesses the strength to ensure that, upon installation, the component is securely fixed at the mounting location and will continue to maintain a secure mount and withstand the operating conditions experienced by the loudspeaker 13-100 in the vehicle. Preferably, too, the material will enable the

One contemplated method of manufacture for the mounting bracket 13-502 and grille 13-538, 13-638 is to be molded in one piece from plastic, such as by plastic injection molding or otherwise. There are a variety of suitable, low-cost plastic materials that may be utilized for such an application that possess both the required structural characteristics as well as the additional desirable features like light weight.

Another embodiment of the invention is illustrated in FIGs. 13-7 and 13-8. FIGs. 13-7 and 13-8 show a mounting apparatus 13-700 for installing an electro-dynamic loudspeaker 13-100 in a fixed, non-parallel orientation relative to a mounting location 13-706. The mounting apparatus 13-700 is operable to mount and orient the loudspeaker 13-100 at the mounting location 13-706 at a desired or predetermined fixed angle θ relative to the mounting location, such as may be necessary or preferred to achieve the optimum performance of the loudspeaker 13-100 in a listening environment.

The mounting apparatus 13-700 comprises a mounting bracket 13-702 that shares many structural features similar to that of the mounting bracket 13-502 (shown in FIG. 13-5 and discussed above). In this regard, then, the like features of the mounting brackets 13-502 and 13-702 are labeled with corresponding reference numerals.

Located at opposite ends 13-750, 13-752 of the mounting bracket 13-702 are a first leg 13-754 and a second leg 13-756, respectively. The legs 13-754, 13-756 each generally extend from the mounting bracket 13-702 in a direction toward the mounting location 13-706. The legs 13-754, 13-756 each terminate at flanges 13-728 that enable the mounting bracket 13-702 to be secured to the mounting location 13-706. The flanges 13-728 each have an aperture 13-731 that is operable to receive any suitable fastening device, such as threaded fastener 13-730, to secure the mounting bracket 13-702 to the mounting location 13-706.

As best illustrated in FIG. 13-8, first leg 13-754 has a length L₁ and second leg 13-756 has a length L₂. Length L₁ and Length L₂ are different from one another, with the first leg 13-754 (length L₁) being longer than the second leg 13-756 (length L₂). Consequently, when the mounting bracket 13-702 is attached at the mounting location 13-706, the loudspeaker 13-100 is oriented at an angle θ relative to the mounting location 13-706. By changing the relative lengths L₁ and L₂ of the first and second legs 13-754, 13-756, then, the loudspeaker 13-100, assembled with the mounting bracket 13-702, may be positioned at any desired angle θ relative to the mounting location 13-706. In general, the angle θ would most likely be between about 0° to about 45°.

Orienting the loudspeaker at a particular angle θ may be important or necessary to achieve the desired audio effect or performance in the listening environment. Of course, if it is desired that the loudspeaker 13-100 not be angled relative to the mounting location 13-706 (e.g., the loudspeaker 13-100 is parallel with the mounting location 13-706), then the first and second legs 13-754, 13-756 may be of equal length, *i.e.,* L₁ and L₂ are equal.

Assembly of the loudspeaker 13-100 with the mounting bracket 13-702 is accomplished from the front side of the mounting bracket 13-702, as described above with reference to mounting apparatus 13-500. The loudspeaker 13-100/mounting bracket 13-702 assembly may then be secured at the mounting location 13-706 via fasteners 13-730. The fasteners 13-730 pass through apertures 13-731 in flanges 13-728 and are attached at the mounting location in apertures 13-729. Of course, other suitable fastening or attachment methods may also be employed to secure the mounting bracket 13-702 to the mounting location 13-706.

As shown in FIG. 13-8, the mounting apparatus 13-700 is particularly suited for and may be employed where the mounting location 13-806 comprises a cavity 13-858 of a suitable shape and size to receive mounting bracket 13-702 and loudspeaker 13-100, as assembled.

Mounting location 13-806 includes an exterior mounting surface 13-860, an interior mounting surface 13-862, and a plurality of interior sidewalls 13-864 which span the distance between the interior mounting surface 13-862 and the exterior mounting surface 13-860. The exterior mounting surface 13-860, interior mounting surface 13-862 and interior sidewalls 13-864 combine to create a cavity 13-858 that serves as the space claim for the loudspeaker 13-100 and mounting apparatus 13-700, *i.e*., the three-dimensional location which may be occupied by the loudspeaker 13-100 and mounting apparatus 13-700.

The mounting location 13-806 may be, for example, in the interior passenger compartment of an automobile or other vehicle. In this regard, the mounting location may be part of a door panel, headliner, seating unit, overhead or floor console, structural pillar, interior trim panel, dashboard, instrument cluster, or the like. Consequently, the depth of the cavity 13-858 (*e.g*., the length of the interior sidewalls 13-864) may be as small as between one and two inches (25 mm - 50 mm).

To provide a protective cover for the loudspeaker 13-100 and to create an aesthetically pleasing appearance at the mounting location 13-806, a trim piece 13-866 may be attached to the exterior mounting surface 13-860 of the mounting location 13-806. As shown in FIG. 13-8, the trim piece 13-866 may comprise, for example, a speaker grille. The grille 13-866 may be secured to the exterior mounting surface 13-860 by any of a variety of methods, including those previously discussed herein. FIGs. 13- 8 and 13-17 illustrate a "snap-fit" connection for the grille 13-866 to the exterior mounting surface 13-860. A plurality of male projections 13-868 on the grille 13-866 interlock with a corresponding number of female receptacles or slots 13-870 that are located in the exterior mounting surface 13-860. The plurality of male projections 13-868 and female receptacles 13-870 are positioned about the periphery of the grille 13-866 and the cavity 13-858, respectively.

Still another embodiment of the invention is illustrated in FIG. 13-9. The mounting apparatus 13-900 shown in FIG. 13-9 comprises a mounting bracket 13-902 that is similar to that shown in FIG. 13-7 and 13-8 and, therefore, like features of the mounting bracket 13-902 are labeled with corresponding reference numerals.

The difference between the mounting bracket 13-902 and the mounting bracket 13-702, discussed above, is that the mounting apparatus enables the loudspeaker to be assembled with the mounting bracket 13-902 from the side of the mounting bracket 13-902 via a "slide-fit" assembly. In this regard, the sidewall 13-912 extends from the back panel section 13-908 from only three sides of the mounting bracket 13-902. Consequently, the mounting bracket 13-902 is left with an open end 13-971.

Assembly of the loudspeaker 13-100 with the mounting bracket 13-902, then, simply requires that the loudspeaker 13-100 be slid into the interior space 13-916 in the direction of arrow B. The loudspeaker 13-100 is retained within the interior space 13-916 of the mounting bracket 13-902 between the back panel section 908 and the inwardly extending ribs 13-918 and rib portions 13-920 that overlay a peripheral portion of the flange 13-412 on the loudspeaker's 13-100 frame 13-102.

FIGs. 13-10 and 13-11 illustrate yet an additional embodiment of a mounting apparatus 13-1000 of the invention. Mounting apparatus 13-1000 is also similar to the mounting apparatus 13-700 illustrated in FIGs. 13-7 and 13-8. As before, like reference numbers in the FIGs. identify like features and/or characteristics of the mounting apparatus.

Mounting apparatus 13-1000 enables the loudspeaker 13-100 to be assembled with the mounting bracket 13-1002 from either the front side or the back side of the mounting bracket 13-1002, as indicated by arrows C and D in FIG. 13-11. As shown, mounting bracket 13-1002 eliminates the back panel section that was included in the other mounting brackets 13-502, 13-702, 13-902, discussed above. Instead, the mounting bracket 13-1002 includes additional ribs 13-1072 inwardly extending from the sidewall 13-1012 and which are offset from the ribs 13-1018. Ribs 13-1018 and 13-1072 are generally parallel to one another and separated by a distance that is approximately equal to the thickness of the flange 13-412 on the frame 13-102 of the loudspeaker 13-100.

Together, ribs 13-1018 and 13-1072 form apertures 13-1074, 13-1076, respectively, in the mounting bracket 13-1002 through which the loudspeaker 13-100 may be passed for "snap-fit" assembly with the mounting bracket 13-1002. Similar to the assembly method that is discussed above, the loudspeaker 13-100 is retained in the mounting bracket 13-1002 by the inwardly extending ribs 13-1018, 13-1072 that overlay a peripheral portion of the flange 13-412 on the loudspeaker's 13-100 frame 13-102. In this embodiment, however, the mounting bracket 13-1002 only retains flange 13-412 on the loudspeaker's 13-100 frame 13-102, while the remainder of the frame 13-102 is exposed at the back side of the mounting bracket 13-1002.

Still a further embodiment of the invention is illustrated in FIGs. 13-12 through 13-20 in mounting apparatus 13-1200. Mounting apparatus 13-1200 is operable for mounting an electro-dynamic loudspeaker 13-100 and provides for an adjustably variable angular orientation of the loudspeaker relative to the mounting location 13-806. As best illustrated in FIGs. 13-12, 13-13, 13-14 and 13-16, the mounting apparatus 13-1200 generally includes a mounting bracket 13-1402, a trim cover or grille 13-1266, and a guide bracket or slide 13-600.

FIG. 13-14 shows a mounting bracket 13-1402 for use with the mounting apparatus 13-1200. Mounting bracket 13-1402 includes a generally planar first panel section 13-1408 that is coupled to a lower support portion or second panel section 13-1409 by way of a "living" hinge 13-1411. The hinge 13-1411 comprises a V-shaped groove 13-1413 integrally formed in the mounting bracket 13-1402 between the first panel section 13-1408 and the second panel section 13-1409. The hinge 13-1411 enables the first panel section 13-1408 and the second panel section 13-1409 to pivot relative to one another over an angle ϕ. As shown in FIGs. 13-12 and 13-13, the angle ϕ may have a maximum value between about 120° and about 145°. Of course, the hinge 13-1411 may be designed to accommodate any desired angular range for relative orientation of the first panel section 13-1408 and second panel section 13-1409.

A sidewall 13-1412 extends generally orthogonally from three sides of the first panel section 13-1408 of the mounting bracket 13-1402 to define the an outer boundary and interior space 13-1416 of the first panel section. Optionally, a plurality of apertures (such as those shown in FIGs. 13-5 and 13-7) may be included in the first panel section 13-1408 to, for example, reduce the cost and/or weight of the mounting bracket 13-1402 or to provide air passageways through the mounting bracket 13-1402, as necessary.

Extending inwardly from the sidewall 13-1412 and toward the interior space 13-1416 of the mounting bracket 13-1402, is a flange or rib 13-1418. The rib 13-1418 generally lies in a plane that is parallel to and offset from the first panel section 13-1408 for a distance that is approximately the same as the thickness of the loudspeaker. Portions 13-1420 of the rib 13-1418 extend still further inwardly from the sidewall 13-1412.

Similar to that discussed above in connection with the embodiment of the invention shown in FIG. 13-9, because the sidewall 13-1412 of the first panel section 13-1408 extends from only three sides of the first panel section 13-1408, the mounting bracket 13-1402 includes an open end 13-1471. As such, the open end 13-1471 enables the mounting bracket 13-1402 to receive a loudspeaker 13-100 in the interior space 13-1416 by way of a "slide-fit" assembly. The loudspeaker 13-100 is preferably attached to the mounting bracket 13-1402 prior to installing the mounting bracket 13-1402 at the mounting location 13-806.

Referring to FIGs. 13-14 and 13-15, the mounting bracket 13-1402 further includes an elongate arm 13-1415 that extends from the sidewall 13-1412. The arm 13-1415 is preferably located at a position on the sidewall 13-1412 that is opposite the hinge 13-1411, as best seen in FIGs. 13-13 and 13-14. The arm 13-1415 is pivotably connected to the sidewall 13-1412 at one end by way of a "living" hinge 13-1511 integrally formed in the mounting bracket 13-1402 between the arm 13-1415 and sidewall 13-1412 by a V-shaped groove 13-1513 that encompasses the perimeter of the arm 13-1415. In a preferred embodiment, the arm 13-1415 is capable of pivoting about the hinge 13-1511 for at least 90° in all directions relative to the sidewall 13-1412. At the end of the arm 13-1415 opposite the hinge 13-1511 is a handle portion 13-1517. The handle portion 13-1517 extends traverse to the longitudinal length of the arm 13-1415 in a T-shaped configuration, as seen in FIG. 13-15.

The second panel section 13-1409 preferably includes a plurality of fasteners 13-1419 which project from a bottom surface 13-1421 of the second panel section. The fasteners 13-1419 are shown to be "Christmas-tree"-type male projections that are designed to be received in corresponding apertures 13-829 at the mounting location 806. The fasteners 13-1419 serve to secure the mounting bracket 13-1402 at the mounting location 13-806, as discussed further below. Alternatively, any other suitable fastening device may be employed to affix the mounting bracket 13-1402 to the mounting location 13-806, such as threaded fasteners, a hook and loop fastener, or adhesive, for example.

Further, although the second panel section 13-1409 is shown to be a solid panel, it too may include an aperture or plurality of apertures. Alternatively, the second panel section 13-1409 may simply comprise a skeletal frame structure. Such modifications may serve to reduce the weight or cost of the mounting bracket 13-1402 component.

The mounting bracket 13-1402 is shown to be of a unitary construction. It is contemplated that the mounting bracket 13-1402 may be molded in one piece from plastic. However, other well-known materials and manufacturing techniques, including a sheet-metal stamping, among others, could be employed in the manufacture the mounting bracket 13-1402.

A speaker grille 13-1266 is also included in the mounting apparatus 13-1200 to provide a protective cover for the loudspeaker 13-100 and to create an aesthetically pleasing appearance for the installation at the mounting location 13-806.

The grille 13-1266 generally forms a planar front-side panel for the apparatus 13-1200. The grille 13-1266 includes a narrow, vertically extending slot 13-1269 that is offset to one side of the grille 13-1266. As best seen in FIG. 13-12, the slot 13-1269 is formed so as to include a series of protrusions 13-1270 that bulge from the opposing sidewalls 13-1272 of the slot 13-1269. The protrusions 13-1270 are configured in horizontally oriented pairs that create positive stop locations 13-1271 along the length of the slot 13-1269, as will be discussed in greater detail below.

The grille 13-1266 also includes plurality of male projections 13-1268 that are positioned about the periphery of the grille 13-1266. A corresponding plurality of female receptacles 13-870 are located in the exterior mounting surface 13-860 of the mounting location 13-806. The male projections 13-1268 are received within the female receptacles 13-870 to attach the grille 13-1266 at the mounting location in a manner as already described.

Received within the slot 13-1268 from the front side of the grille 13-1266 is a guide bracket or slide 13-1600. The slide 13-1600, which is best shown in FIGs. 13-16, 13-18 and 13-19, includes a rectangular base portion 13-1602 having a front side 13-1804 and a back side 13-1806. An aperture 13-1608 passes through the center portion of the slide 13-1600. Located near the center of the base portion 13-1602 and on opposite sides of the aperture 13-1608, are two semi-circular-shaped recesses 13-1811. The shapes of the recesses 13-1811 each generally conform to the shape of the handle portion 13-1517 of the arm 13-1415 of the mounting bracket 13-1402.

A pair of legs 13-1810 extend outwardly and orthogonally from the back side 13-1806 of the base portion 13-1602 (see FIGs. 13-18 and 13-19). Included at the end of each leg 13-1810 is a "Christmas tree"-type projection 13-1812 that enables the slide 13-1600 to be "snap-fit" into and engage the back side 13-1814 of the grille 13-1266.

Both the grille 13-1266 and the slide 13-1600 may each be molded from plastic.

In a preferred method for installation of the mounting apparatus 13-1200, the loudspeaker 13-100 is pre-assembled with the mounting bracket 13-1402 by sliding the loudspeaker 13-100 into the interior space 13-1416 of the first panel section 13-1408. The loudspeaker 100/mounting bracket 13-1402 assembly may then be installed in the cavity 13-858 of the mounting location 13-806 by way of the fasteners 13-1419 on the second panel section 13-1409 which are received and retained in apertures 13-1365 in an interior sidewall 13-864 of the mounting location 13-806. Once installed in the cavity 13-858, the second panel section 13-1409 is securely retained in at the mounting location 13-806, while the first panel section 13-1408 is free to pivot about the hinge 13-1411.

The grille 13-1266 and slide 13-1600 are also pre-assembled. In this regard, the legs 13-1810 of the slide 13-1600 are passed through the slot 13-1268 from the front side 13-1816 of the grille 13-1266, such that the legs 13-1810 are "snap fit" into the slot 13-1268 and retained there by the projections 13-1812 which engage the back side 13-1814 of the grille 13-1266. Once assembled with the grille 13-1266, the slide 13-1600 is free to move in and along the slot 13-1268.

The grille 13-1266/slide 13-1600 assembly may then be installed at the mounting location 13-806. However, prior to inserting the male projections 13-1268 of the grille 13-1266 into the female receptacles 13-870 in the exterior mounting surface 13-860, the arm 13-1415 is passed through both the slot 13-1268 of the grille 13-1266 and the aperture 13-1608 of the slide 13-1600. In order to accomplish this step, the orientation of the grille 13-1266 and/or arm 13-1415 may need to manipulated. Once the arm 13-1415 is passed through the grille 13-1266/slide 13-1600 assembly, the handle portion 13-1517 of the arm 13-1415 is deposited in the recesses 13-1811 of the slide 13-1600, as best shown in FIG. 13-6. A "snap-fit" construction may also be used to retain the handle portion 13-1517 in the recesses 13-1811, while simultaneously allowing for relative rotational movement between the handle portion 13-1517 and the recesses 13-1811.

Finally, the grille 13-1266 may be reoriented, as necessary, and attached at the mounting location 13-806 by way of the male projections 13-1268 and the female receptacles 13-870. The installation of the mounting apparatus 13-1200 then complete.

Once installed, the angular orientation of the loudspeaker 13-100 may be controlled by the slide 13-1600. Specifically, as illustrated in FIGs. 13-12 and 13-13, the position of the slide 13-1600 within the slot 13-1268 determines the angle of the loudspeaker 13-100 relative to the mounting location 13-806.

As the slide 13-1600 travels from one stop location 13-1271 to an adjacent stop location 13-1271 in the slot 13-1268, the legs 13-1810 of the slide 13-1600 come into contact and abut the protrusions 13-1270. As illustrated in FIG. 13-19, continued travel of the slide 13-1600 is accomplished when the legs 13-1810 are caused to flex inwardly and are thereby able to pass over the protrusions 13-1270. The legs 13-1810 return to an un-flexed state when the slide 13-1600 is moved to the adjacent stop location 13-1271.

Referring again to FIG. 13-13, vertical movement of the slide 13-1600 changes the angular orientation of the loudspeaker 13-100. As shown, when the slide 13-1600 moves vertically downward in the direction of arrow X, the handle 13-1517 on the arm 13-1415 of the mounting bracket 13-1402 moves with the slide 13-1600 and causes the arm 13-1415 to rotate in the direction of arrow Y. As the arm 13-1415 rotates, the first panel section 13-1408 is drawn in the direction of arrow Z, pivoting about the hinge 13-1411 and reducing the included angle between the first panel section 1408 and the second panel section 13-1409. Vertical movement of the slide 13-1600 in the opposite direction reverses the effect, and increases the included angle between the first panel section 13-1408 and the second panel section 13-1409.

The position of the slide 13-1600 may be manually established, such as by a user, at any one of the stop locations 13-1271 thereby adjusting the orientation angle for the loudspeaker. Alternatively, the position of the slide may be controlled electronically or electro-mechanically, and may even be associated with memory positioning apparatus that are commonly available in automobiles, such as for control of personalized seat and mirror positioning, for example.

Yet an additional embodiment of a mounting apparatus 13-2000 of the invention is depicted in FIGs. 13-20 through 13-22. FIG. 13-20 generally illustrates the mounting apparatus 13-2000 as including a loudspeaker 13-2001, a mounting bracket 13-2002, and a trim piece 13-2066. The mounting apparatus 13-2000 is shown being installed at a mounting location 13-2006. FIG. 13-22 shows the mounting apparatus 13-2000 as installed at a mounting location 13-806, as has been previously described herein. Generally speaking, the mounting apparatus 13-2000 comprises a ball-and-socket-type arrangement that provides six degrees of freedom and enables the loudspeaker 13-2001 to be variably oriented about the x-axis, y-axis and z-axis of the mounting location 13-2006. 13-806.

In addition to the components and features of loudspeaker 13-100, the loudspeaker 13-2001 further includes a ball component 13-2003. The ball 13-2003 comprises a spherically-shaped male head portion 13-2005 and a neck portion 13-2007 which is located intermediate the head portion 13-2005 and the loudspeaker 13-2001. The neck portion 13-2007 serves as an attachment point for the ball 13-2003 to the loudspeaker 13-2001 and to offset the head portion 13-2005 a short distance from the loudspeaker's 13-2001 frame 13-2009.

The ball component 13-2003 may either be integrally formed as part of the frame 13-2009 of the loudspeaker 13-2001 or as a separate component that is attached to the loudspeaker 13-2001 at its frame 13-2009. If as a separate component, the ball 13-2003 component may be attached to the loudspeaker 13-2001 by an adhesive or by threads, for example. It is contemplated that the ball component 13-2003 may be molded from plastic, although any other suitable manufacturing material and method may be used.

A mounting bracket 13-2002 is shown to comprise a framework having a base 13-2011, a plurality of flanges 13-2028, a plurality of support legs 13-2013 and a socket component 13-2015. The base 13-2011 supports the mounting bracket 13-2002 at the mounting location 13-2006. A plurality of flanges 13-2028 extend from the base 13-2011 and provide locations at which the mounting bracket 13-2002 may be secured to the mounting location 13-2006, such as via a threaded fastener 13-2030, or as otherwise well-known or disclosed herein. The flanges 13-2028 may further include a neck portion 13-2032 that allow the position and/or orientation of the flanges 13-2028 to be manipulated, such as by bending or twisting, to better conform to the surface at the mounting location 13-2006. Of course, the number and location of the flanges 13-2028 may be determined by the requirements of the mounting apparatus 13-2000, such as the size, shape, and weight of, and the operating conditions seen by, the loudspeaker 13-2001 or other device that is to be mounted or the space available at the mounting location 2006.

A plurality of support legs 2013 project up from the base 13-2011 to the socket component 13-2015. The socket component 13-2015 is supported by the support legs 13-2013 in a location that is generally central to the framework and offset from the base 13-2011. The socket component 13-2015 comprises a spherically-shaped female receptacle portion 13-2017 having a diameter that is sized to closely match the diameter of the head portion 13-2005 of the ball component 13-2003.

The loudspeaker 13-2001 and mounting bracket 13-2002 are assembled by inserting the head portion 13-2005 of the ball component 13-2003 on the loudspeaker 13-13-2001 into the receptacle 13-2017 of the socket component 13-2015. Such assembly may be accomplished by any of several well-known methods, including a snap fit of the ball 13-2003 into the socket 13-2015. Assembly of the loudspeaker 13-2001 with the mounting bracket 13-2002 may be done either prior or subsequent to affixing the mounting bracket 13-2002 to the mounting location 13-2006.

As shown in FIG. 13-22, once assembled, the loudspeaker is rotatable and/or pivotable in any direction relative to the mounting bracket 13-2002. Further, the respective surfaces of the receptacle 13-2017 and/or the head portion 13-2005 may be formed from, coated by, or treated with, a suitable material that increases the coefficient of friction between the receptacle 13-2017 and the head portion 13-2005. In this manner, the loudspeaker 13-2001 may be securely held in any particular orientation simply by friction.

The mounting bracket 2002 is shown in FIG. 13-21 to be generally rectangular in shape. The mounting bracket 13-2002 may, of course, be of any size shape and configuration that is suitable to accommodate the particular device that is to be mounted or the space that is available at the mounting location 13-2006. Similarly as previously discussed, the mounting bracket 13-2002 is shown to be of unitary construction and it is contemplated that it may be molded in one piece from plastic.

As with the other embodiments of the invention discussed above, to provide both a protective cover and an aesthetically pleasing appearance for the installation, a trim piece 13-2066 may be attached at the mounting location 13-2006 by interlocking the male projections 13-2034 extending from the periphery of the trim piece 13-2066 in female receptacles 13-2036 at the mounting location 13-2006. As shown in FIG. 13-22, a grille13-866 is similarly attached at mounting location 13-806.

FIGS. 14-6 through 14-10 show the forming of a conductor 14-600 by attaching magnet wire 14-602 to the film 14-604. The conductor 14-600, which is comprised of magnet wire, may be arranged in a serpentine fashion and applied to the film 14-604 by an adhesive. As is the case with the electro-dynamic loudspeaker described above with reference to FIGS. 14-1 through 14-5, the electro-dynamic loudspeaker 14-606 includes a frame 14-608 having a plurality of magnets 14-610 mounted therein as is described above. The film 14-604 is attached to the frame 14-608 by an adhesive 14-612.

In FIGS. 14-8 through 14-10, a method for forming the magnet wire 14-602 in a serpentine configuration is shown, including a fixture 14-800 having a plurality of retractable spindles 14-802 around which the magnet wire 14-602 is wound in a serpentine pattern as illustrated in FIGS. 14-8 and 14-9. The fixture 14-800 includes an upper plate 14-900 and a retractable plate 14-902 to which the spindles 14-802 are fixedly connected. The spindles 14-802 pass through apertures provided in the upper plate 14-900. After the magnet wire 14-602 is wound around the spindles 14-802, the fixture 14-800 is disposed adjacent to a film material and the retractable plate 14-902 is moved away from the upper plate 14-900 so as to cause the spindles 14-802 to retract. Once the spindles 14-802 are retracted to the point that their extension is less than a diameter of the magnet wire 14-602, the magnet wire 14-602 comes in contact with the film material. According to a preferred embodiment, the magnet wire 14-602 is coated with an adhesive which fixes the magnet wire 14-602 in the serpentine configuration to the film material. Optionally, a light can be shown through the film material in order to speed up the curing process of the adhesive that is applied to the magnet wire in order to more rapidly cure the adhesive. Once the adhesive is given appropriate time to cure, the spindles 14-802 are completely retracted so as to free the spindles from the magnet wire 14-602. The spindles 14-802 can be formed of a self-lubricating material or can be highly polished, or both, in order to reduce the friction between the spindles 14-802 and the magnet wire 14-602. In addition, the spindles 14-802 can be chemically treated to resist bonding with the adhesive applied to the magnet wire 14-602. The conductor 14-600 can be applied to the film 14-400 either prior to or after the film has been mounted to the frame 14-102 of the electro-dynamic loudspeaker.

In FIGS. 14-11 and 14-12, an electro-dynamic loudspeaker 14-1100 is provided with a conductor 14-1102 that is formed by ribbon-shaped wire 14-1104 which is provided with two narrow side edges 14-1200, 14-1202 and a pair of relatively wide faces 14-1204, 14-1206. The ribbon-shaped conductor preferably extends below an upper attachment surface 14-1208 of the frame 14-1210. By suspending the ribbon-shaped conductor below the upper attachment surface 14-1208 of the frame 14-1210, the conductor 14-1102 extends towards the magnets 14-1212 so as to be closer to the magnetic field lines generated by the magnets 14-1212. The ribbon-shaped conductor 14-1102 is attached to the film 14-1106 by an adhesive 14-1214 and can be formed in the same manner as the wire conductor 14-600 described above. In other words, the ribbon-shaped wire 14-1104 can be wrapped around a fixture such as that disclosed in FIGS. 14-8 through 14-10 (FIG. 14-12 through 14-10 shows the ribbon-shaped wire 14-1104) and applied to the film 14-1106 in the same manner as described above. By placing the ribbon-shaped conductor 14-1102 closer to the magnetic field, the intensity of the magnetic field lines are increased to allow a reduced strength magnet 14-1212 to be utilized which results in a cost savings for the manufacture of the electro-dynamic loudspeaker 14-1100. Alternatively, the performance can be enhanced by taking advantage of the stronger magnetic flux density with the ribbon-shaped conductor being closer to the magnetic field.

In FIG. 14-17, cap members 14-1700 can optionally be applied to the upper surface of the magnets 14-1212 in order to focus the magnetic field lines in a preferred direction relative to the conductor 14-1102. Although the cap members are shown in combination with a ribbon-shaped conductor 14-1102, the shape and configuration of the cap members 14-1700 can be varied in order to provide a desired magnetic field. As shown in FIG. 14-18, smaller caps 14-1800 permit a different shaped magnetic field for use with different configurations of conductors. The cap members 14-1700, 14-1800 are preferably made from a ferrous material and can be glued or otherwise held in place on the upper surface of the magnets 14-1212.

FIG. 14-13 illustrates an electro-dynamic loudspeaker 14-1300 having a diaphragm 14-1302 that has channels 14-1304 formed in the diaphragm 14-1302 and has electrical traces 14-1306 of a conductor 14-1308 disposed on opposite angularly disposed faces 14-1310, 14-1312 of the channels 14-1304. The channels 14-1304 allow the traces 14-1306 to be suspended below an upper attachment surface 14-1314 of the frame 14-1316 so that the traces 14-1306 can be placed within the higher intensity magnetic field lines generated by the magnets 14-1318. The film 14-1302 preferably has a thickness of between 2-5 mills in order to provide an appropriate rigidity for forming the channels 14-1304. The channels 14-1304 are formed by placing the film 14-1302 in a heated mold provided with upper and lower die members provided with a channel-shaped protrusion in one die member and a channel-shaped recess in the other die member so as to permanently deform the film member 14-1302 into the configuration shown in FIG. 14-13. The film 14-1302 can be deformed prior to or after the conductor 14-1308 is applied thereto. The ability to place the conductor traces 14-1306 within the higher intensity magnetic field lines facilitates the use of weaker magnets than are typically required for an electro-dynamic loudspeaker. The reduced strength magnets 14-1318 therefore contribute to a lesser expensive electro-dynamic loudspeaker 14-1300.

FIG. 14-14 illustrates a flowchart of an alternative method for forming the conductor on the film of an electro-dynamic loudspeaker. At Step 14-1400, an aluminum foil layer is applied to a film using an adhesive. At Step 14-1401, a laser is utilized to etch away aluminum from the surface of the film in order to define the traces of the conductor. During the laser etching process, coolant fluid can be sprayed at the film material in order to cool the film material to prevent damage thereto due to the heat generated by the laser etching process. Lasers of this type are currently used to cut vias in printed circuit boards but have not been utilized for removing a conductive material from a laminate.

FIGS. 14-15 and 14-16 illustrate an alternative method of forming the conductor where the conductor is laser cut from an aluminum foil in order to form flat traces 14-1600. At Step 14-1501, the conductor traces 14-1600 are applied to a film 14-1602. Adhesive is applied to a surface of the aluminum foil prior to laser cutting and the adhesive is cured by passing selective bands of light through the film material 14-1602 in order to more rapidly cure the adhesive.

FIG. 14-19 illustrates a method of forming an electrical conductor on a film is illustrated using an electron discharge machining (EDM) process. The film 14-1900 is provided with a layer of foil and an electrode plate 14-1902 having a face configuration with a void 14-1904 (shown in phantom in FIG. 14-19 on the underside of the plate 14-1902) in the desired shape of the electrical conductor. The electrode plate 14-1902 is brought in close proximity to the foil layer on the film 14-1900 and through a known "burning" process, an arc is formed from the electrode plate and "burns away" or otherwise removes the foil material so that the remaining foil is in the shape of the void 14-1904, which is in the desired shape of the electrical conductor 14-1906, as shown in FIG. 14-19. The electron discharge machining process is carried out with the electrode and workpiece immersed in a machining fluid which is a dielectric; i.e., an insulating medium. To generate a spark between the two parts, a voltage higher than the breakdown voltage of the gap is applied. This breakdown voltage depends on the distance between the two electrodes at their closest point, the insulating characteristic of the dielectric fluid, and the level of pollution in the gap.

At the point in the gap where the electric field is strongest a discharge commences which then develops as follows:

Under the effect of the electric field, the free positive ions and electrons are accelerated, acquiring a high velocity and, very rapidly, they form an electrically-conductive ionized channel.

At this stage, current can pass through the channel. A spark is initiated between the electrodes and a plasma is formed. This rapidly attains a very high temperature, expanding under the effect of numerous impacts of charged particles and causing instantaneous local melting of material at the surface of both conductors.

At the same time, due to vaporization of the electrodes and of the dielectric fluid, a gas bubble expands, and its pressure increases. At the moment the current is cut off, the gas bubble implodes due to the sudden fall of temperature, generating dynamic forces that results in melted material being ejected from the crater. This melted material is re-solidified in the dielectric fluid as small spheres and flushed away.

FIG. 14-20 illustrates a method of forming an electrical conductor on a film is illustrated. In the process, a foil, such as aluminum, is applied to a film 14-2000. A mask 14-2002 in the desired shape of a conductor is applied to the foil. An abrasive removing process is then employed to remove the foil in the unmasked areas. Preferably, a water jet device 14-2004 can be used with an abrasive slurry for abrading away the unmasked foil surface in order to leave the masked conductor shaped foil on the film 14-2000. Other known abrasive and polishing type processes can also be employed for abrasively removing the foil from the unmasked areas.

Various systems for assembling an example loudspeaker 100 will now be described. A first example system is depicted in Figures 15-5 through 15-17. The first system includes a vacuum platen 15-600 (FIGS. 15-6 - 15-7) and a film clamp 15-800 (FIGS. 15-8 - 15-9). Vacuum platen 15-600 and film clamp 15-800 may be used in conjunction with one another to restrain diaphragm 15-104 (FIG. 15-5) in a flat position without tension. Once diaphragm 15-104 is fixed within clamp 15-800, film 15-400 may be subsequently tensioned as will be described later.

The initial flattening and clamping of diaphragm 15-104 may provide the assembler with a known diaphragm state to which tension may be added. Difficulties may arise in attempting to obtain a reproducible tension during subsequent assembly operations when diaphragm 15-104 is not first placed in a substantially flat, no tension state. This first example system includes vacuum platen 15-600 and film clamp 15-800 to achieve a repeatable diaphragm state. In other examples, any other mechanism(s) and/or techniques capable of providing a known diaphragm state to which tension may be added may be used.

The example vacuum platen 15-600 includes a base 15-700 having a body 15-702 and a pedestal 15-704 protruding from a first surface 15-602 of body 15-702. Pedestal 15-704 includes an upper surface 15-706 positioned substantially parallel to first surface 15-602. A vacuum passageway 15-708 may extend through pedestal 15-704 and body 15-702 to couple upper surface 15-706 with a vacuum source 15-604. A cap 15-710 may be coupled to pedestal 15-704 along upper surface 15-706. Cap 15-710 may be constructed from a gas permeable material such as porous aluminum. Base 15-700 may be constructed from a gas impermeable material. Accordingly, a suction force is created along an upper surface 15-606 of cap 15-710 when vacuum source 15-604 draws a vacuum in vacuum passageway 15-708.

The example film clamp 15-800 includes an upper clamp half 15-802 and a lower clamp half 15-804 connected by a hinge 15-806. The illustrated upper clamp half 15-802 includes a generally rectangularly shaped body 15-808 and an elastomeric gasket 15-810. Body 15-808 includes an aperture 15-900 (FIG. 15-9) extending through body 15-808. Elastomeric gasket 15-810 includes a similarly shaped aperture 15-902 (FIG. 15-9) extending through the thickness of gasket 15-810. Elastomeric gasket 15-810 may be attached to body 15-808 to provide a compressible high friction surface 15-812 for engagement with diaphragm 15-104.

The illustrated lower clamp half 15-804 is constructed from a generally rectangularly shaped aluminum frame 15-814 having an aperture 15-904 extending through the lower clamp half 15-804. Lower clamp half 15-804 includes an upper surface 15-906 and a lower surface 15-908.

During the loudspeaker assembly process, film clamp 15-800 may be positioned on vacuum platen 15-600 such that pedestal 15-704 enters aperture 15-904 of lower clamp half 15-804 as illustrated in Figure 15-9. Once seated, upper surface 15-906 of lower clamp half 15-804 may be substantially coplanar with upper surface 15-606 of cap 15-710. In order to properly position diaphragm 15-104, upper clamp half 15-802 may be rotated to place film clamp 15-800 in the open position depicted in Figure 15-8.

With vacuum source 15-604 turned off, diaphragm 15-104 may be placed on upper surface 15-606. Diaphragm 15-104 may be aligned relative to lower clamp half 15-804 using sights 15-816. Sights 15-816 may be visual markings, rods, rings, notches or any other form of alignment mechanism formed on diaphragm 15-104 to assist in the alignment procedure. The location of sights 15-816 effectively defines a perimeter portion 15-818 and a center portion 820 of diaphragm 15-104. Center portion 820 may contain most, if not all, of the material which will remain coupled to frame 102 at the completion of the assembly process.

Once diaphragm 15-104 has been properly positioned, vacuum may be supplied to cap 15-710 via vacuum source 15-604. Because cap 15-710 is constructed from a gas permeable material, diaphragm 15-104 is forced to closely conform to planar upper surface 15-606. While the vacuum source is maintained, upper clamp half 15-802 may be rotated to place film clamp 15-800 in a closed position as shown in Figures 15-10 and 15-11. During clamp closure, elastomeric gasket 15-810 may deform locally to account for the thickness of diaphragm 15-104. Latches 822 secure upper clamp half 15-802 to lower clamp half 15-804. It should be appreciated that latches 822 are merely exemplary devices for coupling the clamp halves together and that any number of fastening devices may be implemented. Once upper clamp half 15-802 is clamped to lower clamp half 15-804, vacuum is turned off and film clamp 15-800 holding diaphragm 15-104 in an untensioned state is removed from vacuum platen 15-600.

Frame 102 may be fixtured in an example assembly fixture 15-1200 (Figs. 15-12 and 15-13). Assembly fixture 15-1200 may be shaped substantially similarly to vacuum platen 15-600. However, assembly fixture 15-1200 may include a recess 15-1300 for receipt of a portion of frame 15-102. Assembly fixture 15-1200 includes a gage surface 15-1302 offset a predetermined distance 15-1304 from planar mounting surface 15-408 of frame 15-102. In order to apply tension to diaphragm 15-104, distance 15-1304 is greater than the thickness of lower clamp half 15-804. The magnitude of tension generated is optimized by defining distance 15-1304 in concert with the physical characteristics of frame 25-102 and diaphragm 15-104.

Diaphragm 15-104 may be mechanically coupled with frame 102. For example, adhesive 15-406 may be applied to planar mounting surface 15-408 of frame 102. Adhesive 15-406 may alternatively be applied to diaphragm 15-104. After application of adhesive 15-406, film clamp 15-800 including clamped diaphragm 15-104 may be positioned on assembly fixture 15-1200 such that frame 15-102 enters aperture 15-904 of lower clamp half 15-804 (Figs. 15-14 and 15-15). The diaphragm 15-104 may contact adhesive 15-406 and planar mounting surface 15-408 of frame 15-102. Contact may occur prior to lower surface 15-908 of lower clamp half 15-804 contacting gage surface 15-1302 of assembly fixture 15-1200. To produce the desired tension in film 15-400, film clamp 15-800 is forced down over assembly fixture 15-1200 so that lower surface 15-908 engages gage surface 15-1302.

Depending on the type of adhesive used, a subsequent process may be required. For example, adhesive 15-406 is curable by exposure to radiation. Accordingly, while film clamp 15-800 is coupled to assembly fixture 15-1200, a radiation source 15-1500 is energized to cure the adhesive and secure diaphragm 15-104 to frame 15-102. Alternatively, where some other mechanical coupling mechanism is used, appropriate processes may need to be performed.

A second example system used to tension the diaphragm of a loudspeaker 100 is described with reference to Figures 15-16 and 15-17. In this system, frame 15-102 includes an elongated radially extending flange 15-1600 which does not include a downwardly extending lip. The remaining planar loudspeaker components are substantially similar to those previously described. The assembly process may include positioning diaphragm 15-104 in a substantially flat, no tension state as previously described. However, it should be appreciated that the flattening and clamping steps are not necessarily required to construct planar loudspeaker according to this system. Similarly, alternate tensioning methods that are described are not intended to be limited to include the flattening and clamping process.

A bead of adhesive 15-406 may be applied along the periphery of either or both frame 15-102 and diaphragm 15-104. Diaphragm 15-104 may then be aligned with and bonded to frame 15-102 via adhesive 15-406. As noted earlier, adhesive 15-406 may be a light curable material or any other suitable bonding agent which may affix the dissimilar materials to one another. Similarly, adhesive 15-406 may any other coupling mechanism to mechanically couple the diaphragm 15-104 to the frame 15-102.

Radially extending flange 15-1600 may be mechanically deformed by bending an outer peripheral region down from line 15-1700 as shown in Figure 15-17 to tension diaphragm 15-104. Line 15-1700 acts as a fulcrum around the perimeter of frame 15-102 about which diaphragm 15-104 is stretched. The proper diaphragm tension may be obtained in a variety of ways. For example, if diaphragm 15-104 was initially coupled to frame 15-102 in a substantially flat, non-tension state, a deflection distance 15-1702 may be empirically determined by testing. Once the proper deflection distance is determined, hard tooling may be created to repeatably deform frame 15-102 and move radially extending flange 15-1600 the predetermined deflection distance 15-1702 during the assembly of each loudspeaker 15-100.

Another example system of assuring proper film tension includes a feedback system 15-1602. One example feedback system may involve placing a known load at the center of diaphragm 15-104 and measuring the deflection of the diaphragm at the load application point. The desired deflection per load may be empirically determined by testing where the resonance frequency of diaphragm 15-104 is plotted against deflection per a given load. Once the desired resonance frequency is determined for a given speaker geometry, a target diaphragm deflection per given load may be determined. The feedback system may operate by measuring the actual diaphragm deflection at a known load with a deflection sensor 15-1604. The measured actual deflection may be compared to the target deflection.

Frame 15-102 may be deformed until the measured deflection is substantially equal to the target deflection, thereby properly tensioning diaphragm 15-104 to produce the desired resonance frequency. Logic control systems such as proportional, integral, derivative closed feedback loops, etc. may be implemented to control the mechanical deflection of frame 102 during the tensioning process. Such a control system may provide a high degree of repeatability regarding film tensioning.

Another example feedback system 15-1704 may directly measure resonance frequency during film tensioning using a frequency sensor 15-1706. In this control scheme, diaphragm 15-104 may be repeatedly excited and the resonance frequency measured. The measured frequency may be compared to a desired target frequency during film tensioning. Frame 15-102 may be deformed until the measured resonance frequency matches the target frequency within an acceptable tolerance. It should be appreciated that the feedback systems described may be used with any of the tensioning techniques described.

Yet another film tensioning system will be described in greater detail with reference to Figure 15-18. An example film tensioner 15-1800 includes an upper plate 15-1802 and a lower plate 15-1804. Plates 15-1802 and 15-1804 have matching beveled apertures 15-1806 and 15-1808, respectively. Center portion 15-820 of diaphragm 15-104 is positioned within the openings defined by apertures 15-1806 and 15-1808. Apertures 15-1806 and 15-1808 may be sized and shaped slightly larger than frame 15-102 to allow insertion of frame 15-102 within one of the apertures 15-1806 and 15-1808.

Upper plate 15-1802 may include an annular groove 15-1810 having an asymmetrical cross-section as shown in Figure 15-18. Lower plate 115-1804 may include an annular groove 15-1812 shaped as the mirror image of groove 15-1810. A first elastomeric member 15-1814 may be positioned within groove 15-1810 and a second elastomeric member 15-816 may be positioned within groove 15-1812. Grooves 15-1810 and 15-1812 may be shaped to constrain movement of the elastomeric members 1814 and 15-1816 toward apertures 15-1806 and 15-1808, respectively. In addition, grooves 15-1810 and 15-1812 may be shaped to allow movement of elastomeric members 15-1814 and 15-1816 away from apertures 15-1806 and 15-1808. Specifically, the annular grooves 15-1810 and 15-1812 may be shaped to impart a lateral force to center portion 15-820 of diaphragm 15-104 when an axial force is applied to upper plate 15-1802 and lower plate 15-1804 drawing them toward one another.

Upper plate 15-1802 may also include threaded apertures 15-1818. Stepped apertures 15-1820 extend through lower plate 15-1804. Threaded fasteners 15-1822, which are illustrated as bolts, may be inserted in apertures 15-1820 and tightened into threaded apertures 15-1818 to draw upper plate 15-1802 and lower plate 15-1804 together. It should be appreciated that upper plate 15-1802 and lower plate 15-1804 may be drawn together using a variety of mechanisms such as toggle clamps, jack screws, hydraulic cylinders or any other known clamping and force producing devices.

In this example technique, the film may first be tensioned by drawing upper plate 15-1802 and lower plate 15-1804 together. Adhesive 15-406 (or some other coupling mechanism) may be placed on the tensioned portion of diaphragm 15-104 and/or planar mounting surface 15-408 of frame 15-102. While upper plate 15-1802 is clamped to lower plate 15-1804, frame 15-102 may be placed into contact with diaphragm 15-104. Once the adhesive has cured (or mechanical coupling completed), the threaded fasteners 15-1822 may be removed and upper plate 15-1802 may be separated from lower plate 15-1804. It should also be appreciated that apertures 15-1806 and 15-808 may be sized to allow entry of light waves to cure adhesive 5-406, or to allow manipulation of some other coupling mechanism, if so desired. Depending on the specific configuration of the loudspeaker 5-100, perimeter portion 15-818 of diaphragm 15-104 may be trimmed to remove any film extending beyond lip 306.

With reference to Figures 15-15 through 15-19, another example film tensioning technique is depicted. The fixturing used to practice this example technique includes a fixture 15-1900 having a lower die 15-1902, and an upper die 15-1904. Fixture 15-1900 may function to restrain the periphery of diaphragm 15-104 and define a cavity 15-1906 between one side of the diaphragm 15-104 and lower die 15-1902. A fluid source 15-1908 may supply pressurized fluid to cavity 15-1906. Because lower die 15-1902 is constructed from a substantially rigid material, diaphragm 15-104 may elongate in tension as depicted in 15-19. Pressure is maintained within cavity 15-1906 while frame 15-102 is mechanically coupled with diaphragm 15-104. Diaphragm 15-104 may be secured to frame 15-102 using any number of previously discussed bonding techniques including mechanical fasteners, radiation curable adhesives, multi-part epoxies, heat curable adhesives or pressure sensitive compounds.

After diaphragm 15-104 has been fixed to frame 15-102, upper die 15-1904 may be removed. If desired, excess diaphragm material extending beyond the perimeter of frame 15-102 may be removed.

In this example technique, some of the initial tension generated by the pressurized fluid may relax during subsequent frame attachment process. Accordingly, a tension greater than the final desired tension may be initially induced via fluid source 15-1908 to assure that the film is properly tensioned during use.

Figures 15-20 through 15-22 depict another example of fixturing used to tension diaphragm 15-104 prior to attaching diaphragm 15-104 to frame 15-102. An example spider 15-2000 may operate in conjunction with an example base plate 15-2100 to tension diaphragm 15-104. Spider 15-2000 may be placed on a first side of diaphragm 15-104 while base plate 15-2100 may be placed on the opposite side of the diaphragm 15-104. Spider 15-2000 may function by converting an axial force applied in direction 15-2102 to a lateral tension produced in opposed directions 15-2200.

The illustrated spider 15-2000 is a generally pyramidal member having a hub 15-2002 positioned proximate to a truncated portion of the pyramid. A plurality of legs 15-2004 angularly extend from hub 15-2002. Each of the legs 15-2004 include a body portion 15-2006 and a foot portion 15-2008. Each foot portion 15-2008 radially extends from the distal end of each leg 15-2004. A pad 15-2010 is coupled (as shown in Figure 15-20) to a lower surface of each foot 15-2008. Pads 15-2010 may be constructed from a high friction, elastomeric material that is suitable for gripping diaphragm 15-104 without causing damage to diaphragm 15-104.

The illustrated base plate 15-2100 is a generally rectangularly-shaped member having an aperture 15-2104 extending through the base plate 15-2100. Aperture 15-2104 may be shaped similarly to the perimeter of frame 15-102 and sized such that frame 15-102 may be inserted into aperture 15-2104. Base plate 15-2100 includes a low friction surface 15-2106 upon which diaphragm 15-104 may freely slide. As best shown in Figure 15-21, each pad 15-2010 is supported by a portion of base plate 15-2100.

During tensioning, diaphragm 15-104 may be placed between base plate 15-2100 and spider 15-2000. An axial force may be applied to spider 15-2000 in direction 15-2102. Due to the angular orientation of legs 15-2004 relative to low friction surface 15-2106, at least some of the axial force applied in direction 15-2102 may be converted to opposing forces in opposed directions 15-2200. The opposed forces may tension diaphragm 15-104. After tensioning, frame 15-102 is mechanically coupled to diaphragm 15-104 as previously discussed.

Figure 15-23, is yet another example system for loudspeaker 100 assembly. In this system, frame 102 may be elastically deformed prior to attachment of diaphragm 15-104. The deformed frame 15-102 is represented in phantom lines at reference numeral 15-2300. It should be appreciated that any number of force generating devices or tools such as jack screws, hydraulic rams or other force producing devices may be used to elastically deform frame 15-102 by inwardly deflecting radially extending flange 304 and lip 306 (Figure 3) of frame 102. Frame 15-102 may be maintained in the deformed state shown as 2300 while diaphragm 104 (Figure 1) is attached to planar mounting surface 408 (Figure 4).

Once diaphragm 15-104 has been securely attached to frame 15-102, the external forces deforming frame 15-102 may be released. Because frame 15-102 was elastically deformed, flange 304 and lip 306 have a tendency to spring-back to their originally undeformed state. This tendency is resisted by diaphragm 15-104. Diaphragm 15-104 elongates as the deformed frame attempts to return to its undeformed state until an equilibrium is reached. Frame 15-15-102 may be constructed from steel, aluminum or any number of composite materials capable of being deformed. Materials having a modulus of elasticity less than 29,000 KSI are contemplated to provide a relatively large elastic deformation prior to yield. A large frame deformation is beneficial to account for elongation or deformation of adhesive 406 or other mechanical coupling used to bond diaphragm 15-104 to frame 102.

Frames constructed from molded plastic or composite materials offer additional opportunities to incorporate an arc or a bow across the frame as depicted in Figure 15-24. In the embodiment shown, a loudspeaker 15-2400 includes a bowed frame 15-2402. Frame 15-2402 manipulated to function as a spring washer tensioning diaphragm 15-104.

During assembly of loudspeaker 15-2400, frame 15-2402 is forced to a substantially planar condition. Diaphragm 15-104 is coupled to frame 15-2402 while the frame is in the substantially flat condition. Once diaphragm 15-104 has been securely attached to frame 15-2402, the external force maintaining frame 15-2402 in a substantially planar state is released. Because frame 15-2402 is elastically deformed, the frame has a tendency spring-back to its originally bowed shape. This tendency is resisted by diaphragm 15-104. Diaphragm 15-104 elongates as frame 15-2402 attempts to return to its bowed shape until an equilibrium is reached. At equilibrium, diaphragm 15-104 is in a tensioned state and no further movement of diaphragm 15-104 and frame 15-2402 occurs.

The bowed frame may be created using injection molding equipment such as that shown in Figure 15-25. An injection mold 15-2500 includes an upper mold half 15-2502 and a lower mold half 15-2504. A parting line 15-2506 runs along the length of frame 15-2402. The position of parting line 15-2506 is defined by the interface position of upper mold half 15-2502 and lower mold half 15-2504. The arc or bow is created by imparting a temperature differential between first mold half 15-2502 and second mold half 15-2504. The use of a differential mold temperature to bow the part will conceptually work for all molding resins. However, semi-crystalline resins such as Polybutylene Terephthalate (PBT), Polyethylene Terephthalate (PET), nylons, Polypropylene (PP) and blends incorporating these materials will produce an especially pronounced bow.

It should be appreciated that bowed frame 15-2402 may be produced from a mold having curved cavity surfaces machined within it as well. Standard temperature control techniques may then be used. Finally, it is contemplated that both concepts may be used in combination. Specifically, a mold having curved surfaces may be controlled to maintain mold half temperature differentials and obtain the desired bowed frame.

With reference to Figures 15-26 and 15-27, an alternate frame 15-2600 is shown. Frame 15-2600 is preferably constructed from a reinforced plastic. Frame 15-2600 is a generally dish-shaped member having a base 15-2602 surrounded by a wall 15-2604 extending substantially orthogonally therefrom. Wall 15-2604 terminates at a radially extending flange 15-2606 which defines a substantially planar mounting surface 15-2700. During assembly, diaphragm 15-104 is coupled to frame 15-2600 along planar mounting surface 15-2700. Base 15-2602 includes a first surface 15-2702, a second surface 15-2608 and a plurality of apertures 15-2610 extending therethrough. Apertures 15-2610 are positioned and sized to provide the desired passageways for air positioned between first 15-2702 and diaphragm 15-104 to flow.

A plurality of magnets 15-2704 are integrally molded within frame 15-2600. As best shown in Figure 15-28, each of magnets 15-2704 includes a slot 15-2800 extending transversely across each end of magnet 15-2704. Figure 15-29 depicts slots 15-2800 filled with the composite material of frame 15-2600 after an over-molding process has been completed. Accordingly, slots 15-2800 perform a retention function to fix each of magnets 15-2704 within frame 15-2600. Each magnet 15-2704 includes an upper surface 15-2802 positioned coplanar with surface 15-2702 of frame 15-2600. Because magnets 15-2704 are recessed within body 15-2600, the overall height of frame 15-2600 may be reduced to provide a low-profile frame and loudspeaker assembly.

Additionally, the embedded magnet design provides a cost savings in relation to magnets 15-2704. Magnets mounted to a steel frame must have closely controlled thicknesses to assure that the upper surface of each magnet is positioned at a proper distance from diaphragm 15-104. Surfaces 15-2802 of magnets 15-2704 are designed to be substantially co-planar with surface 15-2702 of frame 15-2600 in the molding machine. During molding, the magnets are placed on a spring loaded tool 15-2900 (shown in phantom line in FIG. 15-29) to align each upper surface 15-2802 of magnets 15-2704 with each other in a single plane. Because injected resin flows around the magnets and the spring loaded tool, the thicknesses of magnets 15-2704 need not be closely controlled. For example, Figure 15-29 depicts magnet 15-2704 having a first thickness 15-2902. A magnet 15-2904 has a different thickness 15-2906. The variation in magnet thickness is accommodated within the body of frame 15-2600. A cost savings results by using magnets having a greater tolerance on the thickness dimension.

As best shown in Figure 15-26, a pair of electrical terminals 15-2612 are over-molded within frame 15-2600. Each electrical terminal 15-2612 includes a male prong 15-2614 and a plate portion 15-2616. A socket 15-2618 is integrally molded with frame 15-2600. Socket 15-2618 includes a wall 15-2620 extending from surface 15-2608. Wall 15-2620 surrounds male prongs 15-2614 and is shaped to mate with a female plug (not shown) used to electrically couple the loudspeaker to a power source.

Each plate portion 15-2616 includes an aperture 15-2622 extending therethrough. Apertures 15-2622 extend through flange 15-2606 as well. After diaphragm 15-104 is coupled to mounting surface 15-2700, an electrical connection is made between plate portions 15-2616 and conductor 106 of diaphragm 15-104.

With reference to Figure 15-30, an alternate embodiment frame 15-3000 is depicted. Frame 15-3000 includes a pair of electrical terminals 15-3002 molded within a frame 15-3004. Each electrical terminal 15-3002 includes male prong portions 15-3006 and inwardly extending portions 15-3008. Inwardly extending portions 15-3008 are soldered to conductor 106 of diaphragm 15-104 after the diaphragm has been coupled to frame 15-3004. In this manner, no additional fasteners or electrical interconnections need be made.

To construct frame 15-2600 having the integrally molded metallic components as previously discussed, an over-molding technique is preferably used. Magnets 15-2704 and electrical terminals 15-2612 are first placed within an open injection mold cavity. Magnets 15-2704 and electrical terminals 15-2612 are positioned within the mold to assure that molten plastic resin covers at least a portion of each metallic component to retain it within frame 15-2600. The injection mold also includes features to mask off portions of the metallic components so selected portions are not contacted by the molten resin. The mold is closed and resin is injected to fill the cavity. Upon completion of this process, magnets 15-2704 and electrical terminals 15-2612 are fixed within frame 15-2600. Magnets 15-2704 and electrical terminals 15-2612 include exposed surfaces for the purpose previously described.

With reference to Figures 15-31 through 15-33, an alternate embodiment loudspeaker is depicted at reference numeral 15-3100. Loudspeaker 15-3100 includes a casement 15-3102 having a diaphragm 15-3104 coupled thereto. Loudspeaker 15-3100 also includes a frame 15-3106 having a plurality of magnets 15-3108 coupled to a body portion 15-3110 of frame 15-3106.

Casement 15-3102 includes a pair of generally parallel side rails 15-3112 orthogonally intersected by a pair of generally parallel end rails 15-3114. Diaphragm 15-3104 is embedded within a portion of each of side rail 15-3112 and end rail 15-3114. Casement 15-3102 is coupled to frame 15-3106 to position diaphragm 15-3104 a predetermined distance from magnets 15-3108. One skilled in the art will appreciate that casement 15-3102 may be coupled to frame 15-3106 using a variety of techniques such as ultrasonic welding, snap fit connections, mechanical fasteners, adhesive bonding or any other suitable connection method.

One type of securing device is shown in Figure 15-35. An alternate loudspeaker 15-3500 includes a retainer 15-3502, a casement 15-3504 and a frame 15-3506. Casement 15-3504 includes a flange 15-3508 radially protruding from the perimeter of casement 15-3504. Similarly, frame 15-3506 includes a flange 15-3510 radially extending from a body portion 15-3512 of frame 15-3506. Retainer 15-3502 has a generally c-shaped cross section engaging flanges 15-3508 and 15-3510 to interconnect casement 15-3504 and frame 15-3506.

As shown on the right side of FIG. 15-35, retainer 15-3502 may also include loudspeaker mounting provisions such as a flange 15-3514 having an aperture 15-3516 extending therethrough. The use of the loudspeaker mounting provision on retainer 15-3502 improves design flexibility. For example, a generic frame and magnet assembly may be designed for use with a variety of differently shaped retainers configured to mount loudspeakers within certain vehicles or enclosures. Preferably, use of the common or generic components will reduce cost and product proliferation.

To assemble a loudspeaker equipped with retainer 15-3502, frame 15-3506 and casement 15-3504 are placed within an injection mold cavity. Molten resin is injected within the cavity to form retainer 15-3502. After solidification of the resin, completed loudspeaker 15-3500 is ejected from the mold cavity.

With specific reference to Figures 15-36 and 15-37, an alternate loudspeaker 15-3600 includes a casement and diaphragm subassembly 15-3602 and a frame and magnet assembly 15-3604. Casement and diaphragm subassembly 15-3602 includes a casement 15-3606 and diaphragm 15-3608. Casement 15-3606 includes a pair of side rails 15-3610 and a pair of end rails 15-3612 interconnected to one another to define an aperture 15-3614. Side rails 15-3610 and end rails 15-3612 include apertures 15-3615 extending therethrough.

Frame and magnet subassembly 15-3604 includes a frame 15-3616 having a body 15-3617 with a plurality of stakes 15-3618 protruding therefrom. The frame 15-3616 also includes a plurality of catches 15-3620 extending from body 15-3617. Catch 15-3620 includes a barb 15-3622. During assembly of casement and diaphragm subassembly 15-3602 to frame and magnet subassembly 15-3604, barb 15-3622 engages casement 15-3606. Also, stakes 15-3618 protrude through apertures 15-3615. A subsequent heat staking or melting process deforms the ends of stakes 15-3618 to form a cap 15-3700 and further couple casement and diaphragm subassembly 15-3602 to frame and magnet subassembly 15-3604.

To manufacture loudspeaker 15-3600, an injection mold 15-3400 as shown in Figure 15-34 is used. Injection mold 15-3400 includes a stationary plate 15-3402 and a movable plate 15-3404. Stationary plate 15-3402 and movable plate 15-3404 define a cavity 15-3406 in communication with a gate 15-3408. Gate 15-3408 serves as an inlet for a molten resin material 15-3410. Movable plate 15-3404 includes a gas permeable plate 15-3412 inserted within a gas impermeable die body 15-3414. A vacuum channel 15-3416 is positioned along a back surface 15-3418 of plate 15-3412. Vacuum channel 15-3416 is coupled to a vacuum source (not shown). Movable plate 15-3404 includes a plurality of pins 15-3420 extending upwardly from a substantially planar surface 15-3421. Each pin 15-3420 includes an upper surface 15-3422 that engages a lower surface 15-3424 of stationary plate 15-3402 when injection mold 15-3400 is closed.

An oversized, work-in-progress, diaphragm 15-3425 is inserted within injection mold 15-3400. Oversized diaphragm 15-3425 includes a center portion 15-3426 surrounded by a perimeter portion 15-3428. Perimeter portion 15-3428 includes an offage portion 15-3430 extending beyond the edge of cavity 15-3406. Finished diaphragm 15-3608, shown in Figures 15-36 and 15-37, is created by trimming offage portion 15-3430 from oversized diaphragm 15-3425. Diaphragm 15-3608 includes a plurality of apertures 3432. Upon insertion of diaphragm 15-3425, the plurality of pins 15-3420 extend through apertures 3432 and diaphragm 15-3425 rests on planar surface 15-3421. During manufacture of the casement and diaphragm subassembly, perimeter portion 15-3428 of diaphragm 15-3425, specifically offage portion 15-3430, is clamped between stationary plate 15-3402 and movable plate 15-3404 of injection mold 15-3400. After perimeter portion 15-3428 is clamped, center portion 15-3426 is displaced to introduce a tension to diaphragm 15-3425. While the diaphragm is under tension, molten plastic is injected into cavity 15-3406 to form side rails 15-3610 and end rails 15-3612. During the injection process, perimeter portion 15-3428 partially melts and bonds with the material forming casement 15-3606. The casement material is then cooled and solidified. The tensioned diaphragm 15-3608 molded to casement 15-3606 is now removed from the injection mold. Offage portion 15-3430 is trimmed to produce the final casement and diaphragm assembly 15-3602 as shown in Figure 15-36. The casement and diaphragm subassembly may be utilized as a component within many different speaker designs including loudspeakers having metal frames as previously described or molded frames similar to frame 15-3616.

It should be appreciated that a number of different devices such as pins, clamps, notches or stops may be used to temporarily fix offage portion 15-3430 while center portion 15-3426 is tensioned. One specific retention device is shown in Figure 15-38. A pin 15-3800 extends through an aperture 15-3802 extending through diaphragm 15-3425 located in offage portion 15-3430.

With continued reference to Figure 15-38, a portion of an alternate injection mold is depicted at reference numeral 15-3804. Mold 15-3804 includes a stationary half 15-3806 having a ridge 15-3808 protruding downwardly therefrom. Mold 15-3804 also includes a movable half 33810 having a trough 15-812 extending about the periphery of the mold. During mold closure, ridge 15-3808 contacts diaphragm 15-3425 and forces diaphragm 15-3425 to enter trough 15-3812. During this process, diaphragm 15-3425 is tensioned and retained under tension. To assure a sufficient amount of tension is generated in diaphragm 15-3425, optional locating pins 15-3800 may be positioned outboard of the ridge and trough to retain the perimeter portion of diaphragm 15-3425 during tensioning. One skilled in the art will appreciate that a variety of devices such as clamps, pins or stops may be used to locate and retain the perimeter portion of the diaphragm 15-3425 during mold closure and tensioning. As previously mentioned, molten resin is then injected to form casement 15-3606.

With reference to Figure 15-39, an alternate embodiment loudspeaker is depicted at reference numeral 15-3900. Loudspeaker 15-3900 includes a frame 15-3902 having a plurality of magnets 15-3904 coupled to a body portion 15-3906 of frame 15-3902. An elastomeric bumper 15-3908 is coupled to frame 15-3902. Elastomeric bumper 15-3908 extends substantially about the perimeter of frame 15-3902. Elastomeric bumper 15-3908 is depicted as a solid elastomeric member coupled to the perimeter portion of the frame. It should be appreciated that bumper 15-3908 may also be constructed from a closed cell foam or other resilient material.

Elastomeric bumper 15-3908 may be conventionally attached to frame 15-3902 using adhesives or mechanical fasteners. Elastomeric bumper 15-3908 may also be molded to frame 15-3902 using an injection mold. In one embodiment, the frame is constructed from injection molded plastic. Frame 15-3902 is formed first in the mold. A second elastomeric material is injected to mold bumper 15-3908 to frame 15-3902. Alternatively, bumper 15-3908 may be formed in a different mold if economically beneficial.

During assembly of loudspeaker 15-3900, bumper 15-3908 is compressed by applying an external force in the direction of a line 15-3910. The compression force is maintained while a diaphragm 15-3912 is coupled to bumper 15-3908. Once diaphragm 15-3912 is fixed to bumper 15-3908, the external force compressing bumper 15-3908 is removed. Because bumper 15-3908 is an elastomeric member, bumper 15-3908 tends to return to its originally undeformed shape but is resisted by diaphragm 15-3912. An equilibrium condition is reached resulting in tensioning diaphragm 15-3912. One skilled in the art will appreciate that bumpers 15-3908 may extend about the entire periphery of frame 15-3902 or may also be represented by plurality of small elastomeric portions positioned along to opposite sides of frame 15-3902.

Figure 15-40 shows an alternate embodiment loudspeaker 15-4000 including hollow elastomeric bumpers 15-4002 coupled to a perimeter portion of frame 15-3902.

During assembly of loudspeaker 15-4000, bumpers 15-4002 are compressed by applying an external force in the direction of a line 15-4004. The compression force is maintained while diaphragm 15-3912 is coupled to bumpers 15-4002. Once diaphragm 15-3912 is fixed to bumpers 15-4002, the external force compressing bumpers 15-4002 is removed. Because bumpers 15-4002 are elastomeric members, bumpers 15-4002 tend to return to their originally undeformed shape. This tendency is resisted by diaphragm 15-3912. An equilibrium condition is reached resulting in tensioning diaphragm 15-3912.

With reference to FIG. 16-6, an alternative frame 16-600 is provided which defines a recessed portion 16-602 having a pair of sidewalls 16-604, 16-606 interconnected by a pair of endwalls 16-608, 16-610. As described above, the magnets of the electro-dynamic planar loudspeaker are mounted to the frame and a diaphragm is mounted to an upper attachment surface 16-612. One or more of the sidewalls 16-604, 16-606 or end walls 16-608, 16-610 includes a plurality of curves along a length of the wall in order to reduce transverse standing waves across the diaphragm. The curved sidewall 16-604 or 16-606 can include a sinusoidal curve (FIG. 16-6A), scallops 16-614 (FIG. 16-6B), triangular peaks 16-616 (FIG. 16-6C), or any other configuration which reduces standing waves by varying a diameter of the frame along a longitudinal length thereof in order to reduce transverse standing waves across the diaphragm by minimizing the length of parallel wall lengths.

With reference to FIG. 16-7, a frame 16-700 according to a second embodiment of the invention, has a recessed portion 16-702 having a pair of sidewalls 16-704, 16-706 connected to one another by a pair of endwalls 16-708, 16-710. A plurality of magnets are mounted to the frame 16-700 and a diaphragm is mounted to an attachment surface 16-712 of the frame 16-700. The sidewall 16-704 is non-parallel to the sidewall 16-706 in order to reduce transverse standing waves. In particular, sidewall 16-704 can be angled relative to the sidewall 16-706. By varying the distance across the frame 16-700 along a longitudinal length thereof, the production of standing waves is thereby reduced.

With reference to FIG. 16-8, another embodiment of the invention will now be described. In FIG. 16-8, an electro-dynamic loudspeaker 16-800 is provided including a frame 16-802 having a plurality of magnets 16-804 (one shown) mounted to the frame 16-802. A diaphragm 16-806 is mounted to an attachment surface 16-808 of the frame 16-802 by an adhesive 16-810. The diaphragm includes a conductor including a plurality of elongated traces 16-812 mounted thereto. A ferrofluid 16-814 is provided between the diaphragm 16-806 and magnets 16-804. The ferrofluid 16-814 is in contact with the diaphragm 16-806 so that as the diaphragm 16-806 vibrates, the contact with the ferrofluid 16-814 dampens the vibration. As illustrated in FIG. 16-8A, as the film 16-806 moves upward, the ferrofluid 16-814 is "stretched" upward while maintaining contact with the film and as shown in FIG. 16-8B, as the film 16-806 moves downward, the ferrofluid 16-814 is compressed. The ferrofluid 16-814 is maintained on the surface of the magnet 16-804 by the magnetic field attracting the ferrous fluid. A wall structure 16-816 surrounds the magnets 16-804 in order to isolate the ferrofluid 16-814 on an upper surface of the magnets 16-804. The ferrofluid 16-814 can be provided on all of or selective ones of the magnets 16-804. In particular, putting ferrofluid only on the outermost magnets 16-804 may provide sufficient damping. The ferrofluid provides a mechanical dampener for dampening the resonance frequency of the film 16-806 instead of the use of felt or another dampener material on the back of the frame.

With reference to FIGS. 16-9 and 16-10, an alternative damping arrangement is provided for an electro-dynamic loudspeaker 16-900. As shown in FIG. 16-10, the electro-dynamic loudspeaker 16-900 includes a frame 16-1000 having a plurality of magnets 16-1002 mounted thereto as previously described. A film 16-1004 is mounted to the frame by an adhesive 16-1006. A conductor 16-1008 is provided on the film 16-1004 in the same manner as is described above with reference to FIG. 16-1. The film 16-1004 is made from a piezoelectric material such as polyvelydeneflouride (PVDF) that is available under the trade name KYNAR. KYNAR exhibits a piezoelectric effect in that when electricity is applied to conductors attached on opposite sides, the material contracts or expands. A pair of undriven conductors 16-1010, 16-1012 (not part of the conductor 16-1008) are applied to both sides of the film 16-1004 along opposite edges of the film. The undriven upper and lower conductors 16-1010, 16-1012 are each connected together by a rivet 16-902 extending through the film 16-1004. The undriven conductor is located in order to dampen the film modes. Specifically, as the film 16-906 vibrates, the undriven conductor 16-912, 16-914 is moved relative to the magnetic field generated by magnets 16-1002 and generates electric current therethrough which causes the film material to contract and expand as the current changes so that the conductors 16-1010, 16-1012 act to dampen film modes and behave like an edged treat. Due to the piezoelectric effect, the PVDF film has a resultant change in thickness based on the relationship dta = d33 * Vt where: dta is the change in thickness; d33 is the piezoelectric moduli appropriate for the material; and Vt is an applied voltage. Conversely, Vt = dta / d33.

With reference to FIGS. 16-11 and 16-12, an alternative dampening arrangement is provided for an electro-dynamic loudspeaker 16-1100. The electro-dynamic loudspeaker 16-1100, as shown in FIG. 16-12, includes a frame 16-1200 including a plurality of magnets 16-1202 mounted thereto. A diaphragm 16-1204 is mounted to the frame 16-1200 by an adhesive 16-1206. A conductor 16-1208 is mounted to the diaphragm 16-1204 in the same manner as described with reference to FIG. 16-1. A shorted turn of conductor 16-1102 is separately provided in the fringe zone at the edges of the film 16-204, as best illustrated in FIG. 16-11. The shorted turn 16-1102 electro-dynamically dampens the edge resonance of the film 16-1204 by providing a damping electromotive force.

To control the acoustical directivity of the loudspeaker, various structural aspects of the loudspeaker may be modified to produce amplitude shading of the thin film diaphragm of the loudspeaker. Amplitude shading can be accomplished by (i) varying magnetic flux density at the conductor traces (FIGs. 17-5 through 17-7); (ii) varying the resistance of the diaphragm traces (FIG. 17-8 through 17-12); and/or (iii) varying mass over the driven portion of the diaphragm (FIG. 17-13). Alternatively, acoustical directivity can be controlled though varying the size of the loudspeaker, as illustrated in FIGs. 17-14 through 17-30.

FIGs. 17-5 through 17-7 illustrate various examples of amplitude shading of the thin film diaphragm of the loudspeaker by varying the magnetic flux density at the conductor traces 17-108. FIG. 17-5 is a cross-sectional view taken along the line 5-5 of FIG. 1. In FIG. 17-5, amplitude shading of the diaphragm 17-104 of the loudspeaker 17-500 is achieved by varying the spacing the of the magnets 17-202 away from the thin film diaphragm 17-104 at different distances 17-502, 17-504, 17-506 in specific and predetermined zones 17-508, 17-510, 17-512 of the diaphragm 17-104 over the length "l" of the loudspeaker 17-500. In this regard, the magnets 17-202 may be spaced from the diaphragm 17-104 at a distance of between about 0.1 mm to more than about 1 mm.

As shown, the magnets 17-202 are spaced variably closer to the diaphragm 17-104 across the length "l" of the loudspeaker. This arrangement may be accomplished through the structure of the frame 17-102 of the loudspeaker 17-500 that locates same sized magnets 17-202 at different distances 17-502, 17-504, 17-506 from the diaphragm 17-104.

Alternately, as shown in FIG. 17-6, is a cross-sectional view taken along the line 5-5 of FIG. 1, the frame 17-102 of the loudspeaker 17-600 may remain unchanged and magnets 17-602, 17-604, 17-606 having different physical dimensions may be used to vary their respective positions relative to the diaphragm 17-104. In either embodiment (FIG. 17-5 or FIG. 17-6), the result of the modified magnet spacing arrangement is that the flux density of the magnetic field at the location of the traces 17-108 (and hence the strength of the magnetic field) varies across the length "l" of the loudspeaker 17-500 and 17-600. In this regard, the flux density at the location of the traces 17-108 for each magnet 17-202 is greater as the distance between the magnet 17-202 and the diaphragm 17-104 decreases. Consequently, the sensitivity of the diaphragm 17-104 changes across its driven zone, resulting in amplitude shading of the diaphragm 17-104 and a controllable acoustical directivity of the loudspeakers 17-500 and 17-600.

FIG. 17-7 is a cross-sectional view, illustrating another example amplitude shading to alter the natural acoustical directivity of a loudspeaker 17-700 by magnetizing the plurality of magnets 17-702, 17-704, 17-706 in the loudspeaker 17-700 to different energy densities. Energy densities of magnets are measured in units of Gauss-Oersteds (GOe). For example, the magnet 17-702 may be magnetized to the strength of half of that of magnet 17-704 that, in turn, may have half of the energy density of magnet 17-706.

In this case the magnetic flux, measured in units called Tesla (T), that is generated by each of the different magnets 17-702, 17-704, 17-706 will vary across the length "l" of the loudspeaker 17-700 at the location of the conductive traces 17-108, due not to the magnets 17-702, 17-704, 17-706 physical spacing from the diaphragm 17-104, but instead to their individual magnetic strength as ultimately determined by their material compositions. This predetermined and controllable relationship between the magnets' 17-702, 17-704, 17-706 flux densities at the location of the conductive traces 17-108 over several zones 17-708, 17-710, 17-712 on the diaphragm 17-104 of the loudspeaker 17-700 creates amplitude shading that can produce a controlled directivity response for the loudspeaker 17-700.

Although the magnets of the various example embodiments of FIGs. 17-5 through 17-7 are define by five rows of magnets 17-202 with three magnets 17-202 in each row, the number of magnets in a row and the number of rows may vary depending upon the application. Despite the number of magnets 17-202 used a particular application, amplitude shading can still be accomplished to vary, control or enhance the acoustic directivity of the loudspeaker by varying the spacing between the magnets 17-202 and the diaphragm, by varying the size of the magnets 17-202 and by varying the energy densities of the magnets 17-202 across the diaphragm 17-104 of the loudspeaker 17-100.

FIGs. 17-8 through 17-12 illustrate various examples of amplitude shading of the thin film diaphragm of the loudspeaker by varying the resistance of the conductive traces 17-108 of the diaphragm 17-104. FIG. 17-8 is schematic view showing a conductive trace on a diaphragm of an electro-dynamic loudspeaker 17-800. In FIG. 17-8, amplitude shading is accomplished by manipulating the dc resistance (DCR) of the plurality of traces 17-801, 17-803, 17-805 on the diaphragm 17-804 of the loudspeaker 17-800. For example, the diaphragm 17-804 may comprise a conductor 17-820 including a plurality of traces 17-801, 17-803, 17-805, respectively forming individual circuits 17-806, 17-808, 17-810 located in separate zones 17-812, 17-814, 17-816 of the diaphragm 17-804. In selected zones, the traces 17-801, 17-803 and 17-805 may be electrically in series (as shown in FIG. 17-8) or in parallel (see FIG. 17-12) to achieve the result of a different DCR in the traces 17-801, 17-803, 17-805 across the diaphragm 17-804. The variable sensitivity of the traces 17-801, 17-803, 17-805 affects the acoustical directivity of the loudspeaker 17-800 by amplitude shading of the diaphragm 17-804.

In addition to the relationship of the traces electrically (e.g., series or parallel), the DCR of the traces may be manipulated in other ways to achieve the same effect. For example, as shown in the cross-sections of FIGs. 17-9 through 17-11, the multiple traces 17-801, 17-803 and 17-805 on the diaphragm 17-804 may each possess different physical dimensions, including different widths w₉, w₁₀, w₁₁, different thicknesses t₉, t₁₀, t₁₁ (heights), and cross-sectional areas a₉, a₁₀, a₁₁.

FIG. 17-9 is a cross-sectional view taken along the line 9-9 of FIG. 17-8 showing the dimensional cross-section of the conductive trace 17-803 along circuit 17-808 of the conductor 17-820. FIG. 17-10 is a cross-sectional view taken along the line 10-10 of FIG. 17-8 showing the dimensional cross-section of the conductive trace 17-801 along circuit 17-806 of the conductor 17-820. As seen in FIG. 17-10, the widths w₁₀, thicknesses t₁₀ (height), and cross-sectional area a₁₀ of the conductive trace 17-803 in circuit 17-804 are larger than the widths w₉, thicknesses t₉, and cross-sectional area a₉ of the conductive trace 17-803 of circuit 17-808 (FIG. 17-9).

Similarly, FIG. 17-11 is a cross-sectional view taken along the line 11-11 of FIG. 17-8 showing the dimensional cross-section of the conductive trace 17-805 along circuit 17-810 of the conductor 17-820. As seen in FIG. 17-11, the widths w₁₁, thicknesses t₁₁ (height), and cross-sectional area a₁₁ of the conductive trace 17-805 in circuit 17-810 are smaller than the widths w₉, thicknesses t₉, and cross-sectional area a₉ of the conductive trace 17-803 of circuit 17-808 (FIG. 17-9), as well as the widths w₁₀, thicknesses t₁₀ (height), and cross-sectional area a₁₀ of the conductive trace 17-803 in circuit 17-804 (FIG. 17-10).

FIG. 17-12 is a schematic view showing an alternative example of a conductive trace on a diaphragm of an electro-dynamic loudspeaker. As shown in FIG. 17-12, the electrical traces 17-1201, 17-1203 and 17-1205 are in parallel. Further, the traces of a loudspeaker 17-1200 may also have different lengths, resulting in their respective DCRs to be different. Similar to that described above, the loudspeaker 17-1200 has, for example, three traces 17-1201, 17-1203, 17-1205 across the diaphragm 17-1204. The respective traces 17-1201, 17-1203, 17-1205 form individual circuits 17-1206, 17-1208, 17-1210 connected electrically in parallel and located in separate zones 17-1212, 17-1214, 17-1216 of the diaphragm 17-1204. The lengths of the traces 17-1201, 17-1203, 17-1205 may, however, vary as desired.

While the example embodiment, illustrates three traces 17-1201, 17-1203 and 17-1205 forming three circuits 17-1206, 17-1208 and 17-1210, the number of traces and number of circuits formed by the traces may vary depending upon the application. Additionally, the traces 17-108 of the loudspeakers 17-100 may be formed from a number of different materials, including, but not limited to copper, aluminum alloys or other conductive materials possessing different DCR values. Such variation in physical characteristics and/or properties of a plurality of traces 17-108 on the diaphragm 17-104 enable the acoustical directivity of the loudspeaker to be modified accordingly by amplitude shading.

FIG. 17-13 is a cross-sectional view taken along the line 5-5 of FIG. 1 showing another example of an electro-dynamic loudspeaker. In FIG. 17-13, amplitude shading of the diaphragm 17-104 of the loudspeaker 17-1300 may be achieved by the non-uniform application of a damping material 17-1302 on the second side 17-404 of the diaphragm 17-104. For example, damping material 17-1302 may be applied in unequal and/or excessive amounts to the surface 17-404, or only on selected portions of the surface 17-404, over the driven portion of the diaphragm 104, that may be separated into zones 17-1304, 17-1306, 17-1308. In this regard, damping material 17-1302 may be applied to a thickness that may vary from a minimum of about 0.1 mm to 3 mm or more depending upon the damping material's physical properties and/or characteristics. Such application of damping material 17-1302 effectively varies the mass of the diaphragm 17-104 across the driven zones 17-1304, 17-1306, 17-1308 and achieves directivity control by amplitude shading. The damping material may be made from, for example, a liquid urethane oligomer acrylic monomer blend, such as Dymax 4-20539, that cures into a flexible solid, or other material known by those skilled in the art that may be used as a dampener on thin-film diaphragms.

As illustrated by FIGs. 17-14 through 17-30, the acoustical directivity of an electro-dynamic loudspeaker can also be controlled by varying the size and configuration of the loudspeaker. FIG. 17-14 illustrates one example of a modification that can be made to the size of the loudspeaker to vary acoustical directivity.

FIG. 17-14 is a plan view of an electro-dynamic loudspeaker 17-1400 having a high aspect ratio of its length relative to its width. As illustrated by the polar response curves shown in FIGs. 17-15 through 17-29, by varying the length-to-width aspect ratio of the planar loudspeaker 17-1400, for example, by a ratio of about 10:1, the planar loudspeaker 17-1400 may exhibit directivity characteristics that differ greatly from a conventional loudspeaker. By way of example, the length of the loudspeaker 17-1400 may range from on the order of about 200 mm to about 400 mm, and the width may range from on the order of about 20 mm to about 65 mm. Such a high-aspect ratio planar loudspeaker 17-1400 may be particularly suitable for installation onto a structural pillar of a vehicle, such as an automobile.

The characteristic of directivity of a loudspeaker is the measure of the magnitude of the sound pressure level (SPL) of the audible output from the loudspeaker, in decibels (dB), as it varies throughout the listening environment. It is well-known that the SPL of the audible output of a loudspeaker can vary at any given location in the listening environment depending on the direction (angle) and the distance from the loudspeaker of that particular location and the frequency of the audible output from the loudspeaker. The directivity pattern of a loudspeaker may be plotted on a graph called a polar response curve. The curve is expressed in dB at an angle of incidence with the loudspeaker, where the on-axis angle is 0 degrees.

By way of example, FIG. 17-15 illustrates a polar response curve for a loudspeaker whose audible output is at a very low frequency relative to the size of the loudspeaker. The polar response for a loudspeaker at this low frequency is shown to be generally omni-directional. As the frequency of the audible output from a loudspeaker increases relative to the size of the loudspeaker, the polar response curve for the loudspeaker becomes increasingly directional. The increasing directivity of a loudspeaker at higher frequencies gives rise to off-axis lobes and null areas in the polar response curves, and is a phenomenon referred to as "fingering" or "lobing."

FIGs. 17-16 through 17-22 show the horizontal polar response plots H of a high-aspect ratio electro-dynamic loudspeaker shown in FIG. 17-14 at a variety of frequencies verses the horizontal polar response plots He of a conventional single tweeter loudspeaker. FIG. 17-16 represents the horizontal polar response plot comparison of the loudspeakers at 1 kHz. FIG. 17-17 is the horizontal polar response plot comparison at 1.6 kHz. FIG. 17-18 is the horizontal polar response comparison at 3.15 kHz. FIG. 17-19 is the horizontal polar response plot comparison at 5 kHz. FIG. 17-20 is the plot at 8 kHz, while FIGs. 17-21 and 17-22 are the plots at 12.5 kHz and 16 kHz, respectively.

Similarly, FIGs. 17-23 through 17-29 depict the vertical polar response plots V of a high-aspect ratio electro-dynamic loudspeaker shown in FIG. 17-14 and those of a conventional single tweeter loudspeaker V_{c} at a variety of frequencies. FIG. 17-23 represents the vertical polar response plot of the comparing of the loudspeakers at 1 kHz. FIG. 17-24 is the vertical polar response plot comparison at 1.6 kHz. FIG. 17-25 is the vertical polar response comparison at 3.15 kHz. FIG. 17-26 is the vertical polar response plot comparison at 5 kHz. FIG. 17-27 is the plot at 8 kHz, while FIGs. 17-28 and 17-29 are the plots at 12.5 kHz and 16 kHz, respectively.

In addition to varying aspect ratio of the loudspeaker to control acoustical directivity, the shape of the loudspeaker 17-3000, as shown in FIG. 17-30, may be modified to achieve a predetermined or preferred acoustical directivity performance. FIG. 17-30 shows a plan view of an electro-dynamic loudspeaker 17-3000 having a non-rectangular polygonal shape. As illustrated by FIG. 17-30, the loudspeaker 17-3000 may take on a non-rectangular, polygonal shape, such as a trapezoid. The shaped panel reduces off-axis acoustical lobes, so that the acoustical output from the loudspeaker, particularly when amplified, provides better directional performance and control. It is contemplated that the loudspeaker may also be configured in the shape of other polygons or other non-traditional configurations to achieve the same result.

FIG. 18-6 provides a plan view of frame 18-102. The frame 18-102 includes a plurality of apertures or vent holes 18-422 which are arranged in columns which are aligned between the magnets 18-202. The columns include interior columns of vent holes 18-600a, 18-600b, 18-600c, 18-600d and a pair of outer edge columns 18-602a, 18-602b. The inner columns 18-600a, 18-600b, 18-600c, 18-600d each have a length L1, and the outer columns 18-602a, 18-602b of vent holes have a length L2. Each of the vent holes 18-422 of the inner columns 18-600a, 18-600b, 18-600c, 18-600d are separated by a web portion 18-604 having a web length W1. The outer columns of vent holes 18-602a, 18-602b are each separated by a web portion 18-606 having a width W2. Each of the vent holes 18-422 of the inner vent hole columns 18-600a, 18-600b, 18-600c, 18-600d has a length X1 while the vent holes of the outer columns 18-602a, 18-602b have a length X2. The vent holes 18-422 are provided in order to allow air disposed between the diaphragm 18-104 and the frame 18-102 to escape the recessed portion of the frame 18-102 as the diaphragm 18-104 vibrates. A layer of felt material 18-236 may be disposed on the back surface of the frame 18-102 to provide a dampening function by slightly inhibiting air travel through the vent holes 18-422. The web portions 18-604 and 18-606 provided between the vent holes 18-422 provide enhanced flux lines to be formed between the magnets 18-202 of the different columns.

An optimal web 18-604 size for balancing the flux density with the air flow resistance may be determined based on the amount of metal in the web areas and the size of the holes 18-422. The webs 18-604 having a width W and the vent holes 18-422 having a width X1 combine to form a column of total longitudinal length L1. The length of the webs in the column may be optimized such that the combined web lengths W in the length L1 of one of the columns 18-600a, 18-600b, 18-600c, 18-600d should be greater than about 20 percent and should be less than about 45 percent of the total length L1. In one example shown, the length L1 of a column 18-600a, 18-600b, 18-600c, or 18-600d is approximately 147 millimeters while the width X1 of the vent holes 18-422 is 7.25 millimeters and the web length W1 is 5.45 millimeters. Thus, the combined lengths of the webs W1 is approximately 60 millimeters (11 * 5.45mm) yielding a combined web length of approximately 41 percent of the total column length L1. The webs have an approximate thickness of about 1.2 millimeters. The increased web distance provides around a six percent increase in the magnetic flux due to the increased magnetic path and therefore lower energy magnets may be utilized. The outer columns 18-602a, 18-602b with vent holes 18-422 have narrower webs 18-606 provided between the vent holes 18-422. The web of one of the outer columns 18-602a, 18-602b makes up less than 20 percent of the total length of the outer columns 18-602a or 18-602b. Because the webs 18-606 are not provided between columns of magnets, the narrow webs have no impact on the flux lines and therefore, can be maintained with a narrower length. In one example, the total length L2 of the outer columns 18-602a and 18-602b is approximately 150 millimeters with the vent holes 18-422 having a length X2 equal to approximately 10.25 millimeters and the web 18-606 length W2 between each of the vent holes 18-422 is approximately 2.45 millimeters. Accordingly, the total distance of the webs 18-606 (2.45mm * 11 = 26.95mm) provided between the vent holes of the outer columns 18-602a and 18-602b is approximately 18 percent (26.95 / 150 = 18%) of the total length L2 of one of the outer columns. Similar effects may be obtained by using thicker steel in the frame but are more costly, heavier, and more difficult to form.

In FIG. 18-7, the electro-dynamic loudspeaker 18-100 according to the invention is mounted to an enclosure 18-700 that is unported. The enclosure 18-700 optimizes the low frequency performance of the electro-dynamic loudspeaker 18-100. The materials, size, and shape of the enclosure are each application specific.

With reference to FIG. 18-8, the electro-dynamic loudspeaker 18-100 is provided with a ported enclosure 18-800 including a port 18-802. The port 18-802 provides a means for the rear output of the electro-dynamic loudspeaker to contribute to the total output of the system. However, the enclosure 18-800 only contributes over a very narrow range of frequencies. In fact, the enclosure 18-800 significantly reduces distortion and increases power handling at very low frequencies. Enclosures, ported and unported, can be used to extend low frequency response or reduce distortion at resonance.

Various systems for assembling an example loudspeaker 100 will now be described. A first example system is depicted in FIGs. 20-5 through 20-17. The first system includes a vacuum platen 20-600 (FIGS. 20-6 through 20-7) and a film clamp 20-800 (FIGS. 20-8 through 20-9). Vacuum platen 20-600 and film clamp 20-800 may be used in conjunction with one another to restrain diaphragm 20-104 (FIG. 20-5) in a flat position without tension. Once diaphragm 20-104 is fixed within clamp 20-800, film 20-400 may be subsequently tensioned as will be described later.

The initial flattening and clamping of diaphragm 20-104 may provide the assembler with a known diaphragm state to which tension may be added. Difficulties may arise in attempting to obtain a reproducible tension during subsequent assembly operations when diaphragm 20-104 is not first placed in a substantially flat, no tension state. This first example system includes vacuum platen 20-600 and film clamp 20-800 to achieve a repeatable diaphragm state. In other examples, any other mechanism(s) and/or techniques capable of providing a known diaphragm state to which tension may be added may be used.

The example vacuum platen 20-600 includes a base 20-700 having a body 20-702 and a pedestal 20-704 protruding from a first surface 20-602 of body 20-702. Pedestal 20-704 includes an upper surface 20-706 positioned substantially parallel to first surface 20-602. A vacuum passageway 20-708 may extend through pedestal 20-704 and body 20-702 to couple upper surface 20-706 with a vacuum source 20-604. A cap 20-710 may be coupled to pedestal 20-704 along upper surface 20-706. Cap 20-710 may be constructed from a gas permeable material such as porous aluminum. Base 20-700 may be constructed from a gas impermeable material. Accordingly, a suction force is created along an upper surface 20-606 of cap 20-710 when vacuum source 20-604 draws a vacuum in vacuum passageway 20-708.

The example film clamp 20-800 includes an upper clamp half 20-802 and a lower clamp half 20-804 connected by a hinge 20-806. The illustrated upper clamp half 20-802 includes a generally rectangularly shaped body 20-808 and an elastomeric gasket 20-810. Body 20-808 includes an aperture 20-900 (FIG. 20-9) extending through body 20-808. Elastomeric gasket 20-810 includes a similarly shaped aperture 20-902 (FIG. 20-9) extending through the thickness of gasket 20-810. Elastomeric gasket 20-810 may be attached to body 20-808 to provide a compressible high friction surface 20-812 for engagement with diaphragm 20-104.

The illustrated lower clamp half 20-804 is constructed from a generally rectangularly shaped aluminum frame 20-814 having an aperture 20-904 extending through the lower clamp half 20-804. Lower clamp half 20-804 includes an upper surface 20-906 and a lower surface 20-908.

During the loudspeaker assembly process, film clamp 20-800 may be positioned on vacuum platen 20-600 such that pedestal 20-704 enters aperture 20-904 of lower clamp half 20-804 as illustrated in FIG. 20-9. Once seated, upper surface 20-906 of lower clamp half 20-804 may be substantially coplanar with upper surface 20-606 of cap 20-710. In order to properly position diaphragm 20-104, upper clamp half 20-802 may be rotated to place film clamp 20-800 in the open position depicted in FIG. 20-8.

With vacuum source 20-604 turned off, diaphragm 20-104 may be placed on upper surface 20-606. Diaphragm 20-104 may be aligned relative to lower clamp half 20-804 using sights 20-816. Sights 20-816 may be visual markings, rods, rings, notches or any other form of alignment mechanism formed on diaphragm 20-104 to assist in the alignment procedure. The location of sights 20-816 effectively defines a perimeter portion 20-818 and a center portion 20-820 of diaphragm 20-104. Center portion 20-820 may contain most, if not all, of the material which will remain coupled to frame 20-102 at the completion of the assembly process.

Once diaphragm 20-104 has been properly positioned, vacuum may be supplied to cap 20-710 via vacuum source 20-604. Because cap 20-710 is constructed from a gas permeable material, diaphragm 20-104 is forced to closely conform to planar upper surface 20-606. While the vacuum source is maintained, upper clamp half 20-802 may be rotated to place film clamp 20-800 in a closed position as shown in FIGs. 20-10 and 20-11. During clamp closure, elastomeric gasket 20-810 may deform locally to account for the thickness of diaphragm 20-104. Latches 20-822 secure upper clamp half 20-802 to lower clamp half 20-804. It should be appreciated that latches 20-822 are merely exemplary devices for coupling the clamp halves together and that any number of fastening devices may be implemented. Once upper clamp half 20-802 is clamped to lower clamp half 20-804, vacuum is turned off and film clamp 20-800 holding diaphragm 20-104 in an untensioned state is removed from vacuum platen 20-600.

Frame 20-102 may be fixtured in an example assembly fixture 20-1200 (Figs. 20-12 and 20-13). Assembly fixture 20-1200 may be shaped substantially similarly to vacuum platen 20-600. However, assembly fixture 20-1200 may include a recess 20-1300 for receipt of a portion of frame 20-102. Assembly fixture 20-1200 includes a gage surface 20-1302 offset a predetermined distance 20-1304 from planar mounting surface 408 of frame 20-102. In order to apply tension to diaphragm 20-104, distance 20-1304 is greater than the thickness of lower clamp half 20-804. The magnitude of tension generated is optimized by defining distance 20-1304 in concert with the physical characteristics of frame 20-102 and diaphragm 20-104.

Diaphragm 20-104 may be mechanically coupled with frame 20-102. For example, adhesive 20-406 may be applied to planar mounting surface 408 of frame 20-102. Adhesive 20-406 may alternatively be applied to diaphragm 20-104. After application of adhesive 20-406, film clamp 20-800 including clamped diaphragm 20-104 may be positioned on assembly fixture 20-1200 such that frame 20-102 enters aperture 20-904 of lower clamp half 20-804 (Figs. 20-14 and 20-15). The diaphragm 20-104 may contact adhesive 20-406 and planar mounting surface 408 of frame 20-102. Contact may occur prior to lower surface 20-908 of lower clamp half 20-804 contacting gage surface 20-1302 of assembly fixture 20-1200. To produce the desired tension in film 20-400, film clamp 20-800 is forced down over assembly fixture 20-1200 so that lower surface 20-908 engages gage surface 20-1302.

Depending on the type of adhesive used, a subsequent process may be required. For example, adhesive 20-406 is curable by exposure to radiation. Accordingly, while film clamp 20-800 is coupled to assembly fixture 20-1200, a radiation source 20-1500 is energized to cure the adhesive and secure diaphragm 20-104 to frame 20-102. Alternatively, where some other mechanical coupling mechanism is used, appropriate processes may need to be performed.

A second example system used to tension the diaphragm of a loudspeaker 100 is described with reference to FIGs. 20-16 and 20-17. In this system, frame 20-102 includes an elongated radially extending flange 20-1600 which does not include a downwardly extending lip. The remaining planar loudspeaker components are substantially similar to those previously described. The assembly process may include positioning diaphragm 20-104 in a substantially flat, no tension state as previously described. However, it should be appreciated that the flattening and clamping steps are not necessarily required to construct planar loudspeaker according to this system. Similarly, alternate tensioning methods that are described are not intended to be limited to include the flattening and clamping process.

A bead of adhesive 20-406 may be applied along the periphery of either or both frame 20-102 and diaphragm 20-104. Diaphragm 20-104 may then be aligned with and bonded to frame 20-102 via adhesive 20-406. As noted earlier, adhesive 20-406 may be a light curable material or any other suitable bonding agent which may affix the dissimilar materials to one another. Similarly, adhesive 20-406 may any other coupling mechanism to mechanically couple the diaphragm 20-104 to the frame 20-102.

Radially extending flange 20-1600 may be mechanically deformed by bending an outer peripheral region down from line 20-1700 as shown in FIG. 20-17 to tension diaphragm 20-104. Line 20-1700 acts as a fulcrum around the perimeter of frame 20-102 about which diaphragm 20-104 is stretched. The proper diaphragm tension may be obtained in a variety of ways. For example, if diaphragm 20-104 was initially coupled to frame 20-102 in a substantially flat, non-tension state, a deflection distance 20-1702 may be empirically determined by testing. Once the proper deflection distance is determined, hard tooling may be created to repeatably deform frame 20-102 and move radially extending flange 20-1600 the predetermined deflection distance 20-1702 during the assembly of each loudspeaker 100.

Another example system of assuring proper film tension includes a feedback system 20-1602. One example feedback system may involve placing a known load at the center of diaphragm 20-104 and measuring the deflection of the diaphragm at the load application point. The desired deflection per load may be empirically determined by testing where the resonance frequency of diaphragm 20-104 is plotted against deflection per a given load. Once the desired resonance frequency is determined for a given speaker geometry, a target diaphragm deflection per given load may be determined. The feedback system may operate by measuring the actual diaphragm deflection at a known load with a deflection sensor 20-1604. The measured actual deflection may be compared to the target deflection.

Frame 20-102 may be deformed until the measured deflection is substantially equal to the target deflection, thereby properly tensioning diaphragm 20-104 to produce the desired resonance frequency. Logic control systems such as proportional, integral, derivative closed feedback loops, etc. may be implemented to control the mechanical deflection of frame 20-102 during the tensioning process. Such a control system may provide a high degree of repeatability regarding film tensioning.

Another example feedback system 20-1704 may directly measure resonance frequency during film tensioning using a frequency sensor 20-1706. In this control scheme, diaphragm 20-104 may be repeatedly excited and the resonance frequency measured. The measured frequency may be compared to a desired target frequency during film tensioning. Frame 20-102 may be deformed until the measured resonance frequency matches the target frequency within an acceptable tolerance. It should be appreciated that the feedback systems described may be used with any of the tensioning techniques described.

Yet another film tensioning system will be described in greater detail with reference to FIG. 20-18. An example film tensioner 20-1800 includes an upper plate 20-1802 and a lower plate 20-1804. Plates 20-1802 and 20-1804 have matching beveled apertures 20-1806 and 20-1808, respectively. Center portion 20-820 of diaphragm 20-104 is positioned within the openings defined by apertures 20-1806 and 20-1808. Apertures 20-1806 and 20-1808 may be sized and shaped slightly larger than frame 20-102 to allow insertion of frame 20-102 within one of the apertures 20-1806 and 20-1808.

Upper plate 20-1802 may include an annular groove 20-1810 having an asymmetrical cross-section as shown in FIG. 20-18. Lower plate 20-1804 may include an annular groove 20-1812 shaped as the mirror image of groove 20-1810. A first elastomeric member 20-1814 may be positioned within groove 20-1810 and a second elastomeric member 20-1816 may be positioned within groove 20-1812. Grooves 20-1810 and 20-1812 may be shaped to constrain movement of the elastomeric members 20-1814 and 20-1816 toward apertures 20-1806 and 20-20-1808, respectively. In addition, grooves 20-1810 and 20-1812 may be shaped to allow movement of elastomeric members 20-1814 and 20-1816 away from apertures 20-1806 and 20-1808. Specifically, the annular grooves 20-1810 and 20-1812 may be shaped to impart a lateral force to center portion 20-820 of diaphragm 20-104 when an axial force is applied to upper plate 20-1802 and lower plate 20-1804 drawing them toward one another.

Upper plate 20-1802 may also include threaded apertures 20-1818. Stepped apertures 20-1820 extend through lower plate 20-1804. Threaded fasteners 20-1822, which are illustrated as bolts, may be inserted in apertures 20-1820 and tightened into threaded apertures 20-1818 to draw upper plate 20-1802 and lower plate 20-1804 together. It should be appreciated that upper plate 20-1802 and lower plate 20-1804 may be drawn together using a variety of mechanisms such as toggle clamps, jack screws, hydraulic cylinders or any other known clamping and force producing devices.

In this example technique, the film may first be tensioned by drawing upper plate 20-1802 and lower plate 20-1804 together. Adhesive 20-406 (or some other coupling mechanism) may be placed on the tensioned portion of diaphragm 20-104 and/or planar mounting surface 20-408 of frame 20-102. While upper plate 20-1802 is clamped to lower plate 20-1804, frame 20-102 may be placed into contact with diaphragm 20-104. Once the adhesive has cured (or mechanical coupling completed), the threaded fasteners 20-1822 may be removed and upper plate 20-1802 may be separated from lower plate 20-1804. It should also be appreciated that apertures 20-1806 and 20-1808 may be sized to allow entry of light waves to cure adhesive 20-406, or to allow manipulation of some other coupling mechanism, if so desired. Depending on the specific configuration of the loudspeaker 20-100, perimeter portion 20-818 of diaphragm 20-104 may be trimmed to remove any film extending beyond lip 20-306.

With reference to FIG. 20-19, another example film tensioning technique is depicted. The fixturing used to practice this example technique includes a fixture 20-1900 having a lower die 20-1902, and an upper die 20-1904. Fixture 20-1900 may function to restrain the periphery of diaphragm 20-104 and define a cavity 20-1906 between one side of the diaphragm 20-104 and lower die 20-1902. A fluid source 20-1908 may supply pressurized fluid to cavity 20-1906. Because lower die 20-1902 is constructed from a substantially rigid material, diaphragm 20-104 may elongate in tension as depicted in FIG. 20-19. Pressure is maintained within cavity 20-1906 while frame 20-102 is mechanically coupled with diaphragm 20-104. Diaphragm 20-104 may be secured to frame 20-102 using any number of previously discussed bonding techniques including mechanical fasteners, radiation curable adhesives, multi-part epoxies, heat curable adhesives or pressure sensitive compounds.

After diaphragm 20-104 has been fixed to frame 20-102, upper die 20-1904 may be removed. If desired, excess diaphragm material extending beyond the perimeter of frame 20-102 may be removed.

In this example technique, some of the initial tension generated by the pressurized fluid may relax during subsequent frame attachment process. Accordingly, a tension greater than the final desired tension may be initially induced via fluid source 20-1908 to assure that the film is properly tensioned during use.

FIGs. 20-22 depict another example of fixturing used to tension diaphragm 20-104 prior to attaching diaphragm 20-104 to frame 20-102. An example spider 20-2000 may operate in conjunction with an example base plate 20-2100 to tension diaphragm 20-104. Spider 20-2000 may be placed on a first side of diaphragm 20-104 while base plate 20-2100 may be placed on the opposite side of the diaphragm 20-104. Spider 20-2000 may function by converting an axial force applied in direction 20-2102 to a lateral tension produced in opposed directions 20-2200.

The illustrated spider 20-2000 is a generally pyramidal member having a hub 20-2002 positioned proximate to a truncated portion of the pyramid. A plurality of legs 20-2004 angularly extend from hub 20-2002. Each of the legs 20-2004 include a body portion 20-2006 and a foot portion 20-2008. Each foot portion 20-2008 radially extends from the distal end of each leg 20-2004. A pad 20-2010 is coupled (as shown in FIG. 20) to a lower surface of each foot 20-2008. Pads 20-2010 may be constructed from a high friction, elastomeric material that is suitable for gripping diaphragm 20-104 without causing damage to diaphragm 20-104.

The illustrated base plate 20-2100 is a generally rectangularly-shaped member having an aperture 20-2104 extending through the base plate 20-2100. Aperture 20-2104 may be shaped similarly to the perimeter of frame 20-102 and sized such that frame 20-102 may be inserted into aperture 20-2104. Base plate 20-2100 includes a low friction surface 20-2106 upon which diaphragm 20-104 may freely slide. As best shown in FIG. 20-21, each pad 20-2010 is supported by a portion of base plate 20-2100.

During tensioning, diaphragm 20-104 may be placed between base plate 20-2100 and spider 20-2000. An axial force may be applied to spider 20-2000 in direction 20-2102. Due to the angular orientation of legs 20-2004 relative to low friction surface 20-2106, at least some of the axial force applied in direction 20-2102 may be converted to opposing forces in opposed directions 20-2200. The opposed forces may tension diaphragm 20-104. After tensioning, frame 20-102 is mechanically coupled to diaphragm 20-104 as previously discussed.

FIG. 20-23, is yet another example system for loudspeaker 100 assembly. In this system, frame 20-102 may be elastically deformed prior to attachment of diaphragm 20-104. The deformed frame 20-102 is represented in phantom lines at reference numeral 20-2300. It should be appreciated that any number of force generating devices or tools such as jack screws, hydraulic rams or other force producing devices may be used to elastically deform frame 20-102 by inwardly deflecting radially extending flange 20-304 and lip 20-306 (FIG. 3) of frame 20-102. Frame 20-102 may be maintained in the deformed state shown as 20-2300 while diaphragm 104 (FIG. 1) is attached to planar mounting surface 20-408 (FIG. 4).

Once diaphragm 20-104 has been securely attached to frame 20-102, the external forces deforming frame 20-102 may be released. Because frame 20-102 was elastically deformed, flange 20-304 and lip 20-306 have a tendency to spring-back to their originally undeformed state. This tendency is resisted by diaphragm 20-104. Diaphragm 20-104 elongates as the deformed frame attempts to return to its undeformed state until an equilibrium is reached. Frame 20-102 may be constructed from steel, aluminum or any number of composite materials capable of being deformed. Materials having a modulus of elasticity less than 29,000 KSI are contemplated to provide a relatively large elastic deformation prior to yield. A large frame deformation is beneficial to account for elongation or deformation of adhesive 20-406 or other mechanical coupling used to bond diaphragm 20-104 to frame 20-102.

Frames constructed from molded plastic or composite materials offer additional opportunities to incorporate an arc or a bow across a frame as depicted in FIG. 20-24. In illustrated example, a loudspeaker 20-2400 includes a bowed frame 20-2402. Frame 20-2402 may function as a spring washer to tension diaphragm 20-104.

During assembly of loudspeaker 20-2400, frame 20-2402 may be forced to a substantially planar condition. Diaphragm 20-104 may be coupled to frame 20-2402 while frame 20-2402 is in the substantially flat planar condition. Once diaphragm 20-104 has been securely attached to frame 20-2402, the external force maintaining frame 20-2402 in a substantially flat planar condition may be released. Because frame 20-2402 is elastically deformed, the frame has a tendency to return to the bowed shape. This tendency is resisted by diaphragm 20-104. Diaphragm 20-104 may elongate as frame 20-2402 attempts to return to the originally bowed shape until an equilibrium is reached. At equilibrium, diaphragm 20-104 is in a tensioned state and no further movement of diaphragm 20-104 and/or frame 20-2402 occurs.

The bowed frame 20-2402 may be created using injection molding equipment such as that shown in FIG. 20-25. An example injection mold 20-2500 includes an upper mold half 20-2502 and a lower mold half 20-2504. A parting line 2506 runs along the length of frame 20-2402. The position of parting line 20-2506 is defined by the interface position of upper mold half 20-2502 and lower mold half 20-2504. The arc or bow may be created by imparting a temperature differential between first mold half 20-2502 and second mold half 20-2504. The use of a differential mold temperature to bow the frame 20-2402 will conceptually work for all molding resins. However, semi-crystalline resins such as Polybutylene Terephthalate (PBT), Polyethylene Terephthalate (PET), nylons, Polypropylene (PP) and blends incorporating these materials will produce an especially pronounced bow.

Alternatively, bowed frame 20-2402 may be produced from a mold having curved cavity surfaces. Standard temperature control techniques may then be used. In another alternative, both concepts may be used in combination. Specifically, a mold having curved surfaces may be controlled to maintain mold half temperature differentials and obtain the desired bowed frame 20-2402.

With reference to FIGs. 20-26 and 20-27, another example frame 20-2600 is shown. FIG. 20-26 depicts the bottom of frame 20-2600 while FIG. 20-27 shows the top of frame 20-2600. Frame 20-2600 may be constructed from a reinforced plastic or other similar material. The illustrated frame 20-2600 is a generally dish-shaped member having a base 20-2602 surrounded by a wall 20-2604 extending substantially orthogonally from the base 20-2602. Wall 20-2604 terminates at a radially extending flange 20-2606 which defines a substantially planar mounting surface 20-2700. During assembly, diaphragm 104 (FIG. 1) is coupled to frame 20-2600 along planar mounting surface 20-2700. Base 20-2602 includes a first surface 20-2702, a second surface 20-2608 and a plurality of apertures 20-2610 extending through the base 20-2602. Apertures 20-2610 are positioned and sized to provide the desired passageways for air positioned between first surface 20-2702 and diaphragm 20-104 to flow.

A plurality of magnets 20-2704 may be integrally molded within frame 20-2600. As best shown in FIG. 20-28, each of magnets 20-2704 may include a slot 20-2800 extending transversely across each end of magnet 20-2704. FIG. 20-29 depicts an example of slots 20-2800 filled with the composite material of frame 20-2600 after an over-molding process has been completed. Accordingly, slots 20-2800 may perform a retention function to fix each of magnets 20-2704 within frame 20-2600. Each magnet 20-2704 may include an upper surface 20-2802 positioned coplanar with surface 20-2702 of frame 20-2600. Because magnets 20-2704 are recessed within base 20-2602, the overall height of frame 20-2600 may be reduced to provide a low-profile frame and loudspeaker assembly.

Additionally, the embedded magnet design may provide economic benefits related to magnets 20-2704. Magnets mounted to a steel frame have closely controlled thicknesses to assure that the upper surface of each magnet is positioned at a proper distance from diaphragm 20-104. As previously discussed, surfaces 20-2802 of magnets 20-2704 are designed to be substantially co-planar with surface 20-2702 of frame 20-2600.

During molding, the magnets 20-2704 may be placed on a spring loaded tool 20-2900 (shown in phantom line in FIG. 20-29) to align each upper surface 20-2802 of magnets 20-2704 with each other in substantially a single plane. The magnets 20-2704 are placed substantially in a single plane to generally maintain a uniform distance from the diaphragm 20-104 (FIG. 1). Because injected resin may flow around the magnets 20-2704 and the spring loaded tool, the thicknesses of magnets 20-2704 need not be closely controlled. For example, FIG. 29 depicts a first magnet 20-2704 having a first thickness 20-2902. A second magnet 20-2904 has a different thickness 20-2906. The variation in magnet thickness is accommodated within the body of frame 20-2600. A cost savings results by using magnets having a greater tolerance on the thickness dimension.

As best shown in FIG. 20-26, a pair of example electrical terminals 20-2612 may be over-molded within frame 20-2600. Accordingly, electrical terminals 20-2612 are partially embedded within frame 20-2600. Each electrical terminal 20-2612 includes a male prong portion 20-2614 and an end portion 20-2616. An intermediate portion positioned between male prong portion 20-2614 and end portion 20-2616 is embedded within frame 20-2600. Male prong portion 20-2614 may extend away from the body of frame 20-2600. A socket 20-2618 may be integrally molded with frame 20-2600. Socket 20-2618 includes a wall 20-2620 extending from surface 20-2608. Wall 20-2620 may surround male prong portions 20-2614 and may be shaped to mate with a female plug (not shown). The female plug may be used to electrically couple the loudspeaker 100 to a power source.

Each end portion 20-2616 may include an aperture 20-2622 extending through the end portion 20-2616. Apertures 20-2622 may also extend through flange 20-2606. After diaphragm 20-104 is coupled to mounting surface 20-2700, an electrical connection may be made between end portions 20-2616 and conductor 20-106 of diaphragm 20-104 by coupling electrically conducting jumpers or fasteners (not shown) to end portions 20-2616 and conductor 20-106.

With reference to FIG. 20-30, another example frame 20-3000 is depicted. Frame 20-3000 includes an example pair of electrical terminals 20-3002 molded within an example frame 20-3004. Each electrical terminal 20-3002 includes male prong portions 20-3006, intermediate portions 20-3007 and end portions 20-3008. Intermediate portion 20-3007 is embedded within frame 20-3000 between male prong portions 20-3006 and end portion 20-3008. Inwardly extending end portions 20-3008 may be electrically coupled with conductor 106 of diaphragm 20-104 after diaphragm 20-104 has been coupled to frame 20-3004. Electrical coupling may be by soldering, connectors, frictional contact or any other mechanism for electrically connecting electrical terminals 20-3002 with conductor 20-106.

To construct the example frames 20-2600 and 20-3000 having the integrally molded metallic components as previously discussed with reference to FIGs. 20-26, 20-27 and 20-30, an over-molding technique may be used. FIG. 20-41 depicts the process of constructing an electro-dynamic loudspeaker having a frame similar to frame 20-2600 or frame 20-3000. Magnets 20-2704 and electrical terminals 20-2612 may first be placed within an open injection mold cavity at step 20-4102. Magnets 20-2704 and electrical terminals 20-2612 may be positioned within the mold to assure that molten plastic resin covers at least a portion of each metallic component to retain each metallic component within frame 20-2600. The injection mold may also include features to mask off portions of the metallic components so selected portions are not contacted by molten plastic resin. The mold is closed at step 20-4104. Molten resin may be injected to fill the cavity during step 20-4106. Upon completion of this process, the resin is solidified at step 20-4108 and magnets 20-2704 and electrical terminals 20-2612 are fixed within frame 20-2600. Magnets 20-2704 and electrical terminals 20-2612 include exposed surfaces for the purpose previously described.

With reference to FIGs. 20-31 through 20-33, another example loudspeaker is depicted at reference numeral 20-3100. Loudspeaker 20-3100 includes a casement 20-3102 having a diaphragm 20-3104 coupled to the casement 20-3102. Loudspeaker 20-3100 also includes a frame 20-3106 having a plurality of magnets 20-3108 coupled to a body portion 20-3110 of frame 20-3106.

Casement 20-3102 includes a pair of generally parallel side rails 20-3112 orthogonally intersected by a pair of generally parallel end rails 20-3114. Diaphragm 20-3104 may be embedded within a portion of each of side rail 20-3112 and end rail 20-3114. Casement 20-3102 may be coupled to frame 20-3106 to position diaphragm 20-3104 a predetermined distance from magnets 20-3108. Casement 20-3102 may be coupled to frame 20-3106 using a variety of techniques such as ultrasonic welding, snap fit connections, mechanical fasteners, adhesive bonding or any other suitable connection method.

Alternatively, the casement may be coupled with the frame by a securing device in the form of a retainer as shown in FIG. 20-35. An example loudspeaker 20-3500 includes a retainer 20-3502, a casement 20-3504 and a frame 20-3506. Casement 20-3504 includes a flange 20-3508 radially protruding from the perimeter of casement 20-3504. Similarly, frame 20-3506 includes a flange 20-3510 radially extending from a body portion 20-3512 of frame 20-3506. Retainer 20-3502 is the securing device to couple casement 20-3504 with frame 20-3506. In the illustrated example, retainer 20-3502 has a generally c-shaped cross section capable of engaging flanges 20-3508 and 20-3510. Rigid engagement of flanges 20-3508 and 20-3510 interconnects casement 20-3504 and frame 20-3506.

As shown on the right side of FIG. 20-35, another example retainer 20-3502 may also include loudspeaker mounting provisions. The illustrated retainer 20-3502 includes a flange 20-3514 having an aperture 20-3516 extending through the flange 20-3514. The use of the loudspeaker mounting provisions on retainer 20-3502 improves design flexibility. For example, a frame and magnet assembly may be designed for use with a variety of differently shaped retainers 20-3502 conFIG.d to mount loudspeakers within certain vehicles or enclosures.

To assemble a loudspeaker equipped with retainer 20-3502, frame 20-3506 and casement 20-3504 may be placed within an injection mold cavity. Molten resin may be injected within the cavity to form retainer 20-3502. After solidification of the resin, completed loudspeaker 20-3500 may be ejected from the mold cavity.

With specific reference to FIGs. 20-36 and 20-37, another example loudspeaker 20-3600 includes an example casement and diaphragm subassembly 20-3602 and an example frame and magnet assembly 20-3604. Casement and diaphragm subassembly 20-3602 includes a casement 20-3606 and diaphragm 20-3608. Casement 20-3606 includes a pair of side rails 20-3610 and a pair of end rails 20-3612 interconnected to one another to define an aperture 20-3614. Side rails 20-3610 and end rails 20-3612 include apertures 20-3615 extending through the side rails 20-3610 and the end rails 20-3612.

Frame and magnet subassembly 20-3604 includes a frame 20-3616 having a body 3617 with a plurality of stakes 20-3618 protruding from the body 3617. The frame 20-3616 also includes a plurality of catches 20-3620 extending from body 3617. The illustrated catch 20-3620 includes a barb 20-3622. During coupling of casement and diaphragm subassembly 20-3602 to frame and magnet subassembly 20-3604, barb 20-3622 may engage casement 20-3606. In addition, stakes 20-3618 may protrude through apertures 20-3615. A subsequent heat staking or melting process may be performed to deform the ends of stakes 20-3618 to form a cap 20-3700. The cap 20-3700 may maintain coupling of casement and diaphragm subassembly 20-3602 to frame and magnet subassembly 20-3604. In other examples, any other form of fastening mechanism such as an adhesive, a latch, hook, welding, a snap-fit connection, etc. may be used to couple the casement and diaphragm subassembly 20-3602 to frame and magnet subassembly 20-3604.

To manufacture loudspeaker 20-3600, an example injection mold 20-3400 as shown in FIG. 34 may be used. Injection mold 20-3400 includes a stationary plate 20-3402 and a movable plate 20-3404. Stationary plate 20-3402 and movable plate 20-3404 define a cavity 20-3406 in communication with a gate 20-3408. Gate 20-3408 serves as an inlet for a molten resin material 20-3410. Movable plate 20-3404 includes a gas permeable plate 20-3412 inserted within a gas impermeable die body 20-3414. A vacuum channel 20-3416 is positioned along a back surface 20-3418 of plate 20-3412. Vacuum channel 20-3416 is coupled to a vacuum source (not shown). Movable plate 20-3404 includes a plurality of pins 20-3420 extending upwardly from a substantially planar surface 20-3431. Each pin 20-3420 includes an upper surface 20-3422 which engages a lower surface 20-3424 of stationary plate 20-3402 when injection mold 20-3400 is closed.

An oversized, work-in-progress, example diaphragm 20-3425 is illustrated as inserted within injection mold 20-3400 in FIG. 20-34. Oversized diaphragm 20-3425 includes a center portion 20-3426 surrounded by a perimeter portion 20-3428. Perimeter portion 20-3428 includes an offage portion 20-3430 extending beyond the edge of cavity 20-3406. Finished diaphragm 20-3608, shown in FIGs. 20-36 and 20-37, is created by trimming offage portion 20-3430 from oversized diaphragm 20-3425. Diaphragm 20-3608 also includes a plurality of apertures 20-3432. Upon insertion of diaphragm 20-3425, the plurality of pins 20-3420 extend through apertures 20-3432 and diaphragm 20-3425 rests on planar surface 20-3431.

During manufacture of the casement and diaphragm subassembly, perimeter portion 20-3428 of diaphragm 20-3425, specifically offage portion 20-3430, may be clamped between stationary plate 20-3402 and movable plate 20-3404 of injection mold 20-3400. After perimeter portion 20-3428 is clamped, center portion 20-3426 may be displaced to introduce a tension to diaphragm 20-3425. While diaphragm 20-3608 is under tension, molten plastic may be injected into cavity 20-3406 to form side rails 20-3610 and end rails 20-3612. During the injection process, perimeter portion 20-3428 may partially melt and bond with the material forming casement 20-3606. The casement material may then be cooled and solidified. The tensioned diaphragm 20-3608 molded to casement 20-3606 may now be removed from the injection mold 20-3400. Offage portion 20-3430 may be trimmed to produce the final casement and diaphragm assembly 20-3602 as shown in FIG. 20-36. The casement and diaphragm subassembly may be utilized as a component within many different speaker designs including loudspeakers having metal frames as previously described or molded frames similar to frame 20-3616.

It should be appreciated that a number of different devices such as pins, clamps, notches or stops may be used to temporarily fix offage portion 20-3430 while center portion 20-3426 is tensioned. One example retention device is shown in FIG. 20-38 in the form of a pin 20-3800. Pin 20-3800 may extend through an aperture 20-3802 and through diaphragm 20-3425. Aperture 20-3802 may be located in offage portion 20-3430. Pin 20-3800 may be positioned to retain the perimeter portion of diaphragm 20-3425 during tensioning. Although illustrated as a pin, a variety of devices such as clamps, pins or stops may be used to locate and retain the perimeter portion of the diaphragm 20-3425 during tensioning.

FIG. 20-38 also illustrates a portion of an example injection mold that is depicted at reference numeral 20-3804. Mold 20-3804 includes a stationary half 20-3806 having a ridge 20-3808 protruding downwardly from the stationary half 20-3806. Mold 20-3804 also includes a movable half 20-3810 having a trough 20-3812 extending about the periphery of the mold. During mold closure, ridge 20-3808 contacts diaphragm 20-3425 and forces diaphragm 20-3425 to enter trough 20-3812. During this process, diaphragm 20-3425 is tensioned and retained under tension. To assure a sufficient amount of tension is generated in diaphragm 20-3425, pins 20-3800 may be positioned outboard of ridge 20-3808 and trough 20-3812 to retain the perimeter portion of diaphragm 20-3425 during tensioning. As previously mentioned, molten resin is then injected to form casement 20-3606.

With reference to FIG. 20-39, another example loudspeaker is depicted at reference numeral 20-3900. Loudspeaker 20-3900 includes a frame 20-3902 having a plurality of magnets 20-3904 coupled to a body portion 20-3906 of frame 20-3902. An example elastic bumper 20-3908 may be coupled to frame 20-3902. Elastic bumper 20-3908 may be constructed from a material capable of recovering size and shape after deformation such as a solid elastomeric member, closed cell foam or any other resilient material. Elastic bumper 20-3908 may be coupled to and extend substantially about the perimeter of frame 20-3902.

Elastic bumper 20-3908 may be attached to frame 20-3902 using adhesives or mechanical fasteners. Elastic bumper 20-3908 may also be molded to frame 20-3902 using an injection mold. For example, where the frame is constructed from injection molded plastic, frame 20-3902 may first be formed in a mold. An elastic material, such as polyvinyl may then be injected into the mold to form elastic bumper 20-3908 on frame 20-3902. Alternatively, elastic bumper 20-3908 may be formed in a different mold and coupled with frame 20-3902 by adhesives, mechanical fasteners, welding, etc.

During assembly of example loudspeaker 20-3900, elastic bumper 20-3908 may be compressed by applying an external force in the direction illustrated by arrows 20-3910. The compression force may be maintained while a diaphragm 20-3912 is coupled to bumper 20-3908 by adhesives, mechanical fasteners, welding, etc. Once diaphragm 20-3912 is fixedly coupled with elastic bumper 20-3908, the external force compressing elastic bumper 20-3908 may be removed. Elastic bumper 20-3908 may then attempt to return to the originally uncompressed shape, but is resisted by diaphragm 20-3912. An equilibrium condition is reached resulting in tensioning of diaphragm 20-3912. Elastic bumpers 20-3908 may extend circumferentially about the entire periphery of frame 20-3902. Alternatively, the elastic bumpers 20-3908 may be represented by plurality of small elastomeric portions selectively positioned along opposite sides of frame 20-3902.

FIG. 20-40 shows another example loudspeaker 20-4000 that includes another example of at least one elastic bumper 20-4002. The elastic bumper 20-4002 of this example may be a hollow member formed with resilient material. Similar to the FIG. 20-39, the elastic bumper 20-4002 may be coupled to a perimeter portion of frame 20-3902.

During assembly of loudspeaker 20-4000, elastic bumpers 20-4002 may be compressed by applying an external force in the direction of arrows 20-4004. The compression force may be maintained while diaphragm 20-3912 is mechanically coupled to elastic bumper 20-20-4002. Once diaphragm 20-3912 is fixed to elastic bumper 20-4002, the external force compressing elastic bumper 20-4002 may be removed. The tendency of elastic bumper 20-4002 to return to the uncompressed state is resisted by diaphragm 20-3912. An equilibrium condition is reached resulting in tensioning of diaphragm 20-3912.

Referring to FIG. 28-5, one embodiment of the invention is illustrated. In this embodiment, directivity modification is achieved by positioning an acoustic lens 28-500 proximate diaphragm 28-204. Acoustic lens 28-500 includes a substantially planar body 28-502 having a radiating acoustic aperture 28-504 extending therethrough. Aperture 28-504 is substantially shaped as an elongated slot having a length 28-506 and a width 28-508. A lip 28-510 extends about the perimeter of body 28-502 and is selectively engageable with a portion of frame 28-200. As such, body 28-502 of acoustic lens 28-500 is positioned proximate to and spaced apart from diaphragm 28-204. Acoustic lens 28-500 may function similarly to previously described grille 28-228 or may be positioned between diaphragm 28-204 and grille 28-228. Preferably, body 28-502 is constructed from a substantially acoustically opaque material such as injection molded thermoplastic. Acoustic lens 28-500 also includes a plurality of flanges 28-512 to mount acoustic lens 28-500 within a desired environment.

FIG. 28-7 depicts the horizontal polar response of the same electro-dynamic planar loudspeaker shown in FIG. 28-6, but with acoustic lens 28-500 positioned in front of the diaphragm. As a basis for comparison, loudspeaker 28-100 exhibits a radiating diaphragm width of approximately 53 millimeters. Directivity of the loudspeaker without an acoustic lens narrows with increased frequency and begins at approximately 5kHz. With acoustic lens 28-500 positioned proximate diaphragm 28-204, the width 28-508 of elongated acoustic aperture 28-504 defines the effective radiating aperture width of loudspeaker 28-100. In the example shown, the aperture width and radiating width are 16 millimeters in size. As shown in FIG. 28-7, the directivity of the loudspeaker equipped with acoustic lens 28-500 does not begin to narrow until the frequency is greater than 12kHz. Furthermore, the radiating width is relatively wide at 15kHz. It should be appreciated that the shape and size of the loudspeaker 28-100 and the radiating aperture of lens 28-500 are merely exemplary and are not intended to limit the scope of the invention.

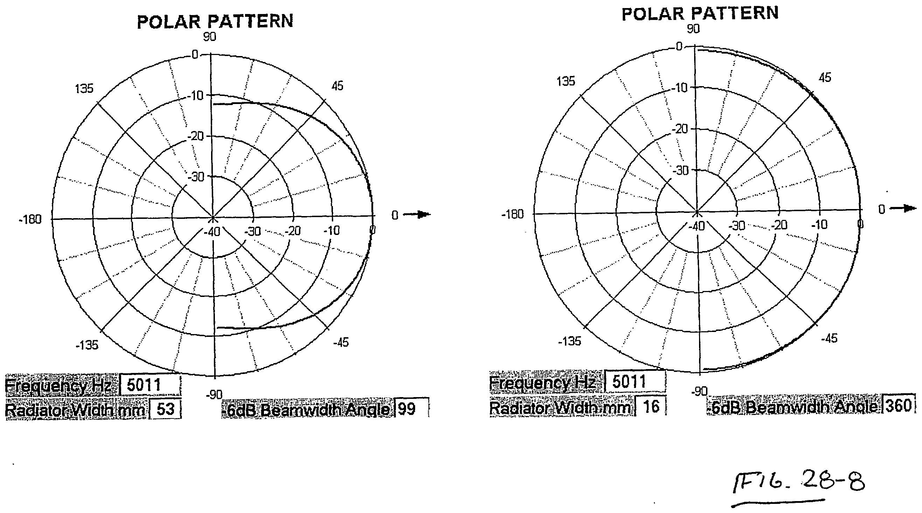

For a more detailed comparison, FIGs. 28-8 through 28-14 present side by side polar response graphs of a direct radiating electro-dynamic planer loudspeaker and the same loudspeaker with acoustic lens 28-500 positioned adjacent its diaphragm. In FIGs. 28-8 through 28-14, beam width angle is represented as the angle in which the sound pressure level decreases no more than 6 decibels from a maximum amplitude. Accordingly, one skilled in the art will appreciate that acoustic lens 28-500 effectively reduces the radiating area of the loudspeaker diaphragm at high frequencies and thus widens the angular range in which maximum sound pressure level is maintained. At mid to low frequencies, lens 28-500 has a minimal effect on loudspeaker sensitivity, power handling and maximum sound pressure level.

The directivity pattern of a loudspeaker is defined by the dimensions of the radiating area of its diaphragm, or in the case of a lens, the dimensions of the radiating acoustic aperture. The equation below defines the acoustic pressure at a specified distance and angle relative to the width or length dimension of the radiating area. $ρ : = {ρ}_{o} ⋅ \left|\frac{sin \left[\left(\frac{π ⋅ d}{λ}\right)⋅sin⋅\left(θ\right)\right]}{\left[\frac{\left(π⋅d\right)}{λ}\right] ⋅ sin \left(θ\right)}\right|$

Where: d = The length of the radiating area
   i. θ = Angle from middle of radiating surface to observation point on plane normal to radiating surface and parallel to d
   ii. ρₒ = Magnitude of the rms sound pressure at a distance r
      1. from the array at an angle θ = 0
   iii. λ = Wavelength

FIG. 28-15 illustrates that the directivity modification is dominated by the size, shape and orientation of the aperture extending through the acoustic lens. This is demonstrated by rotating electro-dynamic planar loudspeaker 28-100 while maintaining the position of acoustic aperture 28-504 relative to measuring equipment. Each of the five polar response graphs shown corresponds to a different angular position of loudspeaker 28-100. As the graphs indicate, the directivity remains virtually constant regardless of loudspeaker angular orientation. Accordingly, successful directivity modification may be achieved by appropriately sizing and positioning an acoustic aperture proximate a diaphragm of a driver. The physical size and shape of the driver provides little to no contribution to directivity control when used in conjunction with an acoustic lens of the invention. Therefore, modification of the directivity of a loudspeaker may be accomplished by placing an acoustic lens in proximity to the diaphragm of the loudspeaker.

The three dimensional directivity pattern of an electro-dynamic planar loudspeaker may also be modeled. The equation below defines the directivity pattern for a rectangular radiator in an infinite baffle. $Directivity_Pattern : = \frac{sin \left[\left(\frac{π ⋅ {d}_{1}}{λ}\right)⋅sin⋅\left({θ}_{1}\right)\right]}{\left[\frac{\left(π⋅{d}_{1}\right)}{λ}\right] ⋅ sin \left({θ}_{1}\right)} ⋅ \frac{sin \left[\left(\frac{π ⋅ {d}_{2}}{λ}\right)⋅sin⋅\left({θ}_{2}\right)\right]}{\frac{\left(π⋅{d}_{2}\right)}{λ} ⋅ sin \left({θ}_{2}\right)}$

where: d₁ = The length of the radiating area
i. d₂ = The width of radiating area
ii. θ₁ = Angle from middle of radiating surface to observation
   1. point on plane normal to radiating surface and parallel to d₁
iii. θ₂ = Same as θ₁ with d₂ substituting for d₁
iv. λ = Wavelength

FIGs. 28-16 through 28-25 provide a comparison of a loudspeaker having a 165mm long X 53mm wide radiator versus a loudspeaker having a 165mm long X 16mm wide radiator. As mentioned earlier, the graphs represent an electro-dynamic planar loudspeaker having a rectangular diaphragm with the dimensions of approximately 165mm X 53mm. The second set of graphs represents the same speaker equipped with acoustic lens 28-500 of the invention having a 165mm long X 16mm wide slot extending therethrough. One skilled in the art will appreciate that the 53mm wide radiating aperture develops a narrowing horizontal directivity beginning at approximately 5kHz. The speaker equipped with the acoustic lens having a 16mm wide radiating aperture maintains wide directivity up to 16kHz. The vertical directivity for both of the devices remains similar to each other while narrowing with increasing frequency.

Furthermore, it has been shown that use of the inventive concepts herein allow one skilled in the art to construct a variety of acoustic lenses tailored to modify the directivity of predetermined frequency ranges. It should also be appreciated that an acoustic lens according to the invention may be constructed from any number of materials including fabric, metal, plastic, composites or other suitable material.

While various embodiments of the invention have been described, it will be apparent to those of ordinary skill in the art that other embodiments and implementations are possible that are within the scope of this invention.

## Claims

1. An electro-dynamic loudspeaker (100; 18-100), comprising:
a frame (102; 18-102) including a recessed portion and a plurality of vent holes (18-422) in the recessed portion, the vent holes (18-422) being arranged in a plurality of columns, the vent holes (18-422) in each column being separated by a plurality of webs (18-604) where a combined length of the vent holes in a longitudinal length of the columns and a combined length of the webs (18-604) in a longitudinal length of the columns define a total length of the columns of vent holes, where the columns include interior columns (18-600a, 18-600b, 18-600c. 18-600d) and a pair of outer edge columns (18-602a, 18-602b), where the combined length of the webs in a longitudinal length of the inner columns (18-600a, 18-600b, 18-600c, 18-600d) is between twenty and forty-five percent of the total length of the inner columns (18-600a, 18-600b, 18-600c, 18-600d) of vent holes and the combined length of the webs in a longitudinal length of the outer edge columns (18-602a, 18-602b) is below twenty percent of the total length of the outer columns (18-602a, 18-602b) of vent holes;
a plurality of magnets disposed between the inner columns (18-600a, 18-600b, 18-600c, 18-600d) of vent holes (18-422);
a diaphragm (18-104) secured to the frame (18-102);
an electrical circuit disposed on a surface of the diaphragm (18-104).

2. A method of venting an electro-dynamic loudspeaker (100; 18-100), comprising the steps of:
providing a frame (102; 18-102) having a plurality of columns of vent holes (18-422), the vent holes (18-422) in each column being separated by a plurality of webs (18-604) where a combined length of the vent holes (18-422) in a longitudinal length of the columns and a combined length of the webs in a longitudinal length of the columns define a total length of the columns of vent holes, , where the columns include interior columns (18-600a, 18-600b, 18-600c, 18-600d) and a pair of outer edge columns (18-602a, 18-602b), where the combined length of the webs in a longitudinal length of the inner columns (18-600a, 18-600b, 18-600c, 18-600d) is between twenty and forty-five percent of the total length of the inner columns (18-600a, 18-600b, 18-600c, 18-600d) of vent holes and the combined length of the webs in a longitudinal length of the outer edge columns (18-602a, 18-602b) is below twenty percent of the total length of the outer columns (18-602a, 18-602b) of vent holes;
mounting a plurality of columns of magnets adjacent to the inner columns (18-600a, 18-600b, 18-600c, 18-600d) of vent holes (18-422); and
mounting a diaphragm (18-104) to the frame (18-102), the diaphragm (18-104) having a conductor disposed on a surface thereof including a plurality of linear sections.

## Patentansprüche

1. Elektrodynamischer Lautsprecher (100; 18-100), der Folgendes umfasst:
einen Rahmen (102; 18-102), der einen vertieften Abschnitt und eine Vielzahl von Lüftungsöffnungen (18-422) im vertieften Abschnitt beinhaltet, wobei die Lüftungsöffnungen (18-422) in einer Vielzahl von Säulen angeordnet sind, wobei die Lüftungsöffnungen (18-422) in jeder Säule von einer Vielzahl von Netzen (18-604) getrennt sind, wobei eine kombinierte Länge der Lüftungsöffnungen in einer Längslänge der Säulen und eine kombinierte Länge der Netze (18-604) in einer Längslänge der Säulen eine Gesamtlänge der Säulen von Lüftungsöffnungen definieren, wobei die Säulen Innensäulen (18-600a, 18-600b, 18-600c, 18-600d) und ein Paar von Außenkantensäulen (18-602a, 18-602b) beinhalten, wobei die kombinierte Länge der Netze in einer Längslänge der Innensäulen (18-600a, 18-600b, 18-600c, 18-600d) zwischen zwanzig und fünfundvierzig Prozent der Gesamtlänge der Innensäulen (18-600a, 18-600b, 18-600c, 18-600d) von Lüftungsöffnungen ist und wobei die kombinierte Länge der Netze in einer Längslänge der Außenkantensäulen (18-602a, 18-602b) unter zwanzig Prozent der Gesamtlänge der Außensäulen (18-602a, 18-602b) von Lüftungsöffnungen ist;
eine Vielzahl von Magneten, die zwischen den Innensäulen (18-600a, 18-600b, 18-600c, 18-600d) von Lüftungsöffnungen (18-422) angeordnet ist;
eine Membran (18-104), die an dem Rahmen (18-102) angebracht ist;
einen Stromschaltkreis, der an der Oberfläche der Membran (18-104) angebracht ist.

2. Verfahren zur Belüftung eines elektrodynamischen Lautsprechers (100; 18-100), das Folgende Schritte umfasst:
Bereitstellen eines Rahmens (102; 18-102), der eine Vielzahl von Säulen von Lüftungsöffnungen (18-422) aufweist, wobei die Lüftungsöffnungen (18-422) in jeder Säule von einer Vielzahl von Netzen (18-604) getrennt sind, wobei eine kombinierte Länge der Lüftungsöffnungen (18-422) in einer Längslänge der Säulen und eine kombinierte Länge der Netze in einer Längslänge der Säulen eine Gesamtlänge der Säulen von Lüftungsöffnungen definiert, wobei die Säulen Innensäulen (18-600a, 18-600b, 18-600c, 18-600d) und ein Paar von Außenkantensäulen (18-602a, 18-602b) beinhalten, wobei die kombinierte Länge der Netze in einer Längslänge der Innensäulen (18-600a, 18-600b, 18-600c, 18-600d) zwischen zwanzig und fünfundzwanzig Prozent der Gesamtlänge der Innensäulen (18-600a, 18-600b, 18-600c, 18-600d) von Lüftungsöffnungen ist und wobei die kombinierte Länge der Netze in einer Längslänge der Außenkantensäulen (18-602a, 18-602b) unter zwanzig Prozent der Gesamtlänge der Außensäulen (18-602a, 18-602b) von Lüftungsöffnungen ist;
Anbringen einer Vielzahl von Säulen von Magneten benachbart zu den Innensäulen (18-600a, 18-600b, 18-600c, 18-600d) von Lüftungsöffnungen(18-422); und
Anbringen einer Membran (18-104) an dem Rahmen (18-102), wobei die Membran (18-104) einen an einer Oberfläche davon angebrachten Leiter aufweist, einschließlich einer Vielzahl von linearen Abschnitten.

## Revendications

1. Haut-parleur électro-dynamique (100 ; 18-100), comprenant :
un cadre (102 ; 18-102) comprenant une partie évidée et une pluralité de trous d'aération (18-422) dans la partie évidée, les trous d'aération (18-422) étant agencés dans une pluralité de colonnes, les trous d'aération (18-422) dans chaque colonne étant séparés par une pluralité de parois (18-604) où une longueur combinée des trous d'aération dans une longueur longitudinale des colonnes et une longueur combinée des parois (18-604) dans une longueur longitudinale des colonnes définissent une longueur totale des colonnes de trous d'aération, où les colonnes comprennent des colonnes intérieures (18-600a, 18-600b, 18-600c, 18-600d) et une paire de colonnes de bord extérieures (18-602a, 18-602b), où la longueur combinée des parois dans une longueur longitudinale des colonnes intérieures (18-600a, 18-600b, 18-600c, 18-600d) se situe entre vingt et quarante-cinq pour cent de la longueur totale des colonnes intérieures (18-600a, 18-600b, 18-600c, 18-600d) de trous d'aération et la longueur combinée des parois dans une longueur longitudinale des colonnes de bord extérieures (18-602a, 18-602b) est inférieure à vingt pour cent de la longueur totale des colonnes extérieures (18-602a, 18-602b) de trous d'aération ;
une pluralité d'aimants disposés entre les colonnes intérieures (18-600a, 18-600b, 18-600c, 18-600d) de trous d'aération (18-422) ;
un diaphragme (18-104) fixé au cadre (18-102) ;
un circuit électrique disposé sur une surface du diaphragme (18-104).

2. Procédé d'aération d'un haut-parleur électro-dynamique (100 ; 18-100), comprenant les étapes consistant à :
fournir un cadre (102 ; 18-102) ayant une pluralité de colonnes de trous d'aération (18-422), les trous d'aération (18-422) dans chaque colonne étant séparés par une pluralité de parois (18-604) où une longueur combinée des trous d'aération (18-422) dans une longueur longitudinale des colonnes et une longueur combinée des parois dans une longueur longitudinale des colonnes définissent une longueur totale des colonnes de trous d'aération, où les colonnes comprennent des colonnes intérieures (18-600a, 18-600b, 18-600c, 18-600d) et une paire de colonnes de bord extérieures (18-602a, 18-602b), où la longueur combinée des parois dans une longueur longitudinale des colonnes intérieures (18-600a, 18-600b, 18-600c, 18-600d) se situe entre vingt et quarante-cinq pour cent de la longueur totale des colonnes intérieures (18-600a, 18-600b, 18-600c, 18-600d) de trous d'aération et la longueur combinée des parois dans une longueur longitudinale des colonnes de bord extérieures (18-602a, 18-602b) est inférieure à vingt pour cent de la longueur totale des colonnes extérieures (18-602a, 18-602b) de trous d'aération ;
monter une pluralité de colonnes d'aimants de manière adjacente aux colonnes intérieures (18-600a, 18-600b, 18-600c,
18-600d) de trous d'aération (18-422) ; et
monter un diaphragme (18-104) sur le cadre (18-102), le diaphragme (18-104) ayant un conducteur disposé sur une surface de celui-ci comprenant une pluralité de sections linéaires.
